# EUROPÄISCHE PATENTANMELDUNG

(11) **EP 3 367 088 A1**
(43) Veröffentlichungstag der Anmeldung: **29.08.2018**
(21) Anmeldenummer: 18163854.5
(22) Anmeldetag: 19.02.2016
(51) Int. Cl.: G01N 27/404, G01N 27/413

(54) **ELEKTROCHEMISCHER GASSENSOR UND ELEKTROLYT FÜR EINEN ELEKTROCHEMISCHEN GASSENSOR**

(30) Priorität: 20.02.2015 DE 102015002008
(62) Teilanmeldung aus: 16706526.7
(71) Anmelder: Dräger Safety AG & Co. KGaA, 23560 Lübeck (DE)
(72) Erfinder: Bernstein, Christoph, 23562 Lübeck (DE); Tschuncky, Peter, 23568 Lübeck (DE); Mattern-Frühwald, Marie-Isabell, 22941 Bargteheide (DE); Glas, Petra, 23617 Stockelsdorf (DE); Kassa, Susanne, 23554 Lübeck (DE)
(74) Vertreter: Kettenbeil, Roxane Henriette

(57) **Zusammenfassung**

Die Erfindung betrifft einen elektrochemischen Gassensor 10 mit einem Gehäuse 20 und wenigstens einer Elektrode 21, 22, wobei das Gehäuse 20 einen Gaseinlass 23 aufweist, wobei in dem Gassensor 10 ein wenigstens stark saurer, flüssiger Elektrolyt 30 vorhanden ist, und wobei der Elektrolyt 30 die Elektrode 21, 22 teilweise benetzt. Bei einem solchen Gassensor 10 ist vorgesehen, dass der Elektrolyt 30 einen Zusatz enthält, wobei der Zusatz wenigstens ein Tensid aufweist. Die Erfindung betrifft weiter einen Elektrolyten 30 für einen Gassensor 10, der als Zusatz wenigstens ein Tensid aufweist.

## Beschreibung

Die vorliegende Erfindung betrifft einen elektrochemischen Gassensor entsprechend dem Oberbegriff von Anspruch 1 und einen Elektrolyt entsprechend Anspruch 27 zur Verwendung in einem elektrochemischen Gassensor.

Elektrochemische Gassensoren sind allgemein bekannt. Sie werden typischerweise dazu verwendet, verschiedene chemische Bestandteile von Gasgemischen nachzuweisen.

Ein wesentlicher Bestandteil eines solchen elektrochemischen Sensors ist der in dem Sensor verwendete Elektrolyt. Der Elektrolyt steht dabei in leitendem Kontakt mit wenigstens einer Anode und einer Katode (Elektroden). Tritt das nachzuweisende Gas in den elektrochemischen Sensor ein, so findet typischerweise zwischen dem Gas, dem Elektrolyten und dem Material der Elektroden (Elektrodenmaterial) eine Reaktion statt. Diese Reaktion führt zu einem messbaren Stromfluss zwischen der Anode und der Kathode des Sensors. Bei elektrochemischen Gassensoren findet diese Reaktion an einer sogenannten Dreiphasengrenze statt, die sich an der jeweiligen Elektrode (Anode und/oder Kathode) aus einer festen Phase, einer flüssigen Phase und einer gasförmigen Phase bildet. Die feste Phase ist dabei typischerweise das Material der Elektrode. Die flüssige Phase wird von dem zumeist wässrigen Elektrolyten gebildet. Die gasförmige Phase ist das zu untersuchende Gasgemisch.

In diesem Zusammenhang schlägt beispielsweise die DE 10 2005 020 719 B3 einen elektrochemischen Gassensor vor, bei welchem die Elektroden mit einer Elektrolytschicht benetzt sind. Die Elektrodenoberfläche ist dabei zwar weitgehend, jedoch nicht vollständig mit dem Elektrolyt bedeckt. Wichtig ist in diesem Zusammenhang, dass die jeweilige Elektrode weder vollständig von Elektrolyt überflutet ist, noch komplett trocken fällt. Neben der diffizilen Herstellbarkeit eines solchen Systems, stellt sich jedoch oft auch eine relativ hohe Anfälligkeit gegenüber Schwankungen in der Luftfeuchtigkeit in diesem Zusammenhang als Problem dar. So kann beispielsweise eine relativ hohe Luftfeuchtigkeit eine Vergrößerung der Elektrolytschichtdicke bewirken. Dies kann sogar zu einer Veränderung der Leitfähigkeit des Elektrolyten führen, beispielsweise durch Wasseraufnahme. Eine solche Veränderung der Leitfähigkeit ist nicht selten mit einer Schwankung der Messperformance verbunden. Auch kann sich dabei die für die Reaktion erforderliche Dreiphasengrenze vergrößern oder verkleinern, was wiederum mit Schwankungen in der Sensitivität des Sensors einhergehen kann.

Um dem zu begegnen wird häufig mit Dochtsystemen gearbeitet, die es erlauben, den Elektrolyten zu transportieren und zu speichern. Überschüssiger Elektrolyt auf den Elektrodenoberflächen kann dabei durch das Porensystem des Dochtes von den Elektroden entfernt werden. Umgekehrt kann bei Elektrolytmangel aus dem Dochtsystem zusätzlicher Elektrolyt für die Ausbildung einer optimalen Dreiphasengrenze zur Verfügung gestellt werden.

Ein weiteres Problem ist jedoch in diesem Zusammenhang, dass die Aufnahme des Elektrolyten durch die häufig hydrophoben Eigenschaften der Elektrodenoberflächen oder auch des Dochtmaterials stark gehemmt sein kann. Die Messeigenschaften eines solchen Systems sind in bestimmten Umgebungsbereichen daher möglicherweise sehr eingeschränkt. Auch auf anderen technischen Gebieten spielt die Benetzung von Elektrodenoberflächen eine Rolle. So schlägt US 6,280,883 B1 zur Verbesserung der Benetzung von Elektrodenoberflächen bei Tetraethylammonium-Batterien vor, eine Elektrolytzusammensetzung zu verwenden, die zum einen ein Leitsalz und zum anderen eine als Surfactant-Salz bezeichnete Verbindung aufweist. Ziel ist es dabei jedoch, die Elektroden möglichst schnell und vollständig während der Herstellung mit Elektrolyt zu bedecken.

Ausgehend davon ist es mithin Aufgabe der Erfindung, einen verbesserten elektrochemischen Gassensor bereitzustellen. Insbesondere soll ein verbesserter Elektrolyt für einen solchen elektrochemischen Gassensor bereitgestellt werden. Sowohl der elektrochemische Gassensor als auch der Elektrolyt sollen möglichst kostengünstig und einfach herzustellen sein.

Zur Lösung dieser Aufgabe schlägt die Erfindung einen elektrochemischen Gassensor entsprechend Anspruch 1, sowie einen Elektrolyt entsprechend Anspruch 27 vor. Ausgestaltungen sind jeweils Gegenstand der abhängigen Ansprüche.

Bei einem elektrochemischen Gassensor mit einem Gehäuse und wenigstens zwei Elektroden, wobei das Gehäuse einen Gaseinlass aufweist, wobei in dem Gassensor ein saurer, flüssiger Elektrolyt vorhanden ist, und wobei der Elektrolyt die Elektrode teilweise benetzt, sieht die Erfindung vor, dass der Elektrolyt einen Zusatz enthält, wobei der Zusatz wenigstens ein Tensid aufweist.

Ein elektrochemischer Gassensor ist dabei typischerweise eine elektrochemische Zelle. Die elektrochemische Zelle hat ein Gehäuse, in dem typischerweise wenigstens eine Arbeitselektrode und eine Gegenelektrode angeordnet sind. Selbstverständlich ist es vorstellbar, dass der Gassensor auch mehr als zwei Elektroden aufweist. Das Gehäuse ist zumindest teilweise mit einem Elektrolyten gefüllt. Der Elektrolyt kann dabei entweder in dem Gehäuse direkt oder in einem Dochtsystem enthalten sein. Die Arbeitselektrode und die Gegenelektrode sind derart in dem Gehäuse angeordnet, dass sie zumindest teilweise mit dem Elektrolyt bedeckt sind. Beispielsweise ist vorstellbar, dass die Elektroden Teil des Dochtsystems sind oder unmittelbar mit diesem in Verbindung stehen. In einer besonders einfachen Ausführungsvariante ohne Dochtsystem, ist auch vorstellbar, dass der Elektrolyt direkt in das Gehäuse eingefüllt ist und die Elektroden zumindest teilweise in den Elektrolyten getaucht sind. In jedem Fall dient der Gaseinlass in dem Gehäuse dazu, dass das zu untersuchende Gas in den Gassensor eindringen und bis zur Elektrode gelangen kann. Häufig ist es zweckmäßig, wenn der Gassensor außerdem noch einen Gasauslass aufweist, durch welchen bei der Reaktion entstehende oder überschüssige Gase das Gehäuse wieder verlassen können. Denkbar ist dabei auch eine pneumatische Anbindung des Gassensors an ein Pumpsystem, welches eine zu untersuchende Gasprobe durch den Sensor hindurchpumpt. Es ist jedoch selbstverständlich auch vorstellbar, dass überschüssige Gase den Gassensor auch durch den Gaseinlass wieder verlassen können.

Der elektrochemische Gassensor kann außerdem ein Dochtsystem aufweisen, welches dazu dient, den Elektrolyten möglichst optimal zu den Elektroden zu transportieren, sodass sichergestellt ist, dass die Elektroden stets mit dem Elektrolyten entsprechend benetzt sind. Vorstellbar ist in diesem Zusammenhang, dass der Elektrolyt ausschließlich mit dem Dochtsystem und dem benetzten Teil der Elektrodenoberflächen in Kontakt steht. Dabei ist es günstig, wenn der Hauptteil des Elektrolyten in dem Dochtsystem angeordnet ist. Der Elektrolyt ist in diesem Fall indirekt in dem Gehäuse angeordnet, nämlich in dem Dochtsystem, welches seinerseits in dem Gehäuse angeordnet ist.

Ein Elektrolyt ist dabei typischerweise ein flüssiges Medium (eine Flüssigkeit), das aufgrund der darin enthaltenen Ionen eine elektrische Leitfähigkeit entfalten kann. Findet in der elektrochemischen Zelle eine passende chemische Reaktion statt, so kann mithilfe dieses Elektrolyten eine elektrisch leitende Verbindung zwischen den Elektroden hergestellt werden. Typische Bestandteile eines solchen Elektrolyten sind ein Lösungsmittel und ein Leitsalz. Es ist besonders günstig, wenn der Elektrolyt eine saure Flüssigkeit ist, d.h. ein saures, flüssiges Medium. Eine saure Flüssigkeit (ein saures, flüssiges Medium) ist eine Flüssigkeit, die als Protonendonator wirken kann. In einer bevorzugten Ausführungsvariante ist der Elektrolyt ein wenigstens stark saures, flüssiges Medium (wenigstens stark saure Flüssigkeit). Dabei wird unter einem wenigstens stark sauren, flüssigen Medium verstanden, dass das flüssige Medium entweder stark sauer oder sehr stark sauer ist. Man erkennt insofern, dass der Elektrolyt sowohl eine stark saure Flüssigkeit als auch eine sehr stark saure Flüssigkeit sein kann. Eine stark saure Flüssigkeit (stark saures, flüssiges Medium) ist dabei typischerweise eine Flüssigkeit mit einem pKs-Wert ≤ 3,75. Eine sehr stark saure Flüssigkeit (sehr stark saures, flüssiges Medium) ist dabei typischerweise eine Flüssigkeit mit einem pKs-Wert ≤ 0. Beispielsweise kann der Elektrolyt ausgewählt sein aus der Gruppe enthaltend HClO₄, HCl, H₂SO₄, HNO₃, H₃PO₄, HCOOH, bevorzugt HClO₄ oder H₂SO₄, sowie wässrige Lösungen in verschiedenen Konzentrationen und Mischungen davon. Denkbar ist auch, dass der Elektrolyt ausgewählt ist aus der Gruppe enthaltend Schweflige Säure, Salpetersäure und Salpetrige Säure. Mit anderen Worten, der Elektrolyt kann ausgewählt sein aus der Gruppe enthaltend Schwefelsäure, Perchlorsäure, Schweflige Säure, Salzsäure, Salpetersäure, Salpetrige Säure, Phosphorsäure, sowie Mischungen aus den zuvor genannten Säuren. In einer bevorzugten Ausführungsvariante ist der elektrochemische Gassensor ein elektrochemischer Gassensor mit einem Gehäuse und wenigstens zwei Elektroden, wobei das Gehäuse einen Gaseinlass und einen Gasauslass aufweist, wobei in dem Gassensor ein saurer - bevorzugt stark saurer oder sehr stark saurer - flüssiger Elektrolyt vorhanden ist, wobei der Elektrolyt die Elektroden zumindest teilweise benetzt und wobei der Elektrolyt einen Zusatz enthält, wobei der Zusatz wenigstens ein Tensid aufweist. Es ist besonders bevorzugt, wenn der flüssige Elektrolyt entweder Schwefelsäure (H₂SO₄) oder Perchlorsäure (HClO₄) ist.

Die Elektroden können beispielsweise aus einem metallischen Material oder aus einer Kohlenstoff-Verbindung bestehen. Denkbar ist auch, dass die Elektroden auf einem oder mehreren Polymermaterialien aufgebracht sind oder auf Glasfasern oder auf keramischen Verbindungen oder dergleichen, bevorzugt sind jedoch Polymermaterialien. Auch das Dochtsystem kann aus einem Polymermaterial bestehen. Diese Polymermaterialien haben häufig hydrophobe Oberflächen. Besonders vorteilhaft ist es, wenn sohwol das Dochtsystem, als auch die Elektroden und/oder das Trägermaterial der Elektroden eine gewisse Porosität aufweisen. Der Elektrolyt kann die Poren desjeweiligen Materials ganz oder teilweise ausfüllen.

Besonders günstig ist es, wenn der Elektrolyt die Elektroden teilweise benetzt. Unter einer teilweisen Benetzung wird im Zusammenhang mit der vorliegenden Erfindung verstanden, dass der Elektrolyt die Oberfläche der Elektrode derart benetzt, dass sich zwischen Elektrolyt, Elektrode und einem zu untersuchenden Gas eine Dreiphasengrenze ausbilden kann. Mit anderen Worten das Material der Elektrode stellt die feste Phase der Dreiphasengrenze dar und es grenzt jeweils ein Abschnitt der Elektrodenoberfläche, der mit dem flüssigen Elektrolyten bedeckt ist (benetzt ist), an einen Abschnitt der Elektrodenoberfläche, der nicht mit dem flüssigen Elektrolyten bedeckt ist, sondern unmittelbar mit der Gasprobe in Kontakt steht. Die Dreiphasengrenze entsteht dann genau an der Stelle, an der diese beiden Abschnitte der Elektrodenoberfläche aneinandergrenzen. Man erkennt insofern, dass es besonders vorteilhaft ist, wenn die Elektrode weder vollständig von einem Flüssigkeitsfilm überzogen ist noch vollständig trocken gefallen ist.

Ein besonderer Vorteil der Erfindung liegt darin, dass die Ausbildung der gewünschten Dreiphasengrenze durch den erfindungsgemäßen Zusatz begünstigt und unterstützt werden kann. Dabei kann der Zusatz auch dazu beitragen, dass die Dreiphasengrenze nach ihrer Etablierung auch bei schwankenden Umweltbedingungen stabil bleibt. Es kann zum einen verhindert werden, dass der elektrolytische Kontakt der Elektrode zur elektrochemischen Zelle verloren geht, wenn der Gassensor beispielsweise einem sehr trockenen Umfeld ausgesetzt ist und/oder der Elektrolyt leicht ein-bzw. austrocknet. Zum anderen kann sichergestellt werden, dass der Analyt (die zu untersuchende Gasprobe) stets in einen ausreichenden Kontakt mit der Elektrode und mit dem Elektrolyten kommen kann, sodass die elektrochemische Umsetzung zuverlässig erfolgen kann. Schwankungen der Umwelteinflüsse - beispielsweise hohe Temperaturen oder hohe Luftfeuchtigkeit - wirken sich insofern nur noch in sehr geringem Umfang auf die Stabilität der Dreiphasengrenze und damit auf die Meßqualität des elektrochemischen Sensors aus. Ein weiterer Vorteil des erfindungsgemäßen Zusatzes liegt darin, dass mit Hilfe des bzw. der in dem Zusatz enthaltenen Tenside auch ein besonders guter Transport des Elektrolyten innerhalb eines Dochtsystems in dem elektrochemischen Sensor ermöglicht wird, sofern ein solches vorhanden ist.

Im Sinne der vorliegenden Erfindung wird unter einem Zusatz ein Stoff oder ein Stoffgemisch, der bzw. das dem Elektrolyten beigemischt wird verstanden. Der Zusatz kann entweder vollständig aus einem einzigen Stoff bestehen oder ein Gemisch aus mehreren verschiedenen Stoffen sein. Der Zusatz ist dabei bevorzugt dazu geeignet die Benetzung der Elektrodenoberfläche zu vermitteln und zu regulieren. Besonders vorteilhaft ist es dabei, wenn der Zusatz ein Tensid aufweist. Ein Tensid ist typischerweise eine amphiphile Verbindung mit wenigstens einem hydrophoben und einem hydrophilen Molekülteil, wobei der hydrophobe Rest (hydrophobe Molekülteil) zumeist eine Kohlenwasserstoffkette ist. Alternativ kann der hydrophobe Molekülteil auch eine Dimethyl-Siloxan-Kette oder eine perfluorierte Kohlenstoffkette sein. Der hydrophile Rest ist typischerweise entweder eine negativ oder positiv geladene (hydratisierbare) Kopfgruppe. Denkbar ist auch, dass die Kopfgruppe eine neutrale, polare Kopfgruppe ist.

Günstig ist es in diesem Zusammenhang, wenn der Zusatz elektrochemisch nicht aktiv ist. D.h. der Zusatz nimmt selbst nicht am Redoxgeschehen in der elektrochemischen Zelle teil. Er wird bevorzugt weder oxidiert noch reduziert und durch ihn wird kein Stromfluss über die Elektrode ausgelöst. Insbesondere das Tensid ist an der elektrochemischen Reaktion, die in der elektrochemischen Zelle - d.h. dem Gassensor - stattfindet, nicht beteiligt. Außerdem ist es günstig, wenn der Zusatz und insbesondere das Tensid chemisch inert ist. Das Tensid ist zweckmäßigerweise so ausgestaltet, dass es die Viskosität und Oberflächenspannung des Elektrolyten beeinflussen kann und damit die Kriechfähigkeit - also die Fähigkeit in Poren einzudringen - des jeweiligen Elektrolyten verändern kann. Auf diese Weise kann das Tensid beispielsweise dazu dienen, das Einkriechen des Elektrolyten in Poren des Elektrodenmaterials und des Dochtsystemes zu verbessern.

In einer ersten Ausführungsvariante ist es vorstellbar, dass der Zusatz vollständig aus dem Tensid besteht. Alternativ ist auch vorstellbar, dass der Zusatz ein Gemisch aus mehreren Komponenten ist, wobei wenigstens eine Komponente ein Tensid ist. Ein solches Gemisch kann neben dem Tensid auch verschiedene andere Stoffe enthalten. Denkbar ist auch, dass das Gemisch mehrere verschiedene Tenside enthält. Selbst verständlich ist es auch vorstellbar, dass das Gemisch sowohl mehrere verschiedene Tenside als auch weitere andere Stoffe, die nicht den Tensiden zuzurechnen sind aufweist.

In einer weiteren Ausführungsvariante ist vorstellbar, dass wenigstens ein Tensid ein halogeniertes Tensid ist, bevorzugt ein fluoriertes Tensid ist. Ein halogeniertes Tensid ist ein Tensid, das wenigstens ein Atom aus der siebten Hauptgruppe des Periodensystems aufweist, insbesondere wenigstens ein Atom, das ausgewählt ist aus der Gruppe enthaltend F, Cl, Br, I. Besonders bevorzugt sind dabei fluorierte Tenside, d.h. Tenside, die wenigstens ein Fluor-Atom aufweisen. Selbstverständlich sind aber auch chlorierte Tenside vorstellbar. Beispielsweise kann das Tensid wenigstens eine polyfluorierte oder perfluorierte Alkylkette enthalten. Unter einer perfluorierten Alkylkette wird im Sinne der vorliegenden Erfindung eine Alkylkette verstanden, bei der alle Wasserstoffatome durch Fluoratome ersetzt sind. Unter einer polyfluorierten Alkylkette wird im Sinne der vorliegenden Erfindung eine Alkylkette verstanden, bei welcher zwei oder mehrere, jedoch nicht alle, Wasserstoffatome durch Fluoratome ersetzt sind. Denkbar ist auch, dass das fluorierte Tensid eine monofluorierte Alkylkette enthält, d.h. eine Alkylkette, bei welcher ein Wasserstoffatom durch ein Fluoratom ersetzt ist. Bevorzugt ist es, wenn das fluorierte Tensid ein Tensid mit einer polyfluorierten oder monofluorierte Alkylkette ist. Besonders günstig sind polyfluorierte Tenside. Beispielsweise kann der hydrophobe Molekülteil des Tensides als polyfluorierte Alkylkette ausgebildet sein. Ist das Tensid ein fluoriertes Tensid, so kann zum Beispiel die chemische Inertheit der Elektrolytzusätze gegenüber konzentrierten Säuren und oxidativen Stress besonders gut sichergestellt werden. Insbesondere wenn der Elektrolyt beispielsweise aus Schwefelsäure besteht, ist es notwendig, dass der Zusatz diese Inertheit aufweist und nicht durch den Elektrolyten abgebaut oder umgesetzt wird.

In einer weiteren Ausführungsvariante ist denkbar, dass wenigstens ein Tensid ein halogenfreies Tensid ist, bevorzugt ein fluorfreies Tensid ist. Ein besonderer Vorteil von halogenfreien, insbesondere fluorfreien Tensiden liegt darin, dass sie häufig besser biologisch abbaubar sind als beispielsweise fluorierte Verbindungen. Ein halogenfreies Tensid ist ein Tensid, das keine Atome der siebten Hauptklasse aufweisen. Ein fluorfreies Tensid ist ein Tensid, das keine Fluor-Atome aufweist.

Ist der Zusatz ein Gemisch aus verschiedenen Tensiden, oder enthält der Zusatz mehrere verschiedene Tenside, so ist in einer Variante auch denkbar, dass der Zusatz sowohl halogenierte als auch halogenfreie Tenside aufweist.

In jedem Fall ist es von Vorteil, wenn wenigstens ein Tensid ein Gegenion aufweist, das ausgewählt ist aus heterocyclischen Kationen, Ammoniumionen, H⁺-Ionen, Alkali-oder Erdalkali-Ionen, HSO₄⁻-Ionen oder H₂PO₄⁻-Ionen, CF₃-SO₃⁻-Ionen, C₂F₄HSO₃⁻-Ionen, CF₃-COO⁻-Ionen, (F₃C-SO₂)₂N⁻-Ionen. Dabei ist es zweckmäßig, dass das Gegenion ausgewählt ist aus der Gruppe enthaltend Hydrogensulfat (HSO₄⁻-Ionen) und Dihydrogenphosphat (H₂PO₄⁻-Ionen), wenn das Tensid ein kationisches Tensid ist. Weiter ist es zweckmäßig, dass das Gegenion ausgewählt ist aus der Gruppe enthaltend heterocyclischen Kationen, Ammoniumionen, Alkali- oder Erdalkali-Ionen, wenn das Tensid ein anionisches Tensid ist. Beispielsweise kann das Gegenion zu einem anionischen Tensid ausgewählt sein aus Pyridinium-Ionen, H⁺-Ionen, NH₄⁺-Ionen, primären Ammonium-Ionen, sekundären Ammoniumionen, tertiären Ammoniumionen, quartären Ammoniumionen, Na⁺-, K⁺- oder Li⁺-Ionen. Man erkennt insofern, dass die als Gegenion dienenden Ammoniumionen sowohl Ammoniumionen im engen Sinne, d.h. Verbindungen der Formel NH₄⁺, als auch primäre, sekundäre, tertiäre oder quartäre Ammoniumionen sein können. Primäre Ammoniumionen sind bevorzugt Mono-Alkyl-Ammoniumionen. Sekundäre Ammoniumionen sind bevorzugt DiAlkyl-Ammoniumionen. Tertiäre Ammoniumionen sind bevorzugt Tri-Alkyl-Ammoniumionen. Quartäre Ammoniumionen sind bevorzugt Tetra-Alkyl-Ammoniumionen. Die Alkylreste der jeweiligen Ammoniumionen können dabei - jeweils unabhängig voneinander - eine Länge von 1, 2, 3, 4, 5 oder 6 Kohlenstoffatomen aufweisen. So ist als quartäres Ammoniumion zum Beispiel Tetraethylammonium ((CH₃-CH₂)₄N⁺) vorstellbar. Alternativ sind zum Beispiel -aber selbstverständlich nicht erschöpfend - auch Tetramethylammonium, Trimethylammonium, Dimethylammonium, Tetrapropylammonium, Tripropylammonium, Teterabutylammonium und/oder Tributylammonium vorstellbar. In jedem Fall entsprechen erfindungsgemäße Ammonium-Ionen der allgemeinen Formel ((CₛH₂ₛ₊₁)(CₚH₂ₚ₊₁)(C_{q}H_{2q+1})(CᵣH₂ᵣ₊₁))N⁺ mit s = {0, 1, 2, 3, 4, 5, 6}, p = {0, 1, 2, 3, 4, 5, 6}, q = {0, 1, 2, 3, 4, 5, 6}, r = {0, 1, 2, 3, 4, 5, 6}. Unter einem primären Ammonium-Ion wird dabei eine Verbindung verstanden, für die drei der Variablen s, p, q, r den Wert 0 haben und die vierte ausgewählt ist aus {1, 2, 3, 4, 5, 6}. Unter einem sekundären Ammonium-Ion wird eine Verbindung verstanden für welche zwei er Variablen s, p, q, r den Wert 0 haben und die beiden anderen unabhängig voneinander ausgewählt sind aus {1, 2, 3, 4, 5, 6}. Unter einem tertiären Ammonium-Ion wird eine Verbindung verstanden für welche eine der Variablen s, p, q, r den Wert 0 hat und die drei übrigen unabhängig von einander ausgewählt sind aus {1, 2, 3, 4, 5, 6}. Die Alkylketten können desweiteren auch poly- oder perhalogenierte Alkylketten sein.

Pyridinium-Ionen, die als Gegenion für ein anionisches Tensid dienen, können sowohl substituierte als auch unsubstituierte Pyridinium-Ionen sein.

Weitere denkbare heterocyclische Kationen sind heterocyclische Ringe mit einer Ringgröße von 3, 4, 5, 6, 7, 8 oder 9 Ringatomen, wobei die Ringatome Kohlenstoffatomen sind und wobei wenigstens eines der Kohlenstoff-Ringatome ersetzt ist durch ein Hetero-Atom, welches ausgewählt ist aus Stickstoff, Sauerstoff, Schwefel oder Phosphor. Vorstellbar sind auch heterocyclische Ringsysteme, die aus zweien solcher heterocyclischen, mit einander verknüpften Ringe bestehen. Beispielsweise ist denkbar, dass das heterocyclische Kation ausgewählt ist aus der Gruppe enthaltend Aziridiniumionen, Oxiraniumionen, Thiiraniumionen, Aziriniumionen, Oxireniumionen, Thiireniumionen, Azetidiniumionen, Oxetaniumionen, Theitaniumionen, Azetiumionen, Oxetiumionen, Thietiumionen, Azolidiniumionen, Oxolaniumionen, Thiolaniumionen, Azoliumionen, Oxoliumionen, Thioliumionen, Azinaniumionen, Oxaniumionen, Thianiumioen, Aziniumionen, Oxiniumion, Thiiniumion, Azepaniumionen, Oxepaniumionen, Thepaniumionen, Azepiniumionen, Oxepiniumionen, Thiepiniumionen, Pyrazoliumionen, Imidazoliumionen, Benzimidazoliumionen, Imidazoliniumionen, Indoliumionen, Chonoliniumionen, Isochinoliniumionen, Puriniumionen, Pyrimidiniumionen, Oxazoliumionen, Thiazoliumionen, Thiaziniumionen, bevorzugt Pyridiniumionen. Selbstverständlich sind jedoch auch andere Gegenionen denkbar. Weist der Zusatz mehrere verschiedene Tenside auf, so ist selbstverständlich sowohl denkbar, dass alle Tenside das gleiche Gegenion aufweisen, als auch, dass die Tenside unterschiedliche Gegenionen haben.

Denkbar ist im Sinne der vorliegenden Erfindung, dass wenigstens eines der Tenside ein anionisches Tensid ist. Ein anionisches Tensid ist dabei beispielsweise ein Tensid, welches eine negativgeladene Kopfgruppe aufweist. Beispielsweise kann ein solches Tensid eine Carbonat-, Sulfat-, Phosphat- oder Sulfonat-Gruppe als Kopfgruppe enthalten. Typische Vertreter solcher anionische Tenside sind Seifen, Alkylbenzolsulfonaten, Alkylsulfonate, Alkylsulfat sowie Alkylethersulfate. Vorstellbar ist auch, dass der Zusatz eine Sulfonsäure als Tensid aufweist, insbesondere eine Alkylsulfonsäure. Insbesondere in wässrigem Medium ist in diesem Zusammenhang denkbar, dass die Sulfonsäuregruppe die Kopfgruppe des Tensids bildet und in geeignetem Milieu deprotoniert wird, so dass sie als anionisches Alkylsulfonat mit einem H^{±}-Ion als Gegenion vorliegt. Als besonders vorteilhaft hat es sich in diesem Zusammenhang insofern herausgestellt, wenn wenigstens ein Tensid ein Alkylsulfonat ist. Alkylsulfonate bestehen dabei typischerweise aus einer linearen Alkylkette, an die terminal eine Sulfonat Gruppe gekoppelt ist. Besonders günstig ist es in diesem Zusammenhang, wenn die Alkylkette des Alkylsulfonates eine Länge von 1, 2, 3, 4, 5, 6, 7, 8, 9, 10, 11, 12, 13, 14, 15, 16, 17, 18 Kohlenstoffatomen, bevorzugt, 4, 5, 6, 7, 8, 9, 10, 11, 12 Kohlenstoffatomen aufweist. Weiterhin ist es von Vorteil, wenn wenigstens ein Tensid ein Gegenion aufweist, das ausgewählt ist aus heterocyclischen Kationen, H⁺, Na⁺-Ionen, K⁺-Ionen, Li⁺-Ionen oder ((CₛH₂ₛ₊₁)(CₚH₂ₚ₊₁)(C_{q}H_{2q+1})(CᵣH₂ᵣ₊₁))N⁺-Ionen mit s = {0, 1, 2, 3, 4, 5, 6}, p = {0, 1, 2, 3, 4, 5, 6}, q = {0, 1, 2, 3, 4, 5, 6}, r = {0, 1, 2, 3, 4, 5, 6}..

Ein solches anionisches Tensid kann sowohl ein fluoriertes - poly- oder perfluoriertes - Tensid sein als auch ein halogenfreies - insbesondere fluorfreies - Tensid. Perfluorierte Verbindungen können beispielsweise Perfluorbutansulfonsäure, Perfluorpentansulfonsäure, Perfluorhexansulfonsäure, Perfluoroctansulfon, Perfluornonansulfonsäure, Perfluordecansulfonsäure, Perfluoundecansulfonsäure, Perfluordodecansulfonsäure, oder die entsprechenden Sulfonate, d.h. Salze dieser Säuren sein.

In einem Ausführungsbeispiel ist wenigstens ein erfindungsgemäßes Tensid mithin ein Tensid entsprechend der Formel I:

(CₙF₍₂ₙ₊₁₎₋ₘHₘ-SO₃⁻)R1 Formel I

mit n = {1, 2, 3, 4, 5, 6, 7, 8, 9, 10, 11, 12}, m = {0, 1, 2, 3, 4, 5, 6, 7, 8, 9, 10, 11, 12, 13, 14, 15, 16, 17, 18, 19, 20, 21, 22, 23, 24, 25}, R1 ausgewählt aus der Gruppe H⁺, Na⁺, K⁺, Li⁺, sowie ((CₛH₂ₛ₊₁)(CₚH₂ₚ₊₁)(C_{q}H_{2q+1})(CᵣH₂ᵣ₊₁))N⁺-Ionen mit s = {0, 1, 2, 3, 4, 5, 6}, p = {0, 1, 2, 3, 4, 5, 6}, q = {0, 1, 2, 3, 4, 5, 6}, r = {0, 1, 2, 3, 4, 5, 6} . Bevorzugt ist dabei n = {4, 5, 6, 7, 8, 9, 10, 11, 12} und m = {0, 1, 2, 3, 4, 5, 6, 7, 8, 9, 10, 11, 12, 13}. Weiter bevorzugt ist s = p = q = r mit s = {0, 1, 2, 3, 4}, besonders bevorzugt s = p = q = r mit s = {1, 2, 3}.

Ist das anionische Tensid ein fluoriertes Tensid, so hat es sich als vorteilhaft herausgestellt, wenn wenigstens ein Tensid eine Polyfluor-alkyl-sulfonsäure oder das Salz einer Polyfluor-alkyl-sulfonsäure ist. In jedem Fall ist es vorstellbar, dass das Tensid ein Tensid mit 1, 2, 3, 4, 5, 6, 7, 8, 9, 10, 11, 12, 13, 14, 15, 16, 17, 18, 19, 20, 21, 22, 23, 24 oder 25 Fluor-Atomen ist. Bevorzugt eine Polyfluor-alkyl-sulfonsäure mit 1, 2, 3, 4, 5, 6, 7, 8, 9, 10, 11, 12, 13, 14, 15, 16 oder 17 Fluor-Atomen. Die Alkyl-Kette der Polyfluor-alkyl-sulfonsäure bzw. des Polyfluor-alkyl-sulfonates kann dabei eine Länge von 1, 2, 3, 4, 5, 6, 7, 8, 9, 10, 11 oder 12 Kohlenstoff-Atomen aufweisen. Liegt das Tensid als Salz vor, so ist beispielsweise denkbar, dass wenigstens ein Tensid ein Polyfluor-alkyl-sulfonat ist mit einem Gegenion, das ausgewählt ist aus H⁺, Na⁺, K⁺, Li⁺, NH₄⁺ und primären, sekundären, tertiären oder quartären Ammoniumionen. Die primären, sekundären, tertiären oder quartären Ammoniumionen entsprechen dabei wie oben bereits beschrieben der Formel ((CₛH₂ₛ₊₁)(CₚH₂ₚ₊₁)(C_{q}H_{2q+1})(CᵣH₂ᵣ₊₁))N⁺ mit s = {0, 1, 2, 3, 4, 5, 6}, p = {0, 1, 2, 3, 4, 5, 6}, q = {0, 1, 2, 3, 4, 5, 6}, r = {0, 1, 2, 3, 4, 5, 6}.

Beispielsweise ist vorstellbar, dass das Tensid eine Polyfluor-alkyl-sulfonsäure mit 1, 2, 3, 4, 5 oder 6 Fluor-Atomen ist, zum Beispiel Hexafluoro-alkyl-2-methylsulfonsäure.

Vorstellbar ist auch, dass das Tensid eine Polyfluor-alkyl-sulfonsäure mit 6, 7, 8, 9, 10, 11, 12, 13, 14 oder 15 Fluor-Atomen ist, zum Beispiel Tridecafluoroctylsulfonsäure. Insofern ist auch denkbar, dass das Tensid ein Polyfluoroctylsulfonat ist mit einem Gegenion, das ausgewählt ist aus H⁺, Na⁺-Ionen, K⁺-Ionen, Li⁺-Ionen, Tetra-Alkyl-Ammonium-Ionen, Tri-Alkyl-Ammonium-Ionen oder Di-Alkylammonium-Ionen, insbesondere ausgewählt aus H⁺, Na⁺-Ionen, K⁺-Ionen, Li⁺-Ionen oder (CH₃-CH₂)₄N⁺-Ionen.

In noch einer weiteren Ausführungsvariante ist auch Perfluoroctylsulfonsäure als Tensid vorstellbar.

In jedem Fall kann ein erfindungsgemäßes poly- oder perfluoriertes anionisches Tensid eine Verbindung entsprechend der Formel (CₙF₍₂ₙ₊₁₎₋ₘHₘ-SO₃⁻)Na⁺ mit n und m wie oben definiert, bevorzugt n = {4, 5, 6, 7, 8, 9, 10, 11, 12}, sein, nämlich eine Verbindung, die ausgewählt ist aus der Gruppe

Natrium-butylmonofluorbutylsulfonat, Natrium-difluorbutylsulfonat, Natriumtrifluorbutylsulfonat, Natrium-tetrafluorbutylsulfonat, Natrium-pentafluorbutylsulfonat, Natrium-hexafluorbutylsulfonat, Natrium-heptafluorbutylsulfonat, Natriumoctafluorbutylsulfonat, Natrium-nonafluorbutylsulfonat, Natrium-monofluorpentylsulfonat, Natrium-difluorpentylsulfonat, Natrium-trifluorpentylsulfonat, Natriumtetrafluorpentylsulfonat, Natrium-pentafluorpentylsulfonat, Natriumhexafluorpentylsulfonat, Natrium-heptafluorpentylsulfonat, Natriumoctafluorpentylsulfonat, Natrium-nonafluorpentylsulfonat, Natriumdecafluorpentylsulfonat, Natrium-undecafluorpentylsulfonat, Natriummonofluorhexylsulfonat, Natrium-difluorhexylsulfonat, Natrium-trifluorhexylsulfonat, Natrium-tetrafluorhexylsulfonat, Natrium-pentafluorhexylsulfonat, Natriumhexafluorhexylsulfonat, Natrium-heptafluorhexylsulfonat, Natrium-octafluorhexylsulfonat, Natrium-nonafluorhexylsulfonat, Natrium-decafluorhexylsulfonat, Natriumundecafluorhexylsulfonat, Natrium-dodecafluorhexylsulfonat, Natriumtridecafluorhexylsulfonat, Natrium-monofluorheptylsulfonat, Natriumdifluorheptylsulfonat, Natrium-trifluorheptylsulfonat, Natrium-tetrafluorheptylsulfonat, Natrium-pentafluorheptylsulfonat, Natrium-hexafluorheptylsulfonat, Natriumheptafluorheptylsulfonat, Natrium-octafluorheptylsulfonat, Natriumnonafluorheptylsulfonat, Natrium-decafluorheptylsulfonat, Natriumundecafluorheptylsulfonat, Natrium-dodecafluorheptylsulfonat, Natriumtridecafluorheptylsulfonat, Natrium-tetradecafluorheptylsulfonat, Natriumpentadecafluorheptylsulfonat, Natrium-monofluoroctylsulfonat, Natriumdifluoroctylsulfonat, Natrium-trifluoroctylsulfonat, Natrium-tetrafluoroctylsulfonat, Natrium-pentafluoroctylsulfonat, Natrium-hexafluoroctylsulfonat, Natriumheptafluoroctylsulfonat, Natrium-octafluoroctylsulfonat, Natrium-nonafluoroctylsulfonat, Natrium-decafluoroctylsulfonat, Natrium-undecafluoroctylsulfonat, Natriumdodecafluoroctylsulfonat, Natrium-tridecafluoroctylsulfonat, Natriumtetradecafluoroctylsulfonat, Natrium-pentadecafluoroctylsulfonat, Natriumhexadecafluoroctylsulfonat, Natrium-heptadecafluoroctylsulfonat, Natriummonofluornonylsulfonat, Natrium-difluornonylsulfonat, Natrium-trifluornonylsulfonat, Natrium-tetrafluornonylsulfonat, Natrium-pentafluornonylsulfonat, Natriumhexafluornonylsulfonat, Natrium-heptafluornonylsulfonat, Natrium-octafluornonylsulfonat, Natrium-nonafluornonylsulfonat, Natrium-decafluornonylsulfonat, Natriumundecafluornonylsulfonat, Natrium-dodecafluornonylsulfonat, Natriumtridecafluornonylsulfonat, Natrium-tetradecafluornonylsulfonat, Natriumpentadecafluornonylsulfonat, Natrium-hexadecafluornonylsulfonat, Natriumheptadecafluornonylsulfonat, Natrium-octadecafluornonylsulfonat, Natriumnonadecafluornonylsulfonat, Natrium-monofluordecylsulfonat, Natriumdifluordecylsulfonat, Natrium-trifluordecylsulfonat, Natrium-tetrafluordecylsulfonat, Natrium-pentafluordecylsulfonat, Natrium-hexafluordecylsulfonat, Natriumheptafluordecylsulfonat, Natrium-octafluordecylsulfonat, Natrium-nonafluordecylsulfonat, Natrium-decafluordecylsulfonat, Natrium-undecafluordecylsulfonat, Natriumdodecafluordecylsulfonat, Natrium-tridecafluordecylsulfonat, Natriumtetradecafluordecylsulfonat, Natrium-pentadecafluordecylsulfonat, Natriumhexadecafluordecylsulfonat, Natrium-heptadecafluordecylsulfonat, Natriumoctadecafluordecylsulfonat, Natrium-nonadecafluordecylsulfonat, Natriumicosafluordecylsulfonat, Natrium-henicosafluordecylsulfonat, Natriummonofluorundecylsulfonat, Natrium-difluorundecylsulfonat, Natriumtrifluorundecylsulfonat, Natrium-tetrafluorundecylsulfonat, Natriumpentafluorundecylsulfonat, Natrium-hexafluorundecylsulfonat, Natriumheptafluorundecylsulfonat, Natrium-octafluorundecylsulfonat, Natriumnonafluorundecylsulfonat, Natrium-decafluorundecylsulfonat, Natriumundecafluorundecylsulfonat, Natrium-dodecafluorundecylsulfonat, Natriumtridecafluorundecylsulfonat, Natrium-tetradecafluorundecylsulfonat, Natriumpentadecafluorundecylsulfonat, Natrium-hexadecafluorundecylsulfonat, Natriumheptadecafluorundecylsulfonat, Natrium-octadecafluorundecylsulfonat, Natriumnonadecafluorundecylsulfonat, Natrium-icosafluorundecylsulfonat, Natriumhenicosafluorundecylsulfonat, Natrium-docosafluorundecylsulfonat, Natriumtricosafluorundecylsulfonat, Natrium-monofluordodecylsulfonat, Natriumdifluordodecylsulfonat, Natrium-trifluordodecylsulfonat, Natriumtetrafluordodecylsulfonat, Natrium-pentafluordodecylsulfonat, Natriumhexafluordodecylsulfonat, Natrium-heptafluordodecylsulfonat, Natriumoctafluordodecylsulfonat, Natrium-nonafluordodecylsulfonat, Natriumdecafluordodecylsulfonat, Natrium-undecafluordodecylsulfonat, Natriumdodecafluordodecylsulfonat, Natrium-tridecafluordodecylsulfonat, Natriumtetradecafluordodecylsulfonat, Natrium-pentadecafluordodecylsulfonat, Natriumhexadecafluordodecylsulfonat, Natrium-heptadecafluordodecylsulfonat, Natriumoctadecafluordodecylsulfonat, Natrium-nonadecafluordodecylsulfonat, Natriumicosafluordodecylsulfonat, Natrium-henicosafluordodecylsulfonat, Natriumdocosafluordodecylsulfonat, Natrium-tricosafluordodecylsulfonat, Natriumtetracosafluordodecylsulfonat, Natrium-pentacosafluordodecylsulfonat.

Denkbar ist auch, dass ein erfindungsgemäßes poly- oder perfluoriertes anionisches Tensid eine Verbindung entsprechend der Formel (CₙF₍₂ₙ₊₁₎₋ₘHₘ-SO₃⁻)K⁺ mit n und m wie oben definiert, bevorzugt n = {4, 5, 6, 7, 8, 9, 10, 11, 12}, ist, nämlich eine Verbindung, die ausgewählt ist aus der Gruppe

Kalium-monofluorbutylsulfonat, Kalium-difluorbutylsulfonat, Kalium-trifluorbutylsulfonat, Kalium-tetrafluorbutylsulfonat, Kalium-pentafluorbutylsulfonat, Kaliumhexafluorbutylsulfonat, Kalium-heptafluorbutylsulfonat, Kalium-octafluorbutylsulfonat, Kalium-nonafluorbutylsulfonat, Kalium-monofluorpentylsulfonat, Kaliumdifluorpentylsulfonat, Kalium-trifluorpentylsulfonat, Kalium-tetrafluorpentylsulfonat, Kalium-pentafluorpentylsulfonat, Kalium-hexafluorpentylsulfonat, Kaliumheptafluorpentylsulfonat, Kalium-octafluorpentylsulfonat, Kalium-nonafluorpentylsulfonat, Kalium-decafluorpentylsulfonat, Kalium-undecafluorpentylsulfonat, Kaliummonofluorhexylsulfonat, Kalium-difluorhexylsulfonat, Kalium-trifluorhexylsulfonat, Kalium-tetrafluorhexylsulfonat, Kalium-pentafluorhexylsulfonat, Kaliumhexafluorhexylsulfonat, Kalium-heptafluorhexylsulfonat, Kalium-octafluorhexylsulfonat, Kalium-nonafluorhexylsulfonat, Kalium-decafluorhexylsulfonat, Kaliumundecafluorhexylsulfonat, Kalium-dodecafluorhexylsulfonat, Kaliumtridecafluorhexylsulfonat, Kalium-monofluorheptylsulfonat, Kalium-difluorheptylsulfonat, Kalium-trifluorheptylsulfonat, Kalium-tetrafluorheptylsulfonat, Kaliumpentafluorheptylsulfonat, Kalium-hexafluorheptylsulfonat, Kaliumheptafluorheptylsulfonat, Kalium-octafluorheptylsulfonat, Kalium-nonafluorheptylsulfonat, Kalium-decafluorheptylsulfonat, Kalium-undecafluorheptylsulfonat, Kaliumdodecafluorheptylsulfonat, Kalium-tridecafluorheptylsulfonat, Kaliumtetradecafluorheptylsulfonat, Kalium-pentadecafluorheptylsulfonat, Kaliummonofluoroctylsulfonat, Kalium-difluoroctylsulfonat, Kalium-trifluoroctylsulfonat, Kaliumtetrafluoroctylsulfonat, Kalium-pentafluoroctylsulfonat, Kalium-hexafluoroctylsulfonat, Kalium-heptafluoroctylsulfonat, Kalium-octafluoroctylsulfonat, Kaliumnonafluoroctylsulfonat, Kalium-decafluoroctylsulfonat, Kalium-undecafluoroctylsulfonat, Kalium-dodecafluoroctylsulfonat, Kalium-tridecafluoroctylsulfonat, Kaliumtetradecafluoroctylsulfonat, Kalium-pentadecafluoroctylsulfonat, Kaliumhexadecafluoroctylsulfonat, Kalium-heptadecafluoroctylsulfonat, Kaliummonofluornonylsulfonat, Kalium-difluornonylsulfonat, Kalium-trifluornonylsulfonat, Kalium-tetrafluornonylsulfonat, Kalium-pentafluornonylsulfonat, Kaliumhexafluornonylsulfonat, Kalium-heptafluornonylsulfonat, Kalium-octafluornonylsulfonat, Kalium-nonafluornonylsulfonat, Kalium-decafluornonylsulfonat, Kaliumundecafluornonylsulfonat, Kalium-dodecafluornonylsulfonat, Kaliumtridecafluornonylsulfonat, Kalium-tetradecafluornonylsulfonat, Kaliumpentadecafluornonylsulfonat, Kalium-hexadecafluornonylsulfonat, Kaliumheptadecafluornonylsulfonat, Kalium-octadecafluornonylsulfonat, Kaliumnonadecafluornonylsulfonat, Kalium-monofluordecylsulfonat, Kaliumdifluordecylsulfonat, Kalium-trifluordecylsulfonat, Kalium-tetrafluordecylsulfonat, Kaliumpentafluordecylsulfonat, Kalium-hexafluordecylsulfonat, Kalium-heptafluordecylsulfonat, Kalium-octafluordecylsulfonat, Kalium-nonafluordecylsulfonat, Kaliumdecafluordecylsulfonat, Kalium-undecafluordecylsulfonat, Kaliumdodecafluordecylsulfonat, Kalium-tridecafluordecylsulfonat, Kaliumtetradecafluordecylsulfonat, Kalium-pentadecafluordecylsulfonat, Kaliumhexadecafluordecylsulfonat, Kalium-heptadecafluordecylsulfonat, Kaliumoctadecafluordecylsulfonat, Kalium-nonadecafluordecylsulfonat, Kaliumicosafluordecylsulfonat, Kalium-henicosafluordecylsulfonat, Kaliummonofluorundecylsulfonat, Kalium-difluorundecylsulfonat, Kalium-trifluorundecylsulfonat, Kalium-tetrafluorundecylsulfonat, Kalium-pentafluorundecylsulfonat, Kaliumhexafluorundecylsulfonat, Kalium-heptafluorundecylsulfonat, Kaliumoctafluorundecylsulfonat, Kalium-nonafluorundecylsulfonat, Kaliumdecafluorundecylsulfonat, Kalium-undecafluorundecylsulfonat, Kaliumdodecafluorundecylsulfonat, Kalium-tridecafluorundecylsulfonat, Kaliumtetradecafluorundecylsulfonat, Kalium-pentadecafluorundecylsulfonat, Kaliumhexadecafluorundecylsulfonat, Kalium-heptadecafluorundecylsulfonat, Kaliumoctadecafluorundecylsulfonat, Kalium-nonadecafluorundecylsulfonat, Kaliumicosafluorundecylsulfonat, Kalium-henicosafluorundecylsulfonat, Kaliumdocosafluorundecylsulfonat, Kalium-tricosafluorundecylsulfonat, Kaliummonofluordodecylsulfonat, Kalium-difluordodecylsulfonat, Kalium-trifluordodecylsulfonat, Kalium-tetrafluordodecylsulfonat, Kalium-pentafluordodecylsulfonat, Kaliumhexafluordodecylsulfonat, Kalium-heptafluordodecylsulfonat, Kaliumoctafluordodecylsulfonat, Kalium-nonafluordodecylsulfonat, Kaliumdecafluordodecylsulfonat, Kalium-undecafluordodecylsulfonat, Kaliumdodecafluordodecylsulfonat, Kalium-tridecafluordodecylsulfonat, Kaliumtetradecafluordodecylsulfonat, Kalium-pentadecafluordodecylsulfonat, Kaliumhexadecafluordodecylsulfonat, Kalium-heptadecafluordodecylsulfonat, Kaliumoctadecafluordodecylsulfonat, Kalium-nonadecafluordodecylsulfonat, Kaliumicosafluordodecylsulfonat, Kalium-henicosafluordodecylsulfonat, Kaliumdocosafluordodecylsulfonat, Kalium-tricosafluordodecylsulfonat, Kaliumtetracosafluordodecylsulfonat, Kalium-pentacosafluordodecylsulfonat.

Weiterhin ist denkbar, dass das erfindungsgemäße poly- oder perfluorierte anionische Tensid eine Verbindung entsprechend der Formel (CₙF₍₂ₙ₊₁₎₋ₘHₘ-SO₃⁻)Li⁺ mit n und m wie oben definiert, bevorzugt n = {4, 5, 6, 7, 8, 9, 10, 11, 12}, ist, nämlich eine Verbindung, die ausgewählt ist aus der Gruppe Lithium-monofluorbutylsulfonat, Lithiumdifluorbutylsulfonat, Lithium-trifluorbutylsulfonat, Lithium-tetrafluorbutylsulfonat, Lithiumpentafluorbutylsulfonat, Lithium-hexafluorbutylsulfonat, Lithium-heptafluorbutylsulfonat, Lithium-octafluorbutylsulfonat, Lithium-nonafluorbutylsulfonat, Lithiummonofluorpentylsulfonat, Lithium-difluorpentylsulfonat, Lithium-trifluorpentylsulfonat, Lithium-tetrafluorpentylsulfonat, Lithium-pentafluorpentylsulfonat, Lithiumhexafluorpentylsulfonat, Lithium-heptafluorpentylsulfonat, Lithiumoctafluorpentylsulfonat, Lithium-nonafluorpentylsulfonat, Lithium-decafluorpentylsulfonat, Lithium-undecafluorpentylsulfonat, Lithium-monofluorhexylsulfonat, Lithiumdifluorhexylsulfonat, Lithium-trifluorhexylsulfonat, Lithium-tetrafluorhexylsulfonat, Lithium-pentafluorhexylsulfonat, Lithium-hexafluorhexylsulfonat, Lithiumheptafluorhexylsulfonat, Lithium-octafluorhexylsulfonat, Lithium-nonafluorhexylsulfonat, Lithium-decafluorhexylsulfonat, Lithium-undecafluorhexylsulfonat, Lithiumdodecafluorhexylsulfonat, Lithium-tridecafluorhexylsulfonat, Lithiummonofluorheptylsulfonat, Lithium-difluorheptylsulfonat, Lithium-trifluorheptylsulfonat, Lithium-tetrafluorheptylsulfonat, Lithium-pentafluorheptylsulfonat, Lithiumhexafluorheptylsulfonat, Lithium-heptafluorheptylsulfonat, Lithiumoctafluorheptylsulfonat, Lithium-nonafluorheptylsulfonat, Lithium-decafluorheptylsulfonat, Lithium-undecafluorheptylsulfonat, Lithium-dodecafluorheptylsulfonat, Lithiumtridecafluorheptylsulfonat, Lithium-tetradecafluorheptylsulfonat, Lithiumpentadecafluorheptylsulfonat, Lithium-monofluoroctylsulfonat, Lithiumdifluoroctylsulfonat, Lithium-trifluoroctylsulfonat, Lithium-tetrafluoroctylsulfonat, Lithiumpentafluoroctylsulfonat, Lithium-hexafluoroctylsulfonat, Lithium-heptafluoroctylsulfonat, Lithium-octafluoroctylsulfonat, Lithium-nonafluoroctylsulfonat, Lithiumdecafluoroctylsulfonat, Lithium-undecafluoroctylsulfonat, Lithiumdodecafluoroctylsulfonat, Lithium-tridecafluoroctylsulfonat, Lithiumtetradecafluoroctylsulfonat, Lithium-pentadecafluoroctylsulfonat, Lithiumhexadecafluoroctylsulfonat, Lithium-heptadecafluoroctylsulfonat, Lithiummonofluornonylsulfonat, Lithium-difluornonylsulfonat, Lithium-trifluornonylsulfonat, Lithium-tetrafluornonylsulfonat, Lithium-pentafluornonylsulfonat, Lithiumhexafluornonylsulfonat, Lithium-heptafluornonylsulfonat, Lithium-octafluornonylsulfonat, Lithium-nonafluornonylsulfonat, Lithium-decafluornonylsulfonat, Lithiumundecafluornonylsulfonat, Lithium-dodecafluornonylsulfonat, Lithiumtridecafluornonylsulfonat, Lithium-tetradecafluornonylsulfonat, Lithiumpentadecafluornonylsulfonat, Lithium-hexadecafluornonylsulfonat, Lithiumheptadecafluornonylsulfonat, Lithium-octadecafluornonylsulfonat, Lithiumnonadecafluornonylsulfonat, Lithium-monofluordecylsulfonat, Lithiumdifluordecylsulfonat, Lithium-trifluordecylsulfonat, Lithium-tetrafluordecylsulfonat, Lithium-pentafluordecylsulfonat, Lithium-hexafluordecylsulfonat, Lithiumheptafluordecylsulfonat, Lithium-octafluordecylsulfonat, Lithium-nonafluordecylsulfonat, Lithium-decafluordecylsulfonat, Lithium-undecafluordecylsulfonat, Lithiumdodecafluordecylsulfonat, Lithium-tridecafluordecylsulfonat, Lithiumtetradecafluordecylsulfonat, Lithium-pentadecafluordecylsulfonat, Lithiumhexadecafluordecylsulfonat, Lithium-heptadecafluordecylsulfonat, Lithiumoctadecafluordecylsulfonat, Lithium-nonadecafluordecylsulfonat, Lithiumicosafluordecylsulfonat, Lithium-henicosafluordecylsulfonat, Lithiummonofluorundecylsulfonat, Lithium-difluorundecylsulfonat, Lithiumtrifluorundecylsulfonat, Lithium-tetrafluorundecylsulfonat, Lithiumpentafluorundecylsulfonat, Lithium-hexafluorundecylsulfonat, Lithiumheptafluorundecylsulfonat, Lithium-octafluorundecylsulfonat, Lithiumnonafluorundecylsulfonat, Lithium-decafluorundecylsulfonat, Lithiumundecafluorundecylsulfonat, Lithium-dodecafluorundecylsulfonat, Lithiumtridecafluorundecylsulfonat, Lithium-tetradecafluorundecylsulfonat, Lithiumpentadecafluorundecylsulfonat, Lithium-hexadecafluorundecylsulfonat, Lithiumheptadecafluorundecylsulfonat, Lithium-octadecafluorundecylsulfonat, Lithiumnonadecafluorundecylsulfonat, Lithium-icosafluorundecylsulfonat, Lithiumhenicosafluorundecylsulfonat, Lithium-docosafluorundecylsulfonat, Lithiumtricosafluorundecylsulfonat, Lithium-monofluordodecylsulfonat, Lithiumdifluordodecylsulfonat, Lithium-trifluordodecylsulfonat, Lithium-tetrafluordodecylsulfonat, Lithium-pentafluordodecylsulfonat, Lithium-hexafluordodecylsulfonat, Lithiumheptafluordodecylsulfonat, Lithium-octafluordodecylsulfonat, Lithiumnonafluordodecylsulfonat, Lithium-decafluordodecylsulfonat, Lithiumundecafluordodecylsulfonat, Lithium-dodecafluordodecylsulfonat, Lithiumtridecafluordodecylsulfonat, Lithium-tetradecafluordodecylsulfonat, Lithiumpentadecafluordodecylsulfonat, Lithium-hexadecafluordodecylsulfonat, Lithiumheptadecafluordodecylsulfonat, Lithium-octadecafluordodecylsulfonat, Lithiumnonadecafluordodecylsulfonat, Lithium-icosafluordodecylsulfonat, Lithiumhenicosafluordodecylsulfonat, Lithium-docosafluordodecylsulfonat, Lithiumtricosafluordodecylsulfonat, Lithium-tetracosafluordodecylsulfonat, Lithiumpentacosafluordodecylsulfonat.

Weiterhin ist denkbar, dass das erfindungsgemäße poly- oder perfluorierte anionische Tensid eine Verbindung entsprechend der Formel (CₙF₍₂ₙ₊₁₎₋ₘHₘ-SO₃⁻)((CₛH₂ₛ₊₁)(CₚH₂ₚ₊₁)(C_{q}H_{2q+1})(CᵣH₂ᵣ₊₁))N⁺ mit s = {0, 1, 2, 3, 4, 5, 6}, p = {0, 1, 2, 3, 4, 5, 6}, q = {0, 1, 2, 3, 4 , 5, 6}, r = {0, 1, 2, 3, 4, 5, 6} mit n und m wie oben definiert, bevorzugt n = {4, 5, 6, 7, 8, 9, 10, 11, 12}, ist, zum Beispiel eine Verbindung, die ausgewählt ist aus der Gruppe enthaltend Ammonium-monofluorbutylsulfonat, Ammonium-difluorbutylsulfonat, Ammonium-trifluorbutylsulfonat, Ammoniumtetrafluorbutylsulfonat, Ammonium-pentafluorbutylsulfonat, Ammoniumhexafluorbutylsulfonat, Ammonium-heptafluorbutylsulfonat, Ammoniumoctafluorbutylsulfonat, Ammonium-nonafluorbutylsulfonat, Ammoniummonofluorpentylsulfonat, Ammonium-difluorpentylsulfonat, Ammoniumtrifluorpentylsulfonat, Ammonium-tetrafluorpentylsulfonat, Ammoniumpentafluorpentylsulfonat, Ammonium-hexafluorpentylsulfonat, Ammoniumheptafluorpentylsulfonat, Ammonium-octafluorpentylsulfonat, Ammoniumnonafluorpentylsulfonat, Ammonium-decafluorpentylsulfonat, Ammoniumundecafluorpentylsulfonat, Ammonium-monofluorhexylsulfonat, Ammoniumdifluorhexylsulfonat, Ammonium-trifluorhexylsulfonat, Ammonium-tetrafluorhexylsulfonat, Ammonium-pentafluorhexylsulfonat, Ammonium-hexafluorhexylsulfonat, Ammoniumheptafluorhexylsulfonat, Ammonium-octafluorhexylsulfonat, Ammoniumnonafluorhexylsulfonat, Ammonium-decafluorhexylsulfonat, Ammoniumundecafluorhexylsulfonat, Ammonium-dodecafluorhexylsulfonat, Ammoniumtridecafluorhexylsulfonat, Ammonium-monofluorheptylsulfonat, Ammoniumdifluorheptylsulfonat, Ammonium-trifluorheptylsulfonat, Ammoniumtetrafluorheptylsulfonat, Ammonium-pentafluorheptylsulfonat, Ammoniumhexafluorheptylsulfonat, Ammonium-heptafluorheptylsulfonat, Ammoniumoctafluorheptylsulfonat, Ammonium-nonafluorheptylsulfonat, Ammoniumdecafluorheptylsulfonat, Ammonium-undecafluorheptylsulfonat, Ammoniumdodecafluorheptylsulfonat, Ammonium-tridecafluorheptylsulfonat, Ammoniumtetradecafluorheptylsulfonat, Ammonium-pentadecafluorheptylsulfonat, Ammoniummonofluoroctylsulfonat, Ammonium-difluoroctylsulfonat, Ammonium-trifluoroctylsulfonat, Ammonium-tetrafluoroctylsulfonat, Ammonium-pentafluoroctylsulfonat, Ammoniumhexafluoroctylsulfonat, Ammonium-heptafluoroctylsulfonat, Ammoniumoctafluoroctylsulfonat, Ammonium-nonafluoroctylsulfonat, Ammoniumdecafluoroctylsulfonat, Ammonium-undecafluoroctylsulfonat, Ammoniumdodecafluoroctylsulfonat, Ammonium-tridecafluoroctylsulfonat, Ammoniumtetradecafluoroctylsulfonat, Ammonium-pentadecafluoroctylsulfonat, Ammoniumhexadecafluoroctylsulfonat, Ammonium-heptadecafluoroctylsulfonat, Ammoniummonofluornonylsulfonat, Ammonium-difluornonylsulfonat, Ammoniumtrifluornonylsulfonat, Ammonium-tetrafluornonylsulfonat, Ammoniumpentafluornonylsulfonat, Ammonium-hexafluornonylsulfonat, Ammoniumheptafluornonylsulfonat, Ammonium-octafluornonylsulfonat, Ammoniumnonafluornonylsulfonat, Ammonium-decafluornonylsulfonat, Ammoniumundecafluornonylsulfonat, Ammonium-dodecafluornonylsulfonat, Ammoniumtridecafluornonylsulfonat, Ammonium-tetradecafluornonylsulfonat, Ammoniumpentadecafluornonylsulfonat, Ammonium-hexadecafluornonylsulfonat, Ammoniumheptadecafluornonylsulfonat, Ammonium-octadecafluornonylsulfonat, Ammoniumnonadecafluornonylsulfonat, Ammonium-monofluordecylsulfonat, Ammoniumdifluordecylsulfonat, Ammonium-trifluordecylsulfonat, Ammonium-tetrafluordecylsulfonat, Ammonium-pentafluordecylsulfonat, Ammonium-hexafluordecylsulfonat, Ammoniumheptafluordecylsulfonat, Ammonium-octafluordecylsulfonat, Ammoniumnonafluordecylsulfonat, Ammonium-decafluordecylsulfonat, Ammoniumundecafluordecylsulfonat, Ammonium-dodecafluordecylsulfonat, Ammoniumtridecafluordecylsulfonat, Ammonium-tetradecafluordecylsulfonat, Ammoniumpentadecafluordecylsulfonat, Ammonium-hexadecafluordecylsulfonat, Ammoniumheptadecafluordecylsulfonat, Ammonium-octadecafluordecylsulfonat, Ammoniumnonadecafluordecylsulfonat, Ammonium-icosafluordecylsulfonat, Ammoniumhenicosafluordecylsulfonat, Ammonium-monofluorundecylsulfonat, Ammoniumdifluorundecylsulfonat, Ammonium-trifluorundecylsulfonat, Ammoniumtetrafluorundecylsulfonat, Ammonium-pentafluorundecylsulfonat, Ammoniumhexafluorundecylsulfonat, Ammonium-heptafluorundecylsulfonat, Ammoniumoctafluorundecylsulfonat, Ammonium-nonafluorundecylsulfonat, Ammoniumdecafluorundecylsulfonat, Ammonium-undecafluorundecylsulfonat, Ammoniumdodecafluorundecylsulfonat, Ammonium-tridecafluorundecylsulfonat, Ammoniumtetradecafluorundecylsulfonat, Ammonium-pentadecafluorundecylsulfonat, Ammoniumhexadecafluorundecylsulfonat, Ammonium-heptadecafluorundecylsulfonat, Ammoniumoctadecafluorundecylsulfonat, Ammonium-nonadecafluorundecylsulfonat, Ammoniumicosafluorundecylsulfonat, Ammonium-henicosafluorundecylsulfonat, Ammoniumdocosafluorundecylsulfonat, Ammonium-tricosafluorundecylsulfonat, Ammoniummonofluordodecylsulfonat, Ammonium-difluordodecylsulfonat, Ammoniumtrifluordodecylsulfonat, Ammonium-tetrafluordodecylsulfonat, Ammoniumpentafluordodecylsulfonat, Ammonium-hexafluordodecylsulfonat, Ammoniumheptafluordodecylsulfonat, Ammonium-octafluordodecylsulfonat, Ammoniumnonafluordodecylsulfonat, Ammonium-decafluordodecylsulfonat, Ammoniumundecafluordodecylsulfonat, Ammonium-dodecafluordodecylsulfonat, Ammoniumtridecafluordodecylsulfonat, Ammonium-tetradecafluordodecylsulfonat, Ammoniumpentadecafluordodecylsulfonat, Ammonium-hexadecafluordodecylsulfonat, Ammoniumheptadecafluordodecylsulfonat, Ammonium-octadecafluordodecylsulfonat, Ammoniumnonadecafluordodecylsulfonat, Ammonium-icosafluordodecylsulfonat, Ammoniumhenicosafluordodecylsulfonat, Ammonium-docosafluordodecylsulfonat, Ammoniumtricosafluordodecylsulfonat, Ammonium-tetracosafluordodecylsulfonat, Ammoniumpentacosafluordodecylsulfonat, Alkylammonium-monofluorbutylsulfonat, Alkylammonium-difluorbutylsulfonat, Alkylammonium-trifluorbutylsulfonat, Alkylammonium-tetrafluorbutylsulfonat, Alkylammonium-pentafluorbutylsulfonat, Alkylammonium-hexafluorbutylsulfonat, Alkylammonium-heptafluorbutylsulfonat, Alkylammonium-octafluorbutylsulfonat, Alkylammonium-nonafluorbutylsulfonat, Alkylammonium-monofluorpentylsulfonat, Alkylammonium-difluorpentylsulfonat, Alkylammonium-trifluorpentylsulfonat, Alkylammonium-tetrafluorpentylsulfonat, Alkylammonium-pentafluorpentylsulfonat, Alkylammonium-hexafluorpentylsulfonat, Alkylammonium-heptafluorpentylsulfonat, Alkylammonium-octafluorpentylsulfonat, Alkylammonium-nonafluorpentylsulfonat, Alkylammonium-decafluorpentylsulfonat, Alkylammonium-undecafluorpentylsulfonat, Alkylammonium-monofluorhexylsulfonat, Alkylammonium-difluorhexylsulfonat, Alkylammonium-trifluorhexylsulfonat, Alkylammonium-tetrafluorhexylsulfonat, Alkylammonium-pentafluorhexylsulfonat, Alkylammonium-hexafluorhexylsulfonat, Alkylammonium-heptafluorhexylsulfonat, Alkylammonium-octafluorhexylsulfonat, Alkylammonium-nonafluorhexylsulfonat, Alkylammonium-decafluorhexylsulfonat, Alkylammonium-undecafluorhexylsulfonat, Alkylammonium-dodecafluorhexylsulfonat, Alkylammonium-tridecafluorhexylsulfonat, Alkylammonium-monofluorheptylsulfonat, Alkylammonium-difluorheptylsulfonat, Alkylammonium-trifluorheptylsulfonat, Alkylammonium-tetrafluorheptylsulfonat, Alkylammonium-pentafluorheptylsulfonat, Alkylammonium-hexafluorheptylsulfonat, Alkylammonium-heptafluorheptylsulfonat, Alkylammonium-octafluorheptylsulfonat, Alkylammonium-nonafluorheptylsulfonat, Alkylammonium-decafluorheptylsulfonat, Alkylammonium-undecafluorheptylsulfonat, Alkylammonium-dodecafluorheptylsulfonat, Alkylammonium-tridecafluorheptylsulfonat, Alkylammonium-tetradecafluorheptylsulfonat, Alkylammonium-pentadecafluorheptylsulfonat, Alkylammonium-monofluoroctylsulfonat, Alkylammonium-difluoroctylsulfonat, Alkylammonium-trifluoroctylsulfonat, Alkylammonium-tetrafluoroctylsulfonat, Alkylammonium-pentafluoroctylsulfonat, Alkylammonium-hexafluoroctylsulfonat, Alkylammonium-heptafluoroctylsulfonat, Alkylammonium-octafluoroctylsulfonat, Alkylammonium-nonafluoroctylsulfonat, Alkylammonium-decafluoroctylsulfonat, Alkylammonium-undecafluoroctylsulfonat, Alkylammonium-dodecafluoroctylsulfonat, Alkylammonium-tridecafluoroctylsulfonat, Alkylammonium-tetradecafluoroctylsulfonat, Alkylammoniumpentadecafluoroctylsulfonat, Alkylammonium-hexadecafluoroctylsulfonat, Alkylammonium-heptadecafluoroctylsulfonat, Alkylammonium-monofluornonylsulfonat, Alkylammonium-difluornonylsulfonat, Alkylammonium-trifluornonylsulfonat, Alkylammonium-tetrafluornonylsulfonat, Alkylammonium-pentafluornonylsulfonat, Alkylammonium-hexafluornonylsulfonat, Alkylammonium-heptafluornonylsulfonat, Alkylammonium-octafluornonylsulfonat, Alkylammonium-nonafluornonylsulfonat, Alkylammonium-decafluornonylsulfonat, Alkylammonium-undecafluornonylsulfonat, Alkylammonium-dodecafluornonylsulfonat, Alkylammonium-tridecafluornonylsulfonat, Alkylammonium-tetradecafluornonylsulfonat, Alkylammoniumpentadecafluornonylsulfonat, Alkylammonium-hexadecafluornonylsulfonat, Alkylammonium-heptadecafluornonylsulfonat, Alkylammoniumoctadecafluornonylsulfonat, Alkylammonium-nonadecafluornonylsulfonat, Alkylammonium-monofluordecylsulfonat, Alkylammonium-difluordecylsulfonat, Alkylammonium-trifluordecylsulfonat, Alkylammonium-tetrafluordecylsulfonat, Alkylammonium-pentafluordecylsulfonat, Alkylammonium-hexafluordecylsulfonat, Alkylammonium-heptafluordecylsulfonat, Alkylammonium-octafluordecylsulfonat, Alkylammonium-nonafluordecylsulfonat, Alkylammonium-decafluordecylsulfonat, Alkylammonium-undecafluordecylsulfonat, Alkylammonium-dodecafluordecylsulfonat, Alkylammonium-tridecafluordecylsulfonat, Alkylammonium-tetradecafluordecylsulfonat, Alkylammonium-pentadecafluordecylsulfonat, Alkylammoniumhexadecafluordecylsulfonat, Alkylammonium-heptadecafluordecylsulfonat, Alkylammonium-octadecafluordecylsulfonat, Alkylammoniumnonadecafluordecylsulfonat, Alkylammonium-icosafluordecylsulfonat, Alkylammoniumhenicosafluordecylsulfonat, Alkylammonium-monofluorundecylsulfonat, Alkylammoniumdifluorundecylsulfonat, Alkylammonium-trifluorundecylsulfonat, Alkylammoniumtetrafluorundecylsulfonat, Alkylammonium-pentafluorundecylsulfonat, Alkylammoniumhexafluorundecylsulfonat, Alkylammonium-heptafluorundecylsulfonat, Alkylammoniumoctafluorundecylsulfonat, Alkylammonium-nonafluorundecylsulfonat, Alkylammoniumdecafluorundecylsulfonat, Alkylammonium-undecafluorundecylsulfonat, Alkylammoniumdodecafluorundecylsulfonat, Alkylammonium-tridecafluorundecylsulfonat, Alkylammonium-tetradecafluorundecylsulfonat, Alkylammoniumpentadecafluorundecylsulfonat, Alkylammonium-hexadecafluorundecylsulfonat, Alkylammonium-heptadecafluorundecylsulfonat, Alkylammoniumoctadecafluorundecylsulfonat, Alkylammonium-nonadecafluorundecylsulfonat, Alkylammonium-icosafluorundecylsulfonat, Alkylammoniumhenicosafluorundecylsulfonat, Alkylammonium-docosafluorundecylsulfonat, Alkylammonium-tricosafluorundecylsulfonat, Alkylammonium-monofluordodecylsulfonat, Alkylammonium-difluordodecylsulfonat, Alkylammonium-trifluordodecylsulfonat, Alkylammonium-tetrafluordodecylsulfonat, Alkylammonium-pentafluordodecylsulfonat, Alkylammonium-hexafluordodecylsulfonat, Alkylammonium-heptafluordodecylsulfonat, Alkylammonium-octafluordodecylsulfonat, Alkylammonium-nonafluordodecylsulfonat, Alkylammonium-decafluordodecylsulfonat, Alkylammonium-undecafluordodecylsulfonat, Alkylammonium-dodecafluordodecylsulfonat, Alkylammoniumtridecafluordodecylsulfonat, Alkylammonium-tetradecafluordodecylsulfonat, Alkylammonium-pentadecafluordodecylsulfonat, Alkylammoniumhexadecafluordodecylsulfonat, Alkylammonium-heptadecafluordodecylsulfonat, Alkylammonium-octadecafluordodecylsulfonat, Alkylammoniumnonadecafluordodecylsulfonat, Alkylammonium-icosafluordodecylsulfonat, Alkylammonium-henicosafluordodecylsulfonat, Alkylammoniumdocosafluordodecylsulfonat, Alkylammonium-tricosafluordodecylsulfonat, Alkylammonium-tetracosafluordodecylsulfonat, Alkylammoniumpentacosafluordodecylsulfonat, Dialkylammonium-monofluorbutylsulfonat, Dialkylammonium-difluorbutylsulfonat, Dialkylammonium-trifluorbutylsulfonat, Dialkylammonium-tetrafluorbutylsulfonat, Dialkylammonium-pentafluorbutylsulfonat, Dialkylammonium-hexafluorbutylsulfonat, Dialkylammonium-heptafluorbutylsulfonat, Dialkylammonium-octafluorbutylsulfonat, Dialkylammonium-nonafluorbutylsulfonat, Dialkylammonium-monofluorpentylsulfonat, Dialkylammonium-difluorpentylsulfonat, Dialkylammonium-trifluorpentylsulfonat, Dialkylammonium-tetrafluorpentylsulfonat, Dialkylammonium-pentafluorpentylsulfonat, Dialkylammonium-hexafluorpentylsulfonat, Dialkylammonium-heptafluorpentylsulfonat, Dialkylammonium-octafluorpentylsulfonat, Dialkylammonium-nonafluorpentylsulfonat, Dialkylammonium-decafluorpentylsulfonat, Dialkylammonium-undecafluorpentylsulfonat, Dialkylammonium-monofluorhexylsulfonat, Dialkylammonium-difluorhexylsulfonat, Dialkylammonium-trifluorhexylsulfonat, Dialkylammonium-tetrafluorhexylsulfonat, Dialkylammonium-pentafluorhexylsulfonat, Dialkylammonium-hexafluorhexylsulfonat, Dialkylammonium-heptafluorhexylsulfonat, Dialkylammonium-octafluorhexylsulfonat, Dialkylammonium-nonafluorhexylsulfonat, Dialkylammonium-decafluorhexylsulfonat, Dialkylammonium-undecafluorhexylsulfonat, Dialkylammonium-dodecafluorhexylsulfonat, Dialkylammonium-tridecafluorhexylsulfonat, Dialkylammonium-monofluorheptylsulfonat, Dialkylammonium-difluorheptylsulfonat, Dialkylammonium-trifluorheptylsulfonat, Dialkylammonium-tetrafluorheptylsulfonat, Dialkylammonium-pentafluorheptylsulfonat, Dialkylammonium-hexafluorheptylsulfonat, Dialkylammonium-heptafluorheptylsulfonat, Dialkylammonium-octafluorheptylsulfonat, Dialkylammonium-nonafluorheptylsulfonat, Dialkylammonium-decafluorheptylsulfonat, Dialkylammonium-undecafluorheptylsulfonat, Dialkylammoniumdodecafluorheptylsulfonat, Dialkylammonium-tridecafluorheptylsulfonat, Dialkylammonium-tetradecafluorheptylsulfonat, Dialkylammoniumpentadecafluorheptylsulfonat, Dialkylammonium-monofluoroctylsulfonat, Dialkylammonium-difluoroctylsulfonat, Dialkylammonium-trifluoroctylsulfonat, Dialkylammonium-tetrafluoroctylsulfonat, Dialkylammonium-pentafluoroctylsulfonat, Dialkylammonium-hexafluoroctylsulfonat, Dialkylammonium-heptafluoroctylsulfonat, Dialkylammonium-octafluoroctylsulfonat, Dialkylammonium-nonafluoroctylsulfonat, Dialkylammonium-decafluoroctylsulfonat, Dialkylammonium-undecafluoroctylsulfonat, Dialkylammonium-dodecafluoroctylsulfonat, Dialkylammonium-tridecafluoroctylsulfonat, Dialkylammonium-tetradecafluoroctylsulfonat, Dialkylammoniumpentadecafluoroctylsulfonat, Dialkylammonium-hexadecafluoroctylsulfonat, Dialkylammonium-heptadecafluoroctylsulfonat, Dialkylammoniummonofluornonylsulfonat, Dialkylammonium-difluornonylsulfonat, Dialkylammoniumtrifluornonylsulfonat, Dialkylammonium-tetrafluornonylsulfonat, Dialkylammoniumpentafluornonylsulfonat, Dialkylammonium-hexafluornonylsulfonat, Dialkylammoniumheptafluornonylsulfonat, Dialkylammonium-octafluornonylsulfonat, Dialkylammoniumnonafluornonylsulfonat, Dialkylammonium-decafluornonylsulfonat, Dialkylammoniumundecafluornonylsulfonat, Dialkylammonium-dodecafluornonylsulfonat, Dialkylammonium-tridecafluornonylsulfonat, Dialkylammoniumtetradecafluornonylsulfonat, Dialkylammonium-pentadecafluornonylsulfonat, Dialkylammonium-hexadecafluornonylsulfonat, Dialkylammoniumheptadecafluornonylsulfonat, Dialkylammonium-octadecafluornonylsulfonat, Dialkylammonium-nonadecafluornonylsulfonat, Dialkylammoniummonofluordecylsulfonat, Dialkylammonium-difluordecylsulfonat, Dialkylammoniumtrifluordecylsulfonat, Dialkylammonium-tetrafluordecylsulfonat, Dialkylammoniumpentafluordecylsulfonat, Dialkylammonium-hexafluordecylsulfonat, Dialkylammoniumheptafluordecylsulfonat, Dialkylammonium-octafluordecylsulfonat, Dialkylammoniumnonafluordecylsulfonat, Dialkylammonium-decafluordecylsulfonat, Dialkylammoniumundecafluordecylsulfonat, Dialkylammonium-dodecafluordecylsulfonat, Dialkylammonium-tridecafluordecylsulfonat, Dialkylammoniumtetradecafluordecylsulfonat, Dialkylammonium-pentadecafluordecylsulfonat, Dialkylammonium-hexadecafluordecylsulfonat, Dialkylammoniumheptadecafluordecylsulfonat, Dialkylammonium-octadecafluordecylsulfonat, Dialkylammonium-nonadecafluordecylsulfonat, Dialkylammoniumicosafluordecylsulfonat, Dialkylammonium-henicosafluordecylsulfonat, Dialkylammonium-monofluorundecylsulfonat, Dialkylammonium-difluorundecylsulfonat, Dialkylammonium-trifluorundecylsulfonat, Dialkylammonium-tetrafluorundecylsulfonat, Dialkylammonium-pentafluorundecylsulfonat, Dialkylammoniumhexafluorundecylsulfonat, Dialkylammonium-heptafluorundecylsulfonat, Dialkylammonium-octafluorundecylsulfonat, Dialkylammonium-nonafluorundecylsulfonat, Dialkylammonium-decafluorundecylsulfonat, Dialkylammoniumundecafluorundecylsulfonat, Dialkylammonium-dodecafluorundecylsulfonat, Dialkylammonium-tridecafluorundecylsulfonat, Dialkylammoniumtetradecafluorundecylsulfonat, Dialkylammonium-pentadecafluorundecylsulfonat, Dialkylammonium-hexadecafluorundecylsulfonat, Dialkylammoniumheptadecafluorundecylsulfonat, Dialkylammonium-octadecafluorundecylsulfonat, Dialkylammonium-nonadecafluorundecylsulfonat, Dialkylammoniumicosafluorundecylsulfonat, Dialkylammonium-henicosafluorundecylsulfonat, Dialkylammonium-docosafluorundecylsulfonat, Dialkylammoniumtricosafluorundecylsulfonat, Dialkylammonium-monofluordodecylsulfonat, Dialkylammonium-difluordodecylsulfonat, Dialkylammonium-trifluordodecylsulfonat, Dialkylammonium-tetrafluordodecylsulfonat, Dialkylammoniumpentafluordodecylsulfonat, Dialkylammonium-hexafluordodecylsulfonat, Dialkylammonium-heptafluordodecylsulfonat, Dialkylammoniumoctafluordodecylsulfonat, Dialkylammonium-nonafluordodecylsulfonat, Dialkylammonium-decafluordodecylsulfonat, Dialkylammoniumundecafluordodecylsulfonat, Dialkylammonium-dodecafluordodecylsulfonat, Dialkylammonium-tridecafluordodecylsulfonat, Dialkylammoniumtetradecafluordodecylsulfonat, Dialkylammonium-pentadecafluordodecylsulfonat, Dialkylammonium-hexadecafluordodecylsulfonat, Dialkylammoniumheptadecafluordodecylsulfonat, Dialkylammonium-octadecafluordodecylsulfonat, Dialkylammonium-nonadecafluordodecylsulfonat, Dialkylammoniumicosafluordodecylsulfonat, Dialkylammonium-henicosafluordodecylsulfonat, Dialkylammonium-docosafluordodecylsulfonat, Dialkylammoniumtricosafluordodecylsulfonat, Dialkylammonium-tetracosafluordodecylsulfonat, Dialkylammonium-pentacosafluordodecylsulfonat, Trialkylammoniummonofluorbutylsulfonat, Trialkylammonium-difluorbutylsulfonat, Trialkylammoniumtrifluorbutylsulfonat, Trialkylammonium-tetrafluorbutylsulfonat, Trialkylammoniumpentafluorbutylsulfonat, Trialkylammonium-hexafluorbutylsulfonat, Trialkylammoniumheptafluorbutylsulfonat, Trialkylammonium-octafluorbutylsulfonat, Trialkylammoniumnonafluorbutylsulfonat, Trialkylammonium-monofluorpentylsulfonat, Trialkylammoniumdifluorpentylsulfonat, Trialkylammonium-trifluorpentylsulfonat, Trialkylammoniumtetrafluorpentylsulfonat, Trialkylammonium-pentafluorpentylsulfonat, Trialkylammoniumhexafluorpentylsulfonat, Trialkylammonium-heptafluorpentylsulfonat, Trialkylammoniumoctafluorpentylsulfonat, Trialkylammonium-nonafluorpentylsulfonat, Trialkylammoniumdecafluorpentylsulfonat, Trialkylammonium-undecafluorpentylsulfonat, Trialkylammonium-monofluorhexylsulfonat, Trialkylammonium-difluorhexylsulfonat, Trialkylammonium-trifluorhexylsulfonat, Trialkylammonium-tetrafluorhexylsulfonat, Trialkylammonium-pentafluorhexylsulfonat, Trialkylammonium-hexafluorhexylsulfonat, Trialkylammonium-heptafluorhexylsulfonat, Trialkylammonium-octafluorhexylsulfonat, Trialkylammonium-nonafluorhexylsulfonat, Trialkylammonium-decafluorhexylsulfonat, Trialkylammonium-undecafluorhexylsulfonat, Trialkylammoniumdodecafluorhexylsulfonat, Trialkylammonium-tridecafluorhexylsulfonat, Trialkylammonium-monofluorheptylsulfonat, Trialkylammonium-difluorheptylsulfonat, Trialkylammonium-trifluorheptylsulfonat, Trialkylammonium-tetrafluorheptylsulfonat, Trialkylammonium-pentafluorheptylsulfonat, Trialkylammonium-hexafluorheptylsulfonat, Trialkylammonium-heptafluorheptylsulfonat, Trialkylammonium-octafluorheptylsulfonat, Trialkylammonium-nonafluorheptylsulfonat, Trialkylammonium-decafluorheptylsulfonat, Trialkylammonium-undecafluorheptylsulfonat, Trialkylammoniumdodecafluorheptylsulfonat, Trialkylammonium-tridecafluorheptylsulfonat, Trialkylammonium-tetradecafluorheptylsulfonat, Trialkylammoniumpentadecafluorheptylsulfonat, Trialkylammonium-monofluoroctylsulfonat, Trialkylammonium-difluoroctylsulfonat, Trialkylammonium-trifluoroctylsulfonat, Trialkylammonium-tetrafluoroctylsulfonat, Trialkylammonium-pentafluoroctylsulfonat, Trialkylammonium-hexafluoroctylsulfonat, Trialkylammonium-heptafluoroctylsulfonat, Trialkylammonium-octafluoroctylsulfonat, Trialkylammonium-nonafluoroctylsulfonat, Trialkylammonium-decafluoroctylsulfonat, Trialkylammonium-undecafluoroctylsulfonat, Trialkylammonium-dodecafluoroctylsulfonat, Trialkylammonium-tridecafluoroctylsulfonat, Trialkylammonium-tetradecafluoroctylsulfonat, Trialkylammoniumpentadecafluoroctylsulfonat, Trialkylammonium-hexadecafluoroctylsulfonat, Trialkylammonium-heptadecafluoroctylsulfonat, Trialkylammoniummonofluornonylsulfonat, Trialkylammonium-difluornonylsulfonat, Trialkylammoniumtrifluornonylsulfonat, Trialkylammonium-tetrafluornonylsulfonat, Trialkylammoniumpentafluornonylsulfonat, Trialkylammonium-hexafluornonylsulfonat, Trialkylammoniumheptafluornonylsulfonat, Trialkylammonium-octafluornonylsulfonat, Trialkylammoniumnonafluornonylsulfonat, Trialkylammonium-decafluornonylsulfonat, Trialkylammoniumundecafluornonylsulfonat, Trialkylammonium-dodecafluornonylsulfonat, Trialkylammonium-tridecafluornonylsulfonat, Trialkylammoniumtetradecafluornonylsulfonat, Trialkylammonium-pentadecafluornonylsulfonat, Trialkylammonium-hexadecafluornonylsulfonat, Trialkylammoniumheptadecafluornonylsulfonat, Trialkylammonium-octadecafluornonylsulfonat, Trialkylammonium-nonadecafluornonylsulfonat, Trialkylammoniummonofluordecylsulfonat, Trialkylammonium-difluordecylsulfonat, Trialkylammoniumtrifluordecylsulfonat, Trialkylammonium-tetrafluordecylsulfonat, Trialkylammoniumpentafluordecylsulfonat, Trialkylammonium-hexafluordecylsulfonat, Trialkylammoniumheptafluordecylsulfonat, Trialkylammonium-octafluordecylsulfonat, Trialkylammoniumnonafluordecylsulfonat, Trialkylammonium-decafluordecylsulfonat, Trialkylammoniumundecafluordecylsulfonat, Trialkylammonium-dodecafluordecylsulfonat, Trialkylammonium-tridecafluordecylsulfonat, Trialkylammoniumtetradecafluordecylsulfonat, Trialkylammonium-pentadecafluordecylsulfonat, Trialkylammonium-hexadecafluordecylsulfonat, Trialkylammoniumheptadecafluordecylsulfonat, Trialkylammonium-octadecafluordecylsulfonat, Trialkylammonium-nonadecafluordecylsulfonat, Trialkylammoniumicosafluordecylsulfonat, Trialkylammonium-henicosafluordecylsulfonat, Trialkylammonium-monofluorundecylsulfonat, Trialkylammonium-difluorundecylsulfonat, Trialkylammonium-trifluorundecylsulfonat, Trialkylammonium-tetrafluorundecylsulfonat, Trialkylammonium-pentafluorundecylsulfonat, Trialkylammoniumhexafluorundecylsulfonat, Trialkylammonium-heptafluorundecylsulfonat, Trialkylammonium-octafluorundecylsulfonat, Trialkylammoniumnonafluorundecylsulfonat, Trialkylammonium-decafluorundecylsulfonat, Trialkylammonium-undecafluorundecylsulfonat, Trialkylammoniumdodecafluorundecylsulfonat, Trialkylammonium-tridecafluorundecylsulfonat, Trialkylammonium-tetradecafluorundecylsulfonat, Trialkylammoniumpentadecafluorundecylsulfonat, Trialkylammonium-hexadecafluorundecylsulfonat, Trialkylammonium-heptadecafluorundecylsulfonat, Trialkylammoniumoctadecafluorundecylsulfonat, Trialkylammonium-nonadecafluorundecylsulfonat, Trialkylammonium-icosafluorundecylsulfonat, Trialkylammoniumhenicosafluorundecylsulfonat, Trialkylammonium-docosafluorundecylsulfonat, Trialkylammonium-tricosafluorundecylsulfonat, Trialkylammoniummonofluordodecylsulfonat, Trialkylammonium-difluordodecylsulfonat, Trialkylammoniumtrifluordodecylsulfonat, Trialkylammonium-tetrafluordodecylsulfonat, Trialkylammoniumpentafluordodecylsulfonat, Trialkylammonium-hexafluordodecylsulfonat, Trialkylammonium-heptafluordodecylsulfonat, Trialkylammoniumoctafluordodecylsulfonat, Trialkylammonium-nonafluordodecylsulfonat, Trialkylammonium-decafluordodecylsulfonat, Trialkylammoniumundecafluordodecylsulfonat, Trialkylammonium-dodecafluordodecylsulfonat, Trialkylammonium-tridecafluordodecylsulfonat, Trialkylammoniumtetradecafluordodecylsulfonat, Trialkylammonium-pentadecafluordodecylsulfonat, Trialkylammonium-hexadecafluordodecylsulfonat, Trialkylammoniumheptadecafluordodecylsulfonat, Trialkylammonium-octadecafluordodecylsulfonat, Trialkylammonium-nonadecafluordodecylsulfonat, Trialkylammoniumicosafluordodecylsulfonat, Trialkylammonium-henicosafluordodecylsulfonat, Trialkylammonium-docosafluordodecylsulfonat, Trialkylammoniumtricosafluordodecylsulfonat, Trialkylammonium-tetracosafluordodecylsulfonat, Trialkylammonium-pentacosafluordodecylsulfonat, Tetraalkylammoniummonofluorbutylsulfonat, Tetraalkylammonium-difluorbutylsulfonat, Tetraalkylammoniumtrifluorbutylsulfonat, Tetraalkylammonium-tetrafluorbutylsulfonat, Tetraalkylammoniumpentafluorbutylsulfonat, Tetraalkylammonium-hexafluorbutylsulfonat, Tetraalkylammonium-heptafluorbutylsulfonat, Tetraalkylammoniumoctafluorbutylsulfonat, Tetraalkylammonium-nonafluorbutylsulfonat, Tetraalkylammonium-monofluorpentylsulfonat, Tetraalkylammoniumdifluorpentylsulfonat, Tetraalkylammonium-trifluorpentylsulfonat, Tetraalkylammoniumtetrafluorpentylsulfonat, Tetraalkylammonium-pentafluorpentylsulfonat, Tetraalkylammonium-hexafluorpentylsulfonat, Tetraalkylammoniumheptafluorpentylsulfonat, Tetraalkylammonium-octafluorpentylsulfonat, Tetraalkylammonium-nonafluorpentylsulfonat, Tetraalkylammoniumdecafluorpentylsulfonat, Tetraalkylammonium-undecafluorpentylsulfonat, Tetraalkylammonium-monofluorhexylsulfonat, Tetraalkylammonium-difluorhexylsulfonat, Tetraalkylammonium-trifluorhexylsulfonat, Tetraalkylammonium-tetrafluorhexylsulfonat, Tetraalkylammonium-pentafluorhexylsulfonat, Tetraalkylammoniumhexafluorhexylsulfonat, Tetraalkylammonium-heptafluorhexylsulfonat, Tetraalkylammonium-octafluorhexylsulfonat, Tetraalkylammoniumnonafluorhexylsulfonat, Tetraalkylammonium-decafluorhexylsulfonat, Tetraalkylammonium-undecafluorhexylsulfonat, Tetraalkylammoniumdodecafluorhexylsulfonat, Tetraalkylammonium-tridecafluorhexylsulfonat, Tetraalkylammonium-monofluorheptylsulfonat, Tetraalkylammoniumdifluorheptylsulfonat, Tetraalkylammonium-trifluorheptylsulfonat, Tetraalkylammoniumtetrafluorheptylsulfonat, Tetraalkylammonium-pentafluorheptylsulfonat, Tetraalkylammonium-hexafluorheptylsulfonat, Tetraalkylammoniumheptafluorheptylsulfonat, Tetraalkylammonium-octafluorheptylsulfonat, Tetraalkylammonium-nonafluorheptylsulfonat, Tetraalkylammoniumdecafluorheptylsulfonat, Tetraalkylammonium-undecafluorheptylsulfonat, Tetraalkylammonium-dodecafluorheptylsulfonat, Tetraalkylammoniumtridecafluorheptylsulfonat, Tetraalkylammonium-tetradecafluorheptylsulfonat, Tetraalkylammonium-pentadecafluorheptylsulfonat, Tetraalkylammoniummonofluoroctylsulfonat, Tetraalkylammonium-difluoroctylsulfonat, Tetraalkylammoniumtrifluoroctylsulfonat, Tetraalkylammonium-tetrafluoroctylsulfonat, Tetraalkylammoniumpentafluoroctylsulfonat, Tetraalkylammonium-hexafluoroctylsulfonat, Tetraalkylammonium-heptafluoroctylsulfonat, Tetraalkylammoniumoctafluoroctylsulfonat, Tetraalkylammonium-nonafluoroctylsulfonat, Tetraalkylammonium-decafluoroctylsulfonat, Tetraalkylammoniumundecafluoroctylsulfonat, Tetraalkylammonium-dodecafluoroctylsulfonat, Tetraalkylammonium-tridecafluoroctylsulfonat, Tetraalkylammoniumtetradecafluoroctylsulfonat, Tetraalkylammonium-pentadecafluoroctylsulfonat, Tetraalkylammonium-hexadecafluoroctylsulfonat, Tetraalkylammoniumheptadecafluoroctylsulfonat, Tetraalkylammonium-monofluornonylsulfonat, Tetraalkylammonium-difluornonylsulfonat, Tetraalkylammonium-trifluornonylsulfonat, Tetraalkylammonium-tetrafluornonylsulfonat, Tetraalkylammoniumpentafluornonylsulfonat, Tetraalkylammonium-hexafluornonylsulfonat, Tetraalkylammonium-heptafluornonylsulfonat, Tetraalkylammoniumoctafluornonylsulfonat, Tetraalkylammonium-nonafluornonylsulfonat, Tetraalkylammonium-decafluornonylsulfonat, Tetraalkylammoniumundecafluornonylsulfonat, Tetraalkylammonium-dodecafluornonylsulfonat, Tetraalkylammonium-tridecafluornonylsulfonat, Tetraalkylammoniumtetradecafluornonylsulfonat, Tetraalkylammonium-pentadecafluornonylsulfonat, Tetraalkylammonium-hexadecafluornonylsulfonat, Tetraalkylammoniumheptadecafluornonylsulfonat, Tetraalkylammonium-octadecafluornonylsulfonat, Tetraalkylammonium-nonadecafluornonylsulfonat, Tetraalkylammoniummonofluordecylsulfonat, Tetraalkylammonium-difluordecylsulfonat, Tetraalkylammoniumtrifluordecylsulfonat, Tetraalkylammonium-tetrafluordecylsulfonat, Tetraalkylammoniumpentafluordecylsulfonat, Tetraalkylammonium-hexafluordecylsulfonat, Tetraalkylammonium-heptafluordecylsulfonat, Tetraalkylammoniumoctafluordecylsulfonat, Tetraalkylammonium-nonafluordecylsulfonat, Tetraalkylammonium-decafluordecylsulfonat, Tetraalkylammoniumundecafluordecylsulfonat, Tetraalkylammonium-dodecafluordecylsulfonat, Tetraalkylammonium-tridecafluordecylsulfonat, Tetraalkylammoniumtetradecafluordecylsulfonat, Tetraalkylammonium-pentadecafluordecylsulfonat, Tetraalkylammonium-hexadecafluordecylsulfonat, Tetraalkylammoniumheptadecafluordecylsulfonat, Tetraalkylammonium-octadecafluordecylsulfonat, Tetraalkylammonium-nonadecafluordecylsulfonat, Tetraalkylammoniumicosafluordecylsulfonat, Tetraalkylammonium-henicosafluordecylsulfonat, Tetraalkylammonium-monofluorundecylsulfonat, Tetraalkylammoniumdifluorundecylsulfonat, Tetraalkylammonium-trifluorundecylsulfonat, Tetraalkylammonium-tetrafluorundecylsulfonat, Tetraalkylammoniumpentafluorundecylsulfonat, Tetraalkylammonium-hexafluorundecylsulfonat, Tetraalkylammonium-heptafluorundecylsulfonat, Tetraalkylammoniumoctafluorundecylsulfonat, Tetraalkylammonium-nonafluorundecylsulfonat, Tetraalkylammonium-decafluorundecylsulfonat, Tetraalkylammoniumundecafluorundecylsulfonat, Tetraalkylammonium-dodecafluorundecylsulfonat, Tetraalkylammonium-tridecafluorundecylsulfonat, Tetraalkylammoniumtetradecafluorundecylsulfonat, Tetraalkylammonium-pentadecafluorundecylsulfonat, Tetraalkylammonium-hexadecafluorundecylsulfonat, Tetraalkylammoniumheptadecafluorundecylsulfonat, Tetraalkylammonium-octadecafluorundecylsulfonat, Tetraalkylammonium-nonadecafluorundecylsulfonat, Tetraalkylammoniumicosafluorundecylsulfonat, Tetraalkylammonium-henicosafluorundecylsulfonat, Tetraalkylammonium-docosafluorundecylsulfonat, Tetraalkylammoniumtricosafluorundecylsulfonat, Tetraalkylammonium-monofluordodecylsulfonat, Tetraalkylammonium-difluordodecylsulfonat, Tetraalkylammoniumtrifluordodecylsulfonat, Tetraalkylammonium-tetrafluordodecylsulfonat, Tetraalkylammonium-pentafluordodecylsulfonat, Tetraalkylammoniumhexafluordodecylsulfonat, Tetraalkylammonium-heptafluordodecylsulfonat, Tetraalkylammonium-octafluordodecylsulfonat, Tetraalkylammoniumnonafluordodecylsulfonat, Tetraalkylammonium-decafluordodecylsulfonat, Tetraalkylammonium-undecafluordodecylsulfonat, Tetraalkylammoniumdodecafluordodecylsulfonat, Tetraalkylammonium-tridecafluordodecylsulfonat, Tetraalkylammonium-tetradecafluordodecylsulfonat, Tetraalkylammoniumpentadecafluordodecylsulfonat, Tetraalkylammonium-hexadecafluordodecylsulfonat, Tetraalkylammonium-heptadecafluordodecylsulfonat, Tetraalkylammoniumoctadecafluordodecylsulfonat, Tetraalkylammonium-nonadecafluordodecylsulfonat, Tetraalkylammonium-icosafluordodecylsulfonat, Tetraalkylammoniumhenicosafluordodecylsulfonat, Tetraalkylammonium-docosafluordodecylsulfonat, Tetraalkylammonium-tricosafluordodecylsulfonat, Tetraalkylammoniumtetracosafluordodecylsulfonat, Tetraalkylammonium-pentacosafluordodecylsulfonat, insbesondere aus der Gruppe enthaltend Ammonium-monofluorbutylsulfonat, Ammonium-difluorbutylsulfonat, Ammonium-trifluorbutylsulfonat, Ammoniumtetrafluorbutylsulfonat, Ammonium-pentafluorbutylsulfonat, Ammoniumhexafluorbutylsulfonat, Ammonium-heptafluorbutylsulfonat, Ammoniumoctafluorbutylsulfonat, Ammonium-nonafluorbutylsulfonat, Ammoniummonofluorpentylsulfonat, Ammonium-difluorpentylsulfonat, Ammoniumtrifluorpentylsulfonat, Ammonium-tetrafluorpentylsulfonat, Ammoniumpentafluorpentylsulfonat, Ammonium-hexafluorpentylsulfonat, Ammoniumheptafluorpentylsulfonat, Ammonium-octafluorpentylsulfonat, Ammoniumnonafluorpentylsulfonat, Ammonium-decafluorpentylsulfonat, Ammoniumundecafluorpentylsulfonat, Ammonium-monofluorhexylsulfonat, Ammoniumdifluorhexylsulfonat, Ammonium-trifluorhexylsulfonat, Ammonium-tetrafluorhexylsulfonat, Ammonium-pentafluorhexylsulfonat, Ammonium-hexafluorhexylsulfonat, Ammoniumheptafluorhexylsulfonat, Ammonium-octafluorhexylsulfonat, Ammoniumnonafluorhexylsulfonat, Ammonium-decafluorhexylsulfonat, Ammoniumundecafluorhexylsulfonat, Ammonium-dodecafluorhexylsulfonat, Ammoniumtridecafluorhexylsulfonat, Ammonium-monofluorheptylsulfonat, Ammoniumdifluorheptylsulfonat, Ammonium-trifluorheptylsulfonat, Ammoniumtetrafluorheptylsulfonat, Ammonium-pentafluorheptylsulfonat, Ammoniumhexafluorheptylsulfonat, Ammonium-heptafluorheptylsulfonat, Ammoniumoctafluorheptylsulfonat, Ammonium-nonafluorheptylsulfonat, Ammoniumdecafluorheptylsulfonat, Ammonium-undecafluorheptylsulfonat, Ammoniumdodecafluorheptylsulfonat, Ammonium-tridecafluorheptylsulfonat, Ammoniumtetradecafluorheptylsulfonat, Ammonium-pentadecafluorheptylsulfonat, Ammoniummonofluoroctylsulfonat, Ammonium-difluoroctylsulfonat, Ammonium-trifluoroctylsulfonat, Ammonium-tetrafluoroctylsulfonat, Ammonium-pentafluoroctylsulfonat, Ammoniumhexafluoroctylsulfonat, Ammonium-heptafluoroctylsulfonat, Ammoniumoctafluoroctylsulfonat, Ammonium-nonafluoroctylsulfonat, Ammoniumdecafluoroctylsulfonat, Ammonium-undecafluoroctylsulfonat, Ammoniumdodecafluoroctylsulfonat, Ammonium-tridecafluoroctylsulfonat, Ammoniumtetradecafluoroctylsulfonat, Ammonium-pentadecafluoroctylsulfonat, Ammoniumhexadecafluoroctylsulfonat, Ammonium-heptadecafluoroctylsulfonat, Ammoniummonofluornonylsulfonat, Ammonium-difluornonylsulfonat, Ammoniumtrifluornonylsulfonat, Ammonium-tetrafluornonylsulfonat, Ammoniumpentafluornonylsulfonat, Ammonium-hexafluornonylsulfonat, Ammoniumheptafluornonylsulfonat, Ammonium-octafluornonylsulfonat, Ammoniumnonafluornonylsulfonat, Ammonium-decafluornonylsulfonat, Ammoniumundecafluornonylsulfonat, Ammonium-dodecafluornonylsulfonat, Ammoniumtridecafluornonylsulfonat, Ammonium-tetradecafluornonylsulfonat, Ammoniumpentadecafluornonylsulfonat, Ammonium-hexadecafluornonylsulfonat, Ammoniumheptadecafluornonylsulfonat, Ammonium-octadecafluornonylsulfonat, Ammoniumnonadecafluornonylsulfonat, Ammonium-monofluordecylsulfonat, Ammoniumdifluordecylsulfonat, Ammonium-trifluordecylsulfonat, Ammonium-tetrafluordecylsulfonat, Ammonium-pentafluordecylsulfonat, Ammonium-hexafluordecylsulfonat, Ammoniumheptafluordecylsulfonat, Ammonium-octafluordecylsulfonat, Ammoniumnonafluordecylsulfonat, Ammonium-decafluordecylsulfonat, Ammoniumundecafluordecylsulfonat, Ammonium-dodecafluordecylsulfonat, Ammoniumtridecafluordecylsulfonat, Ammonium-tetradecafluordecylsulfonat, Ammoniumpentadecafluordecylsulfonat, Ammonium-hexadecafluordecylsulfonat, Ammoniumheptadecafluordecylsulfonat, Ammonium-octadecafluordecylsulfonat, Ammoniumnonadecafluordecylsulfonat, Ammonium-icosafluordecylsulfonat, Ammoniumhenicosafluordecylsulfonat, Ammonium-monofluorundecylsulfonat, Ammoniumdifluorundecylsulfonat, Ammonium-trifluorundecylsulfonat, Ammoniumtetrafluorundecylsulfonat, Ammonium-pentafluorundecylsulfonat, Ammoniumhexafluorundecylsulfonat, Ammonium-heptafluorundecylsulfonat, Ammoniumoctafluorundecylsulfonat, Ammonium-nonafluorundecylsulfonat, Ammoniumdecafluorundecylsulfonat, Ammonium-undecafluorundecylsulfonat, Ammoniumdodecafluorundecylsulfonat, Ammonium-tridecafluorundecylsulfonat, Ammoniumtetradecafluorundecylsulfonat, Ammonium-pentadecafluorundecylsulfonat, Ammoniumhexadecafluorundecylsulfonat, Ammonium-heptadecafluorundecylsulfonat, Ammoniumoctadecafluorundecylsulfonat, Ammonium-nonadecafluorundecylsulfonat, Ammoniumicosafluorundecylsulfonat, Ammonium-henicosafluorundecylsulfonat, Ammoniumdocosafluorundecylsulfonat, Ammonium-tricosafluorundecylsulfonat, Ammoniummonofluordodecylsulfonat, Ammonium-difluordodecylsulfonat, Ammoniumtrifluordodecylsulfonat, Ammonium-tetrafluordodecylsulfonat, Ammoniumpentafluordodecylsulfonat, Ammonium-hexafluordodecylsulfonat, Ammoniumheptafluordodecylsulfonat, Ammonium-octafluordodecylsulfonat, Ammoniumnonafluordodecylsulfonat, Ammonium-decafluordodecylsulfonat, Ammoniumundecafluordodecylsulfonat, Ammonium-dodecafluordodecylsulfonat, Ammoniumtridecafluordodecylsulfonat, Ammonium-tetradecafluordodecylsulfonat, Ammoniumpentadecafluordodecylsulfonat, Ammonium-hexadecafluordodecylsulfonat, Ammoniumheptadecafluordodecylsulfonat, Ammonium-octadecafluordodecylsulfonat, Ammoniumnonadecafluordodecylsulfonat, Ammonium-icosafluordodecylsulfonat, Ammoniumhenicosafluordodecylsulfonat, Ammonium-docosafluordodecylsulfonat, Ammoniumtricosafluordodecylsulfonat, Ammonium-tetracosafluordodecylsulfonat, Ammoniumpentacosafluordodecylsulfonat, Dimethylammonium-monofluorbutylsulfonat, Dimethylammonium-difluorbutylsulfonat, Dimethylammonium-trifluorbutylsulfonat, Dimethylammonium-tetrafluorbutylsulfonat, Dimethylammonium-pentafluorbutylsulfonat, Dimethylammonium-hexafluorbutylsulfonat, Dimethylammonium-heptafluorbutylsulfonat, Dimethylammonium-octafluorbutylsulfonat, Dimethylammonium-nonafluorbutylsulfonat, Dimethylammonium-monofluorpentylsulfonat, Dimethylammonium-difluorpentylsulfonat, Dimethylammonium-trifluorpentylsulfonat, Dimethylammonium-tetrafluorpentylsulfonat, Dimethylammonium-pentafluorpentylsulfonat, Dimethylammoniumhexafluorpentylsulfonat, Dimethylammonium-heptafluorpentylsulfonat, Dimethylammonium-octafluorpentylsulfonat, Dimethylammoniumnonafluorpentylsulfonat, Dimethylammonium-decafluorpentylsulfonat, Dimethylammonium-undecafluorpentylsulfonat, Dimethylammoniummonofluorhexylsulfonat, Dimethylammonium-difluorhexylsulfonat, Dimethylammoniumtrifluorhexylsulfonat, Dimethylammonium-tetrafluorhexylsulfonat, Dimethylammoniumpentafluorhexylsulfonat, Dimethylammonium-hexafluorhexylsulfonat, Dimethylammonium-heptafluorhexylsulfonat, Dimethylammonium-octafluorhexylsulfonat, Dimethylammonium-nonafluorhexylsulfonat, Dimethylammonium-decafluorhexylsulfonat, Dimethylammonium-undecafluorhexylsulfonat, Dimethylammoniumdodecafluorhexylsulfonat, Dimethylammonium-tridecafluorhexylsulfonat, Dimethylammonium-monofluorheptylsulfonat, Dimethylammonium-difluorheptylsulfonat, Dimethylammonium-trifluorheptylsulfonat, Dimethylammonium-tetrafluorheptylsulfonat, Dimethylammonium-pentafluorheptylsulfonat, Dimethylammoniumhexafluorheptylsulfonat, Dimethylammonium-heptafluorheptylsulfonat, Dimethylammonium-octafluorheptylsulfonat, Dimethylammoniumnonafluorheptylsulfonat, Dimethylammonium-decafluorheptylsulfonat, Dimethylammonium-undecafluorheptylsulfonat, Dimethylammoniumdodecafluorheptylsulfonat, Dimethylammonium-tridecafluorheptylsulfonat, Dimethylammonium-tetradecafluorheptylsulfonat, Dimethylammoniumpentadecafluorheptylsulfonat, Dimethylammonium-monofluoroctylsulfonat, Dimethylammonium-difluoroctylsulfonat, Dimethylammonium-trifluoroctylsulfonat, Dimethylammonium-tetrafluoroctylsulfonat, Dimethylammonium-pentafluoroctylsulfonat, Dimethylammonium-hexafluoroctylsulfonat, Dimethylammonium-heptafluoroctylsulfonat, Dimethylammonium-octafluoroctylsulfonat, Dimethylammonium-nonafluoroctylsulfonat, Dimethylammonium-decafluoroctylsulfonat, Dimethylammoniumundecafluoroctylsulfonat, Dimethylammonium-dodecafluoroctylsulfonat, Dimethylammonium-tridecafluoroctylsulfonat, Dimethylammoniumtetradecafluoroctylsulfonat, Dimethylammonium-pentadecafluoroctylsulfonat, Dimethylammonium-hexadecafluoroctylsulfonat, Dimethylammoniumheptadecafluoroctylsulfonat, Dimethylammonium-monofluornonylsulfonat, Dimethylammonium-difluornonylsulfonat, Dimethylammonium-trifluornonylsulfonat, Dimethylammonium-tetrafluornonylsulfonat, Dimethylammoniumpentafluornonylsulfonat, Dimethylammonium-hexafluornonylsulfonat, Dimethylammonium-heptafluornonylsulfonat, Dimethylammoniumoctafluornonylsulfonat, Dimethylammonium-nonafluornonylsulfonat, Dimethylammonium-decafluornonylsulfonat, Dimethylammoniumundecafluornonylsulfonat, Dimethylammonium-dodecafluornonylsulfonat, Dimethylammonium-tridecafluornonylsulfonat, Dimethylammoniumtetradecafluornonylsulfonat, Dimethylammonium-pentadecafluornonylsulfonat, Dimethylammonium-hexadecafluornonylsulfonat, Dimethylammoniumheptadecafluornonylsulfonat, Dimethylammonium-octadecafluornonylsulfonat, Dimethylammonium-nonadecafluornonylsulfonat, Dimethylammoniummonofluordecylsulfonat, Dimethylammonium-difluordecylsulfonat, Dimethylammoniumtrifluordecylsulfonat, Dimethylammonium-tetrafluordecylsulfonat, Dimethylammoniumpentafluordecylsulfonat, Dimethylammonium-hexafluordecylsulfonat, Dimethylammonium-heptafluordecylsulfonat, Dimethylammonium-octafluordecylsulfonat, Dimethylammonium-nonafluordecylsulfonat, Dimethylammonium-decafluordecylsulfonat, Dimethylammonium-undecafluordecylsulfonat, Dimethylammoniumdodecafluordecylsulfonat, Dimethylammonium-tridecafluordecylsulfonat, Dimethylammonium-tetradecafluordecylsulfonat, Dimethylammoniumpentadecafluordecylsulfonat, Dimethylammonium-hexadecafluordecylsulfonat, Dimethylammonium-heptadecafluordecylsulfonat, Dimethylammoniumoctadecafluordecylsulfonat, Dimethylammonium-nonadecafluordecylsulfonat, Dimethylammonium-icosafluordecylsulfonat, Dimethylammoniumhenicosafluordecylsulfonat, Dimethylammonium-monofluorundecylsulfonat, Dimethylammonium-difluorundecylsulfonat, Dimethylammonium-trifluorundecylsulfonat, Dimethylammonium-tetrafluorundecylsulfonat, Dimethylammoniumpentafluorundecylsulfonat, Dimethylammonium-hexafluorundecylsulfonat, Dimethylammonium-heptafluorundecylsulfonat, Dimethylammoniumoctafluorundecylsulfonat, Dimethylammonium-nonafluorundecylsulfonat, Dimethylammonium-decafluorundecylsulfonat, Dimethylammoniumundecafluorundecylsulfonat, Dimethylammonium-dodecafluorundecylsulfonat, Dimethylammonium-tridecafluorundecylsulfonat, Dimethylammoniumtetradecafluorundecylsulfonat, Dimethylammonium-pentadecafluorundecylsulfonat, Dimethylammonium-hexadecafluorundecylsulfonat, Dimethylammoniumheptadecafluorundecylsulfonat, Dimethylammonium-octadecafluorundecylsulfonat, Dimethylammonium-nonadecafluorundecylsulfonat, Dimethylammoniumicosafluorundecylsulfonat, Dimethylammonium-henicosafluorundecylsulfonat, Dimethylammonium-docosafluorundecylsulfonat, Dimethylammoniumtricosafluorundecylsulfonat, Dimethylammonium-monofluordodecylsulfonat, Dimethylammonium-difluordodecylsulfonat, Dimethylammonium-trifluordodecylsulfonat, Dimethylammonium-tetrafluordodecylsulfonat, Dimethylammoniumpentafluordodecylsulfonat, Dimethylammonium-hexafluordodecylsulfonat, Dimethylammonium-heptafluordodecylsulfonat, Dimethylammoniumoctafluordodecylsulfonat, Dimethylammonium-nonafluordodecylsulfonat, Dimethylammonium-decafluordodecylsulfonat, Dimethylammoniumundecafluordodecylsulfonat, Dimethylammonium-dodecafluordodecylsulfonat, Dimethylammonium-tridecafluordodecylsulfonat, Dimethylammoniumtetradecafluordodecylsulfonat, Dimethylammonium-pentadecafluordodecylsulfonat, Dimethylammonium-hexadecafluordodecylsulfonat, Dimethylammoniumheptadecafluordodecylsulfonat, Dimethylammonium-octadecafluordodecylsulfonat, Dimethylammonium-nonadecafluordodecylsulfonat, Dimethylammoniumicosafluordodecylsulfonat, Dimethylammonium-henicosafluordodecylsulfonat, Dimethylammonium-docosafluordodecylsulfonat, Dimethylammoniumtricosafluordodecylsulfonat, Dimethylammonium-tetracosafluordodecylsulfonat, Dimethylammonium-pentacosafluordodecylsulfonat, Tetraethylammoniummonofluorbutylsulfonat, Tetraethylammonium-difluorbutylsulfonat, Tetraethylammoniumtrifluorbutylsulfonat, Tetraethylammonium-tetrafluorbutylsulfonat, Tetraethylammoniumpentafluorbutylsulfonat, Tetraethylammonium-hexafluorbutylsulfonat, Tetraethylammonium-heptafluorbutylsulfonat, Tetraethylammoniumoctafluorbutylsulfonat, Tetraethylammonium-nonafluorbutylsulfonat, Tetraethylammonium-monofluorpentylsulfonat, Tetraethylammoniumdifluorpentylsulfonat, Tetraethylammonium-trifluorpentylsulfonat, Tetraethylammoniumtetrafluorpentylsulfonat, Tetraethylammonium-pentafluorpentylsulfonat, Tetraethylammonium-hexafluorpentylsulfonat, Tetraethylammoniumheptafluorpentylsulfonat, Tetraethylammonium-octafluorpentylsulfonat, Tetraethylammonium-nonafluorpentylsulfonat, Tetraethylammoniumdecafluorpentylsulfonat, Tetraethylammonium-undecafluorpentylsulfonat, Tetraethylammonium-monofluorhexylsulfonat, Tetraethylammonium-difluorhexylsulfonat, Tetraethylammonium-trifluorhexylsulfonat, Tetraethylammonium-tetrafluorhexylsulfonat, Tetraethylammonium-pentafluorhexylsulfonat, Tetraethylammoniumhexafluorhexylsulfonat, Tetraethylammonium-heptafluorhexylsulfonat, Tetraethylammonium-octafluorhexylsulfonat, Tetraethylammoniumnonafluorhexylsulfonat, Tetraethylammonium-decafluorhexylsulfonat, Tetraethylammonium-undecafluorhexylsulfonat, Tetraethylammoniumdodecafluorhexylsulfonat, Tetraethylammonium-tridecafluorhexylsulfonat, Tetraethylammonium-monofluorheptylsulfonat, Tetraethylammoniumdifluorheptylsulfonat, Tetraethylammonium-trifluorheptylsulfonat, Tetraethylammoniumtetrafluorheptylsulfonat, Tetraethylammonium-pentafluorheptylsulfonat, Tetraethylammonium-hexafluorheptylsulfonat, Tetraethylammoniumheptafluorheptylsulfonat, Tetraethylammonium-octafluorheptylsulfonat, Tetraethylammonium-nonafluorheptylsulfonat, Tetraethylammoniumdecafluorheptylsulfonat, Tetraethylammonium-undecafluorheptylsulfonat, Tetraethylammonium-dodecafluorheptylsulfonat, Tetraethylammoniumtridecafluorheptylsulfonat, Tetraethylammonium-tetradecafluorheptylsulfonat, Tetraethylammonium-pentadecafluorheptylsulfonat, Tetraethylammoniummonofluoroctylsulfonat, Tetraethylammonium-difluoroctylsulfonat, Tetraethylammoniumtrifluoroctylsulfonat, Tetraethylammonium-tetrafluoroctylsulfonat, Tetraethylammoniumpentafluoroctylsulfonat, Tetraethylammonium-hexafluoroctylsulfonat, Tetraethylammonium-heptafluoroctylsulfonat, Tetraethylammoniumoctafluoroctylsulfonat, Tetraethylammonium-nonafluoroctylsulfonat, Tetraethylammonium-decafluoroctylsulfonat, Tetraethylammoniumundecafluoroctylsulfonat, Tetraethylammonium-dodecafluoroctylsulfonat, Tetraethylammonium-tridecafluoroctylsulfonat, Tetraethylammoniumtetradecafluoroctylsulfonat, Tetraethylammonium-pentadecafluoroctylsulfonat, Tetraethylammonium-hexadecafluoroctylsulfonat, Tetraethylammoniumheptadecafluoroctylsulfonat, Tetraethylammonium-monofluornonylsulfonat, Tetraethylammonium-difluornonylsulfonat, Tetraethylammonium-trifluornonylsulfonat, Tetraethylammonium-tetrafluornonylsulfonat, Tetraethylammoniumpentafluornonylsulfonat, Tetraethylammonium-hexafluornonylsulfonat, Tetraethylammonium-heptafluornonylsulfonat, Tetraethylammoniumoctafluornonylsulfonat, Tetraethylammonium-nonafluornonylsulfonat, Tetraethylammonium-decafluornonylsulfonat, Tetraethylammoniumundecafluornonylsulfonat, Tetraethylammonium-dodecafluornonylsulfonat, Tetraethylammonium-tridecafluornonylsulfonat, Tetraethylammoniumtetradecafluornonylsulfonat, Tetraethylammonium-pentadecafluornonylsulfonat, Tetraethylammonium-hexadecafluornonylsulfonat, Tetraethylammoniumheptadecafluornonylsulfonat, Tetraethylammonium-octadecafluornonylsulfonat, Tetraethylammonium-nonadecafluornonylsulfonat, Tetraethylammoniummonofluordecylsulfonat, Tetraethylammonium-difluordecylsulfonat, Tetraethylammonium-trifluordecylsulfonat, Tetraethylammonium-tetrafluordecylsulfonat, Tetraethylammonium-pentafluordecylsulfonat, Tetraethylammoniumhexafluordecylsulfonat, Tetraethylammonium-heptafluordecylsulfonat, Tetraethylammonium-octafluordecylsulfonat, Tetraethylammoniumnonafluordecylsulfonat, Tetraethylammonium-decafluordecylsulfonat, Tetraethylammonium-undecafluordecylsulfonat, Tetraethylammoniumdodecafluordecylsulfonat, Tetraethylammonium-tridecafluordecylsulfonat, Tetraethylammonium-tetradecafluordecylsulfonat, Tetraethylammoniumpentadecafluordecylsulfonat, Tetraethylammonium-hexadecafluordecylsulfonat, Tetraethylammonium-heptadecafluordecylsulfonat, Tetraethylammoniumoctadecafluordecylsulfonat, Tetraethylammonium-nonadecafluordecylsulfonat, Tetraethylammonium-icosafluordecylsulfonat, Tetraethylammoniumhenicosafluordecylsulfonat, Tetraethylammonium-monofluorundecylsulfonat, Tetraethylammonium-difluorundecylsulfonat, Tetraethylammoniumtrifluorundecylsulfonat, Tetraethylammonium-tetrafluorundecylsulfonat, Tetraethylammonium-pentafluorundecylsulfonat, Tetraethylammoniumhexafluorundecylsulfonat, Tetraethylammonium-heptafluorundecylsulfonat, Tetraethylammonium-octafluorundecylsulfonat, Tetraethylammoniumnonafluorundecylsulfonat, Tetraethylammonium-decafluorundecylsulfonat, Tetraethylammonium-undecafluorundecylsulfonat, Tetraethylammoniumdodecafluorundecylsulfonat, Tetraethylammonium-tridecafluorundecylsulfonat, Tetraethylammonium-tetradecafluorundecylsulfonat, Tetraethylammoniumpentadecafluorundecylsulfonat, Tetraethylammonium-hexadecafluorundecylsulfonat, Tetraethylammonium-heptadecafluorundecylsulfonat, Tetraethylammoniumoctadecafluorundecylsulfonat, Tetraethylammonium-nonadecafluorundecylsulfonat, Tetraethylammonium-icosafluorundecylsulfonat, Tetraethylammoniumhenicosafluorundecylsulfonat, Tetraethylammonium-docosafluorundecylsulfonat, Tetraethylammonium-tricosafluorundecylsulfonat, Tetraethylammoniummonofluordodecylsulfonat, Tetraethylammonium-difluordodecylsulfonat, Tetraethylammonium-trifluordodecylsulfonat, Tetraethylammoniumtetrafluordodecylsulfonat, Tetraethylammonium-pentafluordodecylsulfonat, Tetraethylammonium-hexafluordodecylsulfonat, Tetraethylammoniumheptafluordodecylsulfonat, Tetraethylammonium-octafluordodecylsulfonat, Tetraethylammonium-nonafluordodecylsulfonat, Tetraethylammoniumdecafluordodecylsulfonat, Tetraethylammonium-undecafluordodecylsulfonat, Tetraethylammonium-dodecafluordodecylsulfonat, Tetraethylammoniumtridecafluordodecylsulfonat, Tetraethylammonium-tetradecafluordodecylsulfonat, Tetraethylammonium-pentadecafluordodecylsulfonat, Tetraethylammoniumhexadecafluordodecylsulfonat, Tetraethylammonium-heptadecafluordodecylsulfonat, Tetraethylammonium-octadecafluordodecylsulfonat, Tetraethylammoniumnonadecafluordodecylsulfonat, Tetraethylammonium-icosafluordodecylsulfonat, Tetraethylammonium-henicosafluordodecylsulfonat, Tetraethylammoniumdocosafluordodecylsulfonat, Tetraethylammonium-tricosafluordodecylsulfonat, Tetraethylammonium-tetracosafluordodecylsulfonat, Tetraethylammoniumpentacosafluordodecylsulfonat.

Es versteht sich von selbst, dass entsprechend dem bereits oben ausgeführten auch jeweils die zugehörigen Polyfluorsulfonsäuren für die genannten Polyfluorsulfonate als Bestandteil des Zusatz möglich sind, nämlich insbesondere dann, wenn das Gegenion H⁺ ist.

Denkbar ist in diesem Zusammenhang auch, dass wenigstens ein Tensid ein anionisches, fluoriertes Tensid ist, welches eine perfluorierte Hexylen- oder Octylengruppe, einen Ethylenspacer und eine Sulfonatgruppe als Kopfgruppe aufweist. Insofern kann das Tensid auch eine Perfluor-alkyl-sulfonsäure oder ein Perfluoralkylsulfonat mit einem Spacer, bevorzugt einem Ethylenspacer, sein. Insbesondere ist dabei denkbar, dass das Tensid eines der zuvor genannten Tenside entsprechend einer der Formeln (CₙF₍₂ₙ₊₁₎₋ₘHₘ-SO₃⁻)Na⁺, (CₙF₍₂ₙ₊₁₎₋ₘHₘ-SO₃⁻)K⁺, (CₙF₍₂ₙ₊₁₎₋ₘHₘ-SO₃⁻)Li⁺ oder (CₙF₍₂ₙ₊₁₎₋ₘHₘ-SO₃⁻)((CₛH₂ₛ₊₁)(CₚH₂ₚ₊₁)(C_{q}H_{2q+1})(CᵣH₂ᵣ₊₁))N⁺ mit s = {0, 1, 2, 3, 4, 5, 6}, p = {0, 1, 2, 3, 4, 5, 6}, q = {0, 1, 2, 3, 4, 5, 6}, r = {0, 1, 2, 3, 4, 5, 6}, mit n und m wie oben definiert, bevorzugt n = {4, 5, 6, 7, 8, 9, 10, 11, 12}, ist wobei zwischen der fluorierten Alkyl-Kette und dem Sulfonat-Kopf des Tensides ein Ethylenspacer angeordnet ist.

Als besonders günstig haben sich polyfluorierte Tenside entsprechend einer der Formeln (CₙF₍₂ₙ₊₁₎₋ₘHₘ-SO₃⁻)Na⁺, (CₙF₍₂ₙ₊₁₎₋ₘHₘ-SO₃⁻)K⁺, (CₙF₍₂ₙ₊₁₎₋ₘHₘ-SO₃⁻)Li⁺ oder (CₙF₍₂ₙ₊₁₎₋ₘHₘ-SO₃⁻)((CₛH₂ₛ₊₁)(CₚH₂ₚ₊₁)(C_{q}H_{2q+1})(CᵣH₂ᵣ₊₁))N⁺ mit s = {0, 1, 2, 3, 4, 5, 6}, p = {0, 1, 2, 3, 4, 5, 6},
q = {0, 1, 2, 3, 4, 5, 6}, r = {0, 1, 2, 3, 4, 5, 6}, erwiesen, bei denen n = {4, 5, 6, 7, 8, 9, 10, 11, 12} und m = {1, 2, 3, 4, 5, 6, 7, 8, 9, 10, 11, 12, 13, 14, 15, 16, 17, 18, 19, 20, 21, 22, 23, 24} ist. Besonders günstig ist es dabei wenn außerdem gilt (2n+1-m) = {3, 4, 5, 6, 7, 8, 9, 10, 11, 12, 13, 14, 15, 16, 17}. Die Position der H- und F-Atome an der Alkylkette des jeweiligen Tensides ist dabei frei wählbar.

Des Weiteren kann es auch vorteilhaft sein, wenn der Zusatz ein Gemisch aus dem anionische Tensid und wenigstens einer weiteren Komponente ist. Beispielsweise kann der Zusatz neben dem anionischen Tensid ein nichtionisches Tensid aufweisen. Denkbar ist etwa dass der Zusatz ein Fluortensid, das eine perfluorierte Hexylen-Gruppe, einen Ethylenspacer und eine Sulfonsäure als Kopfgruppe aufweist, sowie als weitere Komponente Polyethylenglykol (PEG) enthält. In jedem Fall ist es auch hier vorstellbar, dass die erfindungsgemäße Polyfluor-alkyl-sulfonsäure als Polyfluor-alkyl-sulfonat vorliegt. Als Gegenion kann hierbei ebenfalls ein Gegenion dienen, das ausgewählt ist aus H⁺, Na⁺, K⁺, Li⁺ oder ((CₛH₂ₛ₊₁)(CₚH₂ₚ₊₁)(C_{q}H_{2q+1})(CᵣH₂ᵣ₊₁))N⁺ mit s = {0, 1, 2, 3, 4, 5, 6}, p = {0, 1, 2, 3, 4, 5, 6}, q = {0, 1, 2, 3, 4, 5, 6}, r = {0, 1, 2, 3, 4, 5, 6}.

In einem weiteren Ausführungsbeispiel ist wenigstens ein Tensid ein halogenfreies anionisches Tensid entsprechend der Formel II:

(CₙH₂ₙ₊₁-SO₃)R1 Formel II

mit n = {1, 2, 3, 4, 5, 6, 7, 8, 9, 10, 11, 12}, R1 ausgewählt aus der Gruppe H⁺, Na⁺, K⁺, Li⁺ oder ((CₛH₂ₛ₊₁)(CₚH₂ₚ₊₁)(C_{q}H_{2q+1})(CᵣH₂ᵣ₊₁))N⁺ mit s = {0, 1, 2, 3, 4, 5, 6}, p = {0, 1, 2, 3, 4, 5, 6}, q = {0, 1, 2, 3, 4, 5, 6}, r = {0, 1, 2, 3, 4, 5, 6}. Bevorzugt ist es in diesem Zusammenhang, wenn n = {4, 5, 6, 7, 8, 9, 10, 11, 12} gilt.

Man erkennt insofern, dass es vorteilhaft ist, wenn wenigstens ein Tensid ausgewählt ist aus Natrium-1-butylsulfonat, Natrium-1-pentylsulfonat, Natrium-1-hexylsulfonat, Natrium-1-heptylsulfonat, Natrium-1-octylsulfonat, Natrium-1-nonylsulfonat, Natrium-1-decylsulfonat, Natrium-1-undecylsulfonat, Natrium-1-dodecylsulfonat, Natrium-iso-butylsulfonat, Natrium-iso-pentylsulfonat, Natrium-iso-hexylsulfonat, Natrium-iso-heptylsulfonat, Natrium-iso-octylsulfonat, Natrium-iso-nonylsulfonat, Natrium-iso-decylsulfonat, Natrium-iso-undecylsulfonat, Natrium-iso-dodecylsulfonat, Kalium-1-butylsulfonat, Kalium-1-pentylsulfonat, Kalium-1-hexylsulfonat, Kalium-1-heptylsulfonat, Kalium-1-octylsulfonat, Kalium-1-nonylsulfonat, Kalium-1-decylsulfonat, Kalium-1-undecylsulfonat, Kalium-1-dodecylsulfonat, Kalium-iso-butylsulfonat, Kalium-iso-pentylsulfonat, Kalium-iso-hexylsulfonat, Kalium-iso-heptylsulfonat, Kalium-iso-octylsulfonat, Kalium-iso-nonylsulfonat, Kalium-iso-decylsulfonat, Kalium-iso-undecylsulfonat, Kalium-iso-dodecylsulfonat, bevorzugt aus Natrium-1-butylsulfonat, Natrium-1-dodecylsulfonat, Natrium-1-isobutylslufonat, Natrium-1-isododecylsulfonat, Kalium-1-butylsulfonat, Kalium-1-dodecylsulfonat, Kalium-1-iso-butylsulfonat, Kalium-1-isododecylsulfonat, ganz besonders bevorzugt aus Natrium-1-butylsulfonat, Natrium-1-dodecylsulfonat, Kalium-1-butylsulfonat, Kalium-1-dodecylsulfonat oder den korrespondierenden Lithium-, Ammonium- sowie Di-, Tri- oder Tetraalkylammonium-Verbindungen der genannten Verbindungen.

Man erkennt insofern, dass das anionische Tensid bevorzugt ein Alkansulfonat ist, welches einer Kettenlänge von 4-12 Kohlenstoffatomen aufweist und welches als Gegenion ein Natrium- oder Kalium-Ion aufweist.

Selbstverständlich sind auch halogenfreie Tenside mit einem Li⁺-Ion oder einem -Ion entsprechend der Formel ((CₛH₂ₛ₊₁)(CₚH₂ₚ₊₁)(C_{q}H_{2q+1})(CᵣH₂ᵣ₊₁))N⁺ mit s = {0, 1, 2, 3, 4, 5, 6}, p = {0, 1, 2, 3, 4, 5, 6}, q = {0, 1, 2, 3, 4, 5, 6}, r = {0, 1, 2, 3, 4, 5, 6} als Gegenion vorstellbar. Ein erfindungsgemäßes, halogenfreies, anionisches Tensid kann mithin auch ausgewählt sein aus der Gruppe enthaltend Lithium-1-butylsulfonat, Lithium-1-pentylsulfonat, Lithium-1-hexylsulfonat, Lithium-1-heptylsulfonat, Lithium-1-octylsulfonat, Lithium-1-nonylsulfonat, Lithium-1-decylsulfonat, Lithium-1-undecylsulfonat, Lithium-1-dodecylsulfonat, Lithium-iso-butylsulfonat, Lithium-iso-pentylsulfonat, Lithium-iso-hexylsulfonat, Lithium-iso-heptylsulfonat, Lithium-iso-octylsulfonat, Lithium-iso-nonylsulfonat, Lithium-iso-decylsulfonat, Lithium-iso-undecylsulfonat, Lithium-iso-dodecylsulfonat, Lithium-1-butylsulfonat, Lithium-1-pentylsulfonat, Lithium-1-hexylsulfonat, Lithium-1-heptylsulfonat, Lithium-1-octylsulfonat, Lithium-1-nonylsulfonat, Lithium-1-decylsulfonat, Lithium-1-undecylsulfonat, Lithium-1-dodecylsulfonat, Lithium-iso-butylsulfonat, Lithium-iso-pentylsulfonat, Lithium-iso-hexylsulfonat, Lithium-iso-heptylsulfonat, Lithium-iso-octylsulfonat, Lithium-iso-nonylsulfonat, Lithium-iso-decylsulfonat, Lithium-iso-undecylsulfonat, Lithium-iso-dodecylsulfonat, bevorzugt aus Lithium-1-butylsulfonat, Lithium-1-dodecylsulfonat, Lithium-1-isobutylslufonat, Lithium-1-isododecylsulfonat, Lithium-1-butylsulfonat, Lithium-1-dodecylsulfonat, Lithium-1-iso-butylsulfonat, Lithium-1-isododecylsulfonat, ganz besonders bevorzugt aus Lithium-1-butylsulfonat, Lithium-1-dodecylsulfonat, Lithium-1-butylsulfonat, Lithium-1-dodecylsulfonat, Ammonium-1-butylsulfonat, Ammonium-1-pentylsulfonat, Ammonium-1-hexylsulfonat, Ammonium-1-heptylsulfonat, Ammonium-1-octylsulfonat, Ammonium-1-nonylsulfonat, Ammonium-1-decylsulfonat, Ammonium-1-undecylsulfonat, Ammonium-1-dodecylsulfonat, Ammonium-iso-butylsulfonat, Ammonium-iso-pentylsulfonat, Ammonium-iso-hexylsulfonat, Ammonium-iso-heptylsulfonat, Ammonium-iso-octylsulfonat, Ammonium-iso-nonylsulfonat, Ammonium-iso-decylsulfonat, Ammonium-iso-undecylsulfonat, Ammonium-iso-dodecylsulfonat, Ammonium-1-butylsulfonat, Ammonium-1-pentylsulfonat, Ammonium-1-hexylsulfonat, Ammonium-1-heptylsulfonat, Ammonium-1-octylsulfonat, Ammonium-1-nonylsulfonat, Ammonium-1-decylsulfonat, Ammonium-1-undecylsulfonat, Ammonium-1-dodecylsulfonat, Ammonium-iso-butylsulfonat, Ammonium-iso-pentylsulfonat, Ammonium-iso-hexylsulfonat, Ammonium-iso-heptylsulfonat, Ammonium-iso-octylsulfonat, Ammonium-iso-nonylsulfonat, Ammonium-iso-decylsulfonat, Ammonium-iso-undecylsulfonat, Ammonium-iso-dodecylsulfonat, bevorzugt aus Ammonium-1-butylsulfonat, Ammonium-1-dodecylsulfonat, Ammonium-1-isobutylslufonat, Ammonium-1-isododecylsulfonat, Ammonium-1-butylsulfonat, Ammonium-1-dodecylsulfonat, Ammonium-1-iso-butylsulfonat, Ammonium-1-isododecylsulfonat, ganz besonders bevorzugt aus Ammonium-1-butylsulfonat, Ammonium-1-dodecylsulfonat, Ammonium-1-butylsulfonat, Ammonium-1-dodecylsulfonat, Dialkylammonium-1-butylsulfonat, Dialkylammonium-1-pentylsulfonat, Dialkylammonium-1-hexylsulfonat, Dialkylammonium-1-heptylsulfonat, Dialkylammonium-1-octylsulfonat, Dialkylammonium-1-nonylsulfonat, Dialkylammonium-1-decylsulfonat, Dialkylammonium-1-undecylsulfonat, Dialkylammonium-1-dodecylsulfonat, Dialkylammonium-iso-butylsulfonat, Dialkylammonium-iso-pentylsulfonat, Dialkylammonium-iso-hexylsulfonat, Dialkylammonium-iso-heptylsulfonat, Dialkylammonium-iso-octylsulfonat, Dialkylammonium-iso-nonylsulfonat, Dialkylammonium-iso-decylsulfonat, Dialkylammonium-iso-undecylsulfonat, Dialkylammonium-iso-dodecylsulfonat, Dialkylammonium-1-butylsulfonat, Dialkylammonium-1-pentylsulfonat, Dialkylammonium-1-hexylsulfonat, Dialkylammonium-1-heptylsulfonat, Dialkylammonium-1-octylsulfonat, Dialkylammonium-1-nonylsulfonat, Dialkylammonium-1-decylsulfonat, Dialkylammonium-1-undecylsulfonat, Dialkylammonium-1-dodecylsulfonat, Dialkylammonium-iso-butylsulfonat, Dialkylammonium-iso-pentylsulfonat, Dialkylammonium-iso-hexylsulfonat, Dialkylammonium-iso-heptylsulfonat, Dialkylammonium-iso-octylsulfonat, Dialkylammonium-iso-nonylsulfonat, Dialkylammonium-iso-decylsulfonat, Dialkylammonium-iso-undecylsulfonat, Dialkylammonium-iso-dodecylsulfonat, bevorzugt aus Dialkylammonium-1-butylsulfonat, Dialkylammonium-1-dodecylsulfonat, Dialkylammonium-1-isobutylslufonat, Dialkylammonium-1-isododecylsulfonat, Dialkylammonium-1-butylsulfonat, Dialkylammonium-1-dodecylsulfonat, Dialkylammonium-1-iso-butylsulfonat, Dialkylammonium-1-isododecylsulfonat, ganz besonders bevorzugt aus Dialkylammonium-1-butylsulfonat, Dialkylammonium-1-dodecylsulfonat, Dialkylammonium-1-butylsulfonat, Dialkylammonium-1-dodecylsulfonat, Trialkylammonium-1-butylsulfonat, Trialkylammonium-1-pentylsulfonat, Trialkylammonium-1-hexylsulfonat, Trialkylammonium-1-heptylsulfonat, Trialkylammonium-1-octylsulfonat, Trialkylammonium-1-nonylsulfonat, Trialkylammonium-1-decylsulfonat, Trialkylammonium-1-undecylsulfonat, Trialkylammonium-1-dodecylsulfonat, Trialkylammonium-iso-butylsulfonat, Trialkylammonium-iso-pentylsulfonat, Trialkylammonium-iso-hexylsulfonat, Trialkylammonium-iso-heptylsulfonat, Trialkylammonium-iso-octylsulfonat, Trialkylammonium-iso-nonylsulfonat, Trialkylammonium-iso-decylsulfonat, Trialkylammonium-iso-undecylsulfonat, Trialkylammonium-iso-dodecylsulfonat, Trialkylammonium-1-butylsulfonat, Trialkylammonium-1-pentylsulfonat, Trialkylammonium-1-hexylsulfonat, Trialkylammonium-1-heptylsulfonat, Trialkylammonium-1-octylsulfonat, Trialkylammonium-1-nonylsulfonat, Trialkylammonium-1-decylsulfonat, Trialkylammonium-1-undecylsulfonat, Trialkylammonium-1-dodecylsulfonat, Trialkylammonium-iso-butylsulfonat, Trialkylammonium-iso-pentylsulfonat, Trialkylammonium-iso-hexylsulfonat, Trialkylammonium-iso-heptylsulfonat, Trialkylammonium-iso-octylsulfonat, Trialkylammonium-iso-nonylsulfonat, Trialkylammonium-iso-decylsulfonat, Trialkylammonium-iso-undecylsulfonat, Trialkylammonium-iso-dodecylsulfonat, bevorzugt aus Trialkylammonium-1-butylsulfonat, Trialkylammonium-1-dodecylsulfonat, Trialkylammonium-1-isobutylslufonat, Trialkylammonium-1-isododecylsulfonat, Trialkylammonium-1-butylsulfonat, Trialkylammonium-1-dodecylsulfonat, Trialkylammonium-1-iso-butylsulfonat, Trialkylammonium-1-isododecylsulfonat, ganz besonders bevorzugt aus Trialkylammonium-1-butylsulfonat, Trialkylammonium-1-dodecylsulfonat, Trialkylammonium-1-butylsulfonat, Trialkylammonium-1-dodecylsulfonat, Tetraalkylammonium-1-butylsulfonat, Tetraalkylammonium-1-pentylsulfonat, Tetraalkylammonium-1-hexylsulfonat, Tetraalkylammonium-1-heptylsulfonat, Tetraalkylammonium-1-octylsulfonat, Tetraalkylammonium-1-nonylsulfonat, Tetraalkylammonium-1-decylsulfonat, Tetraalkylammonium-1-undecylsulfonat, Tetraalkylammonium-1-dodecylsulfonat, Tetraalkylammonium-iso-butylsulfonat, Tetraalkylammonium-iso-pentylsulfonat, Tetraalkylammonium-iso-hexylsulfonat, Tetraalkylammonium-iso-heptylsulfonat, Tetraalkylammonium-iso-octylsulfonat, Tetraalkylammonium-iso-nonylsulfonat, Tetraalkylammonium-iso-decylsulfonat, Tetraalkylammonium-iso-undecylsulfonat, Tetraalkylammonium-iso-dodecylsulfonat, Tetraalkylammonium-1-butylsulfonat, Tetraalkylammonium-1-pentylsulfonat, Tetraalkylammonium-1-hexylsulfonat, Tetraalkylammonium-1-heptylsulfonat, Tetraalkylammonium-1-octylsulfonat, Tetraalkylammonium-1-nonylsulfonat, Tetraalkylammonium-1-decylsulfonat, Tetraalkylammonium-1-undecylsulfonat, Tetraalkylammonium-1-dodecylsulfonat, Tetraalkylammonium-iso-butylsulfonat, Tetraalkylammonium-iso-pentylsulfonat, Tetraalkylammonium-iso-hexylsulfonat, Tetraalkylammonium-iso-heptylsulfonat, Tetraalkylammonium-iso-octylsulfonat, Tetraalkylammonium-iso-nonylsulfonat, Tetraalkylammonium-iso-decylsulfonat, Tetraalkylammonium-iso-undecylsulfonat, Tetraalkylammonium-iso-dodecylsulfonat, bevorzugt aus Tetraalkylammonium-1-butylsulfonat, Tetraalkylammonium-1-dodecylsulfonat, Tetraalkylammonium-1-isobutylslufonat, Tetraalkylammonium-1-isododecylsulfonat, Tetraalkylammonium-1-butylsulfonat, Tetraalkylammonium-1-dodecylsulfonat, Tetraalkylammonium-1-iso-butylsulfonat, Tetraalkylammonium-1-isododecylsulfonat,
insbesondere aus der Gruppe enthaltend Lithium-1-butylsulfonat, Lithium-1-pentylsulfonat, Lithium-1-hexylsulfonat, Lithium-1-heptylsulfonat, Lithium-1-octylsulfonat, Lithium-1-nonylsulfonat, Lithium-1-decylsulfonat, Lithium-1-undecylsulfonat, Lithium-1-dodecylsulfonat, Lithium-iso-butylsulfonat, Lithium-iso-pentylsulfonat, Lithium-iso-hexylsulfonat, Lithium-iso-heptylsulfonat, Lithium-iso-octylsulfonat, Lithium-iso-nonylsulfonat, Lithium-iso-decylsulfonat, Lithium-iso-undecylsulfonat, Lithium-iso-dodecylsulfonat, Lithium-1-butylsulfonat, Lithium-1-pentylsulfonat, Lithium-1-hexylsulfonat, Lithium-1-heptylsulfonat, Lithium-1-octylsulfonat, Lithium-1-nonylsulfonat, Lithium-1-decylsulfonat, Lithium-1-undecylsulfonat, Lithium-1-dodecylsulfonat, Lithium-iso-butylsulfonat, Lithium-iso-pentylsulfonat, Lithium-iso-hexylsulfonat, Lithium-iso-heptylsulfonat, Lithium-iso-octylsulfonat, Lithium-iso-nonylsulfonat, Lithium-iso-decylsulfonat, Lithium-iso-undecylsulfonat, Lithium-iso-dodecylsulfonat, bevorzugt aus Lithium-1-butylsulfonat, Lithium-1-dodecylsulfonat, Lithium-1-isobutylslufonat, Lithium-1-isododecylsulfonat, Lithium-1-butylsulfonat, Lithium-1-dodecylsulfonat, Lithium-1-iso-butylsulfonat, Lithium-1-isododecylsulfonat, ganz besonders bevorzugt aus Lithium-1-butylsulfonat, Lithium-1-dodecylsulfonat, Lithium-1-butylsulfonat, Lithium-1-dodecylsulfonat, Ammonium-1-butylsulfonat, Ammonium-1-pentylsulfonat, Ammonium-1-hexylsulfonat, Ammonium-1-heptylsulfonat, Ammonium-1-octylsulfonat, Ammonium-1-nonylsulfonat, Ammonium-1-decylsulfonat, Ammonium-1-undecylsulfonat, Ammonium-1-dodecylsulfonat, Ammonium-iso-butylsulfonat, Ammonium-iso-pentylsulfonat, Ammonium-iso-hexylsulfonat, Ammonium-iso-heptylsulfonat, Ammonium-iso-octylsulfonat, Ammonium-iso-nonylsulfonat, Ammonium-iso-decylsulfonat, Ammonium-iso-undecylsulfonat, Ammonium-iso-dodecylsulfonat, Ammonium-1-butylsulfonat, Ammonium-1-pentylsulfonat, Ammonium-1-hexylsulfonat, Ammonium-1-heptylsulfonat, Ammonium-1-octylsulfonat, Ammonium-1-nonylsulfonat, Ammonium-1-decylsulfonat, Ammonium-1-undecylsulfonat, Ammonium-1-dodecylsulfonat, Ammonium-iso-butylsulfonat, Ammonium-iso-pentylsulfonat, Ammonium-iso-hexylsulfonat, Ammonium-iso-heptylsulfonat, Ammonium-iso-octylsulfonat, Ammonium-iso-nonylsulfonat, Ammonium-iso-decylsulfonat, Ammonium-iso-undecylsulfonat, Ammonium-iso-dodecylsulfonat, bevorzugt aus Ammonium-1-butylsulfonat, Ammonium-1-dodecylsulfonat, Ammonium-1-isobutylslufonat, Ammonium-1-isododecylsulfonat, Ammonium-1-butylsulfonat, Ammonium-1-dodecylsulfonat, Ammonium-1-iso-butylsulfonat, Ammonium-1-isododecylsulfonat, ganz besonders bevorzugt aus Ammonium-1-butylsulfonat, Ammonium-1-dodecylsulfonat, Ammonium-1-butylsulfonat, Ammonium-1-dodecylsulfonat, Dimethylammonium-1-butylsulfonat, Dimethylammonium-1-pentylsulfonat, Dimethylammonium-1-hexylsulfonat, Dimethylammonium-1-heptylsulfonat, Dimethylammonium-1-octylsulfonat, Dimethylammonium-1-nonylsulfonat, Dimethylammonium-1-decylsulfonat, Dimethylammonium-1-undecylsulfonat, Dimethylammonium-1-dodecylsulfonat, Dimethylammonium-iso-butylsulfonat, Dimethylammonium-iso-pentylsulfonat, Dimethylammonium-iso-hexylsulfonat, Dimethylammonium-iso-heptylsulfonat, Dimethylammonium-iso-octylsulfonat, Dimethylammonium-iso-nonylsulfonat, Dimethylammonium-iso-decylsulfonat, Dimethylammonium-iso-undecylsulfonat, Dimethylammonium-iso-dodecylsulfonat, Dimethylammonium-1-butylsulfonat, Dimethylammonium-1-pentylsulfonat, Dimethylammonium-1-hexylsulfonat, Dimethylammonium-1-heptylsulfonat, Dimethylammonium-1-octylsulfonat, Dimethylammonium-1-nonylsulfonat, Dimethylammonium-1-decylsulfonat, Dimethylammonium-1-undecylsulfonat, Dimethylammonium-1-dodecylsulfonat, Dimethylammonium-iso-butylsulfonat, Dimethylammonium-iso-pentylsulfonat, Dimethylammonium-iso-hexylsulfonat, Dimethylammonium-iso-heptylsulfonat, Dimethylammonium-iso-octylsulfonat, Dimethylammonium-iso-nonylsulfonat, Dimethylammonium-iso-decylsulfonat, Dimethylammonium-iso-undecylsulfonat, Dimethylammonium-iso-dodecylsulfonat, bevorzugt aus Dimethylammonium-1-butylsulfonat, Dimethylammonium-1-dodecylsulfonat, Dimethylammonium-1-isobutylslufonat, Dimethylammonium-1-isododecylsulfonat, Dimethylammonium-1-butylsulfonat, Dimethylammonium-1-dodecylsulfonat, Dimethylammonium-1-iso-butylsulfonat, Dimethylammonium-1-isododecylsulfonat, ganz besonders bevorzugt aus Dimethylammonium-1-butylsulfonat, Dimethylammonium-1-dodecylsulfonat, Dimethylammonium-1-butylsulfonat, Dimethylammonium-1-dodecylsulfonat, Tetraethylammonium-1-butylsulfonat, Tetraethylammonium-1-pentylsulfonat, Tetraethylammonium-1-hexylsulfonat, Tetraethylammonium-1-heptylsulfonat, Tetraethylammonium-1-octylsulfonat, Tetraethylammonium-1-nonylsulfonat, Tetraethylammonium-1-decylsulfonat, Tetraethylammonium-1-undecylsulfonat, Tetraethylammonium-1-dodecylsulfonat, Tetraethylammonium-iso-butylsulfonat, Tetraethylammonium-iso-pentylsulfonat, Tetraethylammonium-iso-hexylsulfonat, Tetraethylammonium-iso-heptylsulfonat, Tetraethylammonium-iso-octylsulfonat, Tetraethylammonium-iso-nonylsulfonat, Tetraethylammonium-iso-decylsulfonat, Tetraethylammonium-iso-undecylsulfonat, Tetraethylammonium-iso-dodecylsulfonat, Tetraethylammonium-1-butylsulfonat, Tetraethylammonium-1-pentylsulfonat, Tetraethylammonium-1-hexylsulfonat, Tetraethylammonium-1-heptylsulfonat, Tetraethylammonium-1-octylsulfonat, Tetraethylammonium-1-nonylsulfonat, Tetraethylammonium-1-decylsulfonat, Tetraethylammonium-1-undecylsulfonat, Tetraethylammonium-1-dodecylsulfonat, Tetraethylammonium-iso-butylsulfonat, Tetraethylammonium-iso-pentylsulfonat, Tetraethylammonium-iso-hexylsulfonat, Tetraethylammonium-iso-heptylsulfonat, Tetraethylammonium-iso-octylsulfonat, Tetraethylammonium-iso-nonylsulfonat, Tetraethylammonium-iso-decylsulfonat, Tetraethylammonium-iso-undecylsulfonat, Tetraethylammonium-iso-dodecylsulfonat, bevorzugt aus Tetraethylammonium-1-butylsulfonat, Tetraethylammonium-1-dodecylsulfonat, Tetraethylammonium-1-isobutylslufonat, Tetraethylammonium-1-isododecylsulfonat, Tetraethylammonium-1-butylsulfonat, Tetraethylammonium-1-dodecylsulfonat, Tetraethylammonium-1-iso-butylsulfonat, Tetraethylammonium-1-isododecylsulfonat, ganz besonders bevorzugt aus Tetraethylammonium-iso-butylsulfonat, Tetraethylammonium-iso-dodecylsulfonat, Tetraethylammonium-1-butylsulfonat, Tetraethylammonium-1-dodecylsulfonat.

In weiteren Aspekten kann ein erfindungsgemäßes, anionisches Tensid ein Alkylbenzolsulfonat, ein Alkylsulfat oder ein Alkylethersulfat sein.

In einer weiteren Ausführungsform ist denkbar, dass wenigstens ein Tensid ein kationisches Tensid ist. Typische Vertreter für kationische Tenside sind quartäre Ammoniumverbindungen. Auch Salze von langkettigen primären Aminen können solche kationische Tenside darstellen. Im Zuge der vorliegenden Erfindung ist es besonders günstig, wenn das kationische Tensid eine Ammoniumverbindung ist, bevorzugt eine quartäre Ammoniumverbindung, besonders bevorzugt eine Tetraalkyl-ammonium-Verbindung. Die Alkylketten einer solchen Tetraalkyl-ammonium-Verbindung sind bevorzugt lineare Alkyl Reste. Besonders günstig ist es dabei, wenn wenigstens ein Alkyl-Rest eine Länge von 1, 2, 3, 4, 5, 6, 7, 8, 9, 10, 11, 12, 13, 14, 15, 16, 17, 18, 19 oder 20 Kohlenstoff Atomen aufweist. Beispielsweise kann wenigstens ein erfindungsgemäßes Tensid ein Tensid entsprechend der Formel III

[((CₛH₂ₛ₊₁)(CₚH₂ₚ₊₁)(C_{q}H_{2q+1})(CᵣH₂ᵣ₊₁))N⁺]R2 (Formel III)

mit
s = {0, 1, 2, 3, 4, 5, 6, 7, 8, 9, 10, 11, 12, 13, 14, 15, 16, 17, 18, 19, 20},
p = {0, 1, 2, 3, 4, 5, 6, 7, 8, 9, 10, 11, 12, 13, 14, 15, 16, 17, 18, 19, 20},
q = {0, 1, 2, 3, 4, 5, 6, 7, 8, 9, 10, 11, 12, 13, 14, 15, 16, 17, 18, 19, 20},
r = {0, 1, 2, 3, 4, 5, 6, 7, 8, 9, 10, 11, 12, 13, 14, 15, 16, 17, 18, 19, 20} sein,
wobei R2 ausgewählt ist aus der Gruppe enthaltend HSO₄⁻, H₂PO₄⁻ , CF₃-SO₃⁻, C₂F₂HSO₃⁻, CF₃-COO⁻. Bevorzugt ist R2 ausgewählt aus HSO₄⁻ und H₂PO₄⁻, besonders bevorzugt HSO₄⁻.

Man erkennt insofern, dass ein kationisches Tensid, welches eine kationische Ammoniumverbindung ist, eine primäre, sekundäre, tertiäre oder quartäre Ammoniumverbindung sein kann. Unter einer primären Ammoniumverbindung wird dabei eine Verbindung verstanden, für die drei der Variablen s, p, q, r den Wert 0 haben und die vierte ausgewählt ist aus {1, 2, 3, 4, 5, 6, 7, 8, 9, 10, 11, 12, 13, 14, 15, 16, 17, 18, 19, 20}. Unter einer sekundären Ammoniumverbindung wird eine Verbindung verstanden für welche zwei der Variablen s, p, q, r den Wert 0 haben und die beiden anderen unabhängig voneinander ausgewählt sind aus {1, 2, 3, 4, 5, 6, 7, 8, 9, 10, 11, 12, 13, 14, 15, 16, 17, 18, 19, 20}. Unter einer tertiären Ammoniumverbindung wird eine Verbindung verstanden für welche eine der Variablen s, p, q, r den Wert 0 hat und die drei übrigen unabhängig von einander ausgewählt sind aus {1, 2, 3, 4, 5, 6, 7, 8, 9, 10, 11, 12, 13, 14, 15, 16, 17, 18, 19, 20}.

Man erkennt, dass es besonders günstig ist, wenn ein solches kationisches Tensid eine Ammoniumverbindung ist, bei der wenigstens eine der Alkylketten deutlich länger ist als die übrigen Reste, die am Stickstoff gebunden sind. Die lange Alkylkette bildet dabei den hydrophoben Teil des Tensids, während das Stickstoffatom mit den kurzen Ketten den hydrophilen Teil des Tensides bildet. Insofern ist es günstig, wenn wenigstens eine der folgenden Bedingungen für eine Verbindung entsprechend der Formel III oder für eine Verbindung entsprechend den nachfolgenden Formeln IIIa, IIIb, IIIc, IIId, IIId', IIIe, IIIe' zutrifft:
a) s+p+q+1 ≤ r, und/oder
b) wenigstens zwei der Werte s, p, q, r sind ausgewählt aus {0, 1, 2} und wenigstens einer der Werte s, p, q, r ist ausgewählt aus {5, 6, 7, 8, 9, 10, 11, 12, 13, 14, 15, 16, 17, 18, 19, 20}.

In jedem Fall ist es besonders günstig, wenn die Ammoniumverbindung wenigstens zwei Alkylgruppen aufweist. Besonders bevorzugt ist es dabei, wenn diese zwei Alkylgruppen eine Länge von wenigstens zwei Kohlenstoffatomen haben. Besonders bevorzugt hat wenigstens eine der Alkylkgruppen eine Länge von wenigstens fünf Kohlenstoffatomen. Insofern ist eine erfindungsgemäße Ammoniumverbindung bevorzugt eine Verbindung entsprechend Formel IIIa

[((CₛH₂ₛ₊₁)(CₚH₂ₚ₊₁)(C_{q}H_{2q+1})(CᵣH₂ᵣ₊₁))N⁺]R2 (Formel IIIa)

mit s = {0, 1, 2}, p = {0, 1, 2}, q = { 2, 3, 4, 5, 6, 7, 8, 9, 10, 11, 12, 13, 14, 15, 16, 17, 18, 19, 20}, r = { 5, 6, 7, 8, 9, 10, 11, 12, 13, 14, 15, 16, 17, 18, 19, 20} und wobei R2 ausgewählt ist aus der Gruppe enthaltend HSO₄⁻, H₂PO₄⁻, CF₃-SO₃⁻, C₂F₄HSO₃⁻, CF3-COO⁻, (CF₃-SO₂)₂N⁻.

Insbesondere ist es günstig, wenn die Alkylgruppen unabhängig voneinander lineare Kohlenstoffketten mit einer Länge von 1, 2, 3, 4, 5, 6, 7, 8, 9, 10, 11, 12, 13, 14, 15, 16, 17 oder 18 Kohlenstoffatomen sind, bevorzugt mit einer Länge von 1, 2, 3, 4, 5, 6, 7, 8, 9, 10, 11 oder 12 Kohlenstoffatomen. Selbstverständlich ist auch denkbar, dass die Ammoniumverbindung drei oder vier Alkylgruppen mit einer entsprechenden Länge aufweist. Mit anderen Worten eine erfindungsgemäße Ammoniumverbindung ist beispielsweise eine sekundäre, tertiäre oder quartäre Ammoniumverbindung entsprechend Formel IIIb

[((CₛH₂ₛ₊₁)(CₚH₂ₚ₊₁)(C_{q}H_{2q+1})(CᵣH₂ᵣ₊₁))N⁺]R2 (Formel IIIb)

mit s = {2, 3, 4, 5, 6, 7, 8, 9, 10, 11, 12}, p = {2, 3, 4, 5, 6, 7, 8, 9, 10, 11, 12}, q = {0, 1, 2, 3, 4, 5, 6, 7, 8, 9, 10, 11, 12}, r = {0, 1, 2, 3, 4, 5, 6, 7, 8, 9, 10, 11, 12} und wobei R2 ausgewählt ist aus der Gruppe enthaltend HSO₄⁻, H₂PO₄⁻, CF₃-SO₃⁻, C₂F₂HSO₃⁻, CF3-COO⁻.

Überraschenderweise hat es sich jedoch als besonders vorteilhaft herausgestellt, wenn die Ammoniumverbindung wenigstens zwei Methylgruppen aufweist. Besonders bevorzugt ist es dabei, wenn die Ammoniumverbindung eine quartäre Ammoniumverbindung, die wenigstens zwei Methylgruppen aufweist. Mit anderen Worten: ist die quartäre Ammoniumverbindung eine Tetraalkyl-ammonium-Verbindung, so haben wenigstens zwei der Alkylgruppen der Tetraalkyl-ammonium-Verbindung eine Länge von nur einem Kohlenstoffatom. Ganz besonders bevorzugt ist es dabei, wenn die Ammoniumverbindung sogar drei Methylgruppen aufweist und wenn die vierte Alkylgruppe eine Länge von 2 oder mehr, bevorzugt wenigstens vier oder mehr Kohlenstoffatomen hat. Eine solche erfindungsgemäße Tetraalkylammonium-Verbindung entspricht der Formel IIIc

[((CₛH₂ₛ₊₁)(CₚH₂ₚ₊₁)(C_{q}H_{2q+1})(CᵣH₂ᵣ₊₁))N⁺]R2 (Formel IIIc)

mit s = {2, 3, 4, 5, 6, 7, 8, 9, 10, 11, 12}, p = {1, 2, 3, 4, 5, 6, 7, 8, 9, 10, 11, 12}, q = {1}, r = {1} und wobei R2 ausgewählt ist aus der Gruppe enthaltend HSO₄⁻, H₂PO₄⁻, CF₃-SO₃⁻, C₂F₂HSO₃⁻, CF₃-COO⁻.

Ist wenigstens ein Tensid des erfindungsgemäßen Zusatzes ein kationisches Tensid, so ist es von Vorteil, wenn als Gegenion für dieses Tensid ein Hydrogensulfat dient. Man erkennt, dass es insbesondere günstig ist, wenn das kationische Tensid ein Hydrogensulfat-Salz einer quartären Ammoniumverbindung ist. Ein typisches Beispiel für ein solches Tensid ist etwa Dodecyltrimethylammoniumhydrogensulfat. Dabei ist die Verwendung von Hydrogensulfat-Salzen insbesondere dann vorteilhaft, wenn das flüssige Medium Schwefelsäure oder Perchlorsäure, bevorzugt Schwefelsäure, ist. Ein erfindungsgemäßes Tensid entspricht dann zum Beispiel der Formel IIId

[((CₛH₂ₛ₊₁)(CₚH₂ₚ₊₁)(C_{q}H_{2q+1})(CᵣH₂ᵣ₊₁))N⁺]HSO₄⁻ (Formel IIId)

mit s = {2, 3, 4, 5, 6, 7, 8, 9, 10, 11, 12}, p = {1, 2, 3, 4, 5, 6, 7, 8, 9, 10, 11, 12}, q = {1}, r = {1}. Oder anders geschrieben:

[((CₛH₂ₛ₊₁)(CₚH₂ₚ₊₁)(CH₃)₂)N⁺]HSO₄⁻ (Formel IIId')

mit s und p wie vorangehend.

Denkbar ist auch, dass Dihydrogenphosphat als Gegenion verwendet wird. Ein weiteres bevorzugtes Beispiel für ein erfindungsgemäßes Tensid ist in diesem Zusammenhang Dodecyltrimethylammonium-dihydrogenphosphat. Mithin ist ebenfalls denkbar, dass das kationische Tensid ein Phosphat-Salz, insbesondere ein Dihydrogenphosphat-Salz, einer quartären Ammoniumverbindung ist, z.B. ein Tetraalkylammoniumdihydrogenphosphat. Ein erfindungsgemäßes Tensid entspricht dann zum Beispiel der Formel IIIe

[((CₛH₂ₛ₊₁)(CₚH₂ₚ₊₁)(C_{q}H_{2q+1})(CᵣH₂ᵣ₊₁))N⁺]H₂PO₄⁻ (Formel IIIe)

mit s = {2, 3, 4, 5, 6, 7, 8, 9, 10, 11, 12}, p = {1, 2, 3, 4, 5, 6, 7, 8, 9, 10, 11, 12}, q = {1}, r = {1}. Oder anders geschrieben:

[((CₛH₂ₛ₊₁)(CₚH₂ₚ₊₁)(CH₃)₂)N⁺]H₂PO₄⁻ (Formel IIIe')

mit s und p wie vorangehend.

Man erkennt insofern, dass ein erfindungsgemäßes kationisches Tensid, welches als Gegenion Hydrogensulfat aufweist, ausgewählt sein kann aus der Gruppe enthaltend Ethyltrimethylammoniumhydrogensulfat, Diethyldimethylammoniumhydrogensulfat, Butylethyldimethylammoniumhydrogensulfat, Pentylethyldimethylammoniumhydrogensulfat, Hexylethyldimethylammoniumhydrogensulfat, Heptylethyldimethylammoniumhydrogensulfat, Octylethyldimethylammoniumhydrogensulfat, Nonylethyldimethylammoniumhydrogensulfat, Decylethyldimethylammoniumhydrogensulfat, Undecylethyldimethylammoniumhydrogensulfat, Dodecylethyldimethylammoniumhydrogensulfat, Butyltrimethylammoniumhydrogensulfat, Dibutyldimethylammoniumhydrogensulfat, Pentylbutyldimethylammoniumhydrogensulfat, Hexylbutyldimethylammoniumhydrogensulfat, Heptylbutyldimethylammoniumhydrogensulfat, Octylbutyldimethylammoniumhydrogensulfat, Nonylbutyldimethylammoniumhydrogensulfat, Decylbutyldimethylammoniumhydrogensulfat, Undecylbutyldimethylammoniumhydrogensulfat, Dodecylbutyldimethylammoniumhydrogensulfat, Pentyltrimethylammoniumhydrogensulfat, Dipentyldimethylammoniumhydrogensulfat, Hexylpentyldimethylammoniumhydrogensulfat, Heptylpentyldimethylammoniumhydrogensulfat, Octylpentyldimethylammoniumhydrogensulfat, Nonylpentyldimethylammoniumhydrogensulfat, Decylpentyldimethylammoniumhydrogensulfat, Undecylpentyldimethylammoniumhydrogensulfat, Dodecylpentyldimethylammoniumhydrogensulfat, Hexyltrimethylammoniumhydrogensulfat, Dihexyldimethylammoniumhydrogensulfat, Heptylhexyldimethylammoniumhydrogensulfat, Octylhexyldimethylammoniumhydrogensulfat, Nonylhexyldimethylammoniumhydrogensulfat, Decylhexyldimethylammoniumhydrogensulfat, Undecylhexyldimethylammoniumhydrogensulfat, Dodecylhexyldimethylammoniumhydrogensulfat, Heptyltrimethylammoniumhydrogensulfat, Diheptyldimethylammoniumhydrogensulfat, Octylheptyldimethylammoniumhydrogensulfat, Nonylheptyldimethylammoniumhydrogensulfat, Decylheptyldimethylammoniumhydrogensulfat, Undecylheptyldimethylammoniumhydrogensulfat, Dodecylheptyldimethylammoniumhydrogensulfat, Octyltrimethylammoniumhydrogensulfat, Dioctyldimethylammoniumhydrogensulfat, Nonyloctyldimethylammoniumhydrogensulfat, Decyloctyldimethylammoniumhydrogensulfat, Undecyloctyldimethylammoniumhydrogensulfat, Dodecyloctyldimethylammoniumhydrogensulfat, Nonyltrimethylammoniumhydrogensulfat, Dinonyldimethylammoniumhydrogensulfat, Decylnonyldimethylammoniumhydrogensulfat, Undecylnonyldimethylammoniumhydrogensulfat, Dodecylnonyldimethylammoniumhydrogensulfat, Decyltrimethylammoniumhydrogensulfat, Didecyldimethylammoniumhydrogensulfat, Undecyldecyldimethylammoniumhydrogensulfat, Dodecyldecyldimethylammoniumhydrogensulfat, Undecyltrimethylammoniumhydrogensulfat, Diundecyldimethylammoniumhydrogensulfat, Dodecylundecyldimethylammoniumhydrogensulfat, Dodecyltrimethylammoniumhydrogensulfat, Didodecyldimethylammoniumhydrogensulfat. Besonders bevorzugt sind dabei beispielsweise Ethyltrimethylammoniumhydrogensulfat, Butyltrimethylammoniumhydrogensulfat, Pentyltrimethylammoniumhydrogensulfat, Hexyltrimethylammoniumhydrogensulfat, Heptyltrimethylammoniumhydrogensulfat, Octyltrimethylammoniumhydrogensulfat, Nonyltrimethylammoniumhydrogensulfat, Decyltrimethylammoniumhydrogensulfat, Undecyltrimethylammoniumhydrogensulfat, Dodecyltrimethylammoniumhydrogensulfat.

Man erkennt weiter, dass ein erfindungsgemäßes kationisches Tensid, welches als Gegenion Dihydrogenphosphat aufweist, ausgewählt sein kann aus der Gruppe enthaltend Ethyltrimethylammonium-dihydrogenphosphat, Diethyldimethylammoniumdihydrogenphosphat, Butylethyldimethylammonium-dihydrogenphosphat, Pentylethyldimethylammonium-dihydrogenphosphat, Hexylethyldimethylammoniumdihydrogenphosphat, Heptylethyldimethylammonium-dihydrogenphosphat, Octylethyldimethylammonium-dihydrogenphosphat, Nonylethyldimethylammoniumdihydrogenphosphat, Decylethyldimethylammonium-dihydrogenphosphat, Undecylethyldimethylammonium-dihydrogenphosphat, Dodecylethyldimethylammoniumdihydrogenphosphat, Butyltrimethylammonium-dihydrogenphosphat, Dibutyldimethylammonium-dihydrogenphosphat, Pentylbutyldimethylammoniumdihydrogenphosphat, Hexylbutyldimethylammonium-dihydrogenphosphat, Heptylbutyldimethylammonium-dihydrogenphosphat, Octylbutyldimethylammoniumdihydrogenphosphat, Nonylbutyldimethylammonium-dihydrogenphosphat, Decylbutyldimethylammonium-dihydrogenphosphat, Undecylbutyldimethylammoniumdihydrogenphosphat, Dodecylbutyldimethylammonium-dihydrogenphosphat, Pentyltrimethylammonium-dihydrogenphosphat, Dipentyldimethylammoniumdihydrogenphosphat, Hexylpentyldimethylammonium-dihydrogenphosphat, Heptylpentyldimethylammonium-dihydrogenphosphat, Octylpentyldimethylammoniumdihydrogenphosphat, Nonylpentyldimethylammonium-dihydrogenphosphat, Decylpentyldimethylammonium-dihydrogenphosphat, Undecylpentyldimethylammoniumdihydrogenphosphat, Dodecylpentyldimethylammonium-dihydrogenphosphat, Hexyltrimethylammonium-dihydrogenphosphat, Dihexyldimethylammoniumdihydrogenphosphat, Heptylhexyldimethylammonium-dihydrogenphosphat, Octylhexyldimethylammonium-dihydrogenphosphat, Nonylhexyldimethylammoniumdihydrogenphosphat, Decylhexyldimethylammonium-dihydrogenphosphat, Undecylhexyldimethylammonium-dihydrogenphosphat, Dodecylhexyldimethylammonium-dihydrogenphosphat, Heptyltrimethylammoniumdihydrogenphosphat, Diheptyldimethylammonium-dihydrogenphosphat, Octylheptyldimethylammonium-dihydrogenphosphat, Nonylheptyldimethylammoniumdihydrogenphosphat, Decylheptyldimethylammonium-dihydrogenphosphat, Undecylheptyldimethylammonium-dihydrogenphosphat, Dodecylheptyldimethylammonium-dihydrogenphosphat, Octyltrimethylammoniumdihydrogenphosphat, Dioctyldimethylammonium-dihydrogenphosphat, Nonyloctyldimethylammonium-dihydrogenphosphat, Decyloctyldimethylammoniumdihydrogenphosphat, Undecyloctyldimethylammonium-dihydrogenphosphat, Dodecyloctyldimethylammonium-dihydrogenphosphat, Nonyltrimethylammoniumdihydrogenphosphat, Dinonyldimethylammonium-dihydrogenphosphat, Decylnonyldimethylammonium-dihydrogenphosphat, Undecylnonyldimethylammoniumdihydrogenphosphat, Dodecylnonyldimethylammonium-dihydrogenphosphat, Decyltrimethylammonium-dihydrogenphosphat, Didecyldimethylammoniumdihydrogenphosphat, Undecyldecyldimethylammonium-dihydrogenphosphat, Dodecyldecyldimethylammonium-dihydrogenphosphat, Undecyltrimethylammoniumdihydrogenphosphat, Diundecyldimethylammonium-dihydrogenphosphat, Dodecylundecyldimethylammonium-dihydrogenphosphat, Dodecyltrimethylammoniumdihydrogenphosphat, Didodecyldimethylammonium-dihydrogenphosphat. Besonders bevorzugt sind dabei Ethyltrimethylammoniumdihydrogenphosphat, Butyltrimethylammoniumdihydrogenphosphat, Pentyltrimethylammoniumdihydrogenphosphat, Hexyltrimethylammoniumdihydrogenphosphat, Heptyltrimethylammoniumdihydrogenphosphat, Octyltrimethylammoniumdihydrogenphosphat, Nonyltrimethylammoniumdihydrogenphosphat, Decyltrimethylammoniumdihydrogenphosphat, Undecyltrimethylammoniumdihydrogenphosphat, Dodecyltrimethylammoniumdihydrogenphosphat.

Ist der Zusatz ein Gemisch aus mehreren Tensiden, so ist es auch denkbar, dass eines der Tenside ein nicht-ionisches Tensid ist. Beispielsweise kann ein solches nichtionisches Tensid ausgewählt sein aus der Gruppe enthaltend Fettalkoholethoxylate, Alkylphenolethoxylate, sowie Sorbitanfettsäureester, Alkylpolyglucoside (APG) und N-Methylglucamide (GA). Typische Vertreter der Fettalkoholethoxylat sind dabei zum Beispiel Polyethylenglykol (PEG) und Polypropylenglykol. Denkbar ist selbst verständlich auch, dass ein solches Fettalkoholethoxylat ein Polyalkylenglykol mit einer längeren Alkylkette ist. Auch Blockcopolymere aus verschiedenen Fettalkoholethoxylat sind denkbar. Weiterhin ist es auch vorstellbar, dass der Zusatz als weitere Komponente Glykol enthält.

Für alle zuvor beschriebenen Ausführungsformen ist es entsprechend der vorliegenden Erfindung denkbar, dass der Zusatz entweder eines oder mehrere dieser Tenside aufweist. So ist beispielsweise denkbar, dass der Zusatz ein Gemisch aus einem nicht ionischen und einem anionischen Tensid ist, wobei das nichtionische Tensid ein Isoalkyl-PEG ist und wobei das anionische Tensid ein Alkylsulfonat darstellt.

Weiter ist es für alle Ausführungsvarianten zweckmäßig, wenn das Tensid des Zusatzes und/oder der Zusatz in einer Konzentration von wenigstens einschließlich 0,01 mMol/l und höchstens einschließlich 2 Mol/l in dem Elektrolyt enthalten ist, bevorzugt in einer Konzentration von wenigstens einschließlich 0,1 mMol/l und höchstens einschließlich 1 Mol/l, besonders bevorzugt in einer Konzentration von wenigstens einschließlich 2 mMol/l und höchstens einschließlich 500 mMol/l, ganz besonders bevorzugt in einer Konzentration von wenigstens einschließlich 15 mMol/l und höchstens einschließlich 50 mMol/l, ganz besonders bevorzugt in einer Konzentration von 20 mMol/l ± 5mMol/l. Ein erfindungsgemäßes Tensid kann mithin in einer Konzentration von wenigstens einschließlich 0,01 mMol/l, wenigstens einschließlich 0,1 mMol/l, wenigstens einschließlich 2 mMol/l, wenigstens einschließlich 15 mMol/ oder wenigstens einschließlich 20 mMol/l in dem Elektrolyten des Gassensors enthalten sein. Des Weiteren kann ein erfindungsgemäßes Tensid in einer Konzentration von höchstens einschließlich 2 Mol/l, höchstens einschließlich 1 Mol/l, höchstens einschließlich 500 mMol/l, höchstens einschließlich 50 mMol/l oder höchstens 20 mMol/l in dem Elektrolyten des Gassensors enthalten sein.

Man erkennt insofern, dass es auch denkbar ist, dass das Tensid des Zusatzes und/oder der Zusatz in einem Konzentration von wenigstens einschließlich 0,01 mMol/l und höchstens einschließlich 1 Mol/l, wenigstens einschließlich 0,01 mMol/l und höchstens einschließlich 500 Mol/l, wenigstens einschließlich 0,01mMol/l und höchstens einschließlich 50 mMol/l, wenigstens einschließlich 0,01 mMol/l und höchstens einschließlich 20 mMol/l, wenigstens einschließlich 0,1 mMol/l und höchstens einschließlich 2 Mol/l, wenigstens einschließlich 0,1 mMol/l und höchstens einschließlich 500 Mol/l, wenigstens einschließlich 0,1mMol/l und höchstens einschließlich 50 mMol/l, wenigstens einschließlich 0,1 mMol/l und höchstens einschließlich 20 mMol/l, wenigstens einschließlich 2 mMol/l und höchstens einschließlich 2 Mol/l, wenigstens einschließlich 2 mMol/l und höchstens einschließlich 1 Mol/l, wenigstens einschließlich 2 mMol/l und höchstens einschließlich 50 mMol/l, wenigstens einschließlich 2 mMol/l und höchstens einschließlich 20 mMol/l, wenigstens einschließlich 15 mMol/l und höchstens einschließlich 2 Mol/l, wenigstens einschließlich 15 mMol/l und höchstens einschließlich 1 Mol/l, wenigstens einschließlich 15 mMol/l und höchstens einschließlich 500 mMol/l, wenigstens einschließlich 15 mMol/l und höchstens einschließlich 20 mMol/l, wenigstens einschließlich 20 mMol/l und höchstens einschließlich 2 Mol/l, wenigstens einschließlich 20 mMol/l und höchstens einschließlich 1 Mol/l, wenigstens einschließlich 20 mMol/l und höchstens einschließlich 500 Mol/l, wenigstens einschließlich 20 mMol/l und höchstens einschließlich 50 mMol/l oder wenigstens einschließlich 20 mMol/l und höchstens einschließlich 25 mMol/l in dem Elektrolyt vorliegen kann.

Besteht der erfindungsgemäße Zusatz vollständig aus dem Tensid, so ist es entsprechend zweckmäßig, wenn der Zusatz in einer Konzentration von wenigstens einschließlich 0,01 mMol/l und höchstens einschließlich 2 Mol/l in dem Elektrolyt enthalten ist, bevorzugt in einer Konzentration von wenigstens einschließlich 0,1 mMol/l und höchstens einschließlich 1 Mol/l, besonders bevorzugt in einer Konzentration von wenigstens einschließlich 2 mMol/l und höchstens einschließlich 500 mMol/l, ganz besonders bevorzugt in einer Konzentration von wenigstens einschließlich 15 mMol/l und höchstens einschließlich 50 mMol/l, ganz besonders bevorzugt in einer Konzentration von 20 mMol/l ± 5mMol/l.

Weist der Zusatz ein Gemisch aus mehreren Tensiden auf, so ist sowohl denkbar, dass jedes der Tenside in der oben genannten Konzentration vorliegt, als auch dass das Gemisch selbst in der oben genannten Konzentration vorliegt. Selbstverständlich ist auch denkbar, dass ein Zusatz, der ein Gemisch aus mehreren Tensiden aufweist, in der oben genannten Konzentration vorliegt. Dabei kann der Zusatz entweder vollständig aus diesem Gemisch bestehen oder weitere Komponenten aufweisen.

In einem weiteren Aspekt betrifft die Erfindung einen Elektrolyt zur Verwendung in einem elektrochemischen Gassensor entsprechend einem der vorhergehenden Ansprüche, wobei der Elektrolyt ein Gemisch aus einem sauren, flüssigen Medium, das eine elektrische Leitfähigkeit aufweist, und einem Zusatz ist und wobei der Zusatz wenigstens ein Tensid aufweist.

Typische Bestandteile des Elektrolyten sind, wie bereits oben ausgeführt, ein Lösungsmittel und ein Leitsalz. Es ist besonders günstig, wenn der Elektrolyt eine saure Flüssigkeit ist, d.h. ein saures, flüssiges Medium. Der Elektrolyt kann sowohl ein stark saures, flüssiges Medium als auch ein sehr stark saures, flüssiges Medium sein. Beispielsweise kann der Elektrolyt ausgewählt sein aus der Gruppe enthaltend HClO₄, HCl, H₂SO₄, HNO₃, H₃PO₄, HCOOH, bevorzugt HClO₄ oder H₂SO₄. Denkbar ist auch, dass der Elektrolyt ausgewählt ist aus der Gruppe enthaltend Schweflige Säure, Salpetersäure und Salpetrige Säure. Selbstverständlich sind auch Mischungen aus verschiedenen Säuren denkbar. Mit anderen Worten, der Elektrolyt kann ausgewählt sein aus der Gruppe enthaltend Schwefelsäure, Perchlorsäure, Schweflige Säure, Salzsäure, Salpetersäure, Salpetrige Säure, Phosphorsäure, sowie Mischungen aus den zuvor genannten Säuren. In einer bevorzugten Ausführungsvariante ist vorgesehen, dass das flüssige Medium eine starke Säure, eine sehr starke Säure, Schwefelsäure oder Perchlorsäure ist. Besonders bevorzugt ist es, wenn das flüssige Medium eine sehr starke Säure, insbesondere Schwefelsäure ist. Es ist auch vorstellbar, dass das flüssige Medium eine organische Säure ist.

In einer ersten Variante sieht die Erfindung einen Elektrolyt zur Verwendung in einem elektrochemischen Gassensor entsprechend einem der vorhergehenden Ansprüche vor, wobei der Elektrolyt ein Gemisch aus einem wenigstens stark sauren, flüssigen Medium, das eine elektrische Leitfähigkeit aufweist, und einem Zusatz ist und wobei der Zusatz wenigstens ein Tensid aufweist und wobei wenigstens ein Tensid ein anionisches Tensid ist. Ein solches Tensid kann entweder ein fluoriertes oder ein halogenfreies, anionisches Tensid sein. Beispielsweise ist denkbar, dass wenigstens ein Tensid ein fluoriertes anionisches Tensid ist, bevorzugt eine Polyfluoralkylsulfonsäure oder das Salz einer Polyfluoralkylsulfonsäure. Beispielsweise kann das fluorierte anionische Tensid eine Polyfluoralkylsulfonsäure sein, die ausgewählt ist aus Perfluorbutansulfonsäure, Tridecafluoroctylsulfonsäure, Hexafluoro-alkyl-2-methyl-sulfonsäure. Wie bereits oben ausgeführt sind selbstverständlich auch Mono- oder Perfluoralkylsulfonsäuren oder die entsprechenden Salze der erfindungsgemäßene Mono-, Poly- oder Perfluoralkylsulfonsäuren vorstellbar.

Man erkennt, dass ein solches Tensid eines erfindungsgemäßen Elektrolyten wie oben beschrieben eine Verbindung entsprechend Formel I sein kann und zum Beispiel ausgewählt sein kann aus der Gruppe enthaltend Natrium-monofluorbutylsulfonat, Natrium-difluorbutylsulfonat, Natrium-trifluorbutylsulfonat, Natrium-tetrafluorbutylsulfonat, Natrium-pentafluorbutylsulfonat, Natrium-hexafluorbutylsulfonat, Natriumheptafluorbutylsulfonat, Natrium-octafluorbutylsulfonat, Natrium-nonafluorbutylsulfonat, Natrium-monofluorpentylsulfonat, Natrium-difluorpentylsulfonat, Natriumtrifluorpentylsulfonat, Natrium-tetrafluorpentylsulfonat, Natrium-pentafluorpentylsulfonat, Natrium-hexafluorpentylsulfonat, Natrium-heptafluorpentylsulfonat, Natriumoctafluorpentylsulfonat, Natrium-nonafluorpentylsulfonat, Natriumdecafluorpentylsulfonat, Natrium-undecafluorpentylsulfonat, Natriummonofluorhexylsulfonat, Natrium-difluorhexylsulfonat, Natrium-trifluorhexylsulfonat, Natrium-tetrafluorhexylsulfonat, Natrium-pentafluorhexylsulfonat, Natriumhexafluorhexylsulfonat, Natrium-heptafluorhexylsulfonat, Natrium-octafluorhexylsulfonat, Natrium-nonafluorhexylsulfonat, Natrium-decafluorhexylsulfonat, Natriumundecafluorhexylsulfonat, Natrium-dodecafluorhexylsulfonat, Natriumtridecafluorhexylsulfonat, Natrium-monofluorheptylsulfonat, Natriumdifluorheptylsulfonat, Natrium-trifluorheptylsulfonat, Natrium-tetrafluorheptylsulfonat, Natrium-pentafluorheptylsulfonat, Natrium-hexafluorheptylsulfonat, Natriumheptafluorheptylsulfonat, Natrium-octafluorheptylsulfonat, Natriumnonafluorheptylsulfonat, Natrium-decafluorheptylsulfonat, Natriumundecafluorheptylsulfonat, Natrium-dodecafluorheptylsulfonat, Natriumtridecafluorheptylsulfonat, Natrium-tetradecafluorheptylsulfonat, Natriumpentadecafluorheptylsulfonat, Natrium-monofluoroctylsulfonat, Natriumdifluoroctylsulfonat, Natrium-trifluoroctylsulfonat, Natrium-tetrafluoroctylsulfonat, Natrium-pentafluoroctylsulfonat, Natrium-hexafluoroctylsulfonat, Natriumheptafluoroctylsulfonat, Natrium-octafluoroctylsulfonat, Natrium-nonafluoroctylsulfonat, Natrium-decafluoroctylsulfonat, Natrium-undecafluoroctylsulfonat, Natriumdodecafluoroctylsulfonat, Natrium-tridecafluoroctylsulfonat, Natriumtetradecafluoroctylsulfonat, Natrium-pentadecafluoroctylsulfonat, Natriumhexadecafluoroctylsulfonat, Natrium-heptadecafluoroctylsulfonat, Natriummonofluornonylsulfonat, Natrium-difluornonylsulfonat, Natrium-trifluornonylsulfonat, Natrium-tetrafluornonylsulfonat, Natrium-pentafluornonylsulfonat, Natriumhexafluornonylsulfonat, Natrium-heptafluornonylsulfonat, Natrium-octafluornonylsulfonat, Natrium-nonafluornonylsulfonat, Natrium-decafluornonylsulfonat, Natriumundecafluornonylsulfonat, Natrium-dodecafluornonylsulfonat, Natriumtridecafluornonylsulfonat, Natrium-tetradecafluornonylsulfonat, Natriumpentadecafluornonylsulfonat, Natrium-hexadecafluornonylsulfonat, Natriumheptadecafluornonylsulfonat, Natrium-octadecafluornonylsulfonat, Natriumnonadecafluornonylsulfonat, Natrium-monofluordecylsulfonat, Natriumdifluordecylsulfonat, Natrium-trifluordecylsulfonat, Natrium-tetrafluordecylsulfonat, Natrium-pentafluordecylsulfonat, Natrium-hexafluordecylsulfonat, Natriumheptafluordecylsulfonat, Natrium-octafluordecylsulfonat, Natrium-nonafluordecylsulfonat, Natrium-decafluordecylsulfonat, Natrium-undecafluordecylsulfonat, Natriumdodecafluordecylsulfonat, Natrium-tridecafluordecylsulfonat, Natriumtetradecafluordecylsulfonat, Natrium-pentadecafluordecylsulfonat, Natriumhexadecafluordecylsulfonat, Natrium-heptadecafluordecylsulfonat, Natriumoctadecafluordecylsulfonat, Natrium-nonadecafluordecylsulfonat, Natriumicosafluordecylsulfonat, Natrium-henicosafluordecylsulfonat, Natriummonofluorundecylsulfonat, Natrium-difluorundecylsulfonat, Natriumtrifluorundecylsulfonat, Natrium-tetrafluorundecylsulfonat, Natriumpentafluorundecylsulfonat, Natrium-hexafluorundecylsulfonat, Natriumheptafluorundecylsulfonat, Natrium-octafluorundecylsulfonat, Natriumnonafluorundecylsulfonat, Natrium-decafluorundecylsulfonat, Natriumundecafluorundecylsulfonat, Natrium-dodecafluorundecylsulfonat, Natriumtridecafluorundecylsulfonat, Natrium-tetradecafluorundecylsulfonat, Natriumpentadecafluorundecylsulfonat, Natrium-hexadecafluorundecylsulfonat, Natriumheptadecafluorundecylsulfonat, Natrium-octadecafluorundecylsulfonat, Natriumnonadecafluorundecylsulfonat, Natrium-icosafluorundecylsulfonat, Natriumhenicosafluorundecylsulfonat, Natrium-docosafluorundecylsulfonat, Natriumtricosafluorundecylsulfonat, Natrium-monofluordodecylsulfonat, Natriumdifluordodecylsulfonat, Natrium-trifluordodecylsulfonat, Natriumtetrafluordodecylsulfonat, Natrium-pentafluordodecylsulfonat, Natriumhexafluordodecylsulfonat, Natrium-heptafluordodecylsulfonat, Natriumoctafluordodecylsulfonat, Natrium-nonafluordodecylsulfonat, Natriumdecafluordodecylsulfonat, Natrium-undecafluordodecylsulfonat, Natriumdodecafluordodecylsulfonat, Natrium-tridecafluordodecylsulfonat, Natriumtetradecafluordodecylsulfonat, Natrium-pentadecafluordodecylsulfonat, Natriumhexadecafluordodecylsulfonat, Natrium-heptadecafluordodecylsulfonat, Natriumoctadecafluordodecylsulfonat, Natrium-nonadecafluordodecylsulfonat, Natriumicosafluordodecylsulfonat, Natrium-henicosafluordodecylsulfonat, Natriumdocosafluordodecylsulfonat, Natrium-tricosafluordodecylsulfonat, Natriumtetracosafluordodecylsulfonat, Natrium-pentacosafluordodecylsulfonat, Kaliummonofluorbutylsulfonat, Kalium-difluorbutylsulfonat, Kalium-trifluorbutylsulfonat, Kaliumtetrafluorbutylsulfonat, Kalium-pentafluorbutylsulfonat, Kalium-hexafluorbutylsulfonat, Kalium-heptafluorbutylsulfonat, Kalium-octafluorbutylsulfonat, Kaliumnonafluorbutylsulfonat, Kalium-monofluorpentylsulfonat, Kalium-difluorpentylsulfonat, Kalium-trifluorpentylsulfonat, Kalium-tetrafluorpentylsulfonat, Kaliumpentafluorpentylsulfonat, Kalium-hexafluorpentylsulfonat, Kaliumheptafluorpentylsulfonat, Kalium-octafluorpentylsulfonat, Kalium-nonafluorpentylsulfonat, Kalium-decafluorpentylsulfonat, Kalium-undecafluorpentylsulfonat, Kaliummonofluorhexylsulfonat, Kalium-difluorhexylsulfonat, Kalium-trifluorhexylsulfonat, Kalium-tetrafluorhexylsulfonat, Kalium-pentafluorhexylsulfonat, Kaliumhexafluorhexylsulfonat, Kalium-heptafluorhexylsulfonat, Kalium-octafluorhexylsulfonat, Kalium-nonafluorhexylsulfonat, Kalium-decafluorhexylsulfonat, Kaliumundecafluorhexylsulfonat, Kalium-dodecafluorhexylsulfonat, Kaliumtridecafluorhexylsulfonat, Kalium-monofluorheptylsulfonat, Kalium-difluorheptylsulfonat, Kalium-trifluorheptylsulfonat, Kalium-tetrafluorheptylsulfonat, Kaliumpentafluorheptylsulfonat, Kalium-hexafluorheptylsulfonat, Kaliumheptafluorheptylsulfonat, Kalium-octafluorheptylsulfonat, Kalium-nonafluorheptylsulfonat, Kalium-decafluorheptylsulfonat, Kalium-undecafluorheptylsulfonat, Kaliumdodecafluorheptylsulfonat, Kalium-tridecafluorheptylsulfonat, Kaliumtetradecafluorheptylsulfonat, Kalium-pentadecafluorheptylsulfonat, Kaliummonofluoroctylsulfonat, Kalium-difluoroctylsulfonat, Kalium-trifluoroctylsulfonat, Kaliumtetrafluoroctylsulfonat, Kalium-pentafluoroctylsulfonat, Kalium-hexafluoroctylsulfonat, Kalium-heptafluoroctylsulfonat, Kalium-octafluoroctylsulfonat, Kaliumnonafluoroctylsulfonat, Kalium-decafluoroctylsulfonat, Kalium-undecafluoroctylsulfonat, Kalium-dodecafluoroctylsulfonat, Kalium-tridecafluoroctylsulfonat, Kaliumtetradecafluoroctylsulfonat, Kalium-pentadecafluoroctylsulfonat, Kaliumhexadecafluoroctylsulfonat, Kalium-heptadecafluoroctylsulfonat, Kaliummonofluornonylsulfonat, Kalium-difluornonylsulfonat, Kalium-trifluornonylsulfonat, Kalium-tetrafluornonylsulfonat, Kalium-pentafluornonylsulfonat, Kaliumhexafluornonylsulfonat, Kalium-heptafluornonylsulfonat, Kalium-octafluornonylsulfonat, Kalium-nonafluornonylsulfonat, Kalium-decafluornonylsulfonat, Kaliumundecafluornonylsulfonat, Kalium-dodecafluornonylsulfonat, Kaliumtridecafluornonylsulfonat, Kalium-tetradecafluornonylsulfonat, Kaliumpentadecafluornonylsulfonat, Kalium-hexadecafluornonylsulfonat, Kaliumheptadecafluornonylsulfonat, Kalium-octadecafluornonylsulfonat, Kaliumnonadecafluornonylsulfonat, Kalium-monofluordecylsulfonat, Kaliumdifluordecylsulfonat, Kalium-trifluordecylsulfonat, Kalium-tetrafluordecylsulfonat, Kaliumpentafluordecylsulfonat, Kalium-hexafluordecylsulfonat, Kalium-heptafluordecylsulfonat, Kalium-octafluordecylsulfonat, Kalium-nonafluordecylsulfonat, Kaliumdecafluordecylsulfonat, Kalium-undecafluordecylsulfonat, Kaliumdodecafluordecylsulfonat, Kalium-tridecafluordecylsulfonat, Kaliumtetradecafluordecylsulfonat, Kalium-pentadecafluordecylsulfonat, Kaliumhexadecafluordecylsulfonat, Kalium-heptadecafluordecylsulfonat, Kaliumoctadecafluordecylsulfonat, Kalium-nonadecafluordecylsulfonat, Kaliumicosafluordecylsulfonat, Kalium-henicosafluordecylsulfonat, Kaliummonofluorundecylsulfonat, Kalium-difluorundecylsulfonat, Kalium-trifluorundecylsulfonat, Kalium-tetrafluorundecylsulfonat, Kalium-pentafluorundecylsulfonat, Kaliumhexafluorundecylsulfonat, Kalium-heptafluorundecylsulfonat, Kaliumoctafluorundecylsulfonat, Kalium-nonafluorundecylsulfonat, Kaliumdecafluorundecylsulfonat, Kalium-undecafluorundecylsulfonat, Kaliumdodecafluorundecylsulfonat, Kalium-tridecafluorundecylsulfonat, Kaliumtetradecafluorundecylsulfonat, Kalium-pentadecafluorundecylsulfonat, Kaliumhexadecafluorundecylsulfonat, Kalium-heptadecafluorundecylsulfonat, Kaliumoctadecafluorundecylsulfonat, Kalium-nonadecafluorundecylsulfonat, Kaliumicosafluorundecylsulfonat, Kalium-henicosafluorundecylsulfonat, Kaliumdocosafluorundecylsulfonat, Kalium-tricosafluorundecylsulfonat, Kaliummonofluordodecylsulfonat, Kalium-difluordodecylsulfonat, Kalium-trifluordodecylsulfonat, Kalium-tetrafluordodecylsulfonat, Kalium-pentafluordodecylsulfonat, Kaliumhexafluordodecylsulfonat, Kalium-heptafluordodecylsulfonat, Kaliumoctafluordodecylsulfonat, Kalium-nonafluordodecylsulfonat, Kaliumdecafluordodecylsulfonat, Kalium-undecafluordodecylsulfonat, Kaliumdodecafluordodecylsulfonat, Kalium-tridecafluordodecylsulfonat, Kaliumtetradecafluordodecylsulfonat, Kalium-pentadecafluordodecylsulfonat, Kaliumhexadecafluordodecylsulfonat, Kalium-heptadecafluordodecylsulfonat, Kaliumoctadecafluordodecylsulfonat, Kalium-nonadecafluordodecylsulfonat, Kaliumicosafluordodecylsulfonat, Kalium-henicosafluordodecylsulfonat, Kaliumdocosafluordodecylsulfonat, Kalium-tricosafluordodecylsulfonat, Kaliumtetracosafluordodecylsulfonat, Kalium-pentacosafluordodecylsulfonat, Lithiummonofluorbutylsulfonat, Lithium-difluorbutylsulfonat, Lithium-trifluorbutylsulfonat, Lithiumtetrafluorbutylsulfonat, Lithium-pentafluorbutylsulfonat, Lithium-hexafluorbutylsulfonat, Lithium-heptafluorbutylsulfonat, Lithium-octafluorbutylsulfonat, Lithiumnonafluorbutylsulfonat, Lithium-monofluorpentylsulfonat, Lithium-difluorpentylsulfonat, Lithium-trifluorpentylsulfonat, Lithium-tetrafluorpentylsulfonat, Lithiumpentafluorpentylsulfonat, Lithium-hexafluorpentylsulfonat, Lithiumheptafluorpentylsulfonat, Lithium-octafluorpentylsulfonat, Lithiumnonafluorpentylsulfonat, Lithium-decafluorpentylsulfonat, Lithiumundecafluorpentylsulfonat, Lithium-monofluorhexylsulfonat, Lithium-difluorhexylsulfonat, Lithium-trifluorhexylsulfonat, Lithium-tetrafluorhexylsulfonat, Lithiumpentafluorhexylsulfonat, Lithium-hexafluorhexylsulfonat, Lithium-heptafluorhexylsulfonat, Lithium-octafluorhexylsulfonat, Lithium-nonafluorhexylsulfonat, Lithiumdecafluorhexylsulfonat, Lithium-undecafluorhexylsulfonat, Lithiumdodecafluorhexylsulfonat, Lithium-tridecafluorhexylsulfonat, Lithiummonofluorheptylsulfonat, Lithium-difluorheptylsulfonat, Lithium-trifluorheptylsulfonat, Lithium-tetrafluorheptylsulfonat, Lithium-pentafluorheptylsulfonat, Lithiumhexafluorheptylsulfonat, Lithium-heptafluorheptylsulfonat, Lithiumoctafluorheptylsulfonat, Lithium-nonafluorheptylsulfonat, Lithium-decafluorheptylsulfonat, Lithium-undecafluorheptylsulfonat, Lithium-dodecafluorheptylsulfonat, Lithiumtridecafluorheptylsulfonat, Lithium-tetradecafluorheptylsulfonat, Lithiumpentadecafluorheptylsulfonat, Lithium-monofluoroctylsulfonat, Lithiumdifluoroctylsulfonat, Lithium-trifluoroctylsulfonat, Lithium-tetrafluoroctylsulfonat, Lithiumpentafluoroctylsulfonat, Lithium-hexafluoroctylsulfonat, Lithium-heptafluoroctylsulfonat, Lithium-octafluoroctylsulfonat, Lithium-nonafluoroctylsulfonat, Lithiumdecafluoroctylsulfonat, Lithium-undecafluoroctylsulfonat, Lithiumdodecafluoroctylsulfonat, Lithium-tridecafluoroctylsulfonat, Lithiumtetradecafluoroctylsulfonat, Lithium-pentadecafluoroctylsulfonat, Lithiumhexadecafluoroctylsulfonat, Lithium-heptadecafluoroctylsulfonat, Lithiummonofluornonylsulfonat, Lithium-difluornonylsulfonat, Lithium-trifluornonylsulfonat, Lithium-tetrafluornonylsulfonat, Lithium-pentafluornonylsulfonat, Lithiumhexafluornonylsulfonat, Lithium-heptafluornonylsulfonat, Lithium-octafluornonylsulfonat, Lithium-nonafluornonylsulfonat, Lithium-decafluornonylsulfonat, Lithiumundecafluornonylsulfonat, Lithium-dodecafluornonylsulfonat, Lithiumtridecafluornonylsulfonat, Lithium-tetradecafluornonylsulfonat, Lithiumpentadecafluornonylsulfonat, Lithium-hexadecafluornonylsulfonat, Lithiumheptadecafluornonylsulfonat, Lithium-octadecafluornonylsulfonat, Lithiumnonadecafluornonylsulfonat, Lithium-monofluordecylsulfonat, Lithiumdifluordecylsulfonat, Lithium-trifluordecylsulfonat, Lithium-tetrafluordecylsulfonat, Lithium-pentafluordecylsulfonat, Lithium-hexafluordecylsulfonat, Lithiumheptafluordecylsulfonat, Lithium-octafluordecylsulfonat, Lithium-nonafluordecylsulfonat, Lithium-decafluordecylsulfonat, Lithium-undecafluordecylsulfonat, Lithiumdodecafluordecylsulfonat, Lithium-tridecafluordecylsulfonat, Lithiumtetradecafluordecylsulfonat, Lithium-pentadecafluordecylsulfonat, Lithiumhexadecafluordecylsulfonat, Lithium-heptadecafluordecylsulfonat, Lithiumoctadecafluordecylsulfonat, Lithium-nonadecafluordecylsulfonat, Lithiumicosafluordecylsulfonat, Lithium-henicosafluordecylsulfonat, Lithiummonofluorundecylsulfonat, Lithium-difluorundecylsulfonat, Lithiumtrifluorundecylsulfonat, Lithium-tetrafluorundecylsulfonat, Lithiumpentafluorundecylsulfonat, Lithium-hexafluorundecylsulfonat, Lithiumheptafluorundecylsulfonat, Lithium-octafluorundecylsulfonat, Lithiumnonafluorundecylsulfonat, Lithium-decafluorundecylsulfonat, Lithiumundecafluorundecylsulfonat, Lithium-dodecafluorundecylsulfonat, Lithiumtridecafluorundecylsulfonat, Lithium-tetradecafluorundecylsulfonat, Lithiumpentadecafluorundecylsulfonat, Lithium-hexadecafluorundecylsulfonat, Lithiumheptadecafluorundecylsulfonat, Lithium-octadecafluorundecylsulfonat, Lithiumnonadecafluorundecylsulfonat, Lithium-icosafluorundecylsulfonat, Lithiumhenicosafluorundecylsulfonat, Lithium-docosafluorundecylsulfonat, Lithiumtricosafluorundecylsulfonat, Lithium-monofluordodecylsulfonat, Lithiumdifluordodecylsulfonat, Lithium-trifluordodecylsulfonat, Lithium-tetrafluordodecylsulfonat, Lithium-pentafluordodecylsulfonat, Lithium-hexafluordodecylsulfonat, Lithiumheptafluordodecylsulfonat, Lithium-octafluordodecylsulfonat, Lithiumnonafluordodecylsulfonat, Lithium-decafluordodecylsulfonat, Lithiumundecafluordodecylsulfonat, Lithium-dodecafluordodecylsulfonat, Lithiumtridecafluordodecylsulfonat, Lithium-tetradecafluordodecylsulfonat, Lithiumpentadecafluordodecylsulfonat, Lithium-hexadecafluordodecylsulfonat, Lithiumheptadecafluordodecylsulfonat, Lithium-octadecafluordodecylsulfonat, Lithiumnonadecafluordodecylsulfonat, Lithium-icosafluordodecylsulfonat, Lithiumhenicosafluordodecylsulfonat, Lithium-docosafluordodecylsulfonat, Lithiumtricosafluordodecylsulfonat, Lithium-tetracosafluordodecylsulfonat, Lithiumpentacosafluordodecylsulfonat.

Man erkennt auch, dass ein solches Tensid eines erfindungsgemäßen Elektrolyten wie oben beschrieben eine Verbindung entsprechend Formeln I sein kann und zum Beispiel ausgewählt sein kann aus der Gruppe enthaltend Ammonium-monofluorbutylsulfonat, Ammonium-difluorbutylsulfonat, Ammonium-trifluorbutylsulfonat, Ammoniumtetrafluorbutylsulfonat, Ammonium-pentafluorbutylsulfonat, Ammoniumhexafluorbutylsulfonat, Ammonium-heptafluorbutylsulfonat, Ammoniumoctafluorbutylsulfonat, Ammonium-nonafluorbutylsulfonat, Ammoniummonofluorpentylsulfonat, Ammonium-difluorpentylsulfonat, Ammoniumtrifluorpentylsulfonat, Ammonium-tetrafluorpentylsulfonat, Ammoniumpentafluorpentylsulfonat, Ammonium-hexafluorpentylsulfonat, Ammoniumheptafluorpentylsulfonat, Ammonium-octafluorpentylsulfonat, Ammoniumnonafluorpentylsulfonat, Ammonium-decafluorpentylsulfonat, Ammoniumundecafluorpentylsulfonat, Ammonium-monofluorhexylsulfonat, Ammoniumdifluorhexylsulfonat, Ammonium-trifluorhexylsulfonat, Ammonium-tetrafluorhexylsulfonat, Ammonium-pentafluorhexylsulfonat, Ammonium-hexafluorhexylsulfonat, Ammoniumheptafluorhexylsulfonat, Ammonium-octafluorhexylsulfonat, Ammoniumnonafluorhexylsulfonat, Ammonium-decafluorhexylsulfonat, Ammoniumundecafluorhexylsulfonat, Ammonium-dodecafluorhexylsulfonat, Ammoniumtridecafluorhexylsulfonat, Ammonium-monofluorheptylsulfonat, Ammoniumdifluorheptylsulfonat, Ammonium-trifluorheptylsulfonat, Ammoniumtetrafluorheptylsulfonat, Ammonium-pentafluorheptylsulfonat, Ammoniumhexafluorheptylsulfonat, Ammonium-heptafluorheptylsulfonat, Ammoniumoctafluorheptylsulfonat, Ammonium-nonafluorheptylsulfonat, Ammoniumdecafluorheptylsulfonat, Ammonium-undecafluorheptylsulfonat, Ammoniumdodecafluorheptylsulfonat, Ammonium-tridecafluorheptylsulfonat, Ammoniumtetradecafluorheptylsulfonat, Ammonium-pentadecafluorheptylsulfonat, Ammoniummonofluoroctylsulfonat, Ammonium-difluoroctylsulfonat, Ammonium-trifluoroctylsulfonat, Ammonium-tetrafluoroctylsulfonat, Ammonium-pentafluoroctylsulfonat, Ammoniumhexafluoroctylsulfonat, Ammonium-heptafluoroctylsulfonat, Ammoniumoctafluoroctylsulfonat, Ammonium-nonafluoroctylsulfonat, Ammoniumdecafluoroctylsulfonat, Ammonium-undecafluoroctylsulfonat, Ammoniumdodecafluoroctylsulfonat, Ammonium-tridecafluoroctylsulfonat, Ammoniumtetradecafluoroctylsulfonat, Ammonium-pentadecafluoroctylsulfonat, Ammoniumhexadecafluoroctylsulfonat, Ammonium-heptadecafluoroctylsulfonat, Ammoniummonofluornonylsulfonat, Ammonium-difluornonylsulfonat, Ammoniumtrifluornonylsulfonat, Ammonium-tetrafluornonylsulfonat, Ammoniumpentafluornonylsulfonat, Ammonium-hexafluornonylsulfonat, Ammoniumheptafluornonylsulfonat, Ammonium-octafluornonylsulfonat, Ammoniumnonafluornonylsulfonat, Ammonium-decafluornonylsulfonat, Ammoniumundecafluornonylsulfonat, Ammonium-dodecafluornonylsulfonat, Ammoniumtridecafluornonylsulfonat, Ammonium-tetradecafluornonylsulfonat, Ammoniumpentadecafluornonylsulfonat, Ammonium-hexadecafluornonylsulfonat, Ammoniumheptadecafluornonylsulfonat, Ammonium-octadecafluornonylsulfonat, Ammoniumnonadecafluornonylsulfonat, Ammonium-monofluordecylsulfonat, Ammoniumdifluordecylsulfonat, Ammonium-trifluordecylsulfonat, Ammonium-tetrafluordecylsulfonat, Ammonium-pentafluordecylsulfonat, Ammonium-hexafluordecylsulfonat, Ammoniumheptafluordecylsulfonat, Ammonium-octafluordecylsulfonat, Ammoniumnonafluordecylsulfonat, Ammonium-decafluordecylsulfonat, Ammoniumundecafluordecylsulfonat, Ammonium-dodecafluordecylsulfonat, Ammoniumtridecafluordecylsulfonat, Ammonium-tetradecafluordecylsulfonat, Ammoniumpentadecafluordecylsulfonat, Ammonium-hexadecafluordecylsulfonat, Ammoniumheptadecafluordecylsulfonat, Ammonium-octadecafluordecylsulfonat, Ammoniumnonadecafluordecylsulfonat, Ammonium-icosafluordecylsulfonat, Ammoniumhenicosafluordecylsulfonat, Ammonium-monofluorundecylsulfonat, Ammoniumdifluorundecylsulfonat, Ammonium-trifluorundecylsulfonat, Ammoniumtetrafluorundecylsulfonat, Ammonium-pentafluorundecylsulfonat, Ammoniumhexafluorundecylsulfonat, Ammonium-heptafluorundecylsulfonat, Ammoniumoctafluorundecylsulfonat, Ammonium-nonafluorundecylsulfonat, Ammoniumdecafluorundecylsulfonat, Ammonium-undecafluorundecylsulfonat, Ammoniumdodecafluorundecylsulfonat, Ammonium-tridecafluorundecylsulfonat, Ammoniumtetradecafluorundecylsulfonat, Ammonium-pentadecafluorundecylsulfonat, Ammoniumhexadecafluorundecylsulfonat, Ammonium-heptadecafluorundecylsulfonat, Ammoniumoctadecafluorundecylsulfonat, Ammonium-nonadecafluorundecylsulfonat, Ammoniumicosafluorundecylsulfonat, Ammonium-henicosafluorundecylsulfonat, Ammoniumdocosafluorundecylsulfonat, Ammonium-tricosafluorundecylsulfonat, Ammoniummonofluordodecylsulfonat, Ammonium-difluordodecylsulfonat, Ammoniumtrifluordodecylsulfonat, Ammonium-tetrafluordodecylsulfonat, Ammoniumpentafluordodecylsulfonat, Ammonium-hexafluordodecylsulfonat, Ammoniumheptafluordodecylsulfonat, Ammonium-octafluordodecylsulfonat, Ammoniumnonafluordodecylsulfonat, Ammonium-decafluordodecylsulfonat, Ammoniumundecafluordodecylsulfonat, Ammonium-dodecafluordodecylsulfonat, Ammoniumtridecafluordodecylsulfonat, Ammonium-tetradecafluordodecylsulfonat, Ammoniumpentadecafluordodecylsulfonat, Ammonium-hexadecafluordodecylsulfonat, Ammoniumheptadecafluordodecylsulfonat, Ammonium-octadecafluordodecylsulfonat, Ammoniumnonadecafluordodecylsulfonat, Ammonium-icosafluordodecylsulfonat, Ammoniumhenicosafluordodecylsulfonat, Ammonium-docosafluordodecylsulfonat, Ammoniumtricosafluordodecylsulfonat, Ammonium-tetracosafluordodecylsulfonat, Ammoniumpentacosafluordodecylsulfonat, Alkylammonium-monofluorbutylsulfonat, Alkylammonium-difluorbutylsulfonat, Alkylammonium-trifluorbutylsulfonat, Alkylammonium-tetrafluorbutylsulfonat, Alkylammonium-pentafluorbutylsulfonat, Alkylammonium-hexafluorbutylsulfonat, Alkylammonium-heptafluorbutylsulfonat, Alkylammonium-octafluorbutylsulfonat, Alkylammonium-nonafluorbutylsulfonat, Alkylammonium-monofluorpentylsulfonat, Alkylammonium-difluorpentylsulfonat, Alkylammonium-trifluorpentylsulfonat, Alkylammonium-tetrafluorpentylsulfonat, Alkylammonium-pentafluorpentylsulfonat, Alkylammonium-hexafluorpentylsulfonat, Alkylammonium-heptafluorpentylsulfonat, Alkylammonium-octafluorpentylsulfonat, Alkylammonium-nonafluorpentylsulfonat, Alkylammonium-decafluorpentylsulfonat, Alkylammonium-undecafluorpentylsulfonat, Alkylammonium-monofluorhexylsulfonat, Alkylammonium-difluorhexylsulfonat, Alkylammonium-trifluorhexylsulfonat, Alkylammonium-tetrafluorhexylsulfonat, Alkylammonium-pentafluorhexylsulfonat, Alkylammonium-hexafluorhexylsulfonat, Alkylammonium-heptafluorhexylsulfonat, Alkylammonium-octafluorhexylsulfonat, Alkylammonium-nonafluorhexylsulfonat, Alkylammonium-decafluorhexylsulfonat, Alkylammonium-undecafluorhexylsulfonat, Alkylammonium-dodecafluorhexylsulfonat, Alkylammonium-tridecafluorhexylsulfonat, Alkylammonium-monofluorheptylsulfonat, Alkylammonium-difluorheptylsulfonat, Alkylammonium-trifluorheptylsulfonat, Alkylammonium-tetrafluorheptylsulfonat, Alkylammonium-pentafluorheptylsulfonat, Alkylammonium-hexafluorheptylsulfonat, Alkylammonium-heptafluorheptylsulfonat, Alkylammonium-octafluorheptylsulfonat, Alkylammonium-nonafluorheptylsulfonat, Alkylammonium-decafluorheptylsulfonat, Alkylammonium-undecafluorheptylsulfonat, Alkylammonium-dodecafluorheptylsulfonat, Alkylammonium-tridecafluorheptylsulfonat, Alkylammonium-tetradecafluorheptylsulfonat, Alkylammonium-pentadecafluorheptylsulfonat, Alkylammonium-monofluoroctylsulfonat, Alkylammonium-difluoroctylsulfonat, Alkylammonium-trifluoroctylsulfonat, Alkylammonium-tetrafluoroctylsulfonat, Alkylammonium-pentafluoroctylsulfonat, Alkylammonium-hexafluoroctylsulfonat, Alkylammonium-heptafluoroctylsulfonat, Alkylammonium-octafluoroctylsulfonat, Alkylammonium-nonafluoroctylsulfonat, Alkylammonium-decafluoroctylsulfonat, Alkylammonium-undecafluoroctylsulfonat, Alkylammonium-dodecafluoroctylsulfonat, Alkylammonium-tridecafluoroctylsulfonat, Alkylammonium-tetradecafluoroctylsulfonat, Alkylammoniumpentadecafluoroctylsulfonat, Alkylammonium-hexadecafluoroctylsulfonat, Alkylammonium-heptadecafluoroctylsulfonat, Alkylammonium-monofluornonylsulfonat, Alkylammonium-difluornonylsulfonat, Alkylammonium-trifluornonylsulfonat, Alkylammonium-tetrafluornonylsulfonat, Alkylammonium-pentafluornonylsulfonat, Alkylammonium-hexafluornonylsulfonat, Alkylammonium-heptafluornonylsulfonat, Alkylammonium-octafluornonylsulfonat, Alkylammonium-nonafluornonylsulfonat, Alkylammonium-decafluornonylsulfonat, Alkylammonium-undecafluornonylsulfonat, Alkylammonium-dodecafluornonylsulfonat, Alkylammonium-tridecafluornonylsulfonat, Alkylammonium-tetradecafluornonylsulfonat, Alkylammoniumpentadecafluornonylsulfonat, Alkylammonium-hexadecafluornonylsulfonat, Alkylammonium-heptadecafluornonylsulfonat, Alkylammoniumoctadecafluornonylsulfonat, Alkylammonium-nonadecafluornonylsulfonat, Alkylammonium-monofluordecylsulfonat, Alkylammonium-difluordecylsulfonat, Alkylammonium-trifluordecylsulfonat, Alkylammonium-tetrafluordecylsulfonat, Alkylammonium-pentafluordecylsulfonat, Alkylammonium-hexafluordecylsulfonat, Alkylammonium-heptafluordecylsulfonat, Alkylammonium-octafluordecylsulfonat, Alkylammonium-nonafluordecylsulfonat, Alkylammonium-decafluordecylsulfonat, Alkylammonium-undecafluordecylsulfonat, Alkylammonium-dodecafluordecylsulfonat, Alkylammonium-tridecafluordecylsulfonat, Alkylammonium-tetradecafluordecylsulfonat, Alkylammonium-pentadecafluordecylsulfonat, Alkylammoniumhexadecafluordecylsulfonat, Alkylammonium-heptadecafluordecylsulfonat, Alkylammonium-octadecafluordecylsulfonat, Alkylammoniumnonadecafluordecylsulfonat, Alkylammonium-icosafluordecylsulfonat, Alkylammoniumhenicosafluordecylsulfonat, Alkylammonium-monofluorundecylsulfonat, Alkylammoniumdifluorundecylsulfonat, Alkylammonium-trifluorundecylsulfonat, Alkylammoniumtetrafluorundecylsulfonat, Alkylammonium-pentafluorundecylsulfonat, Alkylammoniumhexafluorundecylsulfonat, Alkylammonium-heptafluorundecylsulfonat, Alkylammoniumoctafluorundecylsulfonat, Alkylammonium-nonafluorundecylsulfonat, Alkylammoniumdecafluorundecylsulfonat, Alkylammonium-undecafluorundecylsulfonat, Alkylammoniumdodecafluorundecylsulfonat, Alkylammonium-tridecafluorundecylsulfonat, Alkylammonium-tetradecafluorundecylsulfonat, Alkylammoniumpentadecafluorundecylsulfonat, Alkylammonium-hexadecafluorundecylsulfonat, Alkylammonium-heptadecafluorundecylsulfonat, Alkylammoniumoctadecafluorundecylsulfonat, Alkylammonium-nonadecafluorundecylsulfonat, Alkylammonium-icosafluorundecylsulfonat, Alkylammoniumhenicosafluorundecylsulfonat, Alkylammonium-docosafluorundecylsulfonat, Alkylammonium-tricosafluorundecylsulfonat, Alkylammonium-monofluordodecylsulfonat, Alkylammonium-difluordodecylsulfonat, Alkylammonium-trifluordodecylsulfonat, Alkylammonium-tetrafluordodecylsulfonat, Alkylammonium-pentafluordodecylsulfonat, Alkylammonium-hexafluordodecylsulfonat, Alkylammonium-heptafluordodecylsulfonat, Alkylammonium-octafluordodecylsulfonat, Alkylammonium-nonafluordodecylsulfonat, Alkylammonium-decafluordodecylsulfonat, Alkylammonium-undecafluordodecylsulfonat, Alkylammonium-dodecafluordodecylsulfonat, Alkylammoniumtridecafluordodecylsulfonat, Alkylammonium-tetradecafluordodecylsulfonat, Alkylammonium-pentadecafluordodecylsulfonat, Alkylammoniumhexadecafluordodecylsulfonat, Alkylammonium-heptadecafluordodecylsulfonat, Alkylammonium-octadecafluordodecylsulfonat, Alkylammoniumnonadecafluordodecylsulfonat, Alkylammonium-icosafluordodecylsulfonat, Alkylammonium-henicosafluordodecylsulfonat, Alkylammoniumdocosafluordodecylsulfonat, Alkylammonium-tricosafluordodecylsulfonat, Alkylammonium-tetracosafluordodecylsulfonat, Alkylammoniumpentacosafluordodecylsulfonat, Dialkylammonium-monofluorbutylsulfonat, Dialkylammonium-difluorbutylsulfonat, Dialkylammonium-trifluorbutylsulfonat, Dialkylammonium-tetrafluorbutylsulfonat, Dialkylammonium-pentafluorbutylsulfonat, Dialkylammonium-hexafluorbutylsulfonat, Dialkylammonium-heptafluorbutylsulfonat, Dialkylammonium-octafluorbutylsulfonat, Dialkylammonium-nonafluorbutylsulfonat, Dialkylammonium-monofluorpentylsulfonat, Dialkylammonium-difluorpentylsulfonat, Dialkylammonium-trifluorpentylsulfonat, Dialkylammonium-tetrafluorpentylsulfonat, Dialkylammonium-pentafluorpentylsulfonat, Dialkylammonium-hexafluorpentylsulfonat, Dialkylammonium-heptafluorpentylsulfonat, Dialkylammonium-octafluorpentylsulfonat, Dialkylammonium-nonafluorpentylsulfonat, Dialkylammonium-decafluorpentylsulfonat, Dialkylammonium-undecafluorpentylsulfonat, Dialkylammonium-monofluorhexylsulfonat, Dialkylammonium-difluorhexylsulfonat, Dialkylammonium-trifluorhexylsulfonat, Dialkylammonium-tetrafluorhexylsulfonat, Dialkylammonium-pentafluorhexylsulfonat, Dialkylammonium-hexafluorhexylsulfonat, Dialkylammonium-heptafluorhexylsulfonat, Dialkylammonium-octafluorhexylsulfonat, Dialkylammonium-nonafluorhexylsulfonat, Dialkylammonium-decafluorhexylsulfonat, Dialkylammonium-undecafluorhexylsulfonat, Dialkylammonium-dodecafluorhexylsulfonat, Dialkylammonium-tridecafluorhexylsulfonat, Dialkylammonium-monofluorheptylsulfonat, Dialkylammonium-difluorheptylsulfonat, Dialkylammonium-trifluorheptylsulfonat, Dialkylammonium-tetrafluorheptylsulfonat, Dialkylammonium-pentafluorheptylsulfonat, Dialkylammonium-hexafluorheptylsulfonat, Dialkylammonium-heptafluorheptylsulfonat, Dialkylammonium-octafluorheptylsulfonat, Dialkylammonium-nonafluorheptylsulfonat, Dialkylammonium-decafluorheptylsulfonat, Dialkylammonium-undecafluorheptylsulfonat, Dialkylammoniumdodecafluorheptylsulfonat, Dialkylammonium-tridecafluorheptylsulfonat, Dialkylammonium-tetradecafluorheptylsulfonat, Dialkylammoniumpentadecafluorheptylsulfonat, Dialkylammonium-monofluoroctylsulfonat, Dialkylammonium-difluoroctylsulfonat, Dialkylammonium-trifluoroctylsulfonat, Dialkylammonium-tetrafluoroctylsulfonat, Dialkylammonium-pentafluoroctylsulfonat, Dialkylammonium-hexafluoroctylsulfonat, Dialkylammonium-heptafluoroctylsulfonat, Dialkylammonium-octafluoroctylsulfonat, Dialkylammonium-nonafluoroctylsulfonat, Dialkylammonium-decafluoroctylsulfonat, Dialkylammonium-undecafluoroctylsulfonat, Dialkylammonium-dodecafluoroctylsulfonat, Dialkylammonium-tridecafluoroctylsulfonat, Dialkylammonium-tetradecafluoroctylsulfonat, Dialkylammoniumpentadecafluoroctylsulfonat, Dialkylammonium-hexadecafluoroctylsulfonat, Dialkylammonium-heptadecafluoroctylsulfonat, Dialkylammoniummonofluornonylsulfonat, Dialkylammonium-difluornonylsulfonat, Dialkylammoniumtrifluornonylsulfonat, Dialkylammonium-tetrafluornonylsulfonat, Dialkylammoniumpentafluornonylsulfonat, Dialkylammonium-hexafluornonylsulfonat, Dialkylammoniumheptafluornonylsulfonat, Dialkylammonium-octafluornonylsulfonat, Dialkylammoniumnonafluornonylsulfonat, Dialkylammonium-decafluornonylsulfonat, Dialkylammoniumundecafluornonylsulfonat, Dialkylammonium-dodecafluornonylsulfonat, Dialkylammonium-tridecafluornonylsulfonat, Dialkylammoniumtetradecafluornonylsulfonat, Dialkylammonium-pentadecafluornonylsulfonat, Dialkylammonium-hexadecafluornonylsulfonat, Dialkylammoniumheptadecafluornonylsulfonat, Dialkylammonium-octadecafluornonylsulfonat, Dialkylammonium-nonadecafluornonylsulfonat, Dialkylammoniummonofluordecylsulfonat, Dialkylammonium-difluordecylsulfonat, Dialkylammoniumtrifluordecylsulfonat, Dialkylammonium-tetrafluordecylsulfonat, Dialkylammoniumpentafluordecylsulfonat, Dialkylammonium-hexafluordecylsulfonat, Dialkylammoniumheptafluordecylsulfonat, Dialkylammonium-octafluordecylsulfonat, Dialkylammoniumnonafluordecylsulfonat, Dialkylammonium-decafluordecylsulfonat, Dialkylammoniumundecafluordecylsulfonat, Dialkylammonium-dodecafluordecylsulfonat, Dialkylammonium-tridecafluordecylsulfonat, Dialkylammoniumtetradecafluordecylsulfonat, Dialkylammonium-pentadecafluordecylsulfonat, Dialkylammonium-hexadecafluordecylsulfonat, Dialkylammoniumheptadecafluordecylsulfonat, Dialkylammonium-octadecafluordecylsulfonat, Dialkylammonium-nonadecafluordecylsulfonat, Dialkylammoniumicosafluordecylsulfonat, Dialkylammonium-henicosafluordecylsulfonat, Dialkylammonium-monofluorundecylsulfonat, Dialkylammonium-difluorundecylsulfonat, Dialkylammonium-trifluorundecylsulfonat, Dialkylammonium-tetrafluorundecylsulfonat, Dialkylammonium-pentafluorundecylsulfonat, Dialkylammoniumhexafluorundecylsulfonat, Dialkylammonium-heptafluorundecylsulfonat, Dialkylammonium-octafluorundecylsulfonat, Dialkylammonium-nonafluorundecylsulfonat, Dialkylammonium-decafluorundecylsulfonat, Dialkylammoniumundecafluorundecylsulfonat, Dialkylammonium-dodecafluorundecylsulfonat, Dialkylammonium-tridecafluorundecylsulfonat, Dialkylammoniumtetradecafluorundecylsulfonat, Dialkylammonium-pentadecafluorundecylsulfonat, Dialkylammonium-hexadecafluorundecylsulfonat, Dialkylammoniumheptadecafluorundecylsulfonat, Dialkylammonium-octadecafluorundecylsulfonat, Dialkylammonium-nonadecafluorundecylsulfonat, Dialkylammoniumicosafluorundecylsulfonat, Dialkylammonium-henicosafluorundecylsulfonat, Dialkylammonium-docosafluorundecylsulfonat, Dialkylammoniumtricosafluorundecylsulfonat, Dialkylammonium-monofluordodecylsulfonat, Dialkylammonium-difluordodecylsulfonat, Dialkylammonium-trifluordodecylsulfonat, Dialkylammonium-tetrafluordodecylsulfonat, Dialkylammoniumpentafluordodecylsulfonat, Dialkylammonium-hexafluordodecylsulfonat, Dialkylammonium-heptafluordodecylsulfonat, Dialkylammoniumoctafluordodecylsulfonat, Dialkylammonium-nonafluordodecylsulfonat, Dialkylammonium-decafluordodecylsulfonat, Dialkylammoniumundecafluordodecylsulfonat, Dialkylammonium-dodecafluordodecylsulfonat, Dialkylammonium-tridecafluordodecylsulfonat, Dialkylammoniumtetradecafluordodecylsulfonat, Dialkylammonium-pentadecafluordodecylsulfonat, Dialkylammonium-hexadecafluordodecylsulfonat, Dialkylammoniumheptadecafluordodecylsulfonat, Dialkylammonium-octadecafluordodecylsulfonat, Dialkylammonium-nonadecafluordodecylsulfonat, Dialkylammoniumicosafluordodecylsulfonat, Dialkylammonium-henicosafluordodecylsulfonat, Dialkylammonium-docosafluordodecylsulfonat, Dialkylammoniumtricosafluordodecylsulfonat, Dialkylammonium-tetracosafluordodecylsulfonat, Dialkylammonium-pentacosafluordodecylsulfonat, Trialkylammoniummonofluorbutylsulfonat, Trialkylammonium-difluorbutylsulfonat, Trialkylammoniumtrifluorbutylsulfonat, Trialkylammonium-tetrafluorbutylsulfonat, Trialkylammoniumpentafluorbutylsulfonat, Trialkylammonium-hexafluorbutylsulfonat, Trialkylammoniumheptafluorbutylsulfonat, Trialkylammonium-octafluorbutylsulfonat, Trialkylammoniumnonafluorbutylsulfonat, Trialkylammonium-monofluorpentylsulfonat, Trialkylammoniumdifluorpentylsulfonat, Trialkylammonium-trifluorpentylsulfonat, Trialkylammoniumtetrafluorpentylsulfonat, Trialkylammonium-pentafluorpentylsulfonat, Trialkylammoniumhexafluorpentylsulfonat, Trialkylammonium-heptafluorpentylsulfonat, Trialkylammoniumoctafluorpentylsulfonat, Trialkylammonium-nonafluorpentylsulfonat, Trialkylammoniumdecafluorpentylsulfonat, Trialkylammonium-undecafluorpentylsulfonat, Trialkylammonium-monofluorhexylsulfonat, Trialkylammonium-difluorhexylsulfonat, Trialkylammonium-trifluorhexylsulfonat, Trialkylammonium-tetrafluorhexylsulfonat, Trialkylammonium-pentafluorhexylsulfonat, Trialkylammonium-hexafluorhexylsulfonat, Trialkylammonium-heptafluorhexylsulfonat, Trialkylammonium-octafluorhexylsulfonat, Trialkylammonium-nonafluorhexylsulfonat, Trialkylammonium-decafluorhexylsulfonat, Trialkylammonium-undecafluorhexylsulfonat, Trialkylammoniumdodecafluorhexylsulfonat, Trialkylammonium-tridecafluorhexylsulfonat, Trialkylammonium-monofluorheptylsulfonat, Trialkylammonium-difluorheptylsulfonat, Trialkylammonium-trifluorheptylsulfonat, Trialkylammonium-tetrafluorheptylsulfonat, Trialkylammonium-pentafluorheptylsulfonat, Trialkylammonium-hexafluorheptylsulfonat, Trialkylammonium-heptafluorheptylsulfonat, Trialkylammonium-octafluorheptylsulfonat, Trialkylammonium-nonafluorheptylsulfonat, Trialkylammonium-decafluorheptylsulfonat, Trialkylammonium-undecafluorheptylsulfonat, Trialkylammoniumdodecafluorheptylsulfonat, Trialkylammonium-tridecafluorheptylsulfonat, Trialkylammonium-tetradecafluorheptylsulfonat, Trialkylammoniumpentadecafluorheptylsulfonat, Trialkylammonium-monofluoroctylsulfonat, Trialkylammonium-difluoroctylsulfonat, Trialkylammonium-trifluoroctylsulfonat, Trialkylammonium-tetrafluoroctylsulfonat, Trialkylammonium-pentafluoroctylsulfonat, Trialkylammonium-hexafluoroctylsulfonat, Trialkylammonium-heptafluoroctylsulfonat, Trialkylammonium-octafluoroctylsulfonat, Trialkylammonium-nonafluoroctylsulfonat, Trialkylammonium-decafluoroctylsulfonat, Trialkylammonium-undecafluoroctylsulfonat, Trialkylammonium-dodecafluoroctylsulfonat, Trialkylammonium-tridecafluoroctylsulfonat, Trialkylammonium-tetradecafluoroctylsulfonat, Trialkylammoniumpentadecafluoroctylsulfonat, Trialkylammonium-hexadecafluoroctylsulfonat, Trialkylammonium-heptadecafluoroctylsulfonat, Trialkylammoniummonofluornonylsulfonat, Trialkylammonium-difluornonylsulfonat, Trialkylammoniumtrifluornonylsulfonat, Trialkylammonium-tetrafluornonylsulfonat, Trialkylammoniumpentafluornonylsulfonat, Trialkylammonium-hexafluornonylsulfonat, Trialkylammoniumheptafluornonylsulfonat, Trialkylammonium-octafluornonylsulfonat, Trialkylammoniumnonafluornonylsulfonat, Trialkylammonium-decafluornonylsulfonat, Trialkylammoniumundecafluornonylsulfonat, Trialkylammonium-dodecafluornonylsulfonat, Trialkylammonium-tridecafluornonylsulfonat, Trialkylammoniumtetradecafluornonylsulfonat, Trialkylammonium-pentadecafluornonylsulfonat, Trialkylammonium-hexadecafluornonylsulfonat, Trialkylammoniumheptadecafluornonylsulfonat, Trialkylammonium-octadecafluornonylsulfonat, Trialkylammonium-nonadecafluornonylsulfonat, Trialkylammoniummonofluordecylsulfonat, Trialkylammonium-difluordecylsulfonat, Trialkylammoniumtrifluordecylsulfonat, Trialkylammonium-tetrafluordecylsulfonat, Trialkylammoniumpentafluordecylsulfonat, Trialkylammonium-hexafluordecylsulfonat, Trialkylammoniumheptafluordecylsulfonat, Trialkylammonium-octafluordecylsulfonat, Trialkylammoniumnonafluordecylsulfonat, Trialkylammonium-decafluordecylsulfonat, Trialkylammoniumundecafluordecylsulfonat, Trialkylammonium-dodecafluordecylsulfonat, Trialkylammonium-tridecafluordecylsulfonat, Trialkylammoniumtetradecafluordecylsulfonat, Trialkylammonium-pentadecafluordecylsulfonat, Trialkylammonium-hexadecafluordecylsulfonat, Trialkylammoniumheptadecafluordecylsulfonat, Trialkylammonium-octadecafluordecylsulfonat, Trialkylammonium-nonadecafluordecylsulfonat, Trialkylammoniumicosafluordecylsulfonat, Trialkylammonium-henicosafluordecylsulfonat, Trialkylammonium-monofluorundecylsulfonat, Trialkylammonium-difluorundecylsulfonat, Trialkylammonium-trifluorundecylsulfonat, Trialkylammonium-tetrafluorundecylsulfonat, Trialkylammonium-pentafluorundecylsulfonat, Trialkylammoniumhexafluorundecylsulfonat, Trialkylammonium-heptafluorundecylsulfonat, Trialkylammonium-octafluorundecylsulfonat, Trialkylammoniumnonafluorundecylsulfonat, Trialkylammonium-decafluorundecylsulfonat, Trialkylammonium-undecafluorundecylsulfonat, Trialkylammoniumdodecafluorundecylsulfonat, Trialkylammonium-tridecafluorundecylsulfonat, Trialkylammonium-tetradecafluorundecylsulfonat, Trialkylammoniumpentadecafluorundecylsulfonat, Trialkylammonium-hexadecafluorundecylsulfonat, Trialkylammonium-heptadecafluorundecylsulfonat, Trialkylammoniumoctadecafluorundecylsulfonat, Trialkylammonium-nonadecafluorundecylsulfonat, Trialkylammonium-icosafluorundecylsulfonat, Trialkylammoniumhenicosafluorundecylsulfonat, Trialkylammonium-docosafluorundecylsulfonat, Trialkylammonium-tricosafluorundecylsulfonat, Trialkylammoniummonofluordodecylsulfonat, Trialkylammonium-difluordodecylsulfonat, Trialkylammoniumtrifluordodecylsulfonat, Trialkylammonium-tetrafluordodecylsulfonat, Trialkylammoniumpentafluordodecylsulfonat, Trialkylammonium-hexafluordodecylsulfonat, Trialkylammonium-heptafluordodecylsulfonat, Trialkylammoniumoctafluordodecylsulfonat, Trialkylammonium-nonafluordodecylsulfonat, Trialkylammonium-decafluordodecylsulfonat, Trialkylammoniumundecafluordodecylsulfonat, Trialkylammonium-dodecafluordodecylsulfonat, Trialkylammonium-tridecafluordodecylsulfonat, Trialkylammoniumtetradecafluordodecylsulfonat, Trialkylammonium-pentadecafluordodecylsulfonat, Trialkylammonium-hexadecafluordodecylsulfonat, Trialkylammoniumheptadecafluordodecylsulfonat, Trialkylammonium-octadecafluordodecylsulfonat, Trialkylammonium-nonadecafluordodecylsulfonat, Trialkylammoniumicosafluordodecylsulfonat, Trialkylammonium-henicosafluordodecylsulfonat, Trialkylammonium-docosafluordodecylsulfonat, Trialkylammoniumtricosafluordodecylsulfonat, Trialkylammonium-tetracosafluordodecylsulfonat, Trialkylammonium-pentacosafluordodecylsulfonat, Tetraalkylammoniummonofluorbutylsulfonat, Tetraalkylammonium-difluorbutylsulfonat, Tetraalkylammoniumtrifluorbutylsulfonat, Tetraalkylammonium-tetrafluorbutylsulfonat, Tetraalkylammoniumpentafluorbutylsulfonat, Tetraalkylammonium-hexafluorbutylsulfonat, Tetraalkylammonium-heptafluorbutylsulfonat, Tetraalkylammoniumoctafluorbutylsulfonat, Tetraalkylammonium-nonafluorbutylsulfonat, Tetraalkylammonium-monofluorpentylsulfonat, Tetraalkylammoniumdifluorpentylsulfonat, Tetraalkylammonium-trifluorpentylsulfonat, Tetraalkylammoniumtetrafluorpentylsulfonat, Tetraalkylammonium-pentafluorpentylsulfonat, Tetraalkylammonium-hexafluorpentylsulfonat, Tetraalkylammoniumheptafluorpentylsulfonat, Tetraalkylammonium-octafluorpentylsulfonat, Tetraalkylammonium-nonafluorpentylsulfonat, Tetraalkylammoniumdecafluorpentylsulfonat, Tetraalkylammonium-undecafluorpentylsulfonat, Tetraalkylammonium-monofluorhexylsulfonat, Tetraalkylammonium-difluorhexylsulfonat, Tetraalkylammonium-trifluorhexylsulfonat, Tetraalkylammonium-tetrafluorhexylsulfonat, Tetraalkylammonium-pentafluorhexylsulfonat, Tetraalkylammoniumhexafluorhexylsulfonat, Tetraalkylammonium-heptafluorhexylsulfonat, Tetraalkylammonium-octafluorhexylsulfonat, Tetraalkylammoniumnonafluorhexylsulfonat, Tetraalkylammonium-decafluorhexylsulfonat, Tetraalkylammonium-undecafluorhexylsulfonat, Tetraalkylammoniumdodecafluorhexylsulfonat, Tetraalkylammonium-tridecafluorhexylsulfonat, Tetraalkylammonium-monofluorheptylsulfonat, Tetraalkylammoniumdifluorheptylsulfonat, Tetraalkylammonium-trifluorheptylsulfonat, Tetraalkylammoniumtetrafluorheptylsulfonat, Tetraalkylammonium-pentafluorheptylsulfonat, Tetraalkylammonium-hexafluorheptylsulfonat, Tetraalkylammoniumheptafluorheptylsulfonat, Tetraalkylammonium-octafluorheptylsulfonat, Tetraalkylammonium-nonafluorheptylsulfonat, Tetraalkylammoniumdecafluorheptylsulfonat, Tetraalkylammonium-undecafluorheptylsulfonat, Tetraalkylammonium-dodecafluorheptylsulfonat, Tetraalkylammoniumtridecafluorheptylsulfonat, Tetraalkylammonium-tetradecafluorheptylsulfonat, Tetraalkylammonium-pentadecafluorheptylsulfonat, Tetraalkylammoniummonofluoroctylsulfonat, Tetraalkylammonium-difluoroctylsulfonat, Tetraalkylammoniumtrifluoroctylsulfonat, Tetraalkylammonium-tetrafluoroctylsulfonat, Tetraalkylammoniumpentafluoroctylsulfonat, Tetraalkylammonium-hexafluoroctylsulfonat, Tetraalkylammonium-heptafluoroctylsulfonat, Tetraalkylammoniumoctafluoroctylsulfonat, Tetraalkylammonium-nonafluoroctylsulfonat, Tetraalkylammonium-decafluoroctylsulfonat, Tetraalkylammoniumundecafluoroctylsulfonat, Tetraalkylammonium-dodecafluoroctylsulfonat, Tetraalkylammonium-tridecafluoroctylsulfonat, Tetraalkylammoniumtetradecafluoroctylsulfonat, Tetraalkylammonium-pentadecafluoroctylsulfonat, Tetraalkylammonium-hexadecafluoroctylsulfonat, Tetraalkylammoniumheptadecafluoroctylsulfonat, Tetraalkylammonium-monofluornonylsulfonat, Tetraalkylammonium-difluornonylsulfonat, Tetraalkylammonium-trifluornonylsulfonat, Tetraalkylammonium-tetrafluornonylsulfonat, Tetraalkylammoniumpentafluornonylsulfonat, Tetraalkylammonium-hexafluornonylsulfonat, Tetraalkylammonium-heptafluornonylsulfonat, Tetraalkylammoniumoctafluornonylsulfonat, Tetraalkylammonium-nonafluornonylsulfonat, Tetraalkylammonium-decafluornonylsulfonat, Tetraalkylammoniumundecafluornonylsulfonat, Tetraalkylammonium-dodecafluornonylsulfonat, Tetraalkylammonium-tridecafluornonylsulfonat, Tetraalkylammoniumtetradecafluornonylsulfonat, Tetraalkylammonium-pentadecafluornonylsulfonat, Tetraalkylammonium-hexadecafluornonylsulfonat, Tetraalkylammoniumheptadecafluornonylsulfonat, Tetraalkylammonium-octadecafluornonylsulfonat, Tetraalkylammonium-nonadecafluornonylsulfonat, Tetraalkylammoniummonofluordecylsulfonat, Tetraalkylammonium-difluordecylsulfonat, Tetraalkylammoniumtrifluordecylsulfonat, Tetraalkylammonium-tetrafluordecylsulfonat, Tetraalkylammoniumpentafluordecylsulfonat, Tetraalkylammonium-hexafluordecylsulfonat, Tetraalkylammonium-heptafluordecylsulfonat, Tetraalkylammoniumoctafluordecylsulfonat, Tetraalkylammonium-nonafluordecylsulfonat, Tetraalkylammonium-decafluordecylsulfonat, Tetraalkylammoniumundecafluordecylsulfonat, Tetraalkylammonium-dodecafluordecylsulfonat, Tetraalkylammonium-tridecafluordecylsulfonat, Tetraalkylammoniumtetradecafluordecylsulfonat, Tetraalkylammonium-pentadecafluordecylsulfonat, Tetraalkylammonium-hexadecafluordecylsulfonat, Tetraalkylammoniumheptadecafluordecylsulfonat, Tetraalkylammonium-octadecafluordecylsulfonat, Tetraalkylammonium-nonadecafluordecylsulfonat, Tetraalkylammoniumicosafluordecylsulfonat, Tetraalkylammonium-henicosafluordecylsulfonat, Tetraalkylammonium-monofluorundecylsulfonat, Tetraalkylammoniumdifluorundecylsulfonat, Tetraalkylammonium-trifluorundecylsulfonat, Tetraalkylammonium-tetrafluorundecylsulfonat, Tetraalkylammoniumpentafluorundecylsulfonat, Tetraalkylammonium-hexafluorundecylsulfonat, Tetraalkylammonium-heptafluorundecylsulfonat, Tetraalkylammoniumoctafluorundecylsulfonat, Tetraalkylammonium-nonafluorundecylsulfonat, Tetraalkylammonium-decafluorundecylsulfonat, Tetraalkylammoniumundecafluorundecylsulfonat, Tetraalkylammonium-dodecafluorundecylsulfonat, Tetraalkylammonium-tridecafluorundecylsulfonat, Tetraalkylammoniumtetradecafluorundecylsulfonat, Tetraalkylammonium-pentadecafluorundecylsulfonat, Tetraalkylammonium-hexadecafluorundecylsulfonat, Tetraalkylammoniumheptadecafluorundecylsulfonat, Tetraalkylammonium-octadecafluorundecylsulfonat, Tetraalkylammonium-nonadecafluorundecylsulfonat, Tetraalkylammoniumicosafluorundecylsulfonat, Tetraalkylammonium-henicosafluorundecylsulfonat, Tetraalkylammonium-docosafluorundecylsulfonat, Tetraalkylammoniumtricosafluorundecylsulfonat, Tetraalkylammonium-monofluordodecylsulfonat, Tetraalkylammonium-difluordodecylsulfonat, Tetraalkylammoniumtrifluordodecylsulfonat, Tetraalkylammonium-tetrafluordodecylsulfonat, Tetraalkylammonium-pentafluordodecylsulfonat, Tetraalkylammoniumhexafluordodecylsulfonat, Tetraalkylammonium-heptafluordodecylsulfonat, Tetraalkylammonium-octafluordodecylsulfonat, Tetraalkylammoniumnonafluordodecylsulfonat, Tetraalkylammonium-decafluordodecylsulfonat, Tetraalkylammonium-undecafluordodecylsulfonat, Tetraalkylammoniumdodecafluordodecylsulfonat, Tetraalkylammonium-tridecafluordodecylsulfonat, Tetraalkylammonium-tetradecafluordodecylsulfonat, Tetraalkylammoniumpentadecafluordodecylsulfonat, Tetraalkylammonium-hexadecafluordodecylsulfonat, Tetraalkylammonium-heptadecafluordodecylsulfonat, Tetraalkylammoniumoctadecafluordodecylsulfonat, Tetraalkylammonium-nonadecafluordodecylsulfonat, Tetraalkylammonium-icosafluordodecylsulfonat, Tetraalkylammoniumhenicosafluordodecylsulfonat, Tetraalkylammonium-docosafluordodecylsulfonat, Tetraalkylammonium-tricosafluordodecylsulfonat, Tetraalkylammoniumtetracosafluordodecylsulfonat, Tetraalkylammonium-pentacosafluordodecylsulfonat, insbesondere aus der Gruppe enthaltend Ammonium-monofluorbutylsulfonat, Ammonium-difluorbutylsulfonat, Ammonium-trifluorbutylsulfonat, Ammoniumtetrafluorbutylsulfonat, Ammonium-pentafluorbutylsulfonat, Ammoniumhexafluorbutylsulfonat, Ammonium-heptafluorbutylsulfonat, Ammoniumoctafluorbutylsulfonat, Ammonium-nonafluorbutylsulfonat, Ammoniummonofluorpentylsulfonat, Ammonium-difluorpentylsulfonat, Ammoniumtrifluorpentylsulfonat, Ammonium-tetrafluorpentylsulfonat, Ammoniumpentafluorpentylsulfonat, Ammonium-hexafluorpentylsulfonat, Ammoniumheptafluorpentylsulfonat, Ammonium-octafluorpentylsulfonat, Ammoniumnonafluorpentylsulfonat, Ammonium-decafluorpentylsulfonat, Ammoniumundecafluorpentylsulfonat, Ammonium-monofluorhexylsulfonat, Ammoniumdifluorhexylsulfonat, Ammonium-trifluorhexylsulfonat, Ammonium-tetrafluorhexylsulfonat, Ammonium-pentafluorhexylsulfonat, Ammonium-hexafluorhexylsulfonat, Ammoniumheptafluorhexylsulfonat, Ammonium-octafluorhexylsulfonat, Ammoniumnonafluorhexylsulfonat, Ammonium-decafluorhexylsulfonat, Ammoniumundecafluorhexylsulfonat, Ammonium-dodecafluorhexylsulfonat, Ammoniumtridecafluorhexylsulfonat, Ammonium-monofluorheptylsulfonat, Ammoniumdifluorheptylsulfonat, Ammonium-trifluorheptylsulfonat, Ammoniumtetrafluorheptylsulfonat, Ammonium-pentafluorheptylsulfonat, Ammoniumhexafluorheptylsulfonat, Ammonium-heptafluorheptylsulfonat, Ammoniumoctafluorheptylsulfonat, Ammonium-nonafluorheptylsulfonat, Ammoniumdecafluorheptylsulfonat, Ammonium-undecafluorheptylsulfonat, Ammoniumdodecafluorheptylsulfonat, Ammonium-tridecafluorheptylsulfonat, Ammoniumtetradecafluorheptylsulfonat, Ammonium-pentadecafluorheptylsulfonat, Ammoniummonofluoroctylsulfonat, Ammonium-difluoroctylsulfonat, Ammonium-trifluoroctylsulfonat, Ammonium-tetrafluoroctylsulfonat, Ammonium-pentafluoroctylsulfonat, Ammoniumhexafluoroctylsulfonat, Ammonium-heptafluoroctylsulfonat, Ammoniumoctafluoroctylsulfonat, Ammonium-nonafluoroctylsulfonat, Ammoniumdecafluoroctylsulfonat, Ammonium-undecafluoroctylsulfonat, Ammoniumdodecafluoroctylsulfonat, Ammonium-tridecafluoroctylsulfonat, Ammoniumtetradecafluoroctylsulfonat, Ammonium-pentadecafluoroctylsulfonat, Ammoniumhexadecafluoroctylsulfonat, Ammonium-heptadecafluoroctylsulfonat, Ammoniummonofluornonylsulfonat, Ammonium-difluornonylsulfonat, Ammoniumtrifluornonylsulfonat, Ammonium-tetrafluornonylsulfonat, Ammoniumpentafluornonylsulfonat, Ammonium-hexafluornonylsulfonat, Ammoniumheptafluornonylsulfonat, Ammonium-octafluornonylsulfonat, Ammoniumnonafluornonylsulfonat, Ammonium-decafluornonylsulfonat, Ammoniumundecafluornonylsulfonat, Ammonium-dodecafluornonylsulfonat, Ammoniumtridecafluornonylsulfonat, Ammonium-tetradecafluornonylsulfonat, Ammoniumpentadecafluornonylsulfonat, Ammonium-hexadecafluornonylsulfonat, Ammoniumheptadecafluornonylsulfonat, Ammonium-octadecafluornonylsulfonat, Ammoniumnonadecafluornonylsulfonat, Ammonium-monofluordecylsulfonat, Ammoniumdifluordecylsulfonat, Ammonium-trifluordecylsulfonat, Ammonium-tetrafluordecylsulfonat, Ammonium-pentafluordecylsulfonat, Ammonium-hexafluordecylsulfonat, Ammoniumheptafluordecylsulfonat, Ammonium-octafluordecylsulfonat, Ammoniumnonafluordecylsulfonat, Ammonium-decafluordecylsulfonat, Ammoniumundecafluordecylsulfonat, Ammonium-dodecafluordecylsulfonat, Ammoniumtridecafluordecylsulfonat, Ammonium-tetradecafluordecylsulfonat, Ammoniumpentadecafluordecylsulfonat, Ammonium-hexadecafluordecylsulfonat, Ammoniumheptadecafluordecylsulfonat, Ammonium-octadecafluordecylsulfonat, Ammoniumnonadecafluordecylsulfonat, Ammonium-icosafluordecylsulfonat, Ammoniumhenicosafluordecylsulfonat, Ammonium-monofluorundecylsulfonat, Ammoniumdifluorundecylsulfonat, Ammonium-trifluorundecylsulfonat, Ammoniumtetrafluorundecylsulfonat, Ammonium-pentafluorundecylsulfonat, Ammoniumhexafluorundecylsulfonat, Ammonium-heptafluorundecylsulfonat, Ammoniumoctafluorundecylsulfonat, Ammonium-nonafluorundecylsulfonat, Ammoniumdecafluorundecylsulfonat, Ammonium-undecafluorundecylsulfonat, Ammoniumdodecafluorundecylsulfonat, Ammonium-tridecafluorundecylsulfonat, Ammoniumtetradecafluorundecylsulfonat, Ammonium-pentadecafluorundecylsulfonat, Ammoniumhexadecafluorundecylsulfonat, Ammonium-heptadecafluorundecylsulfonat, Ammoniumoctadecafluorundecylsulfonat, Ammonium-nonadecafluorundecylsulfonat, Ammoniumicosafluorundecylsulfonat, Ammonium-henicosafluorundecylsulfonat, Ammoniumdocosafluorundecylsulfonat, Ammonium-tricosafluorundecylsulfonat, Ammoniummonofluordodecylsulfonat, Ammonium-difluordodecylsulfonat, Ammoniumtrifluordodecylsulfonat, Ammonium-tetrafluordodecylsulfonat, Ammoniumpentafluordodecylsulfonat, Ammonium-hexafluordodecylsulfonat, Ammoniumheptafluordodecylsulfonat, Ammonium-octafluordodecylsulfonat, Ammoniumnonafluordodecylsulfonat, Ammonium-decafluordodecylsulfonat, Ammoniumundecafluordodecylsulfonat, Ammonium-dodecafluordodecylsulfonat, Ammoniumtridecafluordodecylsulfonat, Ammonium-tetradecafluordodecylsulfonat, Ammoniumpentadecafluordodecylsulfonat, Ammonium-hexadecafluordodecylsulfonat, Ammoniumheptadecafluordodecylsulfonat, Ammonium-octadecafluordodecylsulfonat, Ammoniumnonadecafluordodecylsulfonat, Ammonium-icosafluordodecylsulfonat, Ammoniumhenicosafluordodecylsulfonat, Ammonium-docosafluordodecylsulfonat, Ammoniumtricosafluordodecylsulfonat, Ammonium-tetracosafluordodecylsulfonat, Ammoniumpentacosafluordodecylsulfonat, Dimethylammonium-monofluorbutylsulfonat, Dimethylammonium-difluorbutylsulfonat, Dimethylammonium-trifluorbutylsulfonat, Dimethylammonium-tetrafluorbutylsulfonat, Dimethylammonium-pentafluorbutylsulfonat, Dimethylammonium-hexafluorbutylsulfonat, Dimethylammonium-heptafluorbutylsulfonat, Dimethylammonium-octafluorbutylsulfonat, Dimethylammonium-nonafluorbutylsulfonat, Dimethylammonium-monofluorpentylsulfonat, Dimethylammonium-difluorpentylsulfonat, Dimethylammonium-trifluorpentylsulfonat, Dimethylammonium-tetrafluorpentylsulfonat, Dimethylammonium-pentafluorpentylsulfonat, Dimethylammoniumhexafluorpentylsulfonat, Dimethylammonium-heptafluorpentylsulfonat, Dimethylammonium-octafluorpentylsulfonat, Dimethylammoniumnonafluorpentylsulfonat, Dimethylammonium-decafluorpentylsulfonat, Dimethylammonium-undecafluorpentylsulfonat, Dimethylammoniummonofluorhexylsulfonat, Dimethylammonium-difluorhexylsulfonat, Dimethylammoniumtrifluorhexylsulfonat, Dimethylammonium-tetrafluorhexylsulfonat, Dimethylammoniumpentafluorhexylsulfonat, Dimethylammonium-hexafluorhexylsulfonat, Dimethylammonium-heptafluorhexylsulfonat, Dimethylammonium-octafluorhexylsulfonat, Dimethylammonium-nonafluorhexylsulfonat, Dimethylammonium-decafluorhexylsulfonat, Dimethylammonium-undecafluorhexylsulfonat, Dimethylammoniumdodecafluorhexylsulfonat, Dimethylammonium-tridecafluorhexylsulfonat, Dimethylammonium-monofluorheptylsulfonat, Dimethylammonium-difluorheptylsulfonat, Dimethylammonium-trifluorheptylsulfonat, Dimethylammonium-tetrafluorheptylsulfonat, Dimethylammonium-pentafluorheptylsulfonat, Dimethylammoniumhexafluorheptylsulfonat, Dimethylammonium-heptafluorheptylsulfonat, Dimethylammonium-octafluorheptylsulfonat, Dimethylammoniumnonafluorheptylsulfonat, Dimethylammonium-decafluorheptylsulfonat, Dimethylammonium-undecafluorheptylsulfonat, Dimethylammoniumdodecafluorheptylsulfonat, Dimethylammonium-tridecafluorheptylsulfonat, Dimethylammonium-tetradecafluorheptylsulfonat, Dimethylammoniumpentadecafluorheptylsulfonat, Dimethylammonium-monofluoroctylsulfonat, Dimethylammonium-difluoroctylsulfonat, Dimethylammonium-trifluoroctylsulfonat, Dimethylammonium-tetrafluoroctylsulfonat, Dimethylammonium-pentafluoroctylsulfonat, Dimethylammonium-hexafluoroctylsulfonat, Dimethylammonium-heptafluoroctylsulfonat, Dimethylammonium-octafluoroctylsulfonat, Dimethylammonium-nonafluoroctylsulfonat, Dimethylammonium-decafluoroctylsulfonat, Dimethylammoniumundecafluoroctylsulfonat, Dimethylammonium-dodecafluoroctylsulfonat, Dimethylammonium-tridecafluoroctylsulfonat, Dimethylammoniumtetradecafluoroctylsulfonat, Dimethylammonium-pentadecafluoroctylsulfonat, Dimethylammonium-hexadecafluoroctylsulfonat, Dimethylammoniumheptadecafluoroctylsulfonat, Dimethylammonium-monofluornonylsulfonat, Dimethylammonium-difluornonylsulfonat, Dimethylammonium-trifluornonylsulfonat, Dimethylammonium-tetrafluornonylsulfonat, Dimethylammoniumpentafluornonylsulfonat, Dimethylammonium-hexafluornonylsulfonat, Dimethylammonium-heptafluornonylsulfonat, Dimethylammoniumoctafluornonylsulfonat, Dimethylammonium-nonafluornonylsulfonat, Dimethylammonium-decafluornonylsulfonat, Dimethylammoniumundecafluornonylsulfonat, Dimethylammonium-dodecafluornonylsulfonat, Dimethylammonium-tridecafluornonylsulfonat, Dimethylammoniumtetradecafluornonylsulfonat, Dimethylammonium-pentadecafluornonylsulfonat, Dimethylammonium-hexadecafluornonylsulfonat, Dimethylammoniumheptadecafluornonylsulfonat, Dimethylammonium-octadecafluornonylsulfonat, Dimethylammonium-nonadecafluornonylsulfonat, Dimethylammoniummonofluordecylsulfonat, Dimethylammonium-difluordecylsulfonat, Dimethylammoniumtrifluordecylsulfonat, Dimethylammonium-tetrafluordecylsulfonat, Dimethylammoniumpentafluordecylsulfonat, Dimethylammonium-hexafluordecylsulfonat, Dimethylammonium-heptafluordecylsulfonat, Dimethylammonium-octafluordecylsulfonat, Dimethylammonium-nonafluordecylsulfonat, Dimethylammonium-decafluordecylsulfonat, Dimethylammonium-undecafluordecylsulfonat, Dimethylammoniumdodecafluordecylsulfonat, Dimethylammonium-tridecafluordecylsulfonat, Dimethylammonium-tetradecafluordecylsulfonat, Dimethylammoniumpentadecafluordecylsulfonat, Dimethylammonium-hexadecafluordecylsulfonat, Dimethylammonium-heptadecafluordecylsulfonat, Dimethylammoniumoctadecafluordecylsulfonat, Dimethylammonium-nonadecafluordecylsulfonat, Dimethylammonium-icosafluordecylsulfonat, Dimethylammoniumhenicosafluordecylsulfonat, Dimethylammonium-monofluorundecylsulfonat, Dimethylammonium-difluorundecylsulfonat, Dimethylammonium-trifluorundecylsulfonat, Dimethylammonium-tetrafluorundecylsulfonat, Dimethylammoniumpentafluorundecylsulfonat, Dimethylammonium-hexafluorundecylsulfonat, Dimethylammonium-heptafluorundecylsulfonat, Dimethylammoniumoctafluorundecylsulfonat, Dimethylammonium-nonafluorundecylsulfonat, Dimethylammonium-decafluorundecylsulfonat, Dimethylammoniumundecafluorundecylsulfonat, Dimethylammonium-dodecafluorundecylsulfonat, Dimethylammonium-tridecafluorundecylsulfonat, Dimethylammoniumtetradecafluorundecylsulfonat, Dimethylammonium-pentadecafluorundecylsulfonat, Dimethylammonium-hexadecafluorundecylsulfonat, Dimethylammoniumheptadecafluorundecylsulfonat, Dimethylammonium-octadecafluorundecylsulfonat, Dimethylammonium-nonadecafluorundecylsulfonat, Dimethylammoniumicosafluorundecylsulfonat, Dimethylammonium-henicosafluorundecylsulfonat, Dimethylammonium-docosafluorundecylsulfonat, Dimethylammoniumtricosafluorundecylsulfonat, Dimethylammonium-monofluordodecylsulfonat, Dimethylammonium-difluordodecylsulfonat, Dimethylammonium-trifluordodecylsulfonat, Dimethylammonium-tetrafluordodecylsulfonat, Dimethylammoniumpentafluordodecylsulfonat, Dimethylammonium-hexafluordodecylsulfonat, Dimethylammonium-heptafluordodecylsulfonat, Dimethylammoniumoctafluordodecylsulfonat, Dimethylammonium-nonafluordodecylsulfonat, Dimethylammonium-decafluordodecylsulfonat, Dimethylammoniumundecafluordodecylsulfonat, Dimethylammonium-dodecafluordodecylsulfonat, Dimethylammonium-tridecafluordodecylsulfonat, Dimethylammoniumtetradecafluordodecylsulfonat, Dimethylammonium-pentadecafluordodecylsulfonat, Dimethylammonium-hexadecafluordodecylsulfonat, Dimethylammoniumheptadecafluordodecylsulfonat, Dimethylammonium-octadecafluordodecylsulfonat, Dimethylammonium-nonadecafluordodecylsulfonat, Dimethylammoniumicosafluordodecylsulfonat, Dimethylammonium-henicosafluordodecylsulfonat, Dimethylammonium-docosafluordodecylsulfonat, Dimethylammoniumtricosafluordodecylsulfonat, Dimethylammonium-tetracosafluordodecylsulfonat, Dimethylammonium-pentacosafluordodecylsulfonat, Tetraethylammoniummonofluorbutylsulfonat, Tetraethylammonium-difluorbutylsulfonat, Tetraethylammoniumtrifluorbutylsulfonat, Tetraethylammonium-tetrafluorbutylsulfonat, Tetraethylammoniumpentafluorbutylsulfonat, Tetraethylammonium-hexafluorbutylsulfonat, Tetraethylammonium-heptafluorbutylsulfonat, Tetraethylammoniumoctafluorbutylsulfonat, Tetraethylammonium-nonafluorbutylsulfonat, Tetraethylammonium-monofluorpentylsulfonat, Tetraethylammoniumdifluorpentylsulfonat, Tetraethylammonium-trifluorpentylsulfonat, Tetraethylammoniumtetrafluorpentylsulfonat, Tetraethylammonium-pentafluorpentylsulfonat, Tetraethylammonium-hexafluorpentylsulfonat, Tetraethylammoniumheptafluorpentylsulfonat, Tetraethylammonium-octafluorpentylsulfonat, Tetraethylammonium-nonafluorpentylsulfonat, Tetraethylammoniumdecafluorpentylsulfonat, Tetraethylammonium-undecafluorpentylsulfonat, Tetraethylammonium-monofluorhexylsulfonat, Tetraethylammonium-difluorhexylsulfonat, Tetraethylammonium-trifluorhexylsulfonat, Tetraethylammonium-tetrafluorhexylsulfonat, Tetraethylammonium-pentafluorhexylsulfonat, Tetraethylammoniumhexafluorhexylsulfonat, Tetraethylammonium-heptafluorhexylsulfonat, Tetraethylammonium-octafluorhexylsulfonat, Tetraethylammoniumnonafluorhexylsulfonat, Tetraethylammonium-decafluorhexylsulfonat, Tetraethylammonium-undecafluorhexylsulfonat, Tetraethylammoniumdodecafluorhexylsulfonat, Tetraethylammonium-tridecafluorhexylsulfonat, Tetraethylammonium-monofluorheptylsulfonat, Tetraethylammoniumdifluorheptylsulfonat, Tetraethylammonium-trifluorheptylsulfonat, Tetraethylammoniumtetrafluorheptylsulfonat, Tetraethylammonium-pentafluorheptylsulfonat, Tetraethylammonium-hexafluorheptylsulfonat, Tetraethylammoniumheptafluorheptylsulfonat, Tetraethylammonium-octafluorheptylsulfonat, Tetraethylammonium-nonafluorheptylsulfonat, Tetraethylammoniumdecafluorheptylsulfonat, Tetraethylammonium-undecafluorheptylsulfonat, Tetraethylammonium-dodecafluorheptylsulfonat, Tetraethylammoniumtridecafluorheptylsulfonat, Tetraethylammonium-tetradecafluorheptylsulfonat, Tetraethylammonium-pentadecafluorheptylsulfonat, Tetraethylammoniummonofluoroctylsulfonat, Tetraethylammonium-difluoroctylsulfonat, Tetraethylammoniumtrifluoroctylsulfonat, Tetraethylammonium-tetrafluoroctylsulfonat, Tetraethylammoniumpentafluoroctylsulfonat, Tetraethylammonium-hexafluoroctylsulfonat, Tetraethylammonium-heptafluoroctylsulfonat, Tetraethylammoniumoctafluoroctylsulfonat, Tetraethylammonium-nonafluoroctylsulfonat, Tetraethylammonium-decafluoroctylsulfonat, Tetraethylammoniumundecafluoroctylsulfonat, Tetraethylammonium-dodecafluoroctylsulfonat, Tetraethylammonium-tridecafluoroctylsulfonat, Tetraethylammoniumtetradecafluoroctylsulfonat, Tetraethylammonium-pentadecafluoroctylsulfonat, Tetraethylammonium-hexadecafluoroctylsulfonat, Tetraethylammoniumheptadecafluoroctylsulfonat, Tetraethylammonium-monofluornonylsulfonat, Tetraethylammonium-difluornonylsulfonat, Tetraethylammonium-trifluornonylsulfonat, Tetraethylammonium-tetrafluornonylsulfonat, Tetraethylammoniumpentafluornonylsulfonat, Tetraethylammonium-hexafluornonylsulfonat, Tetraethylammonium-heptafluornonylsulfonat, Tetraethylammoniumoctafluornonylsulfonat, Tetraethylammonium-nonafluornonylsulfonat, Tetraethylammonium-decafluornonylsulfonat, Tetraethylammoniumundecafluornonylsulfonat, Tetraethylammonium-dodecafluornonylsulfonat, Tetraethylammonium-tridecafluornonylsulfonat, Tetraethylammoniumtetradecafluornonylsulfonat, Tetraethylammonium-pentadecafluornonylsulfonat, Tetraethylammonium-hexadecafluornonylsulfonat, Tetraethylammoniumheptadecafluornonylsulfonat, Tetraethylammonium-octadecafluornonylsulfonat, Tetraethylammonium-nonadecafluornonylsulfonat, Tetraethylammoniummonofluordecylsulfonat, Tetraethylammonium-difluordecylsulfonat, Tetraethylammonium-trifluordecylsulfonat, Tetraethylammonium-tetrafluordecylsulfonat, Tetraethylammonium-pentafluordecylsulfonat, Tetraethylammoniumhexafluordecylsulfonat, Tetraethylammonium-heptafluordecylsulfonat, Tetraethylammonium-octafluordecylsulfonat, Tetraethylammoniumnonafluordecylsulfonat, Tetraethylammonium-decafluordecylsulfonat, Tetraethylammonium-undecafluordecylsulfonat, Tetraethylammoniumdodecafluordecylsulfonat, Tetraethylammonium-tridecafluordecylsulfonat, Tetraethylammonium-tetradecafluordecylsulfonat, Tetraethylammoniumpentadecafluordecylsulfonat, Tetraethylammonium-hexadecafluordecylsulfonat, Tetraethylammonium-heptadecafluordecylsulfonat, Tetraethylammoniumoctadecafluordecylsulfonat, Tetraethylammonium-nonadecafluordecylsulfonat, Tetraethylammonium-icosafluordecylsulfonat, Tetraethylammoniumhenicosafluordecylsulfonat, Tetraethylammonium-monofluorundecylsulfonat, Tetraethylammonium-difluorundecylsulfonat, Tetraethylammoniumtrifluorundecylsulfonat, Tetraethylammonium-tetrafluorundecylsulfonat, Tetraethylammonium-pentafluorundecylsulfonat, Tetraethylammoniumhexafluorundecylsulfonat, Tetraethylammonium-heptafluorundecylsulfonat, Tetraethylammonium-octafluorundecylsulfonat, Tetraethylammoniumnonafluorundecylsulfonat, Tetraethylammonium-decafluorundecylsulfonat, Tetraethylammonium-undecafluorundecylsulfonat, Tetraethylammoniumdodecafluorundecylsulfonat, Tetraethylammonium-tridecafluorundecylsulfonat, Tetraethylammonium-tetradecafluorundecylsulfonat, Tetraethylammoniumpentadecafluorundecylsulfonat, Tetraethylammonium-hexadecafluorundecylsulfonat, Tetraethylammonium-heptadecafluorundecylsulfonat, Tetraethylammoniumoctadecafluorundecylsulfonat, Tetraethylammonium-nonadecafluorundecylsulfonat, Tetraethylammonium-icosafluorundecylsulfonat, Tetraethylammoniumhenicosafluorundecylsulfonat, Tetraethylammonium-docosafluorundecylsulfonat, Tetraethylammonium-tricosafluorundecylsulfonat, Tetraethylammoniummonofluordodecylsulfonat, Tetraethylammonium-difluordodecylsulfonat, Tetraethylammonium-trifluordodecylsulfonat, Tetraethylammoniumtetrafluordodecylsulfonat, Tetraethylammonium-pentafluordodecylsulfonat, Tetraethylammonium-hexafluordodecylsulfonat, Tetraethylammoniumheptafluordodecylsulfonat, Tetraethylammonium-octafluordodecylsulfonat, Tetraethylammonium-nonafluordodecylsulfonat, Tetraethylammoniumdecafluordodecylsulfonat, Tetraethylammonium-undecafluordodecylsulfonat, Tetraethylammonium-dodecafluordodecylsulfonat, Tetraethylammoniumtridecafluordodecylsulfonat, Tetraethylammonium-tetradecafluordodecylsulfonat, Tetraethylammonium-pentadecafluordodecylsulfonat, Tetraethylammoniumhexadecafluordodecylsulfonat, Tetraethylammonium-heptadecafluordodecylsulfonat, Tetraethylammonium-octadecafluordodecylsulfonat, Tetraethylammoniumnonadecafluordodecylsulfonat, Tetraethylammonium-icosafluordodecylsulfonat, Tetraethylammonium-henicosafluordodecylsulfonat, Tetraethylammoniumdocosafluordodecylsulfonat, Tetraethylammonium-tricosafluordodecylsulfonat, Tetraethylammonium-tetracosafluordodecylsulfonat, Tetraethylammoniumpentacosafluordodecylsulfonat.

Ist das anionische Tensid des erfindungsgemäßen Elektrolyten ein fluorfreies Tensid, so ist vorstellbar, dass wenigstens ein Tensid ein Alkylsulfonat ist, bevorzugt ein Alkylsulfonat bei welchem der Alkyl-Rest des Alkylsulfonates eine Länge von 1, 2, 3, 4, 5, 6, 7, 8, 9, 10, 11, 12, 13, 14, 15, 16, 17, 18 Kohlenstoffatomen, bevorzugt 4, 5, 6, 7, 8, 9, 10, 11, 12 Kohlenstoffatomen aufweist. In jedem Fall ist es dabei günstig, wenn wenigstens ein Tensid ein Alkylsulfonat ist, welches ein Gegenion aufweist, das ausgewählt ist aus Na⁺ oder K⁺. Selbstverständlich ist auch denkbar, dass das Gegenion ein Litihum-Ion oder ein Ion entsprechend der Formel ((CₛH₂ₛ₊₁)(CₚH₂ₚ₊₁)(C_{q}H_{2q+1})(CᵣH₂ᵣ₊₁))N⁺ mit s = {0, 1, 2, 3, 4, 5, 6}, p = {0, 1, 2, 3, 4, 5, 6}, q = {0, 1, 2, 3, 4, 5, 6}, r = {0, 1, 2, 3, 4, 5, 6}, beispielsweise ein Tetraethylammonium Ion ist..

Ein solches Tensid kann wie oben beschrieben eine Verbindung entsprechend Formeln II sein und zum Beispiel ausgewählt sein aus der Gruppe enthaltend Natrium-1 - butylsulfonat, Natrium-1-pentylsulfonat, Natrium-1-hexylsulfonat, Natrium-1-heptylsulfonat, Natrium-1-octylsulfonat, Natrium-1-nonylsulfonat, Natrium-1-decylsulfonat, Natrium-1-undecylsulfonat, Natrium-1-dodecylsulfonat, Natrium-iso-butylsulfonat, Natrium-iso-pentylsulfonat, Natrium-iso-hexylsulfonat, Natrium-iso-heptylsulfonat, Natrium-iso-octylsulfonat, Natrium-iso-nonylsulfonat, Natrium-iso-decylsulfonat, Natrium-iso-undecylsulfonat, Natrium-iso-dodecylsulfonat, Kalium-1-butylsulfonat, Kalium-1-pentylsulfonat, Kalium-1-hexylsulfonat, Kalium-1-heptylsulfonat, Kalium-1-octylsulfonat, Kalium-1-nonylsulfonat, Kalium-1-decylsulfonat, Kalium-1-undecylsulfonat, Kalium-1-dodecylsulfonat, Kalium-iso-butylsulfonat, Kalium-iso-pentylsulfonat, Kalium-iso-hexylsulfonat, Kalium-iso-heptylsulfonat, Kalium-iso-octylsulfonat, Kalium-iso-nonylsulfonat, Kalium-iso-decylsulfonat, Kalium-iso-undecylsulfonat, Kalium-iso-dodecylsulfonat, bevorzugt aus Natrium-1-butylsulfonat, Natrium-1-dodecylsulfonat, Natrium-1-isobutylslufonat, Natrium-1-isododecylsulfonat, Kalium-1-butylsulfonat, Kalium-1-dodecylsulfonat, Kalium-1-iso-butylsulfonat, Kalium-1-isododecylsulfonat, ganz besonders bevorzugt aus Natrium-1-butylsulfonat, Natrium-1-dodecylsulfonat, Kalium-1-butylsulfonat, Kalium-1-dodecylsulfonat, Lithium-1-butylsulfonat, Lithium-1-pentylsulfonat, Lithium-1-hexylsulfonat, Lithium-1-heptylsulfonat, Lithium-1-octylsulfonat, Lithium-1-nonylsulfonat, Lithium-1-decylsulfonat, Lithium-1-undecylsulfonat, Lithium-1-dodecylsulfonat, Lithium-iso-butylsulfonat, Lithium-iso-pentylsulfonat, Lithium-iso-hexylsulfonat, Lithium-iso-heptylsulfonat, Lithium-iso-octylsulfonat, Lithium-iso-nonylsulfonat, Lithium-iso-decylsulfonat, Lithium-iso-undecylsulfonat, Lithium-iso-dodecylsulfonat, Lithium-1-butylsulfonat, Lithium-1-pentylsulfonat, Lithium-1-hexylsulfonat, Lithium-1-heptylsulfonat, Lithium-1-octylsulfonat, Lithium-1-nonylsulfonat, Lithium-1-decylsulfonat, Lithium-1-undecylsulfonat, Lithium-1-dodecylsulfonat, Lithium-iso-butylsulfonat, Lithium-iso-pentylsulfonat, Lithium-iso-hexylsulfonat, Lithium-iso-heptylsulfonat, Lithium-iso-octylsulfonat, Lithium-iso-nonylsulfonat, Lithium-iso-decylsulfonat, Lithium-iso-undecylsulfonat, Lithium-iso-dodecylsulfonat, bevorzugt aus Lithium-1-butylsulfonat, Lithium-1-dodecylsulfonat, Lithium-1-isobutylslufonat, Lithium-1-isododecylsulfonat, Lithium-1-butylsulfonat, Lithium-1-dodecylsulfonat, Lithium-1-iso-butylsulfonat, Lithium-1-isododecylsulfonat, ganz besonders bevorzugt aus Lithium-1-butylsulfonat, Lithium-1-dodecylsulfonat, Lithium-1-butylsulfonat, Lithium-1-dodecylsulfonat, Ammonium-1-butylsulfonat, Ammonium-1-pentylsulfonat, Ammonium-1-hexylsulfonat, Ammonium-1-heptylsulfonat, Ammonium-1-octylsulfonat, Ammonium-1-nonylsulfonat, Ammonium-1-decylsulfonat, Ammonium-1-undecylsulfonat, Ammonium-1-dodecylsulfonat, Ammonium-iso-butylsulfonat, Ammonium-iso-pentylsulfonat, Ammonium-iso-hexylsulfonat, Ammonium-iso-heptylsulfonat, Ammonium-iso-octylsulfonat, Ammonium-iso-nonylsulfonat, Ammonium-iso-decylsulfonat, Ammonium-iso-undecylsulfonat, Ammonium-iso-dodecylsulfonat, Ammonium-1-butylsulfonat, Ammonium-1-pentylsulfonat, Ammonium-1-hexylsulfonat, Ammonium-1-heptylsulfonat, Ammonium-1-octylsulfonat, Ammonium-1-nonylsulfonat, Ammonium-1-decylsulfonat, Ammonium-1-undecylsulfonat, Ammonium-1-dodecylsulfonat, Ammonium-iso-butylsulfonat, Ammonium-iso-pentylsulfonat, Ammonium-iso-hexylsulfonat, Ammonium-iso-heptylsulfonat, Ammonium-iso-octylsulfonat, Ammonium-iso-nonylsulfonat, Ammonium-iso-decylsulfonat, Ammonium-iso-undecylsulfonat, Ammonium-iso-dodecylsulfonat, bevorzugt aus Ammonium-1-butylsulfonat, Ammonium-1-dodecylsulfonat, Ammonium-1-isobutylslufonat, Ammonium-1-isododecylsulfonat, Ammonium-1-butylsulfonat, Ammonium-1-dodecylsulfonat, Ammonium-1-iso-butylsulfonat, Ammonium-1-isododecylsulfonat, ganz besonders bevorzugt aus Ammonium-1-butylsulfonat, Ammonium-1-dodecylsulfonat, Ammonium-1-butylsulfonat, Ammonium-1-dodecylsulfonat, Dialkylammonium-1-butylsulfonat, Dialkylammonium-1-pentylsulfonat, Dialkylammonium-1-hexylsulfonat, Dialkylammonium-1-heptylsulfonat, Dialkylammonium-1-octylsulfonat, Dialkylammonium-1-nonylsulfonat, Dialkylammonium-1-decylsulfonat, Dialkylammonium-1-undecylsulfonat, Dialkylammonium-1-dodecylsulfonat, Dialkylammonium-iso-butylsulfonat, Dialkylammonium-iso-pentylsulfonat, Dialkylammonium-iso-hexylsulfonat, Dialkylammonium-iso-heptylsulfonat, Dialkylammonium-iso-octylsulfonat, Dialkylammonium-iso-nonylsulfonat, Dialkylammonium-iso-decylsulfonat, Dialkylammonium-iso-undecylsulfonat, Dialkylammonium-iso-dodecylsulfonat, Dialkylammonium-1-butylsulfonat, Dialkylammonium-1-pentylsulfonat, Dialkylammonium-1-hexylsulfonat, Dialkylammonium-1-heptylsulfonat, Dialkylammonium-1-octylsulfonat, Dialkylammonium-1-nonylsulfonat, Dialkylammonium-1-decylsulfonat, Dialkylammonium-1-undecylsulfonat, Dialkylammonium-1-dodecylsulfonat, Dialkylammonium-iso-butylsulfonat, Dialkylammonium-iso-pentylsulfonat, Dialkylammonium-iso-hexylsulfonat, Dialkylammonium-iso-heptylsulfonat, Dialkylammonium-iso-octylsulfonat, Dialkylammonium-iso-nonylsulfonat, Dialkylammonium-iso-decylsulfonat, Dialkylammonium-iso-undecylsulfonat, Dialkylammonium-iso-dodecylsulfonat, bevorzugt aus Dialkylammonium-1-butylsulfonat, Dialkylammonium-1-dodecylsulfonat, Dialkylammonium-1-isobutylslufonat, Dialkylammonium-1-isododecylsulfonat, Dialkylammonium-1-butylsulfonat, Dialkylammonium-1-dodecylsulfonat, Dialkylammonium-1-iso-butylsulfonat, Dialkylammonium-1-isododecylsulfonat, ganz besonders bevorzugt aus Dialkylammonium-1-butylsulfonat, Dialkylammonium-1-dodecylsulfonat, Dialkylammonium-1-butylsulfonat, Dialkylammonium-1-dodecylsulfonat, Trialkylammonium-1-butylsulfonat, Trialkylammonium-1-pentylsulfonat, Trialkylammonium-1-hexylsulfonat, Trialkylammonium-1-heptylsulfonat, Trialkylammonium-1-octylsulfonat, Trialkylammonium-1-nonylsulfonat, Trialkylammonium-1-decylsulfonat, Trialkylammonium-1-undecylsulfonat, Trialkylammonium-1-dodecylsulfonat, Trialkylammonium-iso-butylsulfonat, Trialkylammonium-iso-pentylsulfonat, Trialkylammonium-iso-hexylsulfonat, Trialkylammonium-iso-heptylsulfonat, Trialkylammonium-iso-octylsulfonat, Trialkylammonium-iso-nonylsulfonat, Trialkylammonium-iso-decylsulfonat, Trialkylammonium-iso-undecylsulfonat, Trialkylammonium-iso-dodecylsulfonat, Trialkylammonium-1-butylsulfonat, Trialkylammonium-1-pentylsulfonat, Trialkylammonium-1-hexylsulfonat, Trialkylammonium-1-heptylsulfonat, Trialkylammonium-1-octylsulfonat, Trialkylammonium-1-nonylsulfonat, Trialkylammonium-1-decylsulfonat, Trialkylammonium-1-undecylsulfonat, Trialkylammonium-1-dodecylsulfonat, Trialkylammonium-iso-butylsulfonat, Trialkylammonium-iso-pentylsulfonat, Trialkylammonium-iso-hexylsulfonat, Trialkylammonium-iso-heptylsulfonat, Trialkylammonium-iso-octylsulfonat, Trialkylammonium-iso-nonylsulfonat, Trialkylammonium-iso-decylsulfonat, Trialkylammonium-iso-undecylsulfonat, Trialkylammonium-iso-dodecylsulfonat, bevorzugt aus Trialkylammonium-1-butylsulfonat, Trialkylammonium-1-dodecylsulfonat, Trialkylammonium-1-isobutylslufonat, Trialkylammonium-1-isododecylsulfonat, Trialkylammonium-1-butylsulfonat, Trialkylammonium-1-dodecylsulfonat, Trialkylammonium-1-iso-butylsulfonat, Trialkylammonium-1-isododecylsulfonat, ganz besonders bevorzugt aus Trialkylammonium-1-butylsulfonat, Trialkylammonium-1-dodecylsulfonat, Trialkylammonium-1-butylsulfonat, Trialkylammonium-1-dodecylsulfonat, Tetraalkylammonium-1-butylsulfonat, Tetraalkylammonium-1-pentylsulfonat, Tetraalkylammonium-1-hexylsulfonat, Tetraalkylammonium-1-heptylsulfonat, Tetraalkylammonium-1-octylsulfonat, Tetraalkylammonium-1-nonylsulfonat, Tetraalkylammonium-1-decylsulfonat, Tetraalkylammonium-1-undecylsulfonat, Tetraalkylammonium-1-dodecylsulfonat, Tetraalkylammonium-iso-butylsulfonat, Tetraalkylammonium-iso-pentylsulfonat, Tetraalkylammonium-iso-hexylsulfonat, Tetraalkylammonium-iso-heptylsulfonat, Tetraalkylammonium-iso-octylsulfonat, Tetraalkylammonium-iso-nonylsulfonat, Tetraalkylammonium-iso-decylsulfonat, Tetraalkylammonium-iso-undecylsulfonat, Tetraalkylammonium-iso-dodecylsulfonat, Tetraalkylammonium-1-butylsulfonat, Tetraalkylammonium-1-pentylsulfonat, Tetraalkylammonium-1-hexylsulfonat, Tetraalkylammonium-1-heptylsulfonat, Tetraalkylammonium-1-octylsulfonat, Tetraalkylammonium-1-nonylsulfonat, Tetraalkylammonium-1-decylsulfonat, Tetraalkylammonium-1-undecylsulfonat, Tetraalkylammonium-1-dodecylsulfonat, Tetraalkylammonium-iso-butylsulfonat, Tetraalkylammonium-iso-pentylsulfonat, Tetraalkylammonium-iso-hexylsulfonat, Tetraalkylammonium-iso-heptylsulfonat, Tetraalkylammonium-iso-octylsulfonat, Tetraalkylammonium-iso-nonylsulfonat, Tetraalkylammonium-iso-decylsulfonat, Tetraalkylammonium-iso-undecylsulfonat, Tetraalkylammonium-iso-dodecylsulfonat, bevorzugt aus Tetraalkylammonium-1-butylsulfonat, Tetraalkylammonium-1-dodecylsulfonat, Tetraalkylammonium-1-isobutylslufonat, Tetraalkylammonium-1-isododecylsulfonat, Tetraalkylammonium-1-butylsulfonat, Tetraalkylammonium-1-dodecylsulfonat, Tetraalkylammonium-1-iso-butylsulfonat, Tetraalkylammonium-1-isododecylsulfonat,

insbesondere aus der Gruppe enthaltend Natrium-1-butylsulfonat, Natrium-1-pentylsulfonat, Natrium-1-hexylsulfonat, Natrium-1-heptylsulfonat, Natrium-1-octylsulfonat, Natrium-1-nonylsulfonat, Natrium-1-decylsulfonat, Natrium-1-undecylsulfonat, Natrium-1-dodecylsulfonat, Natrium-iso-butylsulfonat, Natrium-iso-pentylsulfonat, Natrium-iso-hexylsulfonat, Natrium-iso-heptylsulfonat, Natrium-iso-octylsulfonat, Natrium-iso-nonylsulfonat, Natrium-iso-decylsulfonat, Natrium-iso-undecylsulfonat, Natrium-iso-dodecylsulfonat, Kalium-1-butylsulfonat, Kalium-1-pentylsulfonat, Kalium-1-hexylsulfonat, Kalium-1-heptylsulfonat, Kalium-1-octylsulfonat, Kalium-1-nonylsulfonat, Kalium-1-decylsulfonat, Kalium-1-undecylsulfonat, Kalium-1-dodecylsulfonat, Kalium-iso-butylsulfonat, Kalium-iso-pentylsulfonat, Kalium-iso-hexylsulfonat, Kalium-iso-heptylsulfonat, Kalium-iso-octylsulfonat, Kalium-iso-nonylsulfonat, Kalium-iso-decylsulfonat, Kalium-iso-undecylsulfonat, Kalium-iso-dodecylsulfonat, bevorzugt aus Natrium-1-butylsulfonat, Natrium-1-dodecylsulfonat, Natrium-1-isobutylslufonat, Natrium-1-isododecylsulfonat, Kalium-1-butylsulfonat, Kalium-1-dodecylsulfonat, Kalium-1-iso-butylsulfonat, Kalium-1-isododecylsulfonat, ganz besonders bevorzugt aus Natrium-1-butylsulfonat, Natrium-1-dodecylsulfonat, Kalium-1-butylsulfonat, Kalium-1-dodecylsulfonat, Lithium-1-butylsulfonat, Lithium-1-pentylsulfonat, Lithium-1-hexylsulfonat, Lithium-1-heptylsulfonat, Lithium-1-octylsulfonat, Lithium-1-nonylsulfonat, Lithium-1-decylsulfonat, Lithium-1-undecylsulfonat, Lithium-1-dodecylsulfonat, Lithium-iso-butylsulfonat, Lithium-iso-pentylsulfonat, Lithium-iso-hexylsulfonat, Lithium-iso-heptylsulfonat, Lithium-iso-octylsulfonat, Lithium-iso-nonylsulfonat, Lithium-iso-decylsulfonat, Lithium-iso-undecylsulfonat, Lithium-iso-dodecylsulfonat, Lithium-1-butylsulfonat, Lithium-1-pentylsulfonat, Lithium-1-hexylsulfonat, Lithium-1-heptylsulfonat, Lithium-1-octylsulfonat, Lithium-1-nonylsulfonat, Lithium-1-decylsulfonat, Lithium-1-undecylsulfonat, Lithium-1-dodecylsulfonat, Lithium-iso-butylsulfonat, Lithium-iso-pentylsulfonat, Lithium-iso-hexylsulfonat, Lithium-iso-heptylsulfonat, Lithium-iso-octylsulfonat, Lithium-iso-nonylsulfonat, Lithium-iso-decylsulfonat, Lithium-iso-undecylsulfonat, Lithium-iso-dodecylsulfonat, bevorzugt aus Lithium-1-butylsulfonat, Lithium-1-dodecylsulfonat, Lithium-1-isobutylslufonat, Lithium-1-isododecylsulfonat, Lithium-1-butylsulfonat, Lithium-1-dodecylsulfonat, Lithium-1-iso-butylsulfonat, Lithium-1-isododecylsulfonat, ganz besonders bevorzugt aus Lithium-1-butylsulfonat, Lithium-1-dodecylsulfonat, Lithium-1-butylsulfonat, Lithium-1-dodecylsulfonat, Ammonium-1-butylsulfonat, Ammonium-1-pentylsulfonat, Ammonium-1-hexylsulfonat, Ammonium-1-heptylsulfonat, Ammonium-1-octylsulfonat, Ammonium-1-nonylsulfonat, Ammonium-1-decylsulfonat, Ammonium-1-undecylsulfonat, Ammonium-1-dodecylsulfonat, Ammonium-iso-butylsulfonat, Ammonium-iso-pentylsulfonat, Ammonium-iso-hexylsulfonat, Ammonium-iso-heptylsulfonat, Ammonium-iso-octylsulfonat, Ammonium-iso-nonylsulfonat, Ammonium-iso-decylsulfonat, Ammonium-iso-undecylsulfonat, Ammonium-iso-dodecylsulfonat, Ammonium-1-butylsulfonat, Ammonium-1-pentylsulfonat, Ammonium-1-hexylsulfonat, Ammonium-1-heptylsulfonat, Ammonium-1-octylsulfonat, Ammonium-1-nonylsulfonat, Ammonium-1-decylsulfonat, Ammonium-1-undecylsulfonat, Ammonium-1-dodecylsulfonat, Ammonium-iso-butylsulfonat, Ammonium-iso-pentylsulfonat, Ammonium-iso-hexylsulfonat, Ammonium-iso-heptylsulfonat, Ammonium-iso-octylsulfonat, Ammonium-iso-nonylsulfonat, Ammonium-iso-decylsulfonat, Ammonium-iso-undecylsulfonat, Ammonium-iso-dodecylsulfonat, bevorzugt aus Ammonium-1-butylsulfonat, Ammonium-1-dodecylsulfonat, Ammonium-1-isobutylslufonat, Ammonium-1-isododecylsulfonat, Ammonium-1-butylsulfonat, Ammonium-1-dodecylsulfonat, Ammonium-1-iso-butylsulfonat, Ammonium-1-isododecylsulfonat, ganz besonders bevorzugt aus Ammonium-1-butylsulfonat, Ammonium-1-dodecylsulfonat, Ammonium-1-butylsulfonat, Ammonium-1-dodecylsulfonat, Tetraethylammonium-1-butylsulfonat, Tetraethylammonium-1-pentylsulfonat, Tetraethylammonium-1-hexylsulfonat, Tetraethylammonium-1-heptylsulfonat, Tetraethylammonium-1-octylsulfonat, Tetraethylammonium-1-nonylsulfonat, Tetraethylammonium-1-decylsulfonat, Tetraethylammonium-1-undecylsulfonat, Tetraethylammonium-1-dodecylsulfonat, Tetraethylammonium-iso-butylsulfonat, Tetraethylammonium-iso-pentylsulfonat, Tetraethylammonium-iso-hexylsulfonat, Tetraethylammonium-iso-heptylsulfonat, Tetraethylammonium-iso-octylsulfonat, Tetraethylammonium-iso-nonylsulfonat, Tetraethylammonium-iso-decylsulfonat, Tetraethylammonium-iso-undecylsulfonat, Tetraethylammonium-iso-dodecylsulfonat, Tetraethylammonium-1-butylsulfonat, Tetraethylammonium-1-pentylsulfonat, Tetraethylammonium-1-hexylsulfonat, Tetraethylammonium-1-heptylsulfonat, Tetraethylammonium-1-octylsulfonat, Tetraethylammonium-1-nonylsulfonat, Tetraethylammonium-1-decylsulfonat, Tetraethylammonium-1-undecylsulfonat, Tetraethylammonium-1-dodecylsulfonat, Tetraethylammonium-iso-butylsulfonat, Tetraethylammonium-iso-pentylsulfonat, Tetraethylammonium-iso-hexylsulfonat, Tetraethylammonium-iso-heptylsulfonat, Tetraethylammonium-iso-octylsulfonat, Tetraethylammonium-iso-nonylsulfonat, Tetraethylammonium-iso-decylsulfonat, Tetraethylammonium-iso-undecylsulfonat, Tetraethylammonium-iso-dodecylsulfonat, bevorzugt aus Tetraethylammonium-1-butylsulfonat, Tetraethylammonium-1-dodecylsulfonat, Tetraethylammonium-1-isobutylslufonat, Tetraethylammonium-1-isododecylsulfonat, Tetraethylammonium-1-butylsulfonat, Tetraethylammonium-1-dodecylsulfonat, Tetraethylammonium-1-iso-butylsulfonat, Tetraethylammonium-1-isododecylsulfonat, ganz besonders bevorzugt aus Tetraethylammonium-iso-butylsulfonat, Tetraethylammonium-iso-dodecylsulfonat, Tetraethylammonium-1-butylsulfonat, Tetraethylammonium-1-dodecylsulfonat.

In einer weiteren Variante sieht die Erfindung einen Elektrolyt zur Verwendung in einem elektrochemischen Gassensor entsprechend einem der vorhergehenden Ansprüche vor, wobei der Elektrolyt ein Gemisch aus einem wenigstens stark sauren, flüssigen Medium, das eine elektrische Leitfähigkeit aufweist, und einem Zusatz ist und wobei der Zusatz wenigstens ein Tensid aufweist und wobei wenigstens ein Tensid ein kationisches Tensid ist. Dabei ist es selbstverständlich auch denkbar, dass der Zusatz ein Gemisch aus einem anionischen Tensid, wie oben beschrieben, und einem kationischen Tensid aufweist. Besonders günstig ist es, wenn wenigstens ein Tensid eine Ammoniumverbindung ist, bevorzugt eine quartäre Ammoniumverbindung, besonders bevorzugt eine Tetraalkyl-ammonium-Verbindung. Insbesondere ist es vorteilhaft, wenn das kationisches Tensid wie oben beschrieben ein Tensid entsprechend der Formel III ist:

[((CₛH₂ₛ₊₁)(CₚH₂ₚ₊₁)(C_{q}H_{2q+1})(CᵣH₂ᵣ₊₁))N⁺]R2 (Formel III)

mit
s = {0, 1, 2, 3, 4, 5, 6, 7, 8, 9, 10, 11, 12, 13, 14, 15, 16, 17, 18, 19, 20},
p = {0, 1, 2, 3, 4, 5, 6, 7, 8, 9, 10, 11, 12, 13, 14, 15, 16, 17, 18, 19, 20},
q = {0, 1, 2, 3, 4, 5, 6, 7, 8, 9, 10, 11, 12, 13, 14, 15, 16, 17, 18, 19, 20},
r = {0, 1, 2, 3, 4, 5, 6, 7, 8, 9, 10, 11, 12, 13, 14, 15, 16, 17, 18, 19, 20} sein,
wobei R2 ausgewählt ist aus der Gruppe enthaltend HSO₄⁻, H₂PO₄⁻, CF₃-SO₃⁻, C₂F₂HSO₃⁻, CF₃-COO⁻. Bevorzugt ist R2 ausgewählt aus HSO₄⁻ und H₂PO₄⁻, besonders bevorzugt HSO₄⁻.

In jedem Fall kann ein kationisches Tensid, welches in einem Zusatz eines erfindungsgemäßen Elektrolyten enthalten ist, eine Ammoniumverbindung sein, die zwei Alkylgruppen aufweist. Dabei können die Alkylgruppen unabhängig voneinander lineare Kohlenstoffketten mit einer Länge von 1, 2, 3, 4, 5, 6, 7, 8, 9, 10, 11, 12, 13, 14, 15, 16, 17 oder 18 Kohlenstoffatomen sind, bevorzugt mit einer Länge von 1, 2, 3, 4, 5, 6, 7, 8, 9, 10, 11 oder 12 Kohlenstoffatomen sein. Günstig ist es insebsondere auch, wenn die Ammoniumverbindung wenigstens zwei Methylgruppen aufweist.

Ein solches Tensid kann wie oben beschrieben eine Verbindung entsprechend einer der Formeln III, IIIa, IIIb, IIIc, IIId, IIId', IIIe oder IIIe' sein und zum Beispiel ausgewählt sein aus der Gruppe enthaltend Ethyltrimethylammoniumhydrogensulfat, Diethyldimethylammoniumhydrogensulfat, Butylethyldimethylammoniumhydrogensulfat, Pentylethyldimethylammoniumhydrogensulfat, Hexylethyldimethylammoniumhydrogensulfat, Heptylethyldimethylammoniumhydrogensulfat, Octylethyldimethylammoniumhydrogensulfat, Nonylethyldimethylammoniumhydrogensulfat, Decylethyldimethylammoniumhydrogensulfat, Undecylethyldimethylammoniumhydrogensulfat, Dodecylethyldimethylammoniumhydrogensulfat, Butyltrimethylammoniumhydrogensulfat, Dibutyldimethylammoniumhydrogensulfat, Pentylbutyldimethylammoniumhydrogensulfat, Hexylbutyldimethylammoniumhydrogensulfat, Heptylbutyldimethylammoniumhydrogensulfat, Octylbutyldimethylammoniumhydrogensulfat, Nonylbutyldimethylammoniumhydrogensulfat, Decylbutyldimethylammoniumhydrogensulfat, Undecylbutyldimethylammoniumhydrogensulfat, Dodecylbutyldimethylammoniumhydrogensulfat, Pentyltrimethylammoniumhydrogensulfat, Dipentyldimethylammoniumhydrogensulfat, Hexylpentyldimethylammoniumhydrogensulfat, Heptylpentyldimethylammoniumhydrogensulfat, Octylpentyldimethylammoniumhydrogensulfat, Nonylpentyldimethylammoniumhydrogensulfat, Decylpentyldimethylammoniumhydrogensulfat, Undecylpentyldimethylammoniumhydrogensulfat, Dodecylpentyldimethylammoniumhydrogensulfat, Hexyltrimethylammoniumhydrogensulfat, Dihexyldimethylammoniumhydrogensulfat, Heptylhexyldimethylammoniumhydrogensulfat, Octylhexyldimethylammoniumhydrogensulfat, Nonylhexyldimethylammoniumhydrogensulfat, Decylhexyldimethylammoniumhydrogensulfat, Undecylhexyldimethylammoniumhydrogensulfat, Dodecylhexyldimethylammoniumhydrogensulfat, Heptyltrimethylammoniumhydrogensulfat, Diheptyldimethylammoniumhydrogensulfat, Octylheptyldimethylammoniumhydrogensulfat, Nonylheptyldimethylammoniumhydrogensulfat, Decylheptyldimethylammoniumhydrogensulfat, Undecylheptyldimethylammoniumhydrogensulfat, Dodecylheptyldimethylammoniumhydrogensulfat, Octyltrimethylammoniumhydrogensulfat, Dioctyldimethylammoniumhydrogensulfat, Nonyloctyldimethylammoniumhydrogensulfat, Decyloctyldimethylammoniumhydrogensulfat, Undecyloctyldimethylammoniumhydrogensulfat, Dodecyloctyldimethylammoniumhydrogensulfat, Nonyltrimethylammoniumhydrogensulfat, Dinonyldimethylammoniumhydrogensulfat, Decylnonyldimethylammoniumhydrogensulfat, Undecylnonyldimethylammoniumhydrogensulfat, Dodecylnonyldimethylammoniumhydrogensulfat, Decyltrimethylammoniumhydrogensulfat, Didecyldimethylammoniumhydrogensulfat, Undecyldecyldimethylammoniumhydrogensulfat, Dodecyldecyldimethylammoniumhydrogensulfat, Undecyltrimethylammoniumhydrogensulfat, Diundecyldimethylammoniumhydrogensulfat, Dodecylundecyldimethylammoniumhydrogensulfat, Dodecyltrimethylammoniumhydrogensulfat, Didodecyldimethylammoniumhydrogensulfat, Ethyltrimethylammoniumdihydrogenphosphat, Diethyldimethylammonium-dihydrogenphosphat, Butylethyldimethylammonium-dihydrogenphosphat, Pentylethyldimethylammoniumdihydrogenphosphat, Hexylethyldimethylammonium-dihydrogenphosphat, Heptylethyldimethylammonium-dihydrogenphosphat, Octylethyldimethylammoniumdihydrogenphosphat, Nonylethyldimethylammonium-dihydrogenphosphat, Decylethyldimethylammonium-dihydrogenphosphat, Undecylethyldimethylammoniumdihydrogenphosphat, Dodecylethyldimethylammonium-dihydrogenphosphat, Butyltrimethylammonium-dihydrogenphosphat, Dibutyldimethylammoniumdihydrogenphosphat, Pentylbutyldimethylammonium-dihydrogenphosphat, Hexylbutyldimethylammonium-dihydrogenphosphat, Heptylbutyldimethylammoniumdihydrogenphosphat, Octylbutyldimethylammonium-dihydrogenphosphat, Nonylbutyldimethylammonium-dihydrogenphosphat, Decylbutyldimethylammoniumdihydrogenphosphat, Undecylbutyldimethylammonium-dihydrogenphosphat, Dodecylbutyldimethylammonium-dihydrogenphosphat, Pentyltrimethylammoniumdihydrogenphosphat, Dipentyldimethylammonium-dihydrogenphosphat, Hexylpentyldimethylammonium-dihydrogenphosphat, Heptylpentyldimethylammoniumdihydrogenphosphat, Octylpentyldimethylammonium-dihydrogenphosphat, Nonylpentyldimethylammonium-dihydrogenphosphat, Decylpentyldimethylammoniumdihydrogenphosphat, Undecylpentyldimethylammonium-dihydrogenphosphat, Dodecylpentyldimethylammonium-dihydrogenphosphat, Hexyltrimethylammoniumdihydrogenphosphat, Dihexyldimethylammonium-dihydrogenphosphat, Heptylhexyldimethylammonium-dihydrogenphosphat, Octylhexyldimethylammoniumdihydrogenphosphat, Nonylhexyldimethylammonium-dihydrogenphosphat, Decylhexyldimethylammonium-dihydrogenphosphat, Undecylhexyldimethylammoniumdihydrogenphosphat, Dodecylhexyldimethylammonium-dihydrogenphosphat, Heptyltrimethylammonium-dihydrogenphosphat, Diheptyldimethylammoniumdihydrogenphosphat, Octylheptyldimethylammonium-dihydrogenphosphat, Nonylheptyldimethylammonium-dihydrogenphosphat, Decylheptyldimethylammoniumdihydrogenphosphat, Undecylheptyldimethylammonium-dihydrogenphosphat, Dodecylheptyldimethylammonium-dihydrogenphosphat, Octyltrimethylammoniumdihydrogenphosphat, Dioctyldimethylammonium-dihydrogenphosphat, Nonyloctyldimethylammonium-dihydrogenphosphat, Decyloctyldimethylammoniumdihydrogenphosphat, Undecyloctyldimethylammonium-dihydrogenphosphat, Dodecyloctyldimethylammonium-dihydrogenphosphat, Nonyltrimethylammoniumdihydrogenphosphat, Dinonyldimethylammonium-dihydrogenphosphat, Decylnonyldimethylammonium-dihydrogenphosphat, Undecylnonyldimethylammoniumdihydrogenphosphat, Dodecylnonyldimethylammonium-dihydrogenphosphat, Decyltrimethylammonium-dihydrogenphosphat, Didecyldimethylammoniumdihydrogenphosphat, Undecyldecyldimethylammonium-dihydrogenphosphat, Dodecyldecyldimethylammonium-dihydrogenphosphat, Undecyltrimethylammoniumdihydrogenphosphat, Diundecyldimethylammonium-dihydrogenphosphat, Dodecylundecyldimethylammonium-dihydrogenphosphat, Dodecyltrimethylammoniumdihydrogenphosphat, Didodecyldimethylammonium-dihydrogenphosphat.

In jedem Fall ist es vorteilhaft, wenn das Tensid des Zusatzes und/oder der Zusatz in einer Konzentration von wenigstens einschließlich 0,01 mMol/l und höchstens einschließlich 2 Mol/l in dem Elektrolyt enthalten ist, bevorzugt in einer Konzentration von wenigstens einschließlich 0,1 mMol/l und höchstens einschließlich 1 Mol/l, besonders bevorzugt in einer Konzentration von wenigstens einschließlich 2 mMol/l und höchstens einschließlich 500 mMol/l, ganz besonders bevorzugt in einer Konzentration von wenigstens einschließlich 15 mMol/l und höchstens einschließlich 50 mMol/l, ganz besonders bevorzugt in einer Konzentration von 20 mMol/l ± 5mMol/l. Selbstverständlich sind auch Konzentrationsbereiche, wie oben bereits beschrieben denkbar.

Weitere Merkmale, Einzelheiten und Vorteile der Erfindung ergeben sich aus dem Wortlaut der Ansprüche, sowie aus der folgenden Beschreibung von Ausführungsbeispielen anhand der Zeichnungen. Es zeigen:
- Fig. 1a bis 1h: verschiedene Beispiele für erfindungsgemäße anionische Tenside,
- Fig. 2a bis 2f: verschiedene Beispiele für erfindungsgemäße perfluorierte, anionische Tenside,
- Fig. 3a bis 3: everschiedene Beispiele für erfindungsgemäße polyfluorierte, anionische Tenside,
- Fig. 4a bis 4h: verschiedene Beispiele für erfindungsgemäße halogenfreie, anionische Tenside,
- Fig. 5a bis 5h: verschiedene Beispiele für erfindungsgemäße kationische Tenside,
- Fig. 6a bis 6l: verschiedene alternative Beispiele für halogenfreie, anionische Tenside,
- Fig. 7: eine schematische Darstellung eines erfindungsgemäßen Gassensors,
- Fig. 8a: eine weitere schematische Darstellung eines alternativen Aufbaus eines erfindungsgemäßen Gassensors,
- Fig. 8b: eine Detailansicht des Ausschnittes A aus Fig. 10a.

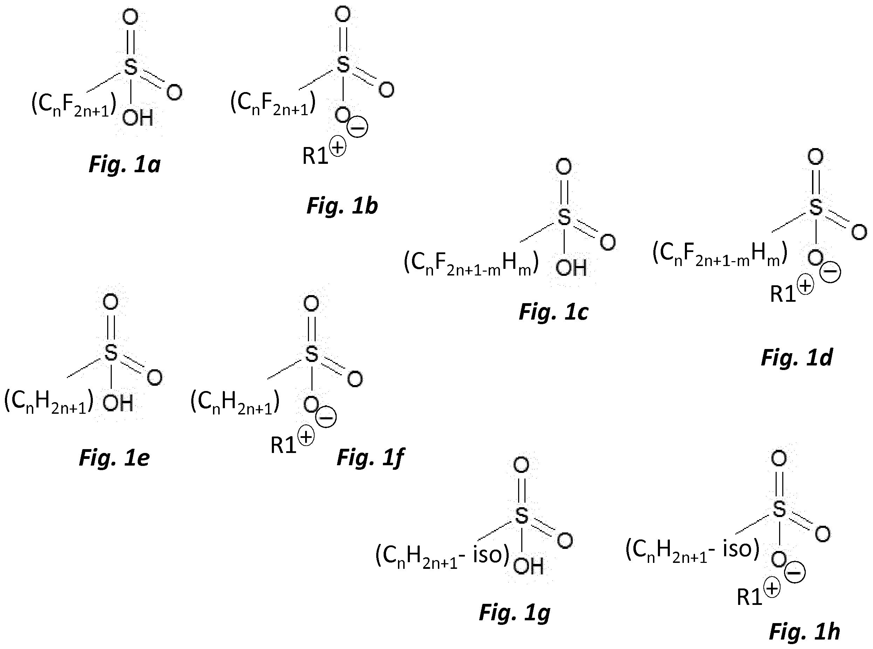

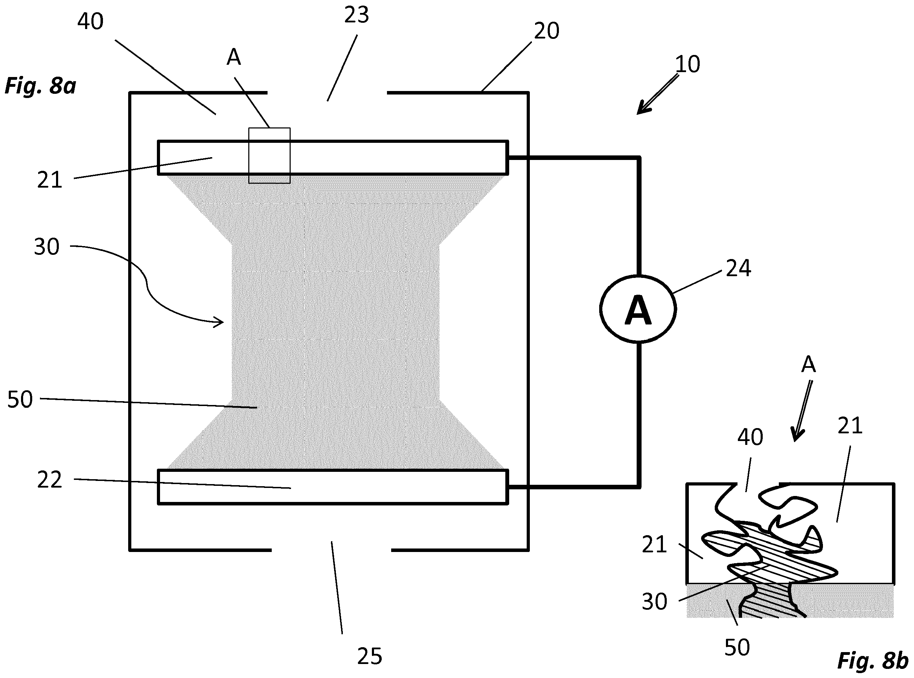

Die Figuren 1a bis 1h, 2a bis 2f, 3a bis 3e, 4a bis 4h, 5a bis 5h und 6a bis 6l zeigen verschiedene Beispiele für erfindungsgemäße Tenside, die in dem Zusatz enthalten sein können. Der Zusatz ist in einem Elektrolyten 30 enthalten. Der Elektrolyt 30 ist in einer Ausführungsvariante - wie in den Figuren 8, 9a und 9b erkennbar - in einem erfindungsgemäßen Gassensor 10 enthalten.

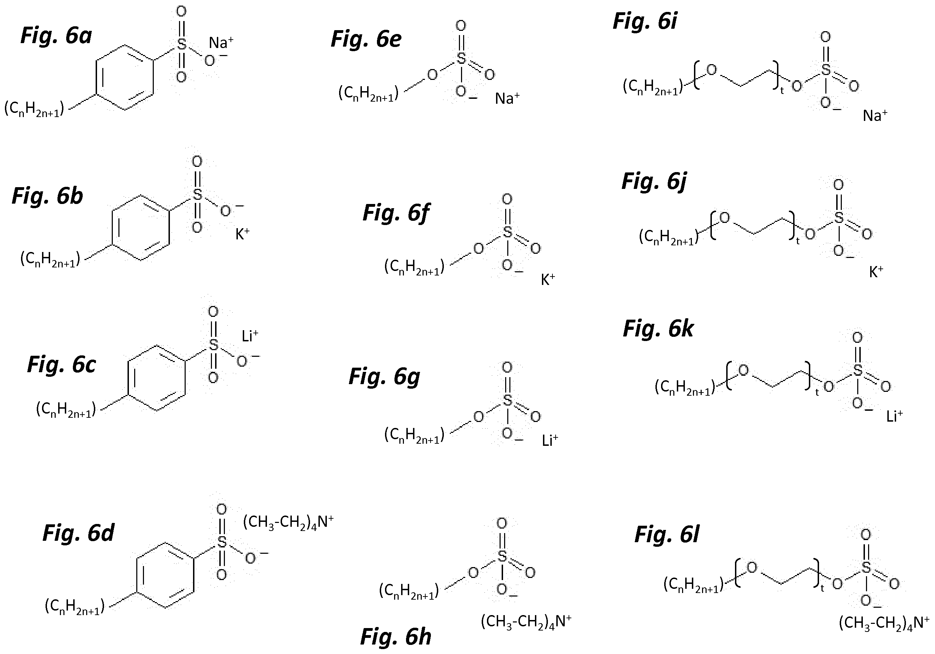

Man erkennt in den Figuren 1a bis 1h, 2a bis 2f, 3a bis 3e, 4a bis 4h und 6a bis 6l, dass das Tensid ein anionisches Tensid ist. Dabei sind die Tenside entsprechend den in den Figuren 1a, 1c, 1e, 1g, 2a, 2b und 3a gezeigten Ausführungsbeispielen Sulfonsäuren. Die Tenside entsprechend den in den Figuren 1b, 1d , 1f, 1h, 2c bis 2f, 3b bis 3e, 4a bis 4h sowie 6a bis 6d gezeigten Ausführungsbeispielen sind Sulfonate, d.h. Salze von Sulfonsäuren. Die Tenside entsprechend den in den Figuren 6e bis 6l gezeigten Ausführungsbeispielen sind Sulfate, nämlich Salze von Schwefelsäureestern.

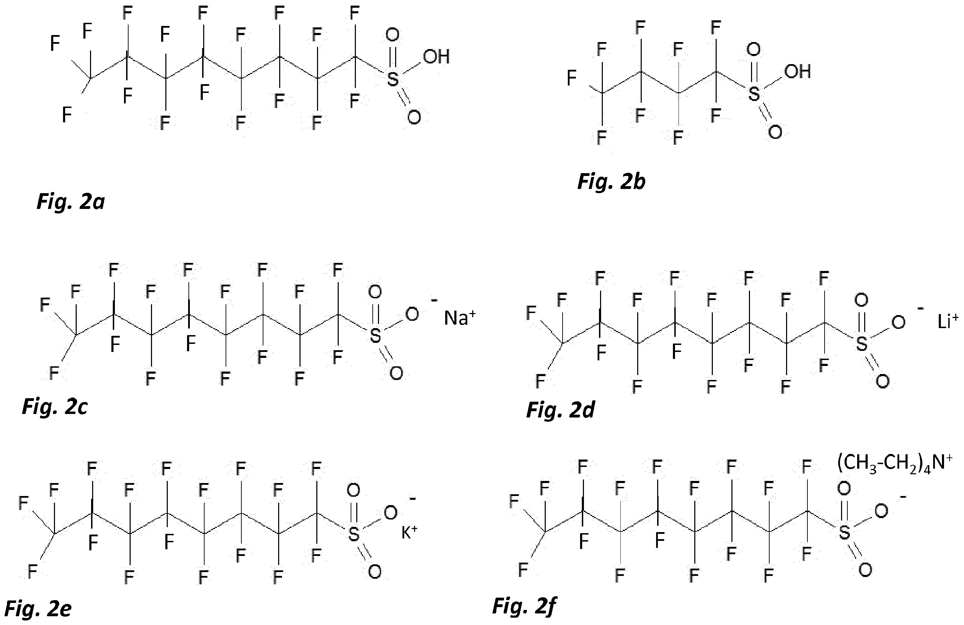

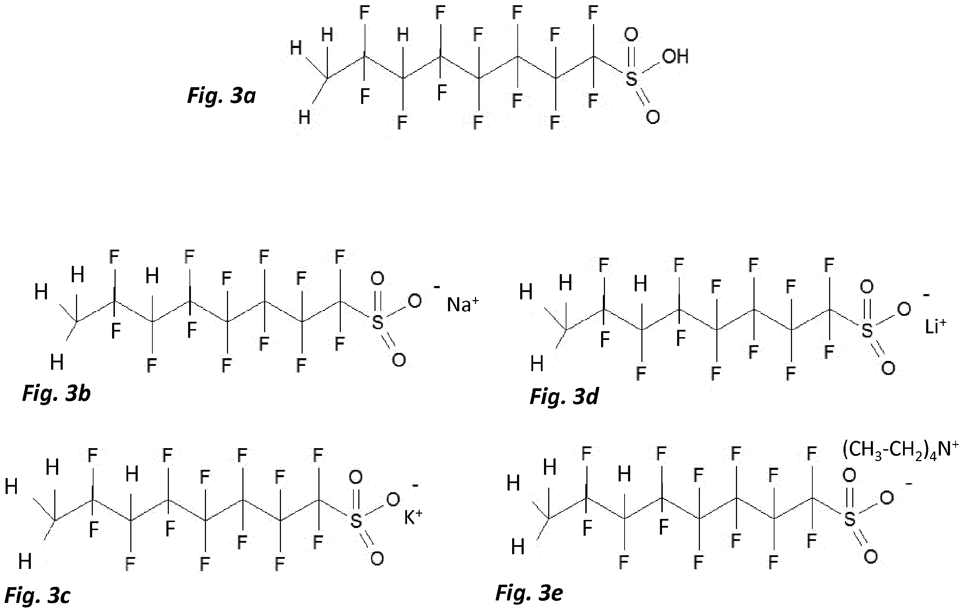

Man erkennt weiter, dass die Tenside entsprechend den in den Figuren 1a bis 1d , 2a bis 2f und 3a bis 3e gezeigten Ausführungsformen jeweils halogenierte Tenside sind, nämlich Tenside, die wenigstens ein Fluor-Atom an einer Kohlenstoffkette aufweist. Dabei sind die in den Figuren 1a, 1b und 2a bis 2f gezeigten Tenside perfluorierte Tenside, d.h. Tenside mit einer Alkylkette bei der sämtliche Wasserstoffatome durch Fluor-Atome ausgetauscht sind. Die in den Figuren 1c, 1d und 3a bis 3e gezeigten Tenside sind polyfluorierte Tenside, d.h. Tenside mit einer Alkylkette bei der einige aber nicht alle Wasserstoffatome durch Fluor-Atome ausgetauscht sind. Die Tenside in den jeweils in den Figuren 1 e bis 1h und 4a bis 4h sowie 6a bis 6l gezeigten Ausführungsformen sind halogenfrei.

Man erkennt in den Figuren 1a bis 1h, dass die Länge der Alkylkette der erfindungsgemäßen Tenside variabel ist. Dabei ist n jeweils ausgewählt aus 4, 5, 6, 7, 8, 9, 10, 11 oder 12.

In dem Ausführungsbeispiel gemäß Fig. 1a ist das erfindungsgemäße Tensid eine perfluorierte Alkyl-Sulfonsäure. Dabei ist n ausgewählt aus 4, 5, 6, 7, 8, 9, 10, 11 oder 12. Man erkennt insofern, dass das Tensid gemäß Fig. 1a ausgewählt ist aus der Gruppe Perfluorbutylsulfonsäure, Perfluorpentylsulfonsäure, Perfluorhexylsulfonsäure, Perfluoroctylsulfonsäure, Perfluornonylsulfonsäure, Perfluordecylsulfonsäure, Perfluoundecylsulfonsäure, Perfluordodecylsulfonsäure.

In dem Ausführungsbeispiel gemäß Fig. 1b ist das erfindungsgemäße Tensid ein perfluoriertes Alkyl-Sulfonat. Dabei ist n ausgewählt aus 4, 5, 6, 7, 8, 9, 10, 11 oder 12. R1 ist das positiv geladene Gegenion und ausgewählt aus der Gruppe enthaltend heterocyclischen Kationen, quartäre Ammoniumionen, Alkali-oder Erdalkali-Ionen. In einer Ausführungsvariante ist das Gegenion R1 ein heterocyclische Kation, nämlich ein Pyridinium-Ion. In einer weiteren Ausführungsvariante ist das Gegenion R1 eine Ammoniumverbindung, nämlich ein Ammonium-Ion. In einer weiteren Ausführungsvariante ist das Gegenion R1 ein quartäres Ammoniumion, nämlich Tetraethyl-Ammonium. In noch einer weiteren Ausführungsvariante ist das Gegenion R1 ein Alkali-Ion, nämlich Na⁺, K⁺ oder Li⁺. Man erkennt insofern, dass das Tensid gemäß Fig. 1b ausgewählt ist aus der Gruppe enthaltend Natrium-Perfluorbutylsulfonat, Natrium-Perfluorpentylsulfonat, Natrium-Perfluorhexylsulfonat, Natrium-Perfluoroctylsulfonat, Natrium-Perfluornonylsulfonat, Natrium-Perfluordecylsulfonat, Natrium-Perfluorundecylsulfonat, Natrium-Perfluordodecylsulfonat, Kalium-Perfluorbutylsulfonat, Kalium-Perfluorpentylsulfonat, Kalium-Perfluorhexylsulfonat, Kalium-Perfluoroctylsulfonat, Kalium-Perfluornonylsulfonat, Kalium-Perfluordecylsulfonat, Kalium-Perfluorundecylsulfonat, Kalium-Perfluordodecylsulfonat, Tetraethylammonium-Perfluorbutylsulfonat, Tetraethylammonium-Perfluorpentylsulfonat, Tetraethylammonium-Perfluorhexylsulfonat, Tetraethylammonium-Perfluoroctylsulfonat, Tetraethylammonium-Perfluornonylsulfonat, Tetraethylammonium-Perfluordecylsulfonat, Tetraethylammonium-Perfluorundecylsulfonat, Tetraethylammonium-Perfluordodecylsulfonat, Tetraethylammonium-Perfluorbutylsulfonat, Tetraethylammonium-Perfluorpentylsulfonat, Tetraethylammonium-Perfluorhexylsulfonat, Tetraethylammonium-Perfluoroctylsulfonat, Tetraethylammonium-Perfluornonylsulfonat, Tetraethylammonium-Perfluordecylsulfonat, Tetraethylammonium-Perfluorundecylsulfonat, Tetraethylammonium-Perfluordodecylsulfonat, Ammonium-Perfluorbutylsulfonat, Ammonium-Perfluorpentylsulfonat, Ammonium-Perfluorhexylsulfonat, Ammonium-Perfluoroctylsulfonat, Ammonium-Perfluornonylsulfonat, Ammonium-Perfluordecylsulfonat, Ammonium-Perfluoundecylsulfonat, Ammonium-Perfluordodecylsulfonat, Ammonium-Perfluorbutylsulfonat, Ammonium-Perfluorpentylsulfonat, Ammonium-Perfluorhexylsulfonat, Ammonium-Perfluoroctylsulfonat, Ammonium-Perfluornonylsulfonat, Ammonium-Perfluordecylsulfonat, Ammonium-Perfluoundecylsulfonat, Ammonium-Perfluordodecylsulfonat, Dimethylammonium-Perfluorbutylsulfonat, Dimethylammonium-Perfluorpentylsulfonat, Dimethylammonium-Perfluorhexylsulfonat, Dimethylammonium-Perfluoroctylsulfonat, Dimethylammonium-Perfluornonylsulfonat, Dimethylammonium-Perfluordecylsulfonat, Dimethylammonium-Perfluoundecylsulfonat, Dimethylammonium-Perfluordodecylsulfonat, Dimethylammonium-Perfluorbutylsulfonat, Dimethylammonium-Perfluorpentylsulfonat, Dimethylammonium-Perfluorhexylsulfonat, Dimethylammonium-Perfluoroctylsulfonat, Dimethylammonium-Perfluornonylsulfonat, Dimethylammonium-Perfluordecylsulfonat, Dimethylammonium-Perfluoundecylsulfonat, Dimethylammonium-Perfluordodecylsulfonat, Pyridinium-Perfluorbutylsulfonat, Pyridinium-Perfluorpentylsulfonat, Pyridinium-Perfluorhexylsulfonat, Pyridinium-Perfluoroctylsulfonat, Pyridinium-Perfluornonylsulfonat, Pyridinium-Perfluordecylsulfonat, Pyridinium-Perfluoundecylsulfonat, Pyridinium-Perfluordodecylsulfonat.

In den Figuren 2a bis 2f erkennt man besonders bevorzugte Ausführungsvarianten der perfluorierten Alkylsulfonsäuren von Fig. 1a und der perfluorierten Alkylsulfonate von Fig. 1b. Dabei zeigen Fig. 2a Perfluoroctylsulfonsäure und Fig. 2b Perfluorbutylsulfonsäure als bevorzugte Varianten der Ausführungsbeispiele aus Figur 1a. Die Figuren 2c, 2d, 2e und 2f zeigen als bevorzugte Varianten der Ausführungsbeispiele aus Fig. 1b Natrium-Perfluoroctylsulfonat (Fig. 2c), Lithium-Perfluoroctylsulfonat (Fig. 2d), Kalium-Perfluoroctylsulfonat (Fig. 2e) und Tetraethylammonium-Perfluoroctylsulfonat (Fig. 2f).

In dem Ausführungsbeispiel gemäß Fig. 1c ist das erfindungsgemäße Tensid eine mono- oder polyfluorierte Alkyl-Sulfonsäure. Dabei ist n ausgewählt aus 4, 5, 6, 7, 8, 9, 10, 11 oder 12. Man erkennt insofern, dass das Tensid ausgewählt ist aus der Gruppe enthaltend Monofluorbutylsulfonsäure, Difluorbutylsulfonsäure, Trifluorbutylsulfonsäure, Tetrafluorbutylsulfonsäure, Pentafluorbutylsulfonsäure, Hexafluorbutylsulfonsäure, Heptafluorbutylsulfonsäure, Octafluorbutylsulfonsäure, Nonafluorbutylsulfonsäure, Monofluorpentylsulfonsäure, Difluorpentylsulfonsäure, Trifluorpentylsulfonsäure, Tetrafluorpentylsulfonsäure, Pentafluorpentylsulfonsäure, Hexafluorpentylsulfonsäure, Heptafluorpentylsulfonsäure, Octafluorpentylsulfonsäure, Nonafluorpentylsulfonsäure, Decafluorpentylsulfonsäure, Undecafluorpentylsulfonsäure, Monofluorhexylsulfonsäure, Difluorhexylsulfonsäure, Trifluorhexylsulfonsäure, Tetrafluorhexylsulfonsäure, Pentafluorhexylsulfonsäure, Hexafluorhexylsulfonsäure, Heptafluorhexylsulfonsäure, Octafluorhexylsulfonsäure, Nonafluorhexylsulfonsäure, Decafluorhexylsulfonsäure, Undecafluorhexylsulfonsäure, Dodecafluorhexylsulfonsäure, Tridecafluorhexylsulfonsäure, Monofluorheptylsulfonsäure, Difluorheptylsulfonsäure, Trifluorheptylsulfonsäure, Tetrafluorheptylsulfonsäure, Pentafluorheptylsulfonsäure, Hexafluorheptylsulfonsäure, Heptafluorheptylsulfonsäure, Octafluorheptylsulfonsäure, Nonafluorheptylsulfonsäure, Decafluorheptylsulfonsäure, Undecafluorheptylsulfonsäure, Dodecafluorheptylsulfonsäure, Tridecafluorheptylsulfonsäure, Tetradecafluorheptylsulfonsäure, Pentadecafluorheptylsulfonsäure, Monofluoroctylsulfonsäure, Difluoroctylsulfonsäure, Trifluoroctylsulfonsäure, Tetrafluoroctylsulfonsäure, Pentafluoroctylsulfonsäure, Hexafluoroctylsulfonsäure, Heptafluoroctylsulfonsäure, Octafluoroctylsulfonsäure, Nonafluoroctylsulfonsäure, Decafluoroctylsulfonsäure, Undecafluoroctylsulfonsäure, Dodecafluoroctylsulfonsäure, Tridecafluoroctylsulfonsäure, Tetradecafluoroctylsulfonsäure, Pentadecafluoroctylsulfonsäure, Hexadecafluoroctylsulfonsäure, Heptadecafluoroctylsulfonsäure, Monofluornonylsulfonsäure, Difluornonylsulfonsäure, Trifluornonylsulfonsäure, Tetrafluornonylsulfonsäure, Pentafluornonylsulfonsäure, Hexafluornonylsulfonsäure, Heptafluornonylsulfonsäure, Octafluornonylsulfonsäure, Nonafluornonylsulfonsäure, Decafluornonylsulfonsäure, Undecafluornonylsulfonsäure, Dodecafluornonylsulfonsäure, Tridecafluornonylsulfonsäure, Tetradecafluornonylsulfonsäure, Pentadecafluornonylsulfonsäure, Hexadecafluornonylsulfonsäure, Heptadecafluornonylsulfonsäure, Octadecafluornonylsulfonsäure, Nonadecafluornonylsulfonsäure, Monofluordecylsulfonsäure, Difluordecylsulfonsäure, Trifluordecylsulfonsäure, Tetrafluordecylsulfonsäure, Pentafluordecylsulfonsäure, Hexafluordecylsulfonsäure, Heptafluordecylsulfonsäure, Octafluordecylsulfonsäure, Nonafluordecylsulfonsäure, Decafluordecylsulfonsäure, Undecafluordecylsulfonsäure, Dodecafluordecylsulfonsäure, Tridecafluordecylsulfonsäure, Tetradecafluordecylsulfonsäure, Pentadecafluordecylsulfonsäure, Hexadecafluordecylsulfonsäure, Heptadecafluordecylsulfonsäure, Octadecafluordecylsulfonsäure, Nonadecafluordecylsulfonsäure, Icosafluordecylsulfonsäure, Henicosafluordecylsulfonsäure, Monofluorundecylsulfonsäure, Difluorundecylsulfonsäure, Trifluorundecylsulfonsäure, Tetrafluorundecylsulfonsäure, Pentafluorundecylsulfonsäure, Hexafluorundecylsulfonsäure, Heptafluorundecylsulfonsäure, Octafluorundecylsulfonsäure, Nonafluorundecylsulfonsäure, Decafluorundecylsulfonsäure, Undecafluorundecylsulfonsäure, Dodecafluorundecylsulfonsäure, Tridecafluorundecylsulfonsäure, Tetradecafluorundecylsulfonsäure, Pentadecafluorundecylsulfonsäure, Hexadecafluorundecylsulfonsäure, Heptadecafluorundecylsulfonsäure, Octadecafluorundecylsulfonsäure, Nonadecafluorundecylsulfonsäure, Icosafluorundecylsulfonsäure, Henicosafluorundecylsulfonsäure, Docosafluorundecylsulfonsäure, Tricosafluorundecylsulfonsäure, Monofluordodecylsulfonsäure, Difluordodecylsulfonsäure, Trifluordodecylsulfonsäure, Tetrafluordodecylsulfonsäure, Pentafluordodecylsulfonsäure, Hexafluordodecylsulfonsäure, Heptafluordodecylsulfonsäure, Octafluordodecylsulfonsäure, Nonafluordodecylsulfonsäure, Decafluordodecylsulfonsäure, Undecafluordodecylsulfonsäure, Dodecafluordodecylsulfonsäure, Tridecafluordodecylsulfonsäure, Tetradecafluordodecylsulfonsäure, Pentadecafluordodecylsulfonsäure, Hexadecafluordodecylsulfonsäure, Heptadecafluordodecylsulfonsäure, Octadecafluordodecylsulfonsäure, Nonadecafluordodecylsulfonsäure, Icosafluordodecylsulfonsäure, Henicosafluordodecylsulfonsäure, Docosafluordodecylsulfonsäure, Tricosafluordodecylsulfonsäure, Tetracosafluordodecylsulfonsäure, Pentacosafluordodecylsulfonsäure.

In dem Ausführungsbeispiel gemäß Fig. 1d ist das erfindungsgemäße Tensid ein mono- oder polyfluoriertes Alkyl-Sulfonat. Dabei ist n ausgewählt aus 4, 5, 6, 7, 8, 9, 10, 11 oder 12. R1 ist das positiv geladene Gegenion und ausgewählt aus der Gruppe enthaltend heterocyclischen Kationen, quartäre Ammoniumionen, Alkali-oder Erdalkali-Ionen. In einer Ausführungsvariante ist das Gegenion R1 ein heterocyclische Kation, nämlich ein Pyridinium-Ion. In einer weiteren Ausführungsvariante ist das Gegenion R1 ein quartäres Ammoniumion, nämlich Tetraethyl-Ammonium. In noch einer weiteren Ausführungsvariante ist das Gegenion R1 ein Alkali-Ion, nämlich Na⁺, K⁺ oder Li⁺. Man erkennt insofern, dass das Tensid gemäß Fig. 1b ausgewählt ist aus der Gruppe enthaltend Natrium-monofluorbutylsulfonat, Natrium-difluorbutylsulfonat, Natriumtrifluorbutylsulfonat, Natrium-tetrafluorbutylsulfonat, Natrium-pentafluorbutylsulfonat, Natrium-hexafluorbutylsulfonat, Natrium-heptafluorbutylsulfonat, Natriumoctafluorbutylsulfonat, Natrium-nonafluorbutylsulfonat, Natrium-monofluorpentylsulfonat, Natrium-difluorpentylsulfonat, Natrium-trifluorpentylsulfonat, Natriumtetrafluorpentylsulfonat, Natrium-pentafluorpentylsulfonat, Natriumhexafluorpentylsulfonat, Natrium-heptafluorpentylsulfonat, Natriumoctafluorpentylsulfonat, Natrium-nonafluorpentylsulfonat, Natriumdecafluorpentylsulfonat, Natrium-undecafluorpentylsulfonat, Natriummonofluorhexylsulfonat, Natrium-difluorhexylsulfonat, Natrium-trifluorhexylsulfonat, Natrium-tetrafluorhexylsulfonat, Natrium-pentafluorhexylsulfonat, Natriumhexafluorhexylsulfonat, Natrium-heptafluorhexylsulfonat, Natrium-octafluorhexylsulfonat, Natrium-nonafluorhexylsulfonat, Natrium-decafluorhexylsulfonat, Natriumundecafluorhexylsulfonat, Natrium-dodecafluorhexylsulfonat, Natriumtridecafluorhexylsulfonat, Natrium-monofluorheptylsulfonat, Natriumdifluorheptylsulfonat, Natrium-trifluorheptylsulfonat, Natrium-tetrafluorheptylsulfonat, Natrium-pentafluorheptylsulfonat, Natrium-hexafluorheptylsulfonat, Natriumheptafluorheptylsulfonat, Natrium-octafluorheptylsulfonat, Natriumnonafluorheptylsulfonat, Natrium-decafluorheptylsulfonat, Natriumundecafluorheptylsulfonat, Natrium-dodecafluorheptylsulfonat, Natriumtridecafluorheptylsulfonat, Natrium-tetradecafluorheptylsulfonat, Natriumpentadecafluorheptylsulfonat, Natrium-monofluoroctylsulfonat, Natriumdifluoroctylsulfonat, Natrium-trifluoroctylsulfonat, Natrium-tetrafluoroctylsulfonat, Natrium-pentafluoroctylsulfonat, Natrium-hexafluoroctylsulfonat, Natriumheptafluoroctylsulfonat, Natrium-octafluoroctylsulfonat, Natrium-nonafluoroctylsulfonat, Natrium-decafluoroctylsulfonat, Natrium-undecafluoroctylsulfonat, Natriumdodecafluoroctylsulfonat, Natrium-tridecafluoroctylsulfonat, Natriumtetradecafluoroctylsulfonat, Natrium-pentadecafluoroctylsulfonat, Natriumhexadecafluoroctylsulfonat, Natrium-heptadecafluoroctylsulfonat, Natriummonofluornonylsulfonat, Natrium-difluornonylsulfonat, Natrium-trifluornonylsulfonat, Natrium-tetrafluornonylsulfonat, Natrium-pentafluornonylsulfonat, Natriumhexafluornonylsulfonat, Natrium-heptafluornonylsulfonat, Natrium-octafluornonylsulfonat, Natrium-nonafluornonylsulfonat, Natrium-decafluornonylsulfonat, Natriumundecafluornonylsulfonat, Natrium-dodecafluornonylsulfonat, Natriumtridecafluornonylsulfonat, Natrium-tetradecafluornonylsulfonat, Natriumpentadecafluornonylsulfonat, Natrium-hexadecafluornonylsulfonat, Natriumheptadecafluornonylsulfonat, Natrium-octadecafluornonylsulfonat, Natriumnonadecafluornonylsulfonat, Natrium-monofluordecylsulfonat, Natriumdifluordecylsulfonat, Natrium-trifluordecylsulfonat, Natrium-tetrafluordecylsulfonat, Natrium-pentafluordecylsulfonat, Natrium-hexafluordecylsulfonat, Natriumheptafluordecylsulfonat, Natrium-octafluordecylsulfonat, Natrium-nonafluordecylsulfonat, Natrium-decafluordecylsulfonat, Natrium-undecafluordecylsulfonat, Natriumdodecafluordecylsulfonat, Natrium-tridecafluordecylsulfonat, Natriumtetradecafluordecylsulfonat, Natrium-pentadecafluordecylsulfonat, Natriumhexadecafluordecylsulfonat, Natrium-heptadecafluordecylsulfonat, Natriumoctadecafluordecylsulfonat, Natrium-nonadecafluordecylsulfonat, Natriumicosafluordecylsulfonat, Natrium-henicosafluordecylsulfonat, Natriummonofluorundecylsulfonat, Natrium-difluorundecylsulfonat, Natriumtrifluorundecylsulfonat, Natrium-tetrafluorundecylsulfonat, Natriumpentafluorundecylsulfonat, Natrium-hexafluorundecylsulfonat, Natriumheptafluorundecylsulfonat, Natrium-octafluorundecylsulfonat, Natriumnonafluorundecylsulfonat, Natrium-decafluorundecylsulfonat, Natriumundecafluorundecylsulfonat, Natrium-dodecafluorundecylsulfonat, Natriumtridecafluorundecylsulfonat, Natrium-tetradecafluorundecylsulfonat, Natriumpentadecafluorundecylsulfonat, Natrium-hexadecafluorundecylsulfonat, Natriumheptadecafluorundecylsulfonat, Natrium-octadecafluorundecylsulfonat, Natriumnonadecafluorundecylsulfonat, Natrium-icosafluorundecylsulfonat, Natriumhenicosafluorundecylsulfonat, Natrium-docosafluorundecylsulfonat, Natriumtricosafluorundecylsulfonat, Natrium-monofluordodecylsulfonat, Natriumdifluordodecylsulfonat, Natrium-trifluordodecylsulfonat, Natriumtetrafluordodecylsulfonat, Natrium-pentafluordodecylsulfonat, Natriumhexafluordodecylsulfonat, Natrium-heptafluordodecylsulfonat, Natriumoctafluordodecylsulfonat, Natrium-nonafluordodecylsulfonat, Natriumdecafluordodecylsulfonat, Natrium-undecafluordodecylsulfonat, Natriumdodecafluordodecylsulfonat, Natrium-tridecafluordodecylsulfonat, Natriumtetradecafluordodecylsulfonat, Natrium-pentadecafluordodecylsulfonat, Natriumhexadecafluordodecylsulfonat, Natrium-heptadecafluordodecylsulfonat, Natriumoctadecafluordodecylsulfonat, Natrium-nonadecafluordodecylsulfonat, Natriumicosafluordodecylsulfonat, Natrium-henicosafluordodecylsulfonat, Natriumdocosafluordodecylsulfonat, Natrium-tricosafluordodecylsulfonat, Natriumtetracosafluordodecylsulfonat, Natrium-pentacosafluordodecylsulfonat, Kaliummonofluorbutylsulfonat, Kalium-difluorbutylsulfonat, Kalium-trifluorbutylsulfonat, Kaliumtetrafluorbutylsulfonat, Kalium-pentafluorbutylsulfonat, Kalium-hexafluorbutylsulfonat, Kalium-heptafluorbutylsulfonat, Kalium-octafluorbutylsulfonat, Kaliumnonafluorbutylsulfonat, Kalium-monofluorpentylsulfonat, Kalium-difluorpentylsulfonat, Kalium-trifluorpentylsulfonat, Kalium-tetrafluorpentylsulfonat, Kaliumpentafluorpentylsulfonat, Kalium-hexafluorpentylsulfonat, Kaliumheptafluorpentylsulfonat, Kalium-octafluorpentylsulfonat, Kalium-nonafluorpentylsulfonat, Kalium-decafluorpentylsulfonat, Kalium-undecafluorpentylsulfonat, Kaliummonofluorhexylsulfonat, Kalium-difluorhexylsulfonat, Kalium-trifluorhexylsulfonat, Kalium-tetrafluorhexylsulfonat, Kalium-pentafluorhexylsulfonat, Kaliumhexafluorhexylsulfonat, Kalium-heptafluorhexylsulfonat, Kalium-octafluorhexylsulfonat, Kalium-nonafluorhexylsulfonat, Kalium-decafluorhexylsulfonat, Kaliumundecafluorhexylsulfonat, Kalium-dodecafluorhexylsulfonat, Kaliumtridecafluorhexylsulfonat, Kalium-monofluorheptylsulfonat, Kalium-difluorheptylsulfonat, Kalium-trifluorheptylsulfonat, Kalium-tetrafluorheptylsulfonat, Kaliumpentafluorheptylsulfonat, Kalium-hexafluorheptylsulfonat, Kaliumheptafluorheptylsulfonat, Kalium-octafluorheptylsulfonat, Kalium-nonafluorheptylsulfonat, Kalium-decafluorheptylsulfonat, Kalium-undecafluorheptylsulfonat, Kaliumdodecafluorheptylsulfonat, Kalium-tridecafluorheptylsulfonat, Kaliumtetradecafluorheptylsulfonat, Kalium-pentadecafluorheptylsulfonat, Kaliummonofluoroctylsulfonat, Kalium-difluoroctylsulfonat, Kalium-trifluoroctylsulfonat, Kaliumtetrafluoroctylsulfonat, Kalium-pentafluoroctylsulfonat, Kalium-hexafluoroctylsulfonat, Kalium-heptafluoroctylsulfonat, Kalium-octafluoroctylsulfonat, Kaliumnonafluoroctylsulfonat, Kalium-decafluoroctylsulfonat, Kalium-undecafluoroctylsulfonat, Kalium-dodecafluoroctylsulfonat, Kalium-tridecafluoroctylsulfonat, Kaliumtetradecafluoroctylsulfonat, Kalium-pentadecafluoroctylsulfonat, Kaliumhexadecafluoroctylsulfonat, Kalium-heptadecafluoroctylsulfonat, Kaliummonofluornonylsulfonat, Kalium-difluornonylsulfonat, Kalium-trifluornonylsulfonat, Kalium-tetrafluornonylsulfonat, Kalium-pentafluornonylsulfonat, Kaliumhexafluornonylsulfonat, Kalium-heptafluornonylsulfonat, Kalium-octafluornonylsulfonat, Kalium-nonafluornonylsulfonat, Kalium-decafluornonylsulfonat, Kaliumundecafluornonylsulfonat, Kalium-dodecafluornonylsulfonat, Kaliumtridecafluornonylsulfonat, Kalium-tetradecafluornonylsulfonat, Kaliumpentadecafluornonylsulfonat, Kalium-hexadecafluornonylsulfonat, Kaliumheptadecafluornonylsulfonat, Kalium-octadecafluornonylsulfonat, Kaliumnonadecafluornonylsulfonat, Kalium-monofluordecylsulfonat, Kaliumdifluordecylsulfonat, Kalium-trifluordecylsulfonat, Kalium-tetrafluordecylsulfonat, Kaliumpentafluordecylsulfonat, Kalium-hexafluordecylsulfonat, Kalium-heptafluordecylsulfonat, Kalium-octafluordecylsulfonat, Kalium-nonafluordecylsulfonat, Kaliumdecafluordecylsulfonat, Kalium-undecafluordecylsulfonat, Kaliumdodecafluordecylsulfonat, Kalium-tridecafluordecylsulfonat, Kaliumtetradecafluordecylsulfonat, Kalium-pentadecafluordecylsulfonat, Kaliumhexadecafluordecylsulfonat, Kalium-heptadecafluordecylsulfonat, Kaliumoctadecafluordecylsulfonat, Kalium-nonadecafluordecylsulfonat, Kaliumicosafluordecylsulfonat, Kalium-henicosafluordecylsulfonat, Kaliummonofluorundecylsulfonat, Kalium-difluorundecylsulfonat, Kalium-trifluorundecylsulfonat, Kalium-tetrafluorundecylsulfonat, Kalium-pentafluorundecylsulfonat, Kaliumhexafluorundecylsulfonat, Kalium-heptafluorundecylsulfonat, Kaliumoctafluorundecylsulfonat, Kalium-nonafluorundecylsulfonat, Kaliumdecafluorundecylsulfonat, Kalium-undecafluorundecylsulfonat, Kaliumdodecafluorundecylsulfonat, Kalium-tridecafluorundecylsulfonat, Kaliumtetradecafluorundecylsulfonat, Kalium-pentadecafluorundecylsulfonat, Kaliumhexadecafluorundecylsulfonat, Kalium-heptadecafluorundecylsulfonat, Kaliumoctadecafluorundecylsulfonat, Kalium-nonadecafluorundecylsulfonat, Kaliumicosafluorundecylsulfonat, Kalium-henicosafluorundecylsulfonat, Kaliumdocosafluorundecylsulfonat, Kalium-tricosafluorundecylsulfonat, Kaliummonofluordodecylsulfonat, Kalium-difluordodecylsulfonat, Kalium-trifluordodecylsulfonat, Kalium-tetrafluordodecylsulfonat, Kalium-pentafluordodecylsulfonat, Kaliumhexafluordodecylsulfonat, Kalium-heptafluordodecylsulfonat, Kaliumoctafluordodecylsulfonat, Kalium-nonafluordodecylsulfonat, Kaliumdecafluordodecylsulfonat, Kalium-undecafluordodecylsulfonat, Kaliumdodecafluordodecylsulfonat, Kalium-tridecafluordodecylsulfonat, Kaliumtetradecafluordodecylsulfonat, Kalium-pentadecafluordodecylsulfonat, Kaliumhexadecafluordodecylsulfonat, Kalium-heptadecafluordodecylsulfonat, Kaliumoctadecafluordodecylsulfonat, Kalium-nonadecafluordodecylsulfonat, Kaliumicosafluordodecylsulfonat, Kalium-henicosafluordodecylsulfonat, Kaliumdocosafluordodecylsulfonat, Kalium-tricosafluordodecylsulfonat, Kaliumtetracosafluordodecylsulfonat, Kalium-pentacosafluordodecylsulfonat, Tetraethylammonium-monofluorbutylsulfonat, Tetraethylammonium-difluorbutylsulfonat, Tetraethylammonium-trifluorbutylsulfonat, Tetraethylammonium-tetrafluorbutylsulfonat, Tetraethylammonium-pentafluorbutylsulfonat, Tetraethylammonium-hexafluorbutylsulfonat, Tetraethylammonium-heptafluorbutylsulfonat, Tetraethylammonium-octafluorbutylsulfonat, Tetraethylammoniumnonafluorbutylsulfonat, Tetraethylammonium-monofluorpentylsulfonat, Tetraethylammonium-difluorpentylsulfonat, Tetraethylammonium-trifluorpentylsulfonat, Tetraethylammonium-tetrafluorpentylsulfonat, Tetraethylammonium-pentafluorpentylsulfonat, Tetraethylammonium-hexafluorpentylsulfonat, Tetraethylammonium-heptafluorpentylsulfonat, Tetraethylammonium-octafluorpentylsulfonat, Tetraethylammonium-nonafluorpentylsulfonat, Tetraethylammonium-decafluorpentylsulfonat, Tetraethylammonium-undecafluorpentylsulfonat, Tetraethylammonium-monofluorhexylsulfonat, Tetraethylammonium-difluorhexylsulfonat, Tetraethylammonium-trifluorhexylsulfonat, Tetraethylammonium-tetrafluorhexylsulfonat, Tetraethylammonium-pentafluorhexylsulfonat, Tetraethylammonium-hexafluorhexylsulfonat, Tetraethylammonium-heptafluorhexylsulfonat, Tetraethylammoniumoctafluorhexylsulfonat, Tetraethylammonium-nonafluorhexylsulfonat, Tetraethylammonium-decafluorhexylsulfonat, Tetraethylammonium-undecafluorhexylsulfonat, Tetraethylammonium-dodecafluorhexylsulfonat, Tetraethylammonium-tridecafluorhexylsulfonat, Tetraethylammonium-monofluorheptylsulfonat, Tetraethylammonium-difluorheptylsulfonat, Tetraethylammonium-trifluorheptylsulfonat, Tetraethylammoniumtetrafluorheptylsulfonat, Tetraethylammonium-pentafluorheptylsulfonat, Tetraethylammonium-hexafluorheptylsulfonat, Tetraethylammoniumheptafluorheptylsulfonat, Tetraethylammonium-octafluorheptylsulfonat, Tetraethylammonium-nonafluorheptylsulfonat, Tetraethylammoniumdecafluorheptylsulfonat, Tetraethylammonium-undecafluorheptylsulfonat, Tetraethylammonium-dodecafluorheptylsulfonat, Tetraethylammoniumtridecafluorheptylsulfonat, Tetraethylammonium-tetradecafluorheptylsulfonat, Tetraethylammonium-pentadecafluorheptylsulfonat, Tetraethylammoniummonofluoroctylsulfonat, Tetraethylammonium-difluoroctylsulfonat, Tetraethylammoniumtrifluoroctylsulfonat, Tetraethylammonium-tetrafluoroctylsulfonat, Tetraethylammoniumpentafluoroctylsulfonat, Tetraethylammonium-hexafluoroctylsulfonat, Tetraethylammonium-heptafluoroctylsulfonat, Tetraethylammoniumoctafluoroctylsulfonat, Tetraethylammonium-nonafluoroctylsulfonat, Tetraethylammonium-decafluoroctylsulfonat, Tetraethylammoniumundecafluoroctylsulfonat, Tetraethylammonium-dodecafluoroctylsulfonat, Tetraethylammonium-tridecafluoroctylsulfonat, Tetraethylammoniumtetradecafluoroctylsulfonat, Tetraethylammonium-pentadecafluoroctylsulfonat, Tetraethylammonium-hexadecafluoroctylsulfonat, Tetraethylammoniumheptadecafluoroctylsulfonat, Tetraethylammonium-monofluornonylsulfonat, Tetraethylammonium-difluornonylsulfonat, Tetraethylammonium-trifluornonylsulfonat, Tetraethylammonium-tetrafluornonylsulfonat, Tetraethylammoniumpentafluornonylsulfonat, Tetraethylammonium-hexafluornonylsulfonat, Tetraethylammonium-heptafluornonylsulfonat, Tetraethylammoniumoctafluornonylsulfonat, Tetraethylammonium-nonafluornonylsulfonat, Tetraethylammonium-decafluornonylsulfonat, Tetraethylammoniumundecafluornonylsulfonat, Tetraethylammonium-dodecafluornonylsulfonat, Tetraethylammonium-tridecafluornonylsulfonat, Tetraethylammoniumtetradecafluornonylsulfonat, Tetraethylammonium-pentadecafluornonylsulfonat, Tetraethylammonium-hexadecafluornonylsulfonat, Tetraethylammoniumheptadecafluornonylsulfonat, Tetraethylammonium-octadecafluornonylsulfonat, Tetraethylammonium-nonadecafluornonylsulfonat, Tetraethylammoniummonofluordecylsulfonat, Tetraethylammonium-difluordecylsulfonat, Tetraethylammonium-trifluordecylsulfonat, Tetraethylammonium-tetrafluordecylsulfonat, Tetraethylammonium-pentafluordecylsulfonat, Tetraethylammoniumhexafluordecylsulfonat, Tetraethylammonium-heptafluordecylsulfonat, Tetraethylammonium-octafluordecylsulfonat, Tetraethylammoniumnonafluordecylsulfonat, Tetraethylammonium-decafluordecylsulfonat, Tetraethylammonium-undecafluordecylsulfonat, Tetraethylammoniumdodecafluordecylsulfonat, Tetraethylammonium-tridecafluordecylsulfonat, Tetraethylammonium-tetradecafluordecylsulfonat, Tetraethylammoniumpentadecafluordecylsulfonat, Tetraethylammonium-hexadecafluordecylsulfonat, Tetraethylammonium-heptadecafluordecylsulfonat, Tetraethylammoniumoctadecafluordecylsulfonat, Tetraethylammonium-nonadecafluordecylsulfonat, Tetraethylammonium-icosafluordecylsulfonat, Tetraethylammoniumhenicosafluordecylsulfonat, Tetraethylammonium-monofluorundecylsulfonat, Tetraethylammonium-difluorundecylsulfonat, Tetraethylammoniumtrifluorundecylsulfonat, Tetraethylammonium-tetrafluorundecylsulfonat, Tetraethylammonium-pentafluorundecylsulfonat, Tetraethylammoniumhexafluorundecylsulfonat, Tetraethylammonium-heptafluorundecylsulfonat, Tetraethylammonium-octafluorundecylsulfonat, Tetraethylammoniumnonafluorundecylsulfonat, Tetraethylammonium-decafluorundecylsulfonat, Tetraethylammonium-undecafluorundecylsulfonat, Tetraethylammoniumdodecafluorundecylsulfonat, Tetraethylammonium-tridecafluorundecylsulfonat, Tetraethylammonium-tetradecafluorundecylsulfonat, Tetraethylammoniumpentadecafluorundecylsulfonat, Tetraethylammonium-hexadecafluorundecylsulfonat, Tetraethylammonium-heptadecafluorundecylsulfonat, Tetraethylammoniumoctadecafluorundecylsulfonat, Tetraethylammonium-nonadecafluorundecylsulfonat, Tetraethylammonium-icosafluorundecylsulfonat, Tetraethylammoniumhenicosafluorundecylsulfonat, Tetraethylammonium-docosafluorundecylsulfonat, Tetraethylammonium-tricosafluorundecylsulfonat, Tetraethylammoniummonofluordodecylsulfonat, Tetraethylammonium-difluordodecylsulfonat, Tetraethylammonium-trifluordodecylsulfonat, Tetraethylammoniumtetrafluordodecylsulfonat, Tetraethylammonium-pentafluordodecylsulfonat, Tetraethylammonium-hexafluordodecylsulfonat, Tetraethylammoniumheptafluordodecylsulfonat, Tetraethylammonium-octafluordodecylsulfonat, Tetraethylammonium-nonafluordodecylsulfonat, Tetraethylammoniumdecafluordodecylsulfonat, Tetraethylammonium-undecafluordodecylsulfonat, Tetraethylammonium-dodecafluordodecylsulfonat, Tetraethylammoniumtridecafluordodecylsulfonat, Tetraethylammonium-tetradecafluordodecylsulfonat, Tetraethylammonium-pentadecafluordodecylsulfonat, Tetraethylammoniumhexadecafluordodecylsulfonat, Tetraethylammonium-heptadecafluordodecylsulfonat, Tetraethylammonium-octadecafluordodecylsulfonat, Tetraethylammoniumnonadecafluordodecylsulfonat, Tetraethylammonium-icosafluordodecylsulfonat, Tetraethylammonium-henicosafluordodecylsulfonat, Tetraethylammoniumdocosafluordodecylsulfonat, Tetraethylammonium-tricosafluordodecylsulfonat, Tetraethylammonium-tetracosafluordodecylsulfonat, Tetraethylammoniumpentacosafluordodecylsulfonat, Tetraethylammonium-monofluorbutylsulfonat, Tetraethylammonium-difluorbutylsulfonat, Tetraethylammonium-trifluorbutylsulfonat, Tetraethylammonium-tetrafluorbutylsulfonat, Tetraethylammonium-pentafluorbutylsulfonat, Tetraethylammonium-hexafluorbutylsulfonat, Tetraethylammonium-heptafluorbutylsulfonat, Tetraethylammonium-octafluorbutylsulfonat, Tetraethylammonium-nonafluorbutylsulfonat, Tetraethylammonium-monofluorpentylsulfonat, Tetraethylammoniumdifluorpentylsulfonat, Tetraethylammonium-trifluorpentylsulfonat, Tetraethylammoniumtetrafluorpentylsulfonat, Tetraethylammonium-pentafluorpentylsulfonat, Tetraethylammonium-hexafluorpentylsulfonat, Tetraethylammonium-heptafluorpentylsulfonat, Tetraethylammonium-octafluorpentylsulfonat, Tetraethylammonium-nonafluorpentylsulfonat, Tetraethylammoniumdecafluorpentylsulfonat, Tetraethylammonium-undecafluorpentylsulfonat, Tetraethylammonium-monofluorhexylsulfonat, Tetraethylammonium-difluorhexylsulfonat, Tetraethylammonium-trifluorhexylsulfonat, Tetraethylammonium-tetrafluorhexylsulfonat, Tetraethylammonium-pentafluorhexylsulfonat, Tetraethylammoniumhexafluorhexylsulfonat, Tetraethylammonium-heptafluorhexylsulfonat, Tetraethylammonium-octafluorhexylsulfonat, Tetraethylammoniumnonafluorhexylsulfonat, Tetraethylammonium-decafluorhexylsulfonat, Tetraethylammonium-undecafluorhexylsulfonat, Tetraethylammonium-dodecafluorhexylsulfonat, Tetraethylammonium-tridecafluorhexylsulfonat, Tetraethylammonium-monofluorheptylsulfonat, Tetraethylammoniumdifluorheptylsulfonat, Tetraethylammonium-trifluorheptylsulfonat, Tetraethylammoniumtetrafluorheptylsulfonat, Tetraethylammonium-pentafluorheptylsulfonat, Tetraethylammonium-hexafluorheptylsulfonat, Tetraethylammoniumheptafluorheptylsulfonat, Tetraethylammonium-octafluorheptylsulfonat, Tetraethylammonium-nonafluorheptylsulfonat, Tetraethylammoniumdecafluorheptylsulfonat, Tetraethylammonium-undecafluorheptylsulfonat, Tetraethylammonium-dodecafluorheptylsulfonat, Tetraethylammoniumtridecafluorheptylsulfonat, Tetraethylammonium-tetradecafluorheptylsulfonat, Tetraethylammonium-pentadecafluorheptylsulfonat, Tetraethylammoniummonofluoroctylsulfonat, Tetraethylammonium-difluoroctylsulfonat, Tetraethylammoniumtrifluoroctylsulfonat, Tetraethylammonium-tetrafluoroctylsulfonat, Tetraethylammoniumpentafluoroctylsulfonat, Tetraethylammonium-hexafluoroctylsulfonat, Tetraethylammonium-heptafluoroctylsulfonat, Tetraethylammoniumoctafluoroctylsulfonat, Tetraethylammonium-nonafluoroctylsulfonat, Tetraethylammonium-decafluoroctylsulfonat, Tetraethylammoniumundecafluoroctylsulfonat, Tetraethylammonium-dodecafluoroctylsulfonat, Tetraethylammonium-tridecafluoroctylsulfonat, Tetraethylammoniumtetradecafluoroctylsulfonat, Tetraethylammonium-pentadecafluoroctylsulfonat, Tetraethylammonium-hexadecafluoroctylsulfonat, Tetraethylammoniumheptadecafluoroctylsulfonat, Tetraethylammonium-monofluornonylsulfonat, Tetraethylammonium-difluornonylsulfonat, Tetraethylammonium-trifluornonylsulfonat, Tetraethylammonium-tetrafluornonylsulfonat, Tetraethylammoniumpentafluornonylsulfonat, Tetraethylammonium-hexafluornonylsulfonat, Tetraethylammonium-heptafluornonylsulfonat, Tetraethylammoniumoctafluornonylsulfonat, Tetraethylammonium-nonafluornonylsulfonat, Tetraethylammonium-decafluornonylsulfonat, Tetraethylammoniumundecafluornonylsulfonat, Tetraethylammonium-dodecafluornonylsulfonat, Tetraethylammonium-tridecafluornonylsulfonat, Tetraethylammoniumtetradecafluornonylsulfonat, Tetraethylammonium-pentadecafluornonylsulfonat, Tetraethylammonium-hexadecafluornonylsulfonat, Tetraethylammoniumheptadecafluornonylsulfonat, Tetraethylammonium-octadecafluornonylsulfonat, Tetraethylammonium-nonadecafluornonylsulfonat, Tetraethylammoniummonofluordecylsulfonat, Tetraethylammonium-difluordecylsulfonat, Tetraethylammonium-trifluordecylsulfonat, Tetraethylammonium-tetrafluordecylsulfonat, Tetraethylammonium-pentafluordecylsulfonat, Tetraethylammoniumhexafluordecylsulfonat, Tetraethylammonium-heptafluordecylsulfonat, Tetraethylammonium-octafluordecylsulfonat, Tetraethylammoniumnonafluordecylsulfonat, Tetraethylammonium-decafluordecylsulfonat, Tetraethylammonium-undecafluordecylsulfonat, Tetraethylammoniumdodecafluordecylsulfonat, Tetraethylammonium-tridecafluordecylsulfonat, Tetraethylammonium-tetradecafluordecylsulfonat, Tetraethylammoniumpentadecafluordecylsulfonat, Tetraethylammonium-hexadecafluordecylsulfonat, Tetraethylammonium-heptadecafluordecylsulfonat, Tetraethylammoniumoctadecafluordecylsulfonat, Tetraethylammonium-nonadecafluordecylsulfonat, Tetraethylammonium-icosafluordecylsulfonat, Tetraethylammoniumhenicosafluordecylsulfonat, Tetraethylammonium-monofluorundecylsulfonat, Tetraethylammonium-difluorundecylsulfonat, Tetraethylammoniumtrifluorundecylsulfonat, Tetraethylammonium-tetrafluorundecylsulfonat, Tetraethylammonium-pentafluorundecylsulfonat, Tetraethylammoniumhexafluorundecylsulfonat, Tetraethylammonium-heptafluorundecylsulfonat, Tetraethylammonium-octafluorundecylsulfonat, Tetraethylammoniumnonafluorundecylsulfonat, Tetraethylammonium-decafluorundecylsulfonat, Tetraethylammonium-undecafluorundecylsulfonat, Tetraethylammoniumdodecafluorundecylsulfonat, Tetraethylammonium-tridecafluorundecylsulfonat, Tetraethylammonium-tetradecafluorundecylsulfonat, Tetraethylammoniumpentadecafluorundecylsulfonat, Tetraethylammonium-hexadecafluorundecylsulfonat, Tetraethylammonium-heptadecafluorundecylsulfonat, Tetraethylammoniumoctadecafluorundecylsulfonat, Tetraethylammonium-nonadecafluorundecylsulfonat, Tetraethylammonium-icosafluorundecylsulfonat, Tetraethylammoniumhenicosafluorundecylsulfonat, Tetraethylammonium-docosafluorundecylsulfonat, Tetraethylammonium-tricosafluorundecylsulfonat, Tetraethylammoniummonofluordodecylsulfonat, Tetraethylammonium-difluordodecylsulfonat, Tetraethylammonium-trifluordodecylsulfonat, Tetraethylammoniumtetrafluordodecylsulfonat, Tetraethylammonium-pentafluordodecylsulfonat, Tetraethylammonium-hexafluordodecylsulfonat, Tetraethylammoniumheptafluordodecylsulfonat, Tetraethylammonium-octafluordodecylsulfonat, Tetraethylammonium-nonafluordodecylsulfonat, Tetraethylammoniumdecafluordodecylsulfonat, Tetraethylammonium-undecafluordodecylsulfonat, Tetraethylammonium-dodecafluordodecylsulfonat, Tetraethylammoniumtridecafluordodecylsulfonat, Tetraethylammonium-tetradecafluordodecylsulfonat, Tetraethylammonium-pentadecafluordodecylsulfonat, Tetraethylammoniumhexadecafluordodecylsulfonat, Tetraethylammonium-heptadecafluordodecylsulfonat, Tetraethylammonium-octadecafluordodecylsulfonat, Tetraethylammoniumnonadecafluordodecylsulfonat, Tetraethylammonium-icosafluordodecylsulfonat, Tetraethylammonium-henicosafluordodecylsulfonat, Tetraethylammoniumdocosafluordodecylsulfonat, Tetraethylammonium-tricosafluordodecylsulfonat, Tetraethylammonium-tetracosafluordodecylsulfonat, Tetraethylammoniumpentacosafluordodecylsulfonat, Pyridinium-monofluorbutylsulfonat, Pyridiniumdifluorbutylsulfonat, Pyridinium-trifluorbutylsulfonat, Pyridinium-tetrafluorbutylsulfonat, Pyridinium-pentafluorbutylsulfonat, Pyridinium-hexafluorbutylsulfonat, Pyridiniumheptafluorbutylsulfonat, Pyridinium-octafluorbutylsulfonat, Pyridiniumnonafluorbutylsulfonat, Pyridinium-monofluorpentylsulfonat, Pyridiniumdifluorpentylsulfonat, Pyridinium-trifluorpentylsulfonat, Pyridiniumtetrafluorpentylsulfonat, Pyridinium-pentafluorpentylsulfonat, Pyridiniumhexafluorpentylsulfonat, Pyridinium-heptafluorpentylsulfonat, Pyridiniumoctafluorpentylsulfonat, Pyridinium-nonafluorpentylsulfonat, Pyridiniumdecafluorpentylsulfonat, Pyridinium-undecafluorpentylsulfonat, Pyridiniummonofluorhexylsulfonat, Pyridinium-difluorhexylsulfonat, Pyridinium-trifluorhexylsulfonat, Pyridinium-tetrafluorhexylsulfonat, Pyridinium-pentafluorhexylsulfonat, Pyridiniumhexafluorhexylsulfonat, Pyridinium-heptafluorhexylsulfonat, Pyridiniumoctafluorhexylsulfonat, Pyridinium-nonafluorhexylsulfonat, Pyridiniumdecafluorhexylsulfonat, Pyridinium-undecafluorhexylsulfonat, Pyridiniumdodecafluorhexylsulfonat, Pyridinium-tridecafluorhexylsulfonat, Pyridiniummonofluorheptylsulfonat, Pyridinium-difluorheptylsulfonat, Pyridiniumtrifluorheptylsulfonat, Pyridinium-tetrafluorheptylsulfonat, Pyridiniumpentafluorheptylsulfonat, Pyridinium-hexafluorheptylsulfonat, Pyridiniumheptafluorheptylsulfonat, Pyridinium-octafluorheptylsulfonat, Pyridiniumnonafluorheptylsulfonat, Pyridinium-decafluorheptylsulfonat, Pyridiniumundecafluorheptylsulfonat, Pyridinium-dodecafluorheptylsulfonat, Pyridiniumtridecafluorheptylsulfonat, Pyridinium-tetradecafluorheptylsulfonat, Pyridiniumpentadecafluorheptylsulfonat, Pyridinium-monofluoroctylsulfonat, Pyridiniumdifluoroctylsulfonat, Pyridinium-trifluoroctylsulfonat, Pyridinium-tetrafluoroctylsulfonat, Pyridinium-pentafluoroctylsulfonat, Pyridinium-hexafluoroctylsulfonat, Pyridiniumheptafluoroctylsulfonat, Pyridinium-octafluoroctylsulfonat, Pyridiniumnonafluoroctylsulfonat, Pyridinium-decafluoroctylsulfonat, Pyridiniumundecafluoroctylsulfonat, Pyridinium-dodecafluoroctylsulfonat, Pyridiniumtridecafluoroctylsulfonat, Pyridinium-tetradecafluoroctylsulfonat, Pyridiniumpentadecafluoroctylsulfonat, Pyridinium-hexadecafluoroctylsulfonat, Pyridiniumheptadecafluoroctylsulfonat, Pyridinium-monofluornonylsulfonat, Pyridiniumdifluornonylsulfonat, Pyridinium-trifluornonylsulfonat, Pyridinium-tetrafluornonylsulfonat, Pyridinium-pentafluornonylsulfonat, Pyridinium-hexafluornonylsulfonat, Pyridiniumheptafluornonylsulfonat, Pyridinium-octafluornonylsulfonat, Pyridiniumnonafluornonylsulfonat, Pyridinium-decafluornonylsulfonat, Pyridiniumundecafluornonylsulfonat, Pyridinium-dodecafluornonylsulfonat, Pyridiniumtridecafluornonylsulfonat, Pyridinium-tetradecafluornonylsulfonat, Pyridiniumpentadecafluornonylsulfonat, Pyridinium-hexadecafluornonylsulfonat, Pyridiniumheptadecafluornonylsulfonat, Pyridinium-octadecafluornonylsulfonat, Pyridiniumnonadecafluornonylsulfonat, Pyridinium-monofluordecylsulfonat, Pyridiniumdifluordecylsulfonat, Pyridinium-trifluordecylsulfonat, Pyridinium-tetrafluordecylsulfonat, Pyridinium-pentafluordecylsulfonat, Pyridinium-hexafluordecylsulfonat, Pyridiniumheptafluordecylsulfonat, Pyridinium-octafluordecylsulfonat, Pyridiniumnonafluordecylsulfonat, Pyridinium-decafluordecylsulfonat, Pyridiniumundecafluordecylsulfonat, Pyridinium-dodecafluordecylsulfonat, Pyridiniumtridecafluordecylsulfonat, Pyridinium-tetradecafluordecylsulfonat, Pyridiniumpentadecafluordecylsulfonat, Pyridinium-hexadecafluordecylsulfonat, Pyridiniumheptadecafluordecylsulfonat, Pyridinium-octadecafluordecylsulfonat, Pyridiniumnonadecafluordecylsulfonat, Pyridinium-icosafluordecylsulfonat, Pyridiniumhenicosafluordecylsulfonat, Pyridinium-monofluorundecylsulfonat, Pyridiniumdifluorundecylsulfonat, Pyridinium-trifluorundecylsulfonat, Pyridiniumtetrafluorundecylsulfonat, Pyridinium-pentafluorundecylsulfonat, Pyridiniumhexafluorundecylsulfonat, Pyridinium-heptafluorundecylsulfonat, Pyridiniumoctafluorundecylsulfonat, Pyridinium-nonafluorundecylsulfonat, Pyridiniumdecafluorundecylsulfonat, Pyridinium-undecafluorundecylsulfonat, Pyridiniumdodecafluorundecylsulfonat, Pyridinium-tridecafluorundecylsulfonat, Pyridiniumtetradecafluorundecylsulfonat, Pyridinium-pentadecafluorundecylsulfonat, Pyridiniumhexadecafluorundecylsulfonat, Pyridinium-heptadecafluorundecylsulfonat, Pyridiniumoctadecafluorundecylsulfonat, Pyridinium-nonadecafluorundecylsulfonat, Pyridiniumicosafluorundecylsulfonat, Pyridinium-henicosafluorundecylsulfonat, Pyridiniumdocosafluorundecylsulfonat, Pyridinium-tricosafluorundecylsulfonat, Pyridiniummonofluordodecylsulfonat, Pyridinium-difluordodecylsulfonat, Pyridiniumtrifluordodecylsulfonat, Pyridinium-tetrafluordodecylsulfonat, Pyridiniumpentafluordodecylsulfonat, Pyridinium-hexafluordodecylsulfonat, Pyridiniumheptafluordodecylsulfonat, Pyridinium-octafluordodecylsulfonat, Pyridiniumnonafluordodecylsulfonat, Pyridinium-decafluordodecylsulfonat, Pyridiniumundecafluordodecylsulfonat, Pyridinium-dodecafluordodecylsulfonat, Pyridiniumtridecafluordodecylsulfonat, Pyridinium-tetradecafluordodecylsulfonat, Pyridiniumpentadecafluordodecylsulfonat, Pyridinium-hexadecafluordodecylsulfonat, Pyridiniumheptadecafluordodecylsulfonat, Pyridinium-octadecafluordodecylsulfonat, Pyridiniumnonadecafluordodecylsulfonat, Pyridinium-icosafluordodecylsulfonat, Pyridiniumhenicosafluordodecylsulfonat, Pyridinium-docosafluordodecylsulfonat, Pyridiniumtricosafluordodecylsulfonat, Pyridinium-tetracosafluordodecylsulfonat, Pyridiniumpentacosafluordodecylsulfonat.

In den Figuren 3a bis 3e erkennt man besonders bevorzugte Ausführungsvarianten der polyfluorierten Alkylsulfonsäuren von Fig. 1c und der polyfluorierten Alkylsulfonate von Fig. 1d. Dabei zeigt Fig. 3a eine Polyfluoroctylsulfonsäure, nämlich Tridecafluoroctylsulfonsäure als bevorzugte Varianten des Ausführungsbeispiels aus Figur 1c. Die Figuren 3b, 3c, 3d und 3e zeigen als bevorzugte Varianten der Ausführungsbeispiele aus Fig. 1d Natrium-Tridecafluoroctylsulfonat (Fig. 3b), Kalium-Tridecafluoroctylsulfonat (Fig. 3c), Lithium-Tridecafluoroctylsulfonat (Fig. 3d) und Tetraethylammonium-Tridecafluoroctylsulfonat (Fig. 3e).

Die in den Figuren 1a, 1b, 1c und 1d sowie 2abis 2f und 3a bis 3e gezeigten Ausführungsvarianten sind allesamt Verbindungen entsprechend der folgenden Formel:

(CₙF₍₂ₙ₊₁₎₋ₘHₘ-SO₃⁻)R1 Formel I

mit n = {1, 2, 3, 4, 5, 6, 7, 8, 9, 10, 11, 12}, m = {0, 1, 2, 3, 4, 5, 6, 7, 8, 9, 10, 11, 12, 13, 14, 15, 16, 17, 18, 19, 20, 21, 22, 23, 24, 25}, R1 ausgewählt aus der Gruppe H⁺, Na⁺, K⁺, Li⁺, sowie ((CₛH₂ₛ₊₁)(CₚH₂ₚ₊₁)(C_{q}H_{2q+1})(CᵣH₂ᵣ₊₁))N⁺ mit s = {0, 1, 2, 3, 4, 5, 6}, p = {0, 1, 2, 3, 4, 5, 6}, q = {0, 1, 2, 3, 4, 5, 6}, r = {0, 1, 2, 3, 4, 5, 6}. Dabei gilt für die Verbindungen entsprechend den Figuren 1a, 1b und 2a bis 2f m = 0 und n = {4, 5, 6, 7, 8, 9, 10, 11, 12}. Für die Verbindungen entsprechend den Figuren 1c, 1d und 3a bis 3e gilt m {1, 2, 3, 4, 5, 6, 7, 8, 9, 10, 11, 12, 13, 14, 15, 16, 17, 18, 19, 20, 21, 22, 23, 24, 25} und (2n+1-m) = {1, 2, 3, 4, 5, 6, 7, 8, 9, 10, 11, 12, 13, 14, 15, 16, 17, 18, 19, 20, 21, 22, 23, 24, 25} mit n = {4, 5, 6, 7, 8, 9, 10, 11, 12}.

In dem Ausführungsbeispiel gemäß Fig. 1e ist das erfindungsgemäße Tensid eine n-Alkyl-Sulfonsäure. Dabei ist n ausgewählt aus 4, 5, 6, 7, 8, 9, 10, 11 oder 12. Man erkennt insofern, dass eine Verbindung gemäß Fig. 1a ausgewählt ist aus der Gruppe n-Butylsulfonsäure, n-Pentylsulfonsäure, n-Hexylsulfonsäure, n-Octylsulfonsäure, n-Nonylsulfonsäure, n-Decylsulfonsäure, n-Undecylsulfonsäure, n-Dodecylsulfonsäure.

In dem Ausführungsbeispiel gemäß Fig. 1f ist das erfindungsgemäße Tensid ein n-Alkyl-Sulfonat. Dabei ist n ausgewählt aus 4, 5, 6, 7, 8, 9, 10, 11 oder 12. R1 ist das positiv geladene Gegenion und ausgewählt aus der Gruppe enthaltend heterocyclischen Kationen, quartäre Ammoniumionen, Alkali-oder Erdalkali-Ionen. In einer Ausführungsvariante ist das Gegenion R1 ein heterocyclisches Kation, nämlich ein Pyridinium-Ion. In einer weiteren Ausführungsvariante ist das Gegenion R1 ein quartäres Ammoniumion, nämlich Tetraethylammonium. In noch einer weiteren Ausführungsvariante ist das Gegenion R1 ein Alkali-Ion, nämlich Na⁺, K⁺ oder Li⁺. Man erkennt insofern, dass das Tensid gemäß Fig. 1f ausgewählt ist aus der Gruppe enthaltend Natrium-n-Butylsulfonat, Natrium-n-Pentylsulfonat, Natrium-n-Hexylsulfonat, Natrium-n-Octylsulfonat, Natrium-n-Nonylsulfonat, Natrium-n-Decylsulfonat, Natrium-n-Undecylsulfonat, Natrium-n-Dodecylsulfonat, Kalium-n-Butylsulfonat, Kalium-n-Pentylsulfonat, Kalium-n-Hexylsulfonat, Kalium-n-Octylsulfonat, Kalium-n-Nonylsulfonat, Kalium-n-Decylsulfonat, Kalium-n-Undecylsulfonat, Kalium-n-Dodecylsulfonat, Lithium-n-Butylsulfonat, Lithium-n-Pentylsulfonat, Lithium-n-Hexylsulfonat, Lithium-n-Octylsulfonat, Lithium-n-Nonylsulfonat, Lithium-n-Decylsulfonat, Lithium-n-Undecylsulfonat, Lithium-n-Dodecylsulfonat, Tetraethylammonium-n-Butylsulfonat, Tetraethylammonium-n-Pentylsulfonat, Tetraethylammonium-n-Hexylsulfonat, Tetraethylammonium-n-Octylsulfonat, Tetraethylammonium-n-Nonylsulfonat, Tetraethylammonium-n-Decylsulfonat, Tetraethylammonium-n-Undecylsulfonat, Tetraethylammonium-n-Dodecylsulfonat, Pyridinium-n-Butylsulfonat, Pyridinium-n-Pentylsulfonat, Pyridinium-n-Hexylsulfonat, Pyridinium-n-Octylsulfonat, Pyridinium-n-Nonylsulfonat, Pyridinium-n-Decylsulfonat, Pyridinium-n-Undecylsulfonat, Pyridinium-n-Dodecylsulfonat.

In dem Ausführungsbeispiel gemäß Fig. 1g ist das erfindungsgemäße Tensid eine iso-Alkyl-Sulfonsäure. Dabei ist n ausgewählt aus 4, 5, 6, 7, 8, 9, 10, 11 oder 12. Man erkennt insofern, dass eine Verbindung gemäß Fig. 1a ausgewählt ist aus der Gruppe iso-Butylsulfonsäure, iso-Pentylsulfonsäure, iso-Hexylsulfonsäure, iso-Octylsulfonsäure, iso-Nonylsulfonsäure, iso-Decylsulfonsäure, iso-Undecylsulfonsäure, iso-Dodecylsulfonsäure.

In dem Ausführungsbeispiel gemäß Fig. 1h ist das erfindungsgemäße Tensid ein iso-Alkyl-Sulfonat. Dabei ist n ausgewählt aus 4, 5, 6, 7, 8, 9, 10, 11 oder 12. R1 ist das positiv geladene Gegenion und ausgewählt aus der Gruppe enthaltend heterocyclischen Kationen, quartäre Ammoniumionen, Alkali-oder Erdalkali-Ionen. In einer Ausführungsvariante ist das Gegenion R1 ein heterocyclisches Kation, nämlich ein Pyridinium-Ion. In einer weiteren Ausführungsvariante ist das Gegenion R1 ein quartäres Ammoniumion, nämlich Tetraethylammonium. In noch einer weiteren Ausführungsvariante ist das Gegenion R1 ein Alkali-Ion, nämlich Na⁺, K⁺ oder Li⁺. Man erkennt insofern, dass das Tensid gemäß Fig. 1f ausgewählt ist aus der Gruppe enthaltend Natrium-iso-Butylsulfonat, Natrium-iso-Pentylsulfonat, Natrium-iso-Hexylsulfonat, Natrium-iso-Octylsulfonat, Natrium-iso-Nonylsulfonat, Natrium-iso-Decylsulfonat, Natrium-iso-Undecylsulfonat, Natrium-iso-Dodecylsulfonat, Kalium-iso-Butylsulfonat, Kalium-iso-Pentylsulfonat, Kalium-iso-Hexylsulfonat, Kalium-iso-Octylsulfonat, Kalium-iso-Nonylsulfonat, Kalium-iso-Decylsulfonat, Kalium-iso-Undecylsulfonat, Kalium-iso-Dodecylsulfonat, Lithium-iso-Butylsulfonat, Lithium-iso-Pentylsulfonat, Lithium-iso-Hexylsulfonat, Lithium-iso-Octylsulfonat, Lithium-iso-Nonylsulfonat, Lithium-iso-Decylsulfonat, Lithium-iso-Undecylsulfonat, Lithium-iso-Dodecylsulfonat, Tetraethylammonium-iso-Butylsulfonat, Tetraethylammonium-iso-Pentylsulfonat, Tetraethylammonium-iso-Hexylsulfonat, Tetraethylammonium-iso-Octylsulfonat, Tetraethylammonium-iso-Nonylsulfonat, Tetraethylammonium-iso-Decylsulfonat, Tetraethylammonium-iso-Undecylsulfonat, Tetraethylammonium-iso-Dodecylsulfonat, Pyridinium-iso-Butylsulfonat, Pyridinium-iso-Pentylsulfonat, Pyridinium-iso-Hexylsulfonat, Pyridinium-iso-Octylsulfonat, Pyridinium-iso-Nonylsulfonat,

Pyridinium-iso-Decylsulfonat, Pyridinium-iso-Undecylsulfonat, Pyridinium-iso-Dodecylsulfonat.

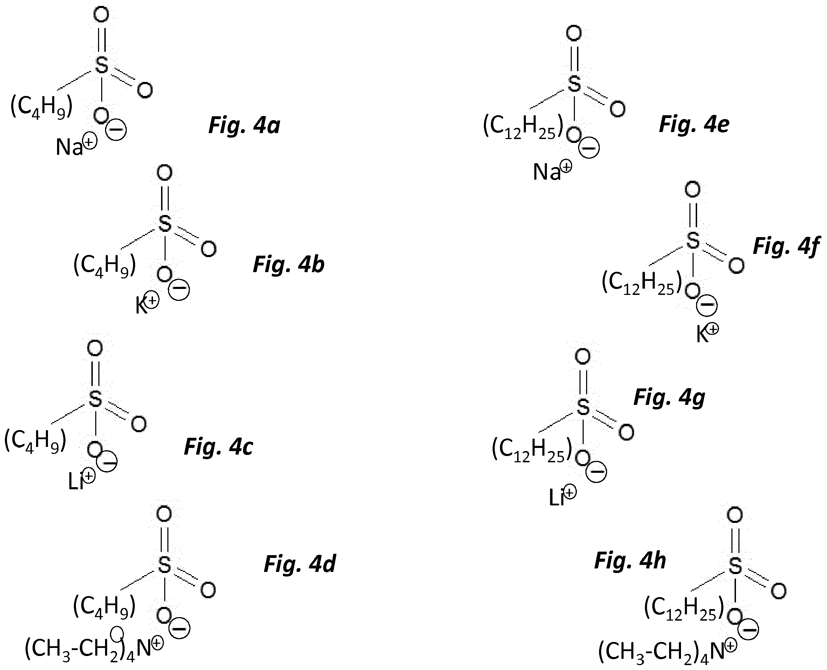

In den Figuren 4a bis 4h erkennt man besonders bevorzugte Ausführungsvarianten der halogenfreien Alkylsulfonate von Fig. 1f und 1h. Dabei zeigen die Figuren 4a bis 4d jeweils ein bevorzugtes Butylsulfonat, nämlich Natrium-Butylsulfonat (Fig. 4a), Kalium-Butylsulfonat (Fig. 4b), Lithium-Butylsulfonat (Fig. 4c) und Tetraethylammonium-Butylsulfonat (Fig. 4d). Die Figuren 4e bis 4h zeigen jeweils ein bevorzugtes Dodecylsulfonat, nämlich Natrium-Dodecylsulfonat (Fig. 4e), Kalium-Dodecylsulfonat (Fig. 4f), Lithium-Dodecylsulfonat (Fig. 4g) und Tetraethylammonium-Dodecylsulfonat (Fig. 4h).

Auch die in den Figuren 1e, 1f und 4a bis 4f gezeigten Ausführungsvarianten sind allesamt Verbindungen entsprechend der folgenden Formel:

(CₙF₍₂ₙ₊₁₎₋ₘHₘ-SO₃⁻)R1 Formel I

mit n = {1, 2, 3, 4, 5, 6, 7, 8, 9, 10, 11, 12}, m = {0, 1, 2, 3, 4, 5, 6, 7, 8, 9, 10, 11, 12, 13, 14, 15, 16, 17, 18, 19, 20, 21, 22, 23, 24, 25}, R1 ausgewählt aus der Gruppe H⁺, Na⁺, K⁺, Li⁺, sowie ((CₛH₂ₛ₊₁)(CₚH₂ₚ₊₁)(C_{q}H_{2q+1})(CᵣH₂ᵣ₊₁))N⁺mit s = {0, 1, 2, 3, 4, 5, 6}, p = {0, 1, 2, 3, 4, 5, 6}, q = {0, 1, 2, 3, 4, 5, 6}, r = {0, 1, 2, 3, 4, 5, 6}.. Dabei gilt für die Verbindungen entsprechend den Figuren 1e, 1f und 4a bis 4f (2n+1)=m mit n = {4, 5, 6, 7, 8, 9, 10, 11, 12}. Man erkennt insofern, dass die in den Figuren 1e, 1f und 4a bis 4f dargestellten Ausführungsvarianten halogenfreie anionische Tenside entsprechend der folgenden Formel sind:

(CₙH₂ₙ₊₁-SO₃)R1 Formel II

mit n = {1, 2, 3, 4, 5, 6, 7, 8, 9, 10, 11, 12}, R1 ausgewählt aus der Gruppe H⁺, Na⁺, K⁺, Li⁺ oder ((CₛH₂ₛ₊₁)(CₚH₂ₚ₊₁)(C_{q}H_{2q+1})(CᵣH₂ᵣ₊₁))N⁺ mit s = {0, 1, 2, 3, 4, 5, 6}, p = {0, 1, 2, 3, 4, 5, 6}, q = {0, 1, 2, 3, 4, 5, 6}, r = {0, 1, 2, 3, 4, 5, 6}.

Weitere Ausführungsvarianten von anionischen, halogenfreien Tensiden zeigen die Figuren 6a bis 6l. Dabei zeigen die Figuren 6a bis 6d jeweils Ausführungsbeispiele für iso- oder n-Alkylbenzolsulfonat-Verbindungen, nämlich Natrium-Alkylbenzolsulfonat (Fig. 6a), Kalium-Alkylbenzolsulfonat (Fig. 6b), Lithium-Alkylbenzolsulfonat (Fig. 6c) und Tetraethylammonium-Alkylbenzolsulfonat (Fig. 6d). Man erkennt, dass die Alkylbenzolsulfonate entsprechend den Figuren 6a bis 6d eine variable Länge der Alkylkette aufweisen können. Dabei ist n jeweils ausgewählt aus 1, 2, 3, 4, 5, 6, 7, 8, 9, 10, 12. Die in den Figuren 6a bis 6d gezeigten Varianten sind jeweils eine para-Alkylbenzolsulfonat-Verbindung. Es versteht sich von selbst, dass in weiteren, nicht in den Abbildungen dargestellten Varianten auch die korrespondierenden meta-Alkylbenzolsulfonat- und ortho-Alkylbenzolsulfonat-Verbindungen Ausführungsvarianten der vorliegenden Erfindung sind.

Die Figuren 6e bis 6h zeigen jeweils Ausführungsbeispiele für iso- oder n-Alkylsulfat-Verbindungen, nämlich Natrium-alkylsulfat (Fig. 6e), Kalium-alkylsulfat (Fig. 6f), Lithiumalkylsulfat (Fig. 6g) und Tetraethylammonium-alkylsulfat (Fig. 6h). Man erkennt, dass die Alkylsulfate entsprechend den Figuren 6e bis 6h eine variable Länge der Alkylkette aufweisen können. Dabei ist n jeweils ausgewählt aus 1, 2, 3, 4, 5, 6, 7, 8, 9, 10, 12.

Die Figuren 6i bis 6l zeigen jeweils Ausführungsbeispiele für Alkylethersulfat-Verbindungen, nämlich Natrium-alkylethersulfat (Fig. 6i), Kalium-alkylethersulfat (Fig. 6j), Lithium-alkylethersulfat (Fig. 6k) und Tetraethylammonium-alkylethersulfat (Fig. 6l). Man erkennt, dass die Terminale Alkylkette der Alkylethersulfate entsprechend den Figuren 6i bis 6l eine variable Länge aufweisen können. Dabei ist n jeweils ausgewählt aus 1, 2, 3, 4, 5, 6, 7, 8, 9, 10, 12. t ist eine ganze Zahl zwischen einschließlich 1 und einschließlich 20.

Man erkennt insofern insgesamt, dass die Ausführungsbeispiele entsprechend den Figuren 1b, 1d , 1f, 1h, 2c, 3b, 4a, 4e, 6a, 6e und 6i Natriumsalze sind. Weiter erkennt man, dass die Ausführungsbeispiele entsprechend den Figuren 1b, 1d , 1f, 1h, 2e, 3c, 4b, 4f, 6b, 6f, 6j Kaliumsalze sind. Außerdem erkennt man, dass die Ausführungsbeispiele entsprechend den Figuren 1b, 1d, 1f, 1h, 2d, 3d, 4c, 4g, 6c, 6g und 6k Lithiumsalze sind. Weiter erkennt man, dass die Ausführungsbeispiele entsprechend den Figuren 1b, 1d, 1f, 1h, 2f, 3e, 4d, 4h, 6d, 6h und 6l Tetraethylammonium-Salze sind.

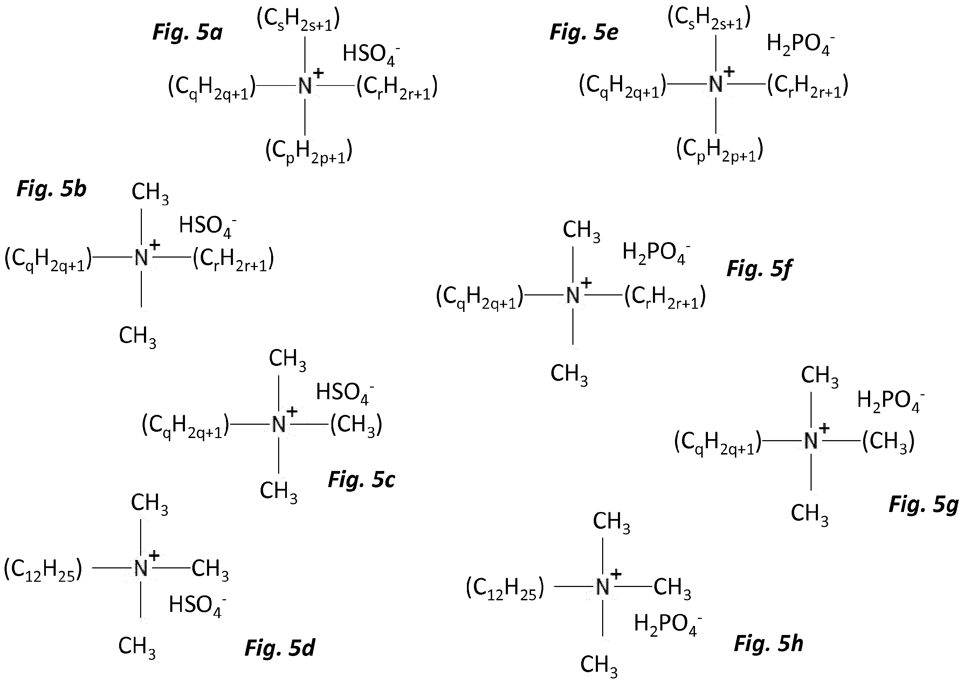

In einer weiteren Ausführungsvariante ist das Tensid ein kationisches Tensid, wie in den Figuren 5a bis 5h erkennbar. Man erkennt insbesondere, dass die in den Figuren 5a bis 5h dargestellten Verbindungen quartäre Ammoniumverbindungen sind. Dabei dient bei den Verbindungen entsprechend den Figuren 5a bis 5d ein Hydrogensulfation (HSO₄⁻) als Gegenion. Bei den Verbindungen entsprechend den Figuren 5e bis 5h dient ein Dihydrogenphosphation (H₂PO₄⁻) als Gegenion. Man erkennt weiter, dass die in den Figuren 5a bis 5h gezeigten Ausführungsbeispiele jeweils tetra-alkyl-AmmoniumVerbindungen sind. Die tetra-alkyl-Ammonium-Verbindungen sind jeweils halogenfreie Verbindungen. Insbesondere, sind die Verbindungen Tenside entsprechend der folgenden Formel:

[((CₛH₂ₛ₊₁)(CₚH₂ₚ₊₁)(C_{q}H_{2q+1})(CᵣH₂ᵣ₊₁))N⁺]R2 (Formel III)

mit
s = {0, 1, 2, 3, 4, 5, 6, 7, 8, 9, 10, 11, 12, 13, 14, 15, 16, 17, 18, 19, 20},
p = {0, 1, 2, 3, 4, 5, 6, 7, 8, 9, 10, 11, 12, 13, 14, 15, 16, 17, 18, 19, 20},
q = {0, 1, 2, 3, 4, 5, 6, 7, 8, 9, 10, 11, 12, 13, 14, 15, 16, 17, 18, 19, 20},
r = {0, 1, 2, 3, 4, 5, 6, 7, 8, 9, 10, 11, 12, 13, 14, 15, 16, 17, 18, 19, 20} ist,
wobei R2 ausgewählt ist aus der Gruppe enthaltend HSO₄⁻, H₂PO₄⁻, CF₃-SO₃⁻, C₂F₄HSO₃⁻, CF₃⁻COO⁻, (CF₃-SO₂)₂N⁻.

Dabei sind die in Figur 5b und 5f dargestellten Ausführungsvarianten jeweils Dimethyldi-alkyl-Ammonium-Verbindungen. Dabei haben die beiden Alkylgruppen der jeweiligen Verbindung wenigstens eine länge von zwei Kohlenstoffatomen. Mit anderen Worten, die Ausführungsvarianten entsprechend den Figuren 5b und 5f weisen jeweils wenigstens zwei Methylgruppen auf und entsprechen jeweils einer der beiden folgenden Formeln:

[((CₛH₂ₛ₊₁)(CₚH₂ₚ₊₁)(C_{q}H_{2q+1})(CᵣH₂ᵣ₊₁))N⁺]HSO₄⁻ (Formel IIId)

mit s = {2, 3, 4, 5, 6, 7, 8, 9, 10, 11, 12}, p = {2, 3, 4, 5, 6, 7, 8, 9, 10, 11, 12}, q = {1}, r = {1} oder

[((CₛH₂ₛ₊₁)(CₚH₂ₚ₊₁)(C_{q}H_{2q+1})(CᵣH₂ᵣ₊₁))N⁺]H₂PO₄⁻ (Formel IIIe)

mit s = {2, 3, 4, 5, 6, 7, 8, 9, 10, 11, 12}, p = {2, 3, 4, 5, 6, 7, 8, 9, 10, 11, 12}, q = {1}, r = {1}.

Man erkennt, dass die Ausführungsvarianten entsprechend Figur 5b ausgewählt sind aus der Gruppe enthaltend Diethyldimethylammoniumhydrogensulfat, Butylethyldimethylammoniumhydrogensulfat, Pentylethyldimethylammoniumhydrogensulfat, Hexylethyldimethylammoniumhydrogensulfat, Heptylethyldimethylammoniumhydrogensulfat, Octylethyldimethylammoniumhydrogensulfat, Nonylethyldimethylammoniumhydrogensulfat, Decylethyldimethylammoniumhydrogensulfat, Undecylethyldimethylammoniumhydrogensulfat, Dodecylethyldimethylammoniumhydrogensulfat, Dibutyldimethylammoniumhydrogensulfat, Pentylbutyldimethylammoniumhydrogensulfat, Hexylbutyldimethylammoniumhydrogensulfat, Heptylbutyldimethylammoniumhydrogensulfat, Octylbutyldimethylammoniumhydrogensulfat, Nonylbutyldimethylammoniumhydrogensulfat, Decylbutyldimethylammoniumhydrogensulfat, Undecylbutyldimethylammoniumhydrogensulfat, Dodecylbutyldimethylammoniumhydrogensulfat, Dipentyldimethylammoniumhydrogensulfat, Hexylpentyldimethylammoniumhydrogensulfat, Heptylpentyldimethylammoniumhydrogensulfat, Octylpentyldimethylammoniumhydrogensulfat, Nonylpentyldimethylammoniumhydrogensulfat, Decylpentyldimethylammoniumhydrogensulfat, Undecylpentyldimethylammoniumhydrogensulfat, Dodecylpentyldimethylammoniumhydrogensulfat, Dihexyldimethylammoniumhydrogensulfat, Heptylhexyld imethylammoniumhydrogensulfat, Octylhexyld imethylammoniumhydrogensulfat, Nonylhexyld imethylammoniumhydrogensulfat, Decylhexyldimethylammoniumhydrogensulfat, Undecylhexyldimethylammoniumhydrogensulfat, Dodecylhexyldimethylammoniumhydrogensulfat, Diheptyldimethylammoniumhydrogensulfat, Octylheptyldimethylammoniumhydrogensulfat, Nonylheptyldimethylammoniumhydrogensulfat, Decylheptyldimethylammoniumhydrogensulfat, Undecylheptyldimethylammoniumhydrogensulfat, Dodecylheptyldimethylammoniumhydrogensulfat, Dioctyldimethylammoniumhydrogensulfat, Nonyloctyldimethylammoniumhydrogensulfat, Decyloctyldimethylammoniumhydrogensulfat, Undecyloctyldimethylammoniumhydrogensulfat, Dodecyloctyldimethylammoniumhydrogensulfat, Dinonyldimethylammoniumhydrogensulfat, Decylnonyldimethylammoniumhydrogensulfat, Undecylnonyldimethylammoniumhydrogensulfat, Dodecylnonyldimethylammoniumhydrogensulfat, Didecyldimethylammoniumhydrogensulfat, Undecyldecyldimethylammoniumhydrogensulfat, Dodecyldecyldimethylammoniumhydrogensulfat, Diundecyldimethylammoniumhydrogensulfat, Dodecylundecyldimethylammoniumhydrogensulfat, Didodecyldimethylammoniumhydrogensulfat.

Die in Figur 5c, 5d, 5g und 5h dargestellten Ausführungsvarianten sind jeweils Trimethyl-alkyl-Ammonium-Verbindungen. Man erkennt insofern, dass die Ausführungsvarianten entsprechend Figur 5c ausgewählt sind aus der Gruppe enthaltend Ethyltrimethylammoniumhydrogensulfat, Butyltrimethylammoniumhydrogensulfat, Pentyltrimethylammoniumhydrogensulfat, Hexyltrimethylammoniumhydrogensulfat, Heptyltrimethylammoniumhydrogensulfat, Octyltrimethylammoniumhydrogensulfat, Nonyltrimethylammoniumhydrogensulfat, Decyltrimethylammoniumhydrogensulfat, Undecyltrimethylammoniumhydrogensulfat, Dodecyltrimethylammoniumhydrogensulfat. Die besonders bevorzugt Ausführungsvariante entsprechend Fig. 5d ist Dodecyltrimethylammoniumhydrogensulfat.

Man erkennt weiterhin, dass die Ausführungsvarianten entsprechend Fig. 5f ausgewählt sind aus der Gruppe enthaltend Diethyldimethylammonium-dihydrogenphosphat, Butylethyldimethylammonium-dihydrogenphosphat, Pentylethyldimethylammoniumdihydrogenphosphat, Hexylethyldimethylammonium-dihydrogenphosphat, Heptylethyldimethylammonium-dihydrogenphosphat, Octylethyldimethylammoniumdihydrogenphosphat, Nonylethyldimethylammonium-dihydrogenphosphat, Decylethyldimethylammonium-dihydrogenphosphat, Undecylethyldimethylammoniumdihydrogenphosphat, Dodecylethyldimethylammonium-dihydrogenphosphat, Dibutyldimethylammonium-dihydrogenphosphat, Pentylbutyldimethylammoniumdihydrogenphosphat, Hexylbutyldimethylammonium-dihydrogenphosphat, Heptylbutyldimethylammonium-dihydrogenphosphat, Octylbutyldimethylammoniumdihydrogenphosphat, Nonylbutyldimethylammonium-dihydrogenphosphat, Decylbutyldimethylammonium-dihydrogenphosphat, Undecylbutyldimethylammoniumdihydrogenphosphat, Dodecylbutyldimethylammonium-dihydrogenphosphat, Dipentyldimethylammonium-dihydrogenphosphat, Hexylpentyldimethylammoniumdihydrogenphosphat, Heptylpentyldimethylammonium-dihydrogenphosphat, Octylpentyldimethylammonium-dihydrogenphosphat, Nonylpentyldimethylammoniumdihydrogenphosphat, Decylpentyldimethylammonium-dihydrogenphosphat, Undecylpentyldimethylammonium-dihydrogenphosphat, Dodecylpentyldimethylammonium-dihydrogenphosphat, Dihexyldimethylammoniumdihydrogenphosphat, Heptylhexyldimethylammonium-dihydrogenphosphat, Octylhexyldimethylammonium-dihydrogenphosphat, Nonylhexyldimethylammoniumdihydrogenphosphat, Decylhexyldimethylammonium-dihydrogenphosphat, Undecylhexyldimethylammonium-dihydrogenphosphat, Dodecylhexyldimethylammonium-dihydrogenphosphat, Diheptyldimethylammoniumdihydrogenphosphat, Octylheptyldimethylammonium-dihydrogenphosphat, Nonylheptyldimethylammonium-dihydrogenphosphat, Decylheptyldimethylammoniumdihydrogenphosphat, Undecylheptyldimethylammonium-dihydrogenphosphat, Dodecylheptyldimethylammonium-dihydrogenphosphat, Dioctyldimethylammoniumdihydrogenphosphat, Nonyloctyldimethylammonium-dihydrogenphosphat, Decyloctyldimethylammonium-dihydrogenphosphat, Undecyloctyldimethylammoniumdihydrogenphosphat, Dodecyloctyldimethylammonium-dihydrogenphosphat, Dinonyldimethylammonium-dihydrogenphosphat, Decylnonyldimethylammoniumdihydrogenphosphat, Undecylnonyldimethylammonium-dihydrogenphosphat, Dodecylnonyldimethylammonium-dihydrogenphosphat, Didecyldimethylammoniumdihydrogenphosphat, Undecyldecyldimethylammonium-dihydrogenphosphat, Dodecyldecyldimethylammonium-dihydrogenphosphat, Diundecyldimethylammoniumdihydrogenphosphat, Dodecylundecyldimethylammonium-dihydrogenphosphat, Didodecyldimethylammonium-dihydrogenphosphat.

Die in Figur 5c, 5d, 5g und 5h dargestellten Ausführungsvarianten sind jeweils Trimethyl-alkyl-Ammonium-Verbindungen. Man erkennt insofern, dass die Ausführungsvarianten entsprechend Figur 5g ausgewählt sind aus der Gruppe enthaltend Ethyltrimethylammonium-dihydrogenphosphat, Butyltrimethylammoniumdihydrogenphosphat, Pentyltrimethylammonium-dihydrogenphosphat, Hexyltrimethylammonium-dihydrogenphosphat, Heptyltrimethylammoniumdihydrogenphosphat, Octyltrimethylammonium-dihydrogenphosphat, Nonyltrimethylammonium-dihydrogenphosphat, Decyltrimethylammoniumdihydrogenphosphat, Undecyltrimethylammonium-dihydrogenphosphat, Dodecyltrimethylammonium-dihydrogenphosphat. Die besonders bevorzugt Ausführungsvariante entsprechend Fig. 5h ist Dodecyltrimethylammoniumdihydrogenphosphat.

Mit anderen Worten, die Ausführungsvarianten entsprechend den Figuren 5c, 5d, 5g und 5h weisen jeweils drei Methylgruppen auf und entsprechen jeweils einer der beiden folgenden Formeln:

[((CₛH₂ₛ₊₁)(CₚH₂ₚ₊₁)(C_{q}H_{2q+1})(CᵣH₂ᵣ₊₁))N⁺]HSO₄⁻ (Formel IIId)

mit s = {2, 3, 4, 5, 6, 7, 8, 9, 10, 11, 12}, p = {1}, q = {1}, r = {1} oder

[((CₛH₂ₛ₊₁)(CₚH₂ₚ₊₁)(C_{q}H_{2q+1})(CᵣH₂ᵣ₊₁))N⁺]H₂PO₄⁻ (Formel IIIe)

mit s = {2, 3, 4, 5, 6, 7, 8, 9, 10, 11, 12}, p = {1}, q = {1}, r = {1}.

Jedes der in den Figuren 1a bis 1h, 2a bis 2f, 3a bis 3e, 4a bis 4h, 5a bis 5h und 6a bis 6l gezeigten Ausführungsbeispiele für ein erfindungsgemäßes Tensid kann allein oder in Kombination mit einem oder mehreren weiteren der erfindungsgemäßen Tenside in dem erfindungsgemäßen Zusatz enthalten sein oder diesen bilden. Man erkennt insofern, dass ein erfindungsgemäßer Elektrolyt einen Zusatz enthält, wobei der Zusatz wenigstens ein Tensid entsprechend einem der in den Figuren 1a bis 1h, 2a bis 2f, 3a bis 3e, 4a bis 4h, 5a bis 5h und 6a bis 6l gezeigten Ausführungsbeispiele aufweist. Man erkennt weiter, dass der Zusatz in einer Ausführungsvariante vollständig aus einem Tensid besteht und in einer weiteren Ausführungsvariante ein Gemisch aus mehreren Komponenten ist, wobei eine Komponente ein Tensid ist. In jedem Fall weist wenigstens ein Tensid in wenigstens einer Ausführungsvariante ein Gegenion auf das ausgewählt ist aus heterocyclischen Kationen, Ammoniumionen, H^{±}-Ionen, Alkali-oder Erdalkali-Ionen, HSO₄⁻-Ionen oder H₂PO4⁻-Ionen, CF₃-SO₃⁻-Ionen, C₂F₄HSO₃⁻-Ionen, CF₃-COO⁻ Ionen, (CF₃-SO₂)₂N⁻-Ionen. Dabei können alle Tenside das gleiche Gegenion aufweisen oder die Tenside können unterschiedliche Gegenionen haben. Ist der Zusatz ein Gemisch aus mehreren Komponenten, so weist er in einer Ausführungsvariante sowohl halogenierte Tenside entsprechend den Ausführungsbeispielen der Figuren 1a bis 1d, 2a bis 2f und 3a bis 3e, als auch halogenfreie Tenside entsprechend den Ausführungsbeispielen der Figuren 1e bis 1h, 4a bis 4h, 5f bis 5h und 6a bis 6l auf.

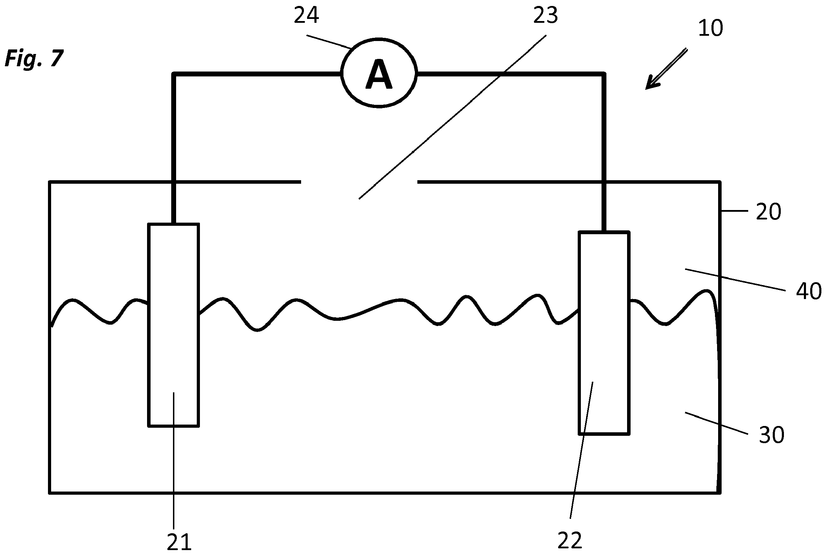

Fig. 7 zeigt ein erstes sehr einfaches und schematisches Ausführungsbeispiel für einen elektrochemischen Gassensor 10, welcher einen Elektrolyt 30 mit einem Zusatz aufweist. Der Gassensor 10 ist eine elektrochemische Zelle. Er hat ein Gehäuse 10 mit einem Gaseinlass 23. In dem Gehäuse sind zwei Elektroden 21, 22, nämlich eine Arbeitselektrode 21 und eine Gegenelektrode 22, angeordent. Die Elektroden 21, 22 sind über eine elektrisch leitende Auswerteeinheit 24 miteinander gekoppelt. Die Auswerteeinheit ist z.B. ein Amperometer. Der Elektrolyt 30 ist in dem Gehäuse 10 angeordnet. Die Elektroden 21, 22 tauchen teilweise in den Elektrolyten 30 ein. Mithin benetzt der Elektrolyt 30 die Elektroden 21, 22 teilweise. Durch den Gaseinlass 23 kann ein zu untersuchendes Gasgemisch 40 in das Gehäuse 10 ein- und bei Bedarf auch wieder austreten.

Man erkennt, dass die gasförmige Phase, die durch das Gasgemisch 40 gebildet wird, die flüssige Phase, die durch den Elektrolyten 30 gebildet wird, und die feste Phase, die jeweils durch die Elektroden 21, 22 gebildet wird, eine Dreiphasengrenze ausbilden. An dieser Dreiphasengrenze findet die gewünschte Reaktion des nachzuweisenden Gases mit dem Elektrodenmaterial und demd Elektrolyten statt.

Der Zusatz des Elektrolyten 30 enthält ein Tensid, entsprechend einem der in den Figuren 1a bis 1e, 2a bis 2f, 3a bis 3e, 4a bis 4h, 5f bis 5h und 6a bis 6l gezeigten und oben beschriebenen Ausführungsbeispielen. In einer Ausführungsvariante enthält der Zusatz des Elektrolyten 30 mehrere dieser Tenside. In noch einer Ausführungsvariante enthält der Zusatz zusätzlich weitere Komponenten.

Fig. 8a zeigt schematisch eine weitere Ausführungsvariante für einen elektrochemischen Gassensor 10. Auch dieser Gassensor 10 hat ein Gehäuse 20 in welchem eine Arbeitselektrode 21 und eine Gegenelektrode 22 angeordnet sind. Die Elektroden 21, 22 sind über auch hier über eine Auswerteeinheit 24 miteinander gekoppelt. Das Gehäuse 20 hat außerdem einen Gaseinlass 23 und einen Gasauslass 25. Durch den Gaseinlass 23 kann ein zu untersuchendes Gasgemisch 40 in das Gehäuse 10 eindringen und dort eine gasförmige Phase ausbilden. Der Elektrolyt 30 ist im Innerern eines porösen Dochtsystems (Docht) 50 angeordnet. Das Dochtsystem 50 steht mit den Elektroden 21, 22 derart in Kontakt, dass sich zwischen dem Dochtsystem 50 und der Oberfläche der Elektroden 21, 22 eine Schicht des Elektrolyten 30 (Elektrolytschicht) ausbildet. Diese Elektrolytschicht benetzt die Oberfläche der Elektroden 21, 22 an der dem Dochtsystem 50 zugewandten Seite der Elektroden 21, 22. Die Elektroden 21, 22 bestehen aus einem porösen Material. Die Poren des Materials vergrößern dabei die Oberfläche der Elektroden 21, 22.

In der Ausschnittsvergrößerung des Bereichs A, die in Fig. 8b gezeigt ist, erkennt man, dass der Elektrolyt 30 in die Poren des Elektronmaterials eindringt. Es bildet sich innerhabl der jeweiligen Pore eine Dreiphasengrenze aus dem Elektrodenmaterial 21, dem Gasgemisch 40 und dem Elektrolyt 30. Das Dochtsystem 50 stellt dabei sicher, dass stets ausreichend aber nicht zu viel Elektrolyt 30 in den Poren der Elektroden 21, 22 vorhanden ist. Insbesondere das Tensid, das in dem Zusatz des Elektrolyten 30 vorhanden ist unterstützt diesen Vorgang.

### Beispiel 1:

In einem exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Perfluoroctylsulfonsäure (=Heptadecafluoroctylsulfonsäure) in einer Konzentration von 20 mMol/l enthalten.

### Beispiel 2:

In einem weiteren exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Perfluoroctylsulfonsäure in einer Konzentration von 2 mMol/l enthalten.

### Beispiel 3:

In einem weiteren exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Perfluoroctylsulfonsäure in einer Konzentration von 500 mMol/l enthalten.

### Beispiel 4:

In einem weiteren exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Perfluoroctylsulfonsäure in einer Konzentration von 1 Mol/l enthalten.

### Beispiel 5:

In einem exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Natrium-1-Perfluoroctylsulfonat in einer Konzentration von 20 mMol/l enthalten.

### Beispiel 6:

In einem weiteren exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Natrium-1-Perfluoroctylsulfonat in einer Konzentration von 2 mMol/l enthalten.

### Beispiel 7:

In einem weiteren exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Natrium-1-Perfluoroctylsulfonat in einer Konzentration von 500 mMol/l enthalten.

### Beispiel 8:

In einem weiteren exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Natrium-1-Perfluoroctylsulfonat in einer Konzentration von 1 Mol/l enthalten.

### Beispiel 9:

In einem exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Kalium-1-Perfluoroctylsulfonat in einer Konzentration von 20 mMol/l enthalten.

### Beispiel 10:

In einem weiteren exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Kalium-1-Perfluoroctylsulfonat in einer Konzentration von 2 mMol/l enthalten.

### Beispiel 11:

In einem weiteren exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Kalium-1-Perfluoroctylsulfonat in einer Konzentration von 500 mMol/l enthalten.

### Beispiel 12:

In einem weiteren exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Kalium-1-Perfluoroctylsulfonat in einer Konzentration von 1 Mol/l enthalten.

### Beispiel 13:

In einem exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Kalium-1-Perfluoroctylsulfonat in einer Konzentration von 20 mMol/l enthalten.

### Beispiel 14:

In einem weiteren exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Lithium -1-Perfluoroctylsulfonat in einer Konzentration von 2 mMol/l enthalten.

### Beispiel 15:

In einem weiteren exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Lithium -1-Perfluoroctylsulfonat in einer Konzentration von 500 mMol/l enthalten.

### Beispiel 16:

In einem weiteren exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Lithium -1-Perfluoroctylsulfonat in einer Konzentration von 1 Mol/l enthalten.

### Beispiel 17:

In einem exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Tetraethylammonium-1-Perfluoroctylsulfonat in einer Konzentration von 20 mMol/l enthalten.

### Beispiel 18:

In einem weiteren exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Tetraethylammonium-1-Perfluoroctylsulfonat in einer Konzentration von 2 mMol/l enthalten.

### Beispiel 19:

In einem weiteren exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Tetraethylammonium -1-Perfluoroctylsulfonat in einer Konzentration von 500 mMol/l enthalten.

### Beispiel 20:

In einem weiteren exemplarischen Beispiel für einen Elektrolyten mit einem perfluorierten, anionischen Tensid besteht der Elektrolyt aus einem flüssigen Medium in Form von Schwefelsäure. In diesem flüssigen Medium ist als Zusatz Tetraethylammonium -1-Perfluoroctylsulfonat in einer Konzentration von 1 Mol/l enthalten.

### Beispiel 21:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Tridecafluoroctylsulfonsäure in einer Konzentration von 20 mMol/l enthalten.

### Beispiel 22:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Tridecafluoroctylsulfonsäure in einer Konzentration von 2 mMol/l enthalten.

### Beispiel 23:

In einem exemplarischen Beispiel für einen Elektrolyten mit einem polyfluorierten, anionischen Tensid besteht der Elektrolyt aus einem flüssigen Medium in Form von

Schwefelsäure. In diesem flüssigen Medium ist als Zusatz Tridecafluoroctylsulfonsäure in einer Konzentration von 500 mMol/l enthalten.

### Beispiel 24:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Tridecafluoroctylsulfonsäure in einer Konzentration von 1 Mol/l enthalten.

### Beispiel 25:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Natrium-Tridecafluoroctylsulfonat in einer Konzentration von 20 mMol/l enthalten.

### Beispiel 26:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Natrium-Tridecafluoroctylsulfonat in einer Konzentration von 2 mMol/l enthalten.

### Beispiel 27:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Natrium-Tridecafluoroctylsulfonat in einer Konzentration von 500 mMol/l enthalten.

### Beispiel 28:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Natrium-Tridecafluoroctylsulfonat in einer Konzentration von 1 Mol/l enthalten.

### Beispiel 29:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Kalium-Tridecafluoroctylsulfonat in einer Konzentration von 20 mMol/l enthalten.

### Beispiel 30:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Kalium-Tridecafluoroctylsulfonat in einer Konzentration von 2 mMol/l enthalten.

### Beispiel 31:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Kalium-Tridecafluoroctylsulfonat in einer Konzentration von 500 mMol/l enthalten.

### Beispiel 32:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Kalium-Tridecafluoroctylsulfonat in einer Konzentration von 1 Mol/l enthalten.

### Beispiel 33:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Lithium-Tridecafluoroctylsulfonat in einer Konzentration von 20 mMol/l enthalten.

### Beispiel 34:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Lithium-Tridecafluoroctylsulfonat in einer Konzentration von 2 mMol/l enthalten.

### Beispiel 35:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Lithium-Tridecafluoroctylsulfonat in einer Konzentration von 500 mMol/l enthalten.

### Beispiel 36:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Lithium-Tridecafluoroctylsulfonat in einer Konzentration von 1 Mol/l enthalten.

### Beispiel 37:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Tetraethylammonium-Tridecafluoroctylsulfonat in einer Konzentration von 20 mMol/l enthalten.

### Beispiel 38:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Tetraethylammonium - Tridecafluoroctylsulfonat in einer Konzentration von 2 mMol/l enthalten.

### Beispiel 39:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Tetraethylammonium-Tridecafluoroctylsulfonat in einer Konzentration von 500 mMol/l enthalten.

### Beispiel 40:

In einem exemplarischen Beispiel für einen Elektrolyten mit einem polyfluorierten, anionischen Tensid besteht der Elektrolyt aus einem flüssigen Medium in Form von Schwefelsäure. In diesem flüssigen Medium ist als Zusatz Tetraethylammonium-Tridecafluoroctylsulfonat in einer Konzentration von 1 Mol/l enthalten.

### Beispiel 41:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Natrium-1-butylsulfonat in einer Konzentration von 20 mMol/l enthalten.

### Beispiel 42:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Natrium-1-butylsulfonat in einer Konzentration von 2 mMol/l enthalten.

### Beispiel 43:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Natrium-1-butylsulfonat in einer Konzentration von 500 mMol/l enthalten.

### Beispiel 44:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Natrium-1-butylsulfonat in einer Konzentration von 1 Mol/l enthalten.

### Beispiel 45:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Natrium-iso-butylsulfonat in einer Konzentration von 20 mMol/l enthalten.

### Beispiel 46:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Natrium-iso-butylsulfonat in einer Konzentration von 2 mMol/l enthalten.

### Beispiel 47:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Natrium-iso-butylsulfonat in einer Konzentration von 500 mMol/l enthalten.

### Beispiel 48:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Natrium-iso-butylsulfonat in einer Konzentration von 1 Mol/l enthalten.

### Beispiel 49:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Kalium-1-butylsulfonat in einer Konzentration von 20 mMol/l enthalten.

### Beispiel 50:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Kalium-1-butylsulfonat in einer Konzentration von 2 mMol/l enthalten.

### Beispiel 51:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Kalium -1-butylsulfonat in einer Konzentration von 500 mMol/l enthalten.

### Beispiel 52:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Kalium -1-butylsulfonat in einer Konzentration von 1 Mol/l enthalten.

### Beispiel 53:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Kalium-iso-butylsulfonat in einer Konzentration von 20 mMol/l enthalten.

### Beispiel 54:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Kalium-iso-butylsulfonat in einer Konzentration von 2 mMol/l enthalten.

### Beispiel 55:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Kalium-iso-butylsulfonat in einer Konzentration von 500 mMol/l enthalten.

### Beispiel 56:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Kalium-iso-butylsulfonat in einer Konzentration von 1 Mol/l enthalten.

### Beispiel 57:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Lithium-1-butylsulfonat in einer Konzentration von 20 mMol/l enthalten.

### Beispiel 58:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Lithium -1-butylsulfonat in einer Konzentration von 2 mMol/l enthalten.

### Beispiel 59:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Lithium -1-butylsulfonat in einer Konzentration von 500 mMol/l enthalten.

### Beispiel 60:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Lithium -1-butylsulfonat in einer Konzentration von 1 Mol/l enthalten.

### Beispiel 61:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Lithium -iso-butylsulfonat in einer Konzentration von 20 mMol/l enthalten.

### Beispiel 62:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Lithium -iso-butylsulfonat in einer Konzentration von 2 mMol/l enthalten.

### Beispiel 63:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Lithium-iso-butylsulfonat in einer Konzentration von 500 mMol/l enthalten.

### Beispiel 64:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Lithium-iso-butylsulfonat in einer Konzentration von 1 Mol/l enthalten.

### Beispiel 65:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Tetraethylammonium-1-butylsulfonat in einer Konzentration von 20 mMol/l enthalten.

### Beispiel 66:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Tetraethylammonium-1-butylsulfonat in einer Konzentration von 2 mMol/l enthalten.

### Beispiel 67:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Tetraethylammonium-1-butylsulfonat in einer Konzentration von 500 mMol/l enthalten.

### Beispiel 68:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Tetraethylammonium-1-butylsulfonat in einer Konzentration von 1 Mol/l enthalten.

### Beispiel 69:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Tetraethylammonium-iso-butylsulfonat in einer Konzentration von 20 mMol/l enthalten.

### Beispiel 70:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Tetraethylammonium-iso-butylsulfonat in einer Konzentration von 2 mMol/l enthalten.

### Beispiel 71:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Tetraethylammonium-iso-butylsulfonat in einer Konzentration von 500 mMol/l enthalten.

### Beispiel 72:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Tetraethylammonium-iso-butylsulfonat in einer Konzentration von 1 Mol/l enthalten.

### Beispiel 73:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Natrium-1-dodecylsulfonat in einer Konzentration von 20 mMol/l enthalten.

### Beispiel 74:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Natrium-1-dodecylsulfonat in einer Konzentration von 2 mMol/l enthalten.

### Beispiel 75:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Natrium-1-dodecylsulfonat in einer Konzentration von 500 mMol/l enthalten.

### Beispiel 76:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Natrium-1-dodecylsulfonat in einer Konzentration von 1 Mol/l enthalten.

### Beispiel 77:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Natrium-iso-dodecylsulfonat in einer Konzentration von 20 mMol/l enthalten.

### Beispiel 78:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Natrium-iso-dodecylsulfonat in einer Konzentration von 2 mMol/l enthalten.

### Beispiel 79:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Natrium-iso-dodecylsulfonat in einer Konzentration von 500 mMol/l enthalten.

### Beispiel 80:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Natrium-iso-dodecylsulfonat in einer Konzentration von 1 Mol/l enthalten.

### Beispiel 81:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Kalium-1-dodecylsulfonat in einer Konzentration von 20 mMol/l enthalten.

### Beispiel 82:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Kalium-1-dodecylsulfonat in einer Konzentration von 2 mMol/l enthalten.

### Beispiel 83:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Kalium -1-dodecylsulfonat in einer Konzentration von 500 mMol/l enthalten.

### Beispiel 84:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Kalium -1-dodecylsulfonat in einer Konzentration von 1 Mol/l enthalten.

### Beispiel 85:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Kalium-iso-dodecylsulfonat in einer Konzentration von 20 mMol/l enthalten.

### Beispiel 86:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Kalium-iso-dodecylsulfonat in einer Konzentration von 2 mMol/l enthalten.

### Beispiel 87:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Kalium-iso-dodecylsulfonat in einer Konzentration von 500 mMol/l enthalten.

### Beispiel 88:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Kalium-iso-dodecylsulfonat in einer Konzentration von 1 Mol/l enthalten.

### Beispiel 89:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Lithium-1-dodecylsulfonat in einer Konzentration von 20 mMol/l enthalten.

### Beispiel 90:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Lithium -1-dodecylsulfonat in einer Konzentration von 2 mMol/l enthalten.

### Beispiel 91:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Lithium -1-dodecylsulfonat in einer Konzentration von 500 mMol/l enthalten.

### Beispiel 92:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Lithium -1-dodecylsulfonat in einer Konzentration von 1 Mol/l enthalten.

### Beispiel 93:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Lithium -iso-dodecylsulfonat in einer Konzentration von 20 mMol/l enthalten.

### Beispiel 94:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Lithium -iso-dodecylsulfonat in einer Konzentration von 2 mMol/l enthalten.

### Beispiel 95:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Lithium-iso-dodecylsulfonat in einer Konzentration von 500 mMol/l enthalten.

### Beispiel 96:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Lithium-iso-dodecylsulfonat in einer Konzentration von 1 Mol/l enthalten.

### Beispiel 97:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Tetraethylammonium-1-dodecylsulfonat in einer Konzentration von 20 mMol/l enthalten.

### Beispiel 98:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Tetraethylammonium-1-dodecylsulfonat in einer Konzentration von 2 mMol/l enthalten.

### Beispiel 99:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Tetraethylammonium-1-dodecylsulfonat in einer Konzentration von 500 mMol/l enthalten.

### Beispiel 100:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Tetraethylammonium-1-dodecylsulfonat in einer Konzentration von 1 Mol/l enthalten.

### Beispiel 101:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Tetraethylammonium-iso-dodecylsulfonat in einer Konzentration von 20 mMol/l enthalten.

### Beispiel 102:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Tetraethylammonium-iso-dodecylsulfonat in einer Konzentration von 2 mMol/l enthalten.

### Beispiel 103:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Tetraethylammonium-iso-dodecylsulfonat in einer Konzentration von 500 mMol/l enthalten.

### Beispiel 104:

In einem exemplarischen Beispiel für einen Elektrolyten mit einem halogenfreien, anionischen Tensid besteht der Elektrolyt aus einem flüssigen Medium in Form von Schwefelsäure. In diesem flüssigen Medium ist als Zusatz Tetraethylammonium-iso-dodecylsulfonat in einer Konzentration von 1 Mol/l enthalten.

### Beispiel 105:

In einem exemplarischen Beispiel für einen Elektrolyten mit einem kationischen Tensid besteht der Elektrolyt aus einem flüssigen Medium in Form von Schwefelsäure. In diesem flüssigen Medium ist als Zusatz Dodecyltrimethylammoniumhydrogensulfat in einer Konzentration von 20 mMol/l enthalten.

### Beispiel 106:

In einem exemplarischen Beispiel für einen Elektrolyten mit einem kationischen Tensid besteht der Elektrolyt aus einem flüssigen Medium in Form von Schwefelsäure. In diesem flüssigen Medium ist als Zusatz Dodecyltrimethylammoniumhydrogensulfat in einer Konzentration von 2 mMol/l enthalten.

### Beispiel 107:

In einem exemplarischen Beispiel für einen Elektrolyten mit einem kationischen Tensid besteht der Elektrolyt aus einem flüssigen Medium in Form von Schwefelsäure. In diesem flüssigen Medium ist als Zusatz Dodecyltrimethylammoniumhydrogensulfat in einer Konzentration von 500 mMol/l enthalten.

### Beispiel 108:

In einem exemplarischen Beispiel für einen Elektrolyten mit einem kationischen Tensid besteht der Elektrolyt aus einem flüssigen Medium in Form von Schwefelsäure. In diesem flüssigen Medium ist als Zusatz Dodecyltrimethylammoniumhydrogensulfat in einer Konzentration von 1 Mol/l enthalten.

### Beispiel 109:

In einem exemplarischen Beispiel für einen Elektrolyten mit einem kationischen Tensid besteht der Elektrolyt aus einem flüssigen Medium in Form von Schwefelsäure. In diesem flüssigen Medium ist als Zusatz Dodecyltrimethylammoniumdihydrogenphosphat in einer Konzentration von 20 mMol/l enthalten.

### Beispiel 110:

In einem exemplarischen Beispiel für einen Elektrolyten mit einem kationischen Tensid besteht der Elektrolyt aus einem flüssigen Medium in Form von Schwefelsäure. In diesem flüssigen Medium ist als Zusatz Dodecyltrimethylammoniumdihydrogenphosphat in einer Konzentration von 2 mMol/l enthalten.

### Beispiel 111:

In einem exemplarischen Beispiel für einen Elektrolyten mit einem kationischen Tensid besteht der Elektrolyt aus einem flüssigen Medium in Form von Schwefelsäure. In diesem flüssigen Medium ist als Zusatz Dodecyltrimethylammoniumdihydrogenphosphat in einer Konzentration von 500 mMol/l enthalten.

### Beispiel 112:

In einem exemplarischen Beispiel für einen Elektrolyten mit einem kationischen Tensid besteht der Elektrolyt aus einem flüssigen Medium in Form von Schwefelsäure. In diesem flüssigen Medium ist als Zusatz Dodecyltrimethylammoniumdihydrogenphosphat in einer Konzentration von 1 Mol/l enthalten.

### Beispiel 113:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Dodecyltrimethylammoniumhydrogensulfat und Polyethylenglykol in einer Gesamt-Konzentration von 2 mMol/l enthalten.

### Beispiel 114:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Dodecyltrimethylammoniumhydrogensulfat und Polyethylenglykol in einer Gesamt-Konzentration von 20 mMol/l enthalten.

### Beispiel 115:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Dodecyltrimethylammoniumhydrogensulfat und Polyethylenglykol in einer Gesamt-Konzentration von 500 mMol/l enthalten.

### Beispiel 116:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Dodecyltrimethylammoniumhydrogensulfat und Polyethylenglykol in einer Gesamt-Konzentration von 1 Mol/l enthalten.

### Beispiel 117:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Dodecyltrimethylammoniumhydrogensulfat und Polypropylenglykol in einer Gesamt-Konzentration von 20 mMol/l enthalten.

### Beispiel 118:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Dodecyltrimethylammoniumhydrogensulfat und Polypropylenglykol in einer Gesamt-Konzentration von 500 mMol/l enthalten.

### Beispiel 119:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Dodecyltrimethylammoniumhydrogensulfat und Polypropylenglykol in einer Gesamt-Konzentration von 1 Mol/l enthalten.

### Beispiel 120:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Dodecyltrimethylammoniumhydrogensulfat und Glykol in einer Gesamt-Konzentration von 20 mMol/l enthalten.

### Beispiel 121:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Dodecyltrimethylammoniumhydrogensulfat und Glykol in einer Gesamt-Konzentration von 500 mMol/l enthalten.

### Beispiel 122:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Dodecyltrimethylammoniumhydrogensulfat und Glykol in einer Gesamt-Konzentration von 1 Mol/l enthalten.

### Beispiel 123:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-dodecylsulfonat und Polyethylenglykol in einer Gesamt-Konzentration von 2 mMol/l enthalten.

### Beispiel 124:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-dodecylsulfonat und Polyethylenglykol in einer Gesamt-Konzentration von 20 mMol/l enthalten.

### Beispiel 125:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-dodecylsulfonat und Polyethylenglykol in einer Gesamt-Konzentration von 500 mMol/l enthalten.

### Beispiel 126:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-dodecylsulfonat und Polyethylenglykol in einer Gesamt-Konzentration von 1 Mol/l enthalten.

### Beispiel 127:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-dodecylsulfonat und Polypropylenglykol in einer Gesamt-Konzentration von 20 mMol/l enthalten.

### Beispiel 128:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-dodecylsulfonat und Polypropylenglykol in einer Gesamt-Konzentration von 500 mMol/l enthalten.

### Beispiel 129:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-dodecylsulfonat und Polypropylenglykol in einer Gesamt-Konzentration von 1 Mol/l enthalten.

### Beispiel 130:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-dodecylsulfonat und Glykol in einer Gesamt-Konzentration von 20 mMol/l enthalten.

### Beispiel 131:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-dodecylsulfonat und Glykol in einer Gesamt-Konzentration von 500 mMol/l enthalten.

### Beispiel 132:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-dodecylsulfonat und Glykol in einer Gesamt-Konzentration von 1 Mol/l enthalten.

### Beispiel 133:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-butansulfonat und Polyethylenglykol in einer Gesamt-Konzentration von 2 mMol/l enthalten.

### Beispiel 134:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-butansulfonat und Polyethylenglykol in einer Gesamt-Konzentration von 20 mMol/l enthalten.

### Beispiel 135:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-butansulfonat und Polyethylenglykol in einer Gesamt-Konzentration von 500 mMol/l enthalten.

### Beispiel 136:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-butansulfonat und Polyethylenglykol in einer Gesamt-Konzentration von 1 Mol/l enthalten.

### Beispiel 137:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-butansulfonat und Polypropylenglykol in einer Gesamt-Konzentration von 20 mMol/l enthalten.

### Beispiel 138:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-butansulfonat und Polypropylenglykol in einer Gesamt-Konzentration von 500 mMol/l enthalten.

### Beispiel 139:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-butansulfonat und Polypropylenglykol in einer Gesamt-Konzentration von 1 Mol/l enthalten.

### Beispiel 140:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-butansulfonat und Glykol in einer Gesamt-Konzentration von 20 mMol/l enthalten.

### Beispiel 141:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-butansulfonat und Glykol in einer Gesamt-Konzentration von 500 mMol/l enthalten.

### Beispiel 142:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Natrium-1-butansulfonat und Glykol in einer Gesamt-Konzentration von 1 Mol/l enthalten.

### Beispiel 143:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Tridecafluoroctylsulfonsäure und Polyethylenglykol in einer Gesamt-Konzentration von 2 mMol/l enthalten.

### Beispiel 144:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Tridecafluoroctylsulfonsäure und Polyethylenglykol in einer Gesamt-Konzentration von 20 mMol/l enthalten.

### Beispiel 145:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Tridecafluoroctylsulfonsäure und Polyethylenglykol in einer Gesamt-Konzentration von 500 mMol/l enthalten.

### Beispiel 146:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Tridecafluoroctylsulfonsäure und Polyethylenglykol in einer Gesamt-Konzentration von 1 Mol/l enthalten.

### Beispiel 147:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Tridecafluoroctylsulfonsäure und Polypropylenglykol in einer Gesamt-Konzentration von 20 mMol/l enthalten.

### Beispiel 148:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Tridecafluoroctylsulfonsäure und Polypropylenglykol in einer Gesamt-Konzentration von 500 mMol/l enthalten.

### Beispiel 149:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Tridecafluoroctylsulfonsäure und Polypropylenglykol in einer Gesamt-Konzentration von 1 Mol/l enthalten.

### Beispiel 150:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Tridecafluoroctylsulfonsäure und Glykol in einer Gesamt-Konzentration von 20 mMol/l enthalten.

### Beispiel 151:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Tridecafluoroctylsulfonsäure und Glykol in einer Gesamt-Konzentration von 500 mMol/l enthalten.

### Beispiel 152:

In einem exemplarischen Beispiel für einen Elektrolyten mit einem Zusatz, der ein Gemisch aus mehreren Tensiden aufweist, besteht der Elektrolyt aus einem flüssigen Medium in Form von Schwefelsäure. In diesem flüssigen Medium ist als Zusatz ein Gemisch aus Tridecafluoroctylsulfonsäure und Glykol in einer Gesamt-Konzentration von 1 Mol/l enthalten.

Die Erfindung ist nicht auf eine der vorbeschriebenen Ausführungsformen beschränkt, sondern in vielfältiger Weise abwandelbar.

So weist der elektrochemische Gassensor 10 in einer weiteren (nicht dargestellten) Ausführungsvariante mehr als zwei Elektroden 21, 22 auf.

Der Gaseinlass 23 kann - ebenso wie der Gasauslass 25 - von einer Membran bedeckt sein, um zu verhindern, dass Staub und andere Fremdpartikel in den Gassesensor 10 eindringen.

Sämtliche aus den Ansprüchen, der Beschreibung und den Zeichnungen hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- A: Ausschnitt

- 10: Gassensor
- 20: Gehäuse
- 21: Elektrode, Arbeitselektrode
- 22: Elektrode, Gegenelektrode
- 23: Gaseinlass
- 24: Auswerteeinheit
- 25: Gasauslass

- 30: Elektrolyt

- 40: Gasgemisch

- 50: Dochtsystem

## Patentansprüche

1. Elektrochemischer Gassensor (10) mit einem Gehäuse (20) und wenigstens zwei Elektroden (21, 22), wobei das Gehäuse (20) einen Gaseinlass (23) aufweist, wobei in dem Gassensor (10) ein saurer, flüssiger Elektrolyt (30) vorhanden ist, und wobei der Elektrolyt (30) die Elektrode (21, 22) teilweise benetzt, **dadurch gekennzeichnet, dass** der Elektrolyt (30) einen Zusatz enthält, wobei der Zusatz wenigstens ein Tensid aufweist und wobei wenigstens ein Tensid ein halogenfreies Tensid ist, bevorzugt ein fluorfreies Tensid.

2. Elektrochemischer Gassensor nach Anspruch 1, **dadurch gekennzeichnet, dass** der Zusatz vollständig aus dem Tensid besteht.

3. Elektrochemischer Gassensor nach Anspruch 1, **dadurch gekennzeichnet, dass** der Zusatz ein Gemisch aus mehreren Komponenten ist, wobei wenigstens eine Komponente ein Tensid ist.

4. Elektrochemischer Gassensor nach einem der Ansprüche 1 bis 3, **dadurch gekennzeichnet, dass** der Zusatz sowohl halogenierte als auch halogenfreie Tenside aufweist.

5. Elektrochemischer Gassensor nach einem der Ansprüche 1 bis 4, **dadurch gekennzeichnet, dass** wenigstens ein Tensid ein Gegenion aufweist, das ausgewählt ist aus heterocyclischen Kationen, Ammoniumionen, H^{±}-Ionen, Alkali- oder Erdalkali-Ionen, HSO₄⁻-Ionen, H₂PO₄⁻-Ionen, CF₃-SO₃⁻-Ionen, C₂F₄HSO₃⁻-Ionen, CF₃-COO⁻Ionen, (CF₃-SO₂)₂N⁻-Ionen.

6. Elektrochemischer Gassensor nach einem der Ansprüche 1 bis 5, **dadurch gekennzeichnet, dass** alle Tenside das gleiche Gegenion aufweisen oder dass die Tenside unterschiedliche Gegenionen haben.

7. Elektrochemischer Gassensor nach einem der Ansprüche 1 bis 6, **dadurch gekennzeichnet, dass** wenigstens ein Tensid ein anionisches Tensid ist.

8. Elektrochemischer Gassensor nach einem der Ansprüche 1 bis 7, **dadurch gekennzeichnet, dass** wenigstens ein Tensid ein Alkylsulfonat ist.

9. Elektrochemischer Gassensor nach Anspruch 8, **dadurch gekennzeichnet, dass** die Alkylkette des Alkylsulfonates eine Länge von 1, 2, 3, 4, 5, 6, 7, 8, 9, 10, 11, 12, 13, 14, 15, 16, 17 oder 18 Kohlenstoffatomen aufweist, bevorzugt eine Länge von 4, 5, 6, 7, 8, 9, 10, 11 oder 12 Kohlenstoffatomen.

10. Elektrochemischer Gassensor nach einem der Ansprüche 1 bis 9, **dadurch gekennzeichnet** wenn wenigstens ein Tensid ein Gegenion aufweist, das ausgewählt ist aus heterocyclischen Kationen, H⁺, Na⁺-Ionen, K⁺-Ionen, Li⁺-Ionen oder ((CₛH₂ₛ₊₁)(CₚH₂ₚ₊₁)(C_{q}H_{2q+1})(CᵣH₂ᵣ₊₁))N⁺-Ionen mit s = {0, 1, 2, 3, 4, 5, 6}, p = {0, 1, 2, 3, 4, 5, 6}, q = {0, 1, 2, 3, 4, 5, 6}, r = {0, 1, 2, 3, 4, 5, 6}.

11. Elektrochemischer Gassensor nach einem der Ansprüche 1 bis 10, **dadurch gekennzeichnet, dass** wenigstens ein Tensid ein Tensid entsprechend der Formel I:
(CₙF₍₂ₙ₊₁₎₋ₘHₘ-SO₃⁻)R1 Formel I
mit n = {1, 2, 3, 4, 5, 6, 7, 8, 9, 10, 11, 12}, m = {0, 1, 2, 3, 4, 5, 6, 7, 8, 9, 10, 11, 12, 13, 14, 15, 16, 17, 18, 19, 20, 21, 22, 23, 24, 25}, R1 ausgewählt aus der Gruppe H⁺, Na⁺, K⁺, Li⁺, sowie ((CₛH₂ₛ₊₁)(CₚH₂ₚ₊₁)(C_{q}H_{2q+1})(CᵣH₂ᵣ₊₁))N⁺ mit s = {0, 1, 2, 3, 4, 5, 6}, p = {0, 1, 2, 3, 4, 5, 6}, q = {0, 1, 2, 3, 4, 5, 6}, r = {0, 1, 2, 3, 4, 5, 6} ist.

12. Elektrochemischer Gassensor nach einem der Ansprüche 1 bis 11, **dadurch gekennzeichnet, dass** wenigstens ein Tensid eine Polyfluor-alkyl-sulfonsäure oder das Salz einer Polyfluor-alkyl-sulfonsäure ist.

13. Elektrochemischer Gassensor nach einem der Ansprüche 1 bis 12, **dadurch gekennzeichnet, dass** wenigstens ein Tensid ein Polyfluor-alkyl-sulfonat ist mit einem Gegenion, das ausgewählt ist aus H⁺, Na⁺, K⁺, Li⁺, NH₄⁺ und primären, sekundären, tertiären oder quartären Ammoniumionen, bevorzugt ein Tridecafluoroctylsulfonat mit einem Gegenion, das ausgewählt ist aus H⁺, Na⁺, K⁺, Li⁺, NH₄⁺ und primären, sekundären, tertiären oder quartären Ammoniumionen.

14. Elektrochemischer Gassensor nach einem der Ansprüche 1 bis 13, **dadurch gekennzeichnet, dass** wenigstens ein Tensid ein anionisches, fluoriertes Tensid ist, welches eine perfluorierte Hexylen- oder Octylengruppe, einen Ethylenspacer und eine Sulfonatgruppe als Kopfgruppe aufweist.

15. Elektrochemischer Gassensor nach einem der Ansprüche 1 bis 14, **dadurch gekennzeichnet, dass** wenigstens ein Tensid ein halogenfreies anionisches Tensid entsprechend der Formel II:
(CₙH₂ₙ₊₁-SO₃)R1 Formel II
mit n = {1, 2, 3, 4, 5, 6, 7, 8, 9, 10, 11, 12}, R1 ausgewählt aus der Gruppe H⁺, Na⁺, K⁺, Li⁺ oder ((CₛH₂ₛ₊₁)(CₚH₂ₚ₊₁)(C_{q}H_{2q+1})(CᵣH₂ᵣ₊₁))N⁺ mit s = {0, 1, 2, 3, 4, 5, 6}, p = {0, 1, 2, 3, 4, 5, 6}, q = {0, 1, 2, 3, 4, 5, 6}, r = {0, 1, 2, 3, 4, 5, 6} ist.

16. Elektrochemischer Gassensor nach einem der Ansprüche 1 bis 15, **dadurch gekennzeichnet, dass** wenigstens ein Tensid ausgewählt ist aus Natrium-1-butansulfonat, Natrium-1-pentansulfonat, Natrium-1-hexansulfonat, Natrium-1-heptansulfonat, Natrium-1-octansulfonat, Natrium-1-nonansulfonat, Natrium-1-decansulfonat, Natrium-1-undecansulfonat, Natrium-1-dodecansulfonat, Natrium-iso-butylsulfonat, Natrium-iso-pentylsulfonat, Natrium-iso-hexylsulfonat, Natrium-iso-heptylsulfonat, Natrium-iso-octylsulfonat, Natrium-iso-nonylsulfonat, Natrium-iso-decylsulfonat, Natrium-iso-undecylsulfonat, Natrium-iso-dodecylsulfonat, Kalium-1-butansulfonat, Kalium-1-pentansulfonat, Kalium-1-hexansulfonat, Kalium-1-heptansulfonat, Kalium-1-octansulfonat, Kalium-1-nonansulfonat, Kalium-1-decansulfonat, Kalium-1-undecansulfonat, Kalium-1-dodecansulfonat,
Kalium-iso-butylsulfonat, Kalium-iso-pentylsulfonat, Kalium-iso-hexylsulfonat, Kalium-iso-heptylsulfonat, Kalium-iso-octylsulfonat, Kalium-iso-nonylsulfonat, Kalium-iso-decylsulfonat, Kalium-iso-undecylsulfonat, Kalium-iso-dodecylsulfonat, bevorzugt aus Natrium-1-butansulfonat, Natrium-1-dodecylsulfonat, Natrium-1-isobutylslufonat, Natrium-1-isododecylsulfonat, Kalium-1-butansulfonat, Kalium-1-dodecylsulfonat, Kalium-1-iso-butylsulfonat, Kalium-1-isododecylsulfonat, ganz besonders bevorzugt aus Natrium-1-butansulfonat, Natrium-1-dodecylsulfonat, Kalium-1-butansulfonat, Kalium-1-dodecylsulfonat oder den korrespondierenden Lithium-, Ammonium- sowie Di-, Tri- oder Tetraalkylammonium-Verbindungen der genannten Verbindungen.

17. Elektrochemischer Gassensor nach einem der Ansprüche 1 bis 16, **dadurch gekennzeichnet, dass** wenigstens ein Tensid ein Alkylbenzolsulfonat, ein Alkylsulfat oder ein Alkylethersulfat ist.

18. Elektrochemischer Gassensor nach einem der Ansprüche 1 bis 17, **dadurch gekennzeichnet, dass** wenigstens ein Tensid ein kationisches Tensid ist.

19. Elektrochemischer Gassensor nach Anspruch 18, **dadurch gekennzeichnet, dass** das kationische Tensid eine Ammoniumverbindung ist, bevorzugt eine quartäre Ammoniumverbindung, besonders bevorzugt eine Tetraalkylammonium-Verbindung.

20. Elektrochemischer Gassensor nach einem der Ansprüche 1 bis 19, **dadurch gekennzeichnet, dass** wenigstens ein Tensid ein Tensid entsprechend der Formel III
[((CₛH₂ₛ₊₁)(CₚH₂ₚ₊₁)(C_{q}H_{2q+1})(CᵣH₂ᵣ₊₁))N⁺]R2 (Formel III)
mit
s = {0, 1, 2, 3, 4, 5, 6, 7, 8, 9, 10, 11, 12, 13, 14, 15, 16, 17, 18, 19, 20},
p = {0, 1, 2, 3, 4, 5, 6, 7, 8, 9, 10, 11, 12, 13, 14, 15, 16, 17, 18, 19, 20},
q = {0, 1, 2, 3, 4, 5, 6, 7, 8, 9, 10, 11, 12, 13, 14, 15, 16, 17, 18, 19, 20},
r = {0, 1, 2, 3, 4, 5, 6, 7, 8, 9, 10, 11, 12, 13, 14, 15, 16, 17, 18, 19, 20} ist,
wobei R2 ausgewählt ist aus der Gruppe enthaltend HSO₄⁻, H₂PO₄⁻, CF₃-SO₃⁻, C₂F₄HSO₃⁻, CF₃⁻COO⁻, (CF₃-SO₂)₂N⁻.

21. Elektrochemischer Gassensor nach einem der Ansprüche 19 bis 20, **dadurch gekennzeichnet, dass** die Ammoniumverbindung wenigstens zwei Alkylgruppen aufweist.

22. Elektrochemischer Gassensor nach Anspruch 21, **dadurch gekennzeichnet, dass** die Alkylgruppen unabhängig voneinander lineare Kohlenstoffketten mit einer Länge von 1, 2, 3, 4, 5, 6, 7, 8, 9, 10, 11, 12, 13, 14, 15, 16, 17 oder 18 Kohlenstoffatomen sind, bevorzugt mit einer Länge von 1, 2, 3, 4, 5, 6, 7, 8, 9, 10, 11 oder 12 Kohlenstoffatomen.

23. Elektrochemischer Gassensor nach einem der Ansprüche 19 bis 22, **dadurch gekennzeichnet, dass** die Ammoniumverbindung wenigstens zwei Methylgruppen aufweist.

24. Elektrochemischer Gassensor nach einem der Ansprüche 1 bis 23, **dadurch gekennzeichnet, dass** das Tensid des Zusatzes und/oder der Zusatz in einer Konzentration von wenigstens einschließlich 0,01 mMol/l und höchstens einschließlich 2 Mol/l in dem Elektrolyt (30) enthalten ist, bevorzugt in einer Konzentration von wenigstens einschließlich 0,1 mMol/l und höchstens einschließlich 1 Mol/l, besonders bevorzugt in einer Konzentration von wenigstens einschließlich 2 mMol/l und höchstens einschließlich 500 mMol/l, ganz besonders bevorzugt in einer Konzentration von wenigstens einschließlich 15 mMol/l und höchstens einschließlich 50 mMol/l, ganz besonders bevorzugt in einer Konzentration von 20 mMol/l ± 5mMol/l.

25. Elektrolyt (30) zur Verwendung in einem elektrochemischen Gassensor (10) entsprechend einem der vorhergehenden Ansprüche, wobei der Elektrolyt (30) ein Gemisch aus einem sauren, flüssigen Medium, das eine elektrische Leitfähigkeit aufweist, und einem Zusatz ist und wobei der Zusatz wenigstens ein Tensid aufweist.

26. Elektrolyt nach Anspruch 25, **dadurch gekennzeichnet, dass** das flüssige Medium eine starke Säure, eine sehr starke Säure, Schwefelsäure oder Perchlorsäure ist. Besonders bevorzugt ist es, wenn das flüssige Medium eine sehr starke Säure, insbesondere Schwefelsäure ist.

27. Elektrolyt nach einem der Ansprüche 25 oder 26, **dadurch gekennzeichnet, dass** wenigstens ein Tensid ein anionisches Tensid ist.

28. Elektrolyt nach einem der Ansprüche 25 bis 27, **dadurch gekennzeichnet, dass** wenigstens ein Tensid ein fluoriertes anionisches Tensid ist, bevorzugt eine Polyfluoralkylsulfonsäure oder das Salz einer Polyfluoralkylsulfonsäure.

29. Elektrolyt nach einem der Ansprüche 25 bis 28, **dadurch gekennzeichnet, dass** wenigstens ein Tensid ein Alkylsulfonat ist, bevorzugt ein Alkylsulfonat bei welchem der Alkyl-Rest des Alkylsulfonates eine Länge von 1, 2, 3, 4, 5, 6, 7, 8, 9, 10, 11, 12, 13, 14, 15, 16, 17, 18 Kohlenstoffatomen, bevorzugt 4, 5, 6, 7, 8, 9, 10, 11, 12 Kohlenstoffatomen aufweist.

30. Elektrolyt nach einem der Ansprüche 25 bis 29, **dadurch gekennzeichnet, dass** wenigstens ein Tensid ein Alkylsulfonat ist, welches ein Gegenion aufweist, das ausgewählt ist aus Na⁺ oder K⁺.

31. Elektrolyt nach einem der Ansprüche 25 bis 30, **dadurch gekennzeichnet, dass** wenigstens ein wenigstens ein Tensid ein kationisches Tensid ist.

32. Elektrolyt nach einem der Ansprüche 25 bis 31, **dadurch gekennzeichnet, dass** wenigstens ein Tensid eine Ammoniumverbindung ist, bevorzugt eine quartäre Ammoniumverbindung, besonders bevorzugt eine Tetraalkyl-ammoniumVerbindung.

33. Elektrolyt nach einem der Ansprüche 25 bis 32, **dadurch gekennzeichnet, dass** das Tensid des Zusatzes und/oder der Zusatz in einer Konzentration von wenigstens einschließlich 0,01 mMol/l und höchstens einschließlich 2 Mol/l in dem Elektrolyt (30) enthalten ist, bevorzugt in einer Konzentration von wenigstens einschließlich 0,1 mMol/l und höchstens einschließlich 1 Mol/l, besonders bevorzugt in einer Konzentration von wenigstens einschließlich 2 mMol/l und höchstens einschließlich 500 mMol/l, ganz besonders bevorzugt in einer Konzentration von wenigstens einschließlich 15 mMol/l und höchstens einschließlich 50 mMol/l, ganz besonders bevorzugt in einer Konzentration von 20 mMol/l ± 5mMol/l.
